# EUROPEAN PATENT APPLICATION

(11) **EP 4 745 725 A2**
(43) Date of publication of application: **20.05.2026**
(21) Application number: 26169807.0
(22) Date of filing: 02.01.2024
(51) Int. Cl.: G06F 3/01

(54) **SCENE DESCRIPTION FILE GENERATION METHOD AND APPARATUS**

(30) Priority: 10.01.2023 CN 202310036790; 20.03.2023 CN 202310275300; 06.04.2023 CN 202310362214; 11.04.2023 CN 202310383151; 22.09.2023 CN 202311236289
(62) Divisional of application: 24741118.4
(71) Applicant: Hisense Visual Technology Co., Ltd., Economic and Technical Development Zone Qingdao, Shandong 266555 (CN)
(72) Inventor: YANG, Fuzheng, Shandong 266555 (CN); ZHANG, Wei, Shandong 266555 (CN); CAO, Yimo, Shandong 266555 (CN); YANG, Hejie, Shandong 266555 (CN); WANG, Junjie, Shandong 266555 (CN); WANG, Zhikui, Shandong 266555 (CN); LI, Bin, Shandong 266555 (CN); XING, Fang, Shandong 266555 (CN)
(74) Representative: Winter, Brandl - Partnerschaft mbB

(57) **Abstract**

The present disclosure provides a method and an apparatus for generating a scene description document. The apparatus includes: determining a haptic media accessor associated with a target action node when a target haptic action is executed in a three-dimensional (3D)-scene-to be rendered, the haptic media accessor is an accessor configured to access haptic rendering data of a haptic media file declared in a moving pictures experts group (MPEG) media description module associated with the target action node when the target haptic action is executed; generating a target haptic object description module based on the haptic media accessor, and adding the target haptic object description module to an MPEG haptic description module; and generating a target haptic action node array based on an index value of a node description module corresponding to the target action node and an index value of the target haptic object description module, and adding the target haptic action node array to a haptic action node list of a target action description module.

## Description

The present disclosure claims priority to Chinese Patent Application No. 202310036790.8 filed on January 10, 2023, Chinese Patent Application No. 202310383151.9 filed on April 11, 2023, Chinese Patent Application No. 202310362214.2 filed on April 6, 2023, Chinese Patent Application No. 202311236289.2 filed on September 22, 2023, and Chinese Patent Application No. CN202310275300.X, filed on March 20, 2023, the entire contents of the above-identified applications are incorporated herein by reference.

### TECHNICAL FIELD

Some embodiments of the present disclosure relate to the technical field of video processing, and in particular, to a method and an apparatus for generating a scene description document.

### BACKGROUND

With the increasing richness of three-dimensional (3D) media content, users have higher requirements for a sense of reality and richness of a virtual scene. As a part of sensory experience, a haptic sense becomes object experience that needs to be considered and added in immersive media. For example, users may experience an explosion effect in the virtual scene, which not only requires participation of visual and auditory senses, but also requires participation of the haptic sense as a type of sensory experience, so as to enhance a sense of reality and a sense of presence that are brought by the explosion effect in the virtual scene to people.

In relevant technical standards, each haptic material attribute is represented by a texture array, and texture arrays of different attributes are combined to form a specific haptic perception. Each array element includes a haptic texture and an enumerated type of the haptic material attribute, and the type of the haptic material attribute includes High_resolution, Low_resolution, Reference, and Other. When the type of the haptic material attribute is the High_resolution or the Low_resolution, a texture map or a haptic texture material data packet that is indexed by a texture stores haptic values instead of color values. These haptic values may be directly obtained and haptically rendered by a display engine. When the type of the haptic material attribute is the Reference, each pixel in the texture map or the haptic texture material data packet does not directly store the haptic value, but stores an index value of a to-be-rendered haptic media file. As described above, when the type of the haptic material attribute is the Reference, data obtained from the texture map or the haptic texture material data packet is an index value of haptic media. Based on the index value, only an encoded and encapsulated haptic media file may be obtained, and a decoded haptic value that may be used for rendering cannot be obtained. As a result, the display engine cannot perform the rendering normally.

### SUMMARY

In accordance with a first aspect, some embodiments of the present disclosure provide a method for generating a scene description document, including: when a 3D-scene-to-be-rendered includes a haptic media file, determining a type of each haptic material attribute in the haptic media file; and when a type of a first haptic material attribute in the haptic media file is Reference, adding an accessor index syntax element to moving pictures experts group (MPEG) haptic of a target node description module in a scene description document of the 3D-scene-to-be-rendered, and setting a value of the accessor index syntax element to an index value of an accessor description module corresponding to a haptic media accessor, where the target node description module is a node description module corresponding to a node of a target 3D mesh carrying the first haptic material attribute, and the haptic media accessor is an accessor for accessing decoded data of the haptic media file.

In accordance with a second aspect, some embodiments of the present disclosure provide an apparatus for generating a scene description document, including: a memory configured to store a computer program; and a processor configured to invoke the computer program to enable the apparatus for generating the scene description document to implement the method for generating the scene description document in the first aspect.

In accordance with a third aspect, some embodiments of the present disclosure provide a computer-readable storage medium, where the computer-readable storage medium stores a computer program, that, when executed by a computing device, causes the computing device to implement the method for generating the scene description document in the first aspect.

In accordance with a fourth aspect, some embodiments of the present disclosure provide a computer program product, when the computer program product is operated on a computer, the computer is caused to implement the method for generating the scene description document.

### DESCRIPTION OF THE DRAWINGS

FIG. 1 is a schematic structural diagram of an immersive media description framework according to some embodiments of the present disclosure;
FIG. 2 is a schematic structural diagram of a scene description document according to some embodiments of the present disclosure;
FIG. 3 is a schematic structural diagram of a scene description document according to some other embodiments of the present disclosure;
FIG. 4 schematically shows a data model of haptic data according to some embodiments of the present disclosure;
FIG. 5 schematically shows a hierarchical structure of a human body according to some embodiments of the present disclosure;
FIG. 6 is a schematic structural diagram of a haptic signal encoder according to some embodiments of the present disclosure;
FIG. 7 is a schematic structural diagram of a haptic signal decoder according to some embodiments of the present disclosure;
FIG. 8 is a schematic structural diagram of a scene description document according to some other embodiments of the present disclosure;
FIG. 9 is a schematic structural diagram of a scene description document according to some other embodiments of the present disclosure;
FIG. 10 is a flowchart of steps of a method for generating a scene description document according to some embodiments of the present disclosure;
FIG. 11 is a flowchart of steps of a method for parsing a scene description document according to some embodiments of the present disclosure;
FIG. 12 is a flowchart of steps of a method for processing a haptic media file according to some embodiments of the present disclosure;
FIG. 13 is a flowchart of steps of a 3D scene rendering method according to some embodiments of the present disclosure;
FIG. 14 is a flowchart of steps of a buffer management method according to some embodiments of the present disclosure;
FIG. 15 is a schematic structural diagram of a scene description document according to some other embodiments of the present disclosure;
FIG. 16 is a flowchart of steps of a method for generating a scene description document according to some embodiments of the present disclosure;
FIG. 17 is a flowchart of steps of a method for parsing a scene description document according to some embodiments of the present disclosure;
FIG. 18 is a flowchart of steps of a method for parsing a scene description document according to some other embodiments of the present disclosure;
FIG. 19 is a flowchart of steps of a method for processing a haptic media file according to some embodiments of the present disclosure;
FIG. 20 is a flowchart of steps of a 3D scene rendering method according to some embodiments of the present disclosure;
FIG. 21 is a flowchart of steps of a buffer management method according to some embodiments of the present disclosure;
FIG. 22 shows an interactive process of a 3D scene rendering method according to some embodiments of the present disclosure;
FIG. 23 is a schematic structural diagram of a scene description document according to some other embodiments of the present disclosure;
FIG. 24 is a flowchart of steps of a method for generating a scene description document according to some embodiments of the present disclosure;
FIG. 25 is a flowchart of steps of a method for parsing a scene description document according to some embodiments of the present disclosure;
FIG. 26 is a flowchart of steps of a method for parsing a scene description document according to some other embodiments of the present disclosure;
FIG. 27 is a flowchart of steps of a method for processing a haptic media file according to some embodiments of the present disclosure;
FIG. 28 is a flowchart of steps of a 3D scene rendering method according to some embodiments of the present disclosure;
FIG. 29 is a flowchart of steps of a buffer management method according to some embodiments of the present disclosure; and
FIG. 30 shows an interactive process of a 3D scene rendering method according to some embodiments of the present disclosure.

### DETAILED DESCRIPTION OF THE EMBODIMENTS

To make the objectives and implementations of the present disclosure clearer, the following clearly and completely describes the exemplary implementations of the present disclosure with reference to the accompanying drawings in the exemplary embodiments of the present disclosure. Apparently, the described exemplary embodiments are some rather than all the embodiments of the present disclosure.

It should be noted that brief descriptions of the terms in the present disclosure are used only to facilitate the understanding of the implementations described below, and are not intended to limit the implementations of the present disclosure. Unless otherwise stated, these terms should be understood according to their ordinary and usual meanings.

In addition, the terms "including/comprising", "having", and any variations thereof are intended to cover non-exclusive inclusion. For example, for products or devices that include a series of components, the components are not necessarily limited to those clearly listed, but may include other components not clearly listed or inherent to these products or devices.

Phrases such as "some implementations" and "some embodiments" in the specification mean that the described implementations or embodiments may include specific features, structures, or characteristics, but not necessarily every embodiment includes the specific features, structures, or characteristics. In addition, these phrases may not necessarily refer to a same implementation. In addition, when describing specific features, structures, or characteristics in combination with an embodiment, the realization of such features, structures, or characteristics in combination with other implementations (whether explicitly described or not in the specification) is within the knowledge of those skilled in the relevant art.

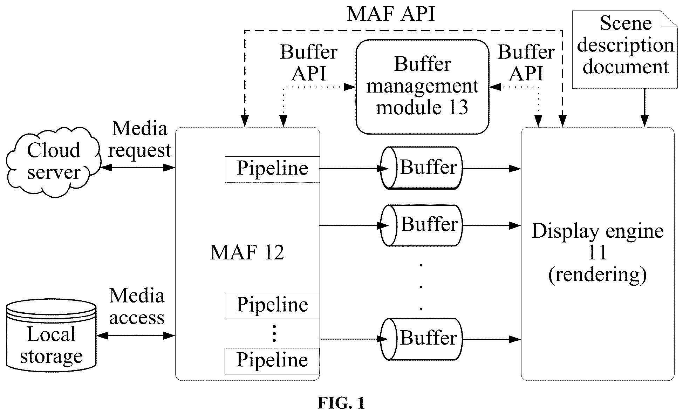

Some embodiments of the present disclosure relate to scene description of immersive media. Referring to a scene description framework for immersive media in FIG. 1, in order to enable a display engine 11 to focus on media rendering, the scene description framework for the immersive media decouples access and processing of a media file from rendering of the media file, and designs a media access function (MAF) 12 to access and process the media file. In addition, a MAF application programming interface (API) is designed, and instruction interaction is performed between the display engine 11 and the MAF 12 through the MAF API. The display engine 11 may issue an instruction to the MAF 12 through the MAF API, and the MAF 12 may also request an instruction from the display engine 11 through the MAF API.

A general working process of the scene description framework for the immersive media is as follows: 1) The display engine 11 obtains a scene description document provided by an immersive media service provider. 2) The display engine 11 parses the scene description document, obtains an access address of the media file, attribute information (such as a media type and a codec parameter) of the media file, a format requirement of a processed media file, and other parameters or information, and calls the MAF API to transfer all or part of the information obtained by parsing the scene description document to the MAF 12. 3) The MAF 12 requests to download the media file from a media resource server or obtains the media file locally based on the information transferred by the display engine 11, and establishes a corresponding pipeline for the media file. Then, processing such as decapsulation, decryption, and decoding is performed on the media file in the pipeline to convert the media file from an encapsulated format to a format specified by the display engine 11. 4) The pipeline stores data output after the processing in a specified buffer. 5) Finally, the display engine 11 reads the processed data from the specified buffer and renders the media file based on the data read from the buffer.

The following further describes files and functional modules involved in the scene description framework for the immersive media.

### 1. Scene description document

In the working process of the scene description framework for the immersive media, the scene description document is used to describe content of a 3D scene, such as a structure (its feature may be described using a 3D mesh), a texture (such as a texture resource), an animation (rotation and translation), and a camera viewpoint position (rendering perspective).

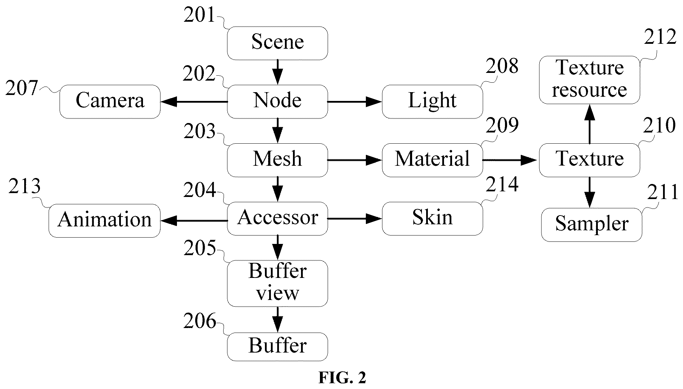

In the relevant technical field, GL Transmission Format 2.0 (glTF2.0) has been determined as a candidate format for the scene description document, and can meet requirements of MPEG-immersive (MPEG-I) and six degrees of freedom (6DoF) applications. For example, the glTF2.0 is described in Khronos Group's GL Transmission Format (glTF) version 2.0, which is available at github.com/KhronosGroup/glTF/tree/master/specification/2.0#specifying-extensions. FIG. 2 is a schematic structural diagram of a scene description document in a glTF2.0 scene description standard (International Organization for Standardization (ISO)/International Electrotechnical Commission (IEC) 12113). As shown in FIG. 2, the scene description document in the glTF2.0 scene description standard includes but is not limited to: a scene description module (scene) 201, a node description module (node) 202, a mesh description module (mesh) 203, an accessor description module (accessor) 204, a buffer view description module (bufferView) 205, a buffer description module (buffer) 206, a camera description module (camera) 207, a light description module (light) 208, a material description module (material) 209, a texture description module (texture) 210, a sampler description module (sampler) 211, a texture resource description module (image) 212, an animation description module (animation) 213, and a skin description module (skin) 214.

The scene description module (scene) 201 in the scene description document shown in FIG. 2 is configured to describe a 3D scene included in the scene description document. One scene description document may include any quantity of 3D scenes, and each 3D scene is described using one scene description module 201. There is a parallel relationship between scene description modules 201, that is, there is a parallel relationship between 3D scenes.

The node description module (node) 202 in the scene description document shown in FIG. 2 is a lower-level description module of the scene description module 201 and is configured to describe an object included in the 3D scene described by the scene description module 201. In each 3D scene, there may be many specific objects, such as a virtual digital human, a nearby 3D object, and a distant background image. The scene description document describes these specific objects through the node description module 201. Each node description module 202 may represent one object or an object collection including a plurality of objects. A relationship between node description modules 202 reflects a relationship between various components in the 3D scene described by the scene description module 201. A 3D scene described by one scene description module 201 may include at least one node. There may be a parallel or hierarchical relationship between a plurality of nodes, that is, there is an inclusion relationship between the node description modules 202. In this way, a plurality of specific objects may be integrated together for description or described separately. If one node is included in another node, the included node is referred to as a child node (children), and the child node is represented by "children" instead of "node". A hierarchical node structure may be formed by flexibly combining the node and the child node, so as to express rich scene content.

The mesh description module (mesh) 203 in the scene description document shown in FIG. 2 is a lower-level description module of the node description module 202 and is configured to describe a feature of the object represented by the node description module 202. The mesh description module 203 is a collection formed by at least one primitive (primitives), and each primitive may also include one attribute (attributes) that defines an attribute required for rendering by a graphics processing unit (GPU). Following attributes may be included: position (3D coordinate), normal (normal vector), tangent (tangent vector), texcoord_n (texture coordinate), color-n (color: red/green/blue (RGB) or red/green/blue/alpha (RGBA)), joints_n (attribute related to the skin description module 210), weights_n (attribute related to the skin description module 210), and the like. Because the mesh description module 203 includes a large quantity of vertices, and each vertex includes a plurality of types of attribute information. Therefore, it is inconvenient to directly store a large amount of media data included in the media file in the mesh description module 203 in the scene description document. Instead, the access address (uniform resource identifier (URI)) of the media file is indicated in the scene description document, and data in the media file is downloaded if required, thus separating the scene description document from the media file. Therefore, the mesh description module 203 generally does not store media data, but stores an index value of an accessor description module (accessor) 204 corresponding to each attribute, and points to corresponding data in a buffer view (bufferView) of a buffer (buffer) through the accessor description module 204.

In some embodiments, the scene description document and the media file may also be merged to form a binary file, thereby reducing a quantity of files and file types.

In addition, there may be a mode syntax element (mode) in the primitive of the mesh description module 203. The mode syntax element is used to describe a topology of a 3D mesh drawn by the GPU, for example, mode=0 represents a scattered point, mode=1 represents a line, and mode=4 represents a triangle.

Syntax elements in the attribute (mash. primitives. attributes) of the primitive of the mesh description module 203 are defined in following Table 1:

**Table 1**

| Syntax element name | Accessor type | Data type | Description |
|---|---|---|---|
| position | VEC3 | 5126 | Unitless position coordinates of XYZ vertices |
| normal | VEC3 | 5126 | Normalized normal vectors of the XYZ vertices |
| tangent | VEC4 | 5126 | XYZW: a tangent vector of a vertex, where XYZ represent normalized vertex coordinates, and a value of W is +1 or -1, indicating an orientation of a tangent line |
| texcoord_n | VEC2 | 5126, 5121, 5123 | An ST texture coordinate |
| color_n | VEC3 | 5126, 5121, 5123 | A vertex color in an RGB or RGBA form |
| | VEC4 | | |
| joints_n | VEC4 | 5121, 5123 | A skin-related attribute |
| weights_n | VEC4 | 5121, 5123 | A skin-related attribute |

An accessor type indexed in the attribute (mash.primitives.attributes) of the primitive of the mesh description module 203 is defined in following Table 2:

**Table 2**

| Accessor type | Quantity of component channels | Meaning |
|---|---|---|
| SCALAR | 1 | Scalar |
| VEC2 | 2 | A two-dimensional (2D) vector |
| VEC3 | 3 | A 3D vector |
| VEC4 | 4 | A four-dimensional vector |
| MAT2 | 4 | A 2D matrix |
| MAT3 | 9 | A 3D matrix |
| MAT4 | 16 | A four-dimensional matrix |

A component type in the attribute (mash.primitives.attributes) of the primitive of the mesh description module 203 is defined in following Table 3:

**Table 3**

| Type code | Data type | Signed or not | Quantity of bits |
|---|---|---|---|
| 5120 | Signed byte | Signed | 8 |
| 5121 | Unsigned byte | Unsigned | 8 |
| 5122 | Signed value (signed short) | Signed | 16 |
| 5123 | Unsigned value (unsigned short) | Unsigned | 16 |
| 5125 | Unsigned integer (unsigned int) | Unsigned | 32 |
| 5126 | Quantity of floating points (float) | Signed | 32 |

For example, the following is a JavaScript Object Notation (JSON) example of one mesh description module 203:

```
     {
             "primitives": [
                 {
                     "attributes": {
                         "position": 1 //Pointing to an accessor description module whose index
 is 1 and stored vertex coordinate data
                         "color_0": 2// Pointing to an accessor description module whose index
 is 2 and stored vertex color data
                     },
                     "mode": 0//Representing that a mesh has a scattered topology
            }
    
```

In the above mesh description module 203, a value of "position" is 1, pointing to the accessor description module whose index is 1 and ultimately pointing to the vertex coordinate data stored in the buffer; and a value of "color_0" is 2, pointing to the accessor description module whose index is 2 and ultimately pointing to color data stored in the buffer.

The accessor description module (accessor) 204, the buffer view description module (bufferView) 205, and the buffer description module (buffer) 206 in the scene description document shown in FIG. 2 are used by the mesh description module 203 to finely index rendering data in the media file layer by layer. As described above, the mesh description module 203 does not store specific media data, but stores an index value of a corresponding accessor description module 204, and accesses the specific media data through the accessor description module 204 indexed based on the index value. A process of indexing the media data by the mesh description module 203 is as follows: Firstly, an index value declared by a syntax element in the attribute of the primitive of the mesh description module 203 points to a corresponding accessor description module 204. Then the accessor description module 204 points to a corresponding buffer view description module 205. Finally, the buffer view description module 205 points to a corresponding buffer description module 206. The buffer description module 206 in the scene description document shown in FIG. 2 is mainly responsible for pointing to the corresponding media file, including the URI of the media file, a byte length of the media file, and the like, and is configured to describe a buffer configured for caching the rendering data in the media file. One buffer may be divided into a plurality of buffer views. The buffer view description module 205 is mainly responsible for partial access to the rendering data in the media file in the buffer, including a start byte offset, a byte length, and the like of accessed data. The partial access to the rendering data in the media file may be achieved through the buffer view description module 205 and the buffer description module 206. The accessor description module 204 is mainly responsible for adding additional information to some data specified in the buffer view description module 205, such as a type of the data, a count of this type of data, and a value range of this type of data. This three-layer structure may achieve a function of retrieving partial data from one media file, which is conducive to accurate data retrieval and also helps reduce a quantity of media files.

The camera description module (camera) 207 in the scene description document shown in FIG. 2 is a lower-level description module of the node description module 202 and is configured to describe a viewpoint, a viewing angle, and other viewing related visual information when a user views the object described by the node description module 202. In order to enable the user to be placed in the 3D scene and view the 3D scene, the node description module 202 may also point to the camera description module 207, and uses the camera description module 207 to describe the viewpoint, the viewing angle, and the other viewing related visual information when the user views the object described by the node description module 202.

The light description module (light) 208 in the scene description document shown in FIG. 2 is a lower-level description module of the node description module 202 and is configured to describe light intensity, an ambient light color, a light direction, a light source position, and other light-related information of the object described by the node description module 202.

The material description module (material) 209 in the scene description document shown in FIG. 2 is a lower-level description module of the mesh description module 203 and is configured to describe material information of a 3D object described by the mesh description module 203. When the 3D object is described, if only geometric information of the 3D object is described with the help of the mesh description module 203, or a color and/or a position of the 3D object are/is defined monotonously, a sense of reality of the 3D object cannot be improved. Therefore, more information needs to be added to a surface of the 3D object. For a conventional 3D modeling technique, this process may also be referred to as texture mapping, texture addition, or the like. The scene description document in the glTF2.0 scene description standard also uses this description module. The material description module 209 uses a group of universal parameters to define a material, in order to describe material information of a geometric object appearing in the 3D scene. The material description module 209 commonly uses a metallic-roughness model (metallic-roughness) to describe a material of a virtual object, and a material characteristic parameter based on the metallic-roughness model is represented using a widely used physically based rendering (PBR) material. Based on this, the material description module 209 describes in detail a metallic-roughness material attribute of an object. Syntax elements in the material description module 209 are defined in Table 4:

**Table 4**

| Syntax element name | Data type | Description |
|---|---|---|
| name | String | Defines a name of the material |
| PbrMetarial Roughness | Array | A collection including many syntax sub-elements, which is used to describe metallic-roughness of the virtual object |

In some embodiments, syntax elements in the metallic-roughness (material.PbrMetarialRoughness) in the material description module 209 are defined in following Table 5:

**Table 5**

| Syntax element name | Data type | Description |
|---|---|---|
| basecolor | String | Defines a base color of the material |
| metalness | Array/integer | Defines metalness of the material. A value range is from 0.0 (non-metallic) to 1.0 (metallic) |
| roughness | Array/integer | Defines roughness of the material. A value range is from 0.0 (smooth) to 1.0 (rough) |

A value of each attribute in the metallic-roughness (material.PbrMetarialRoughness) of the material description module 209 may be defined using a factor and/or a texture (such as baseColorTexture and baseColorFactor). If no texture is given, it must be assumed that values of all corresponding texture components in this material model are 1.0. If both the factor and the texture exist, a factor value acts as a linear multiplier of a corresponding texture value. A texture binding is defined by an index of a texture object and an optional texture coordinate index.

For example, the following is a JSON example of one material description module 209:

```
          {
             "name": "gold"//Indicating that the name of the material is "gold"
             "PbrMetarialRoughness": {
                 "basecolorFactor": [1.000,0.766,0.336,1.0]// sRGB value of the base color
                 "metalnessFactor": 1.0 //Value of the metalness
                 "roughnessFactor": 0.0//Value of the roughness
                     },
                 }
```

The above material description module 209 is parsed. Based on the name syntax element of the material and its value ("name": "gold"), it may be determined that the material is named "gold". Then based on the color syntax element under the metallic-roughness (material.PbrMetarialRoughness) and its value ("basecolorFactor": [1.000,0.766,0.336,1.0]]), it is determined that the value of the base color of the material is [1.000,0.766,0.336,1.0]. Based on the metalness syntax element under the metallic-roughness (material.PbrMetarialRoughness) and its value ("metalnessFactor":1.0), it is determined that the value of the metalness of the material is "1.0". Based on the roughness syntax element under the metallic-roughness (material.PbrMetarialRoughness) and its value ("roughnessFactor":0.0), it is determined that the value of the roughness of the material is "0.0".

The texture description module (texture) 210 in the scene description document shown in FIG. 2 is a lower-level description module of the material description module 209 and is configured to describe a color of the 3D object described by the material description module 209 and other characteristics used in a material definition. The texture is an important aspect of giving an object a real appearance. The texture may be used to define a main color of the object and other characteristics used in the material definition, in order to accurately describe an appearance of a rendered object. The material itself may define a plurality of texture objects. These texture objects may be used as textures of the virtual object during rendering and may be used to encode different material attributes. The texture description module 210 uses a sampler index syntax element and a texture resource index syntax element to reference one sampler description module (sampler) 211 and one texture resource description module (image) 212. The texture resource description module 212 includes a URI, and the URI links to a texture image or a binary file package that is actually used by the texture description module 210. The sampler description module 211 is configured to describe filtering and packaging modes of the texture. Responsibilities and cooperative relationships of the material description module 209, the texture description module 210, the sampler description module 211, and the texture resource description module 212 include: The material description module 209, together with the texture description module 210, defines color and physical information of an object surface. The sampler description module 211 defines how to paste a texture resource onto the object surface. The texture description module 210 specifies the sampler description module 212 and the texture resource description module 212. The texture addition is implemented through the texture resource description module 212, while the texture resource description module 212 uses the URI for identification and indexing, and uses the accessor description module 204 for data access. The sampler description module 211 implements specific adjustment and packaging of the texture. Syntax elements in the texture description module 210 are defined in following Table 6:

**Table 6**

| Element name | Data type | Description |
|---|---|---|
| sampler | Integer | Indexes a sampler in a sampler array with a defined attribute |
| image | Integer | Specifies a source of the texture resource |
| texCoord | Integer | Indexes a collection of texture coordinate attributes of a texture mapped from a texture coordinate. A value of the texCoord is 0 by default when the texCoord is undefined |

In some embodiments, syntax elements in the sampler (texture.sample) of the texture description module 210 are defined in following Table 7:

**Table 7**

| Element name | Data type | Description |
|---|---|---|
| magfilter | Integer | Defines the filtering mode of the texture when one texture unit (texel) covers a plurality of pixels. The filtering mode includes: |
| | | 1. Linear filtering (Linear): For each requested texture unit, a weighted sum of a plurality of adjacent texture units is calculated. |
| | | 2. Nearest point filtering (Nearset): A texture unit with a smallest Manhattan distance is used. |
| minfilter | Integer | Defines the filtering mode of the texture when one texture unit is insufficient to cover a single pixel. The filtering mode includes: |
| | | 1. Linear filtering (Linear) |
| | | 2. Nearest point filtering (Nearset) |
| | | 3. Nearest-mipmap-nearest: A nearest multum in parvo map (Mipmap) is selected, and |
| | | the nearest point filtering is performed. |
| | | 4. Linear-mipmap-nearest: The nearest Mipmap is selected, and the linear filtering is performed. |
| | | 5. Nearest-mipmap-linear: Linear interpolation is performed between Mipmap layers, and the nearest point filtering is performed. |
| | | 6. Linear-mipmap-linear: The linear interpolation is performed between Mipmaps, and the nearest point filtering is performed. |
| wrap | Integer | Defines a mode of wrapping a texture coordinate exceeding a range of [0,1]. A texture coordinate value (0.0, 0.0) points to a start of a first (upper left) image pixel, while a texture coordinate value (1.0, 1.0) points to an end of a last (lower right) image pixel. The mode includes: |
| | | 1. A repeat mode (repeat): Only a decimal part of the texture coordinate is used, for example, 2.2 is mapped to 0.2, and -0.4 is mapped to 0.6. |
| | | 2. A mirrorrepeat mode (mirrorrepeat): It is the same as the repeat mode. |
| | | However, a direction is flipped when an integer part is an odd, for example, 2.2 is mapped to 0.2, and -0.4 is regarded as 0.4. |
| | | 3. A clamp to edge mode (clamp to edge): If the texture coordinate is greater than 1, it will be clamped to 1; if the texture coordinate is less than 0, it will be clamped to 0. |

For example, the following is a JSON example of one material description module 209, one texture description module 210, on sampler description module 211, and one texture resource description module 212:

```
       " materials": [ {
        "PbrMetarialRoughness": {
                   "basecolorTexture":{
                       "index":0// Selecting the texture
resource to describe a color attribute of
 the 3D object
                   },
                 "metalnessFactor": 0.0 //Value of the metalness, namely non-metallic
                 "roughnessFactor": 0.0// Value of the roughness, namely rough
            }
       } ],
       "texture":[ {
           "sampler": 0,//Texture sampler index,
indicating that a first texture sampler is selected
           "source": 0,//Texture resource index, indicating
that a first texture resource is selected
       } ],
       "images":[ {
           "uri":"test texture "//Access address of the texture resource
       } ],
       "samplers": [ {
            "magFilter": 9729//Selecting the nearest point mode to enlarge the texture resource
            "minFilter": 9987//Selecting the Linear-mipmap-linear mode to reduce the texture
 resource
            "wrasP": 33648//Texture wrapping mode in a horizontal direction
            "wrasP": 33648//Texture wrapping mode in a vertical direction
       } ],
```

The animation description module (animation) 213 in the scene description document shown in FIG. 2 is a lower-level description module of the node description module 202 and is configured to describe animation information added to the object described by the node description module 202. In order to prevent the object represented by the node description module 202 from being restricted to a static state, an animation may be added to the object described by the node description module 202. Therefore, the animation description module 213 in the scene description document is specified by the node description module 202, that is, the animation description module 213 is the lower-level description module of the node description module 202. The animation description module 213 also has a corresponding relationship with the mesh description module 203. The animation description module 213 may describe the animation through position movement, angle rotation, and size scaling, and may also specify start time, end time, and an implementation of the animation. For example, if an animation is added to a mesh description module 203 representing a 3D object, the 3D object represented by the mesh description module 203 may complete a specified animation process within a specified time window through fusion of the position movement, the angle rotation, and the size scaling.

The skin description module (skin) 214 in the scene description document shown in FIG. 2 is a lower-level description module of the node description module 202 and is configured to describe a motion cooperation relationship between a skeleton added to the mesh description module 203 and a mesh representing object surface information. When the mesh description module 203 to which the node description module 202 points represents an object with a large DoF in motion such as a human, an animal, and a machinery device, in order to optimize motion performance of the object, a skeleton may be filled into an interior of the object. In this case, the mesh description module 203 representing the object surface information becomes conceptually skin. The skin description module 214 is specified by the node description module 202, that is, the skin description module 214 is the lower-level description module of the node description module 202. The skin description module 214 has a corresponding relationship with the mesh description module 203. A realistic motion effect may be achieved by driving a mesh on the object surface to move through movement of the skeleton and in combination with a design of biomechanical simulation. For example, when a person's hand makes a fist gesture, surface skin will be stretched, occluded, or the like following an internal skeleton. At this time, a cooperative relationship between a pre-filled skeleton in a hand model and the skin is redefined to achieve a realistic simulation of this action.

The description modules in the scene description document in the glTF2.0 scene description standard only have a basic capability of describing the 3D object, and may be unable to support dynamic 3D immersive media, an audio file, a scene update, and the like. The glTF also declares that there is an optional extension object attribute (extensions) under each object attribute of the glTF, allowing the extensions attribute to be used in any part of the glTF to achieve more comprehensive functions. The scene description module (scene), the node description module (node), the mesh description module (mesh), the accessor description module (accessor), the buffer description module (buffer), the animation description module (animation), and syntax elements internally defined therein all have the optional extension object attribute to support certain functional extension based on the glTF2.0.

At present, mainstream immersive media mainly include a point cloud, the 3D mesh, a 6DoF panoramic video, MobileInVehicle (MIV)-based media, and the like. In the 3D scene, a plurality of types of immersive media often coexist simultaneously. Therefore, a rendering engine is required to support encoding and decoding of different types of immersive media, and different types of rendering engines are generated based on different types and quantities of supported codecs. Rendering engines designed by different suppliers support different types of media. In order to achieve cross-platform description of a 3D scene composed of different types of media, the MPEG has initiated formulation of an MPEG scene description standard, with a standard number being ISO/IEC 23090-14. This standard mainly solves a cross-platform description problem of MPEG media (including a codec, an MPEG file format, and an MPEG transmission mechanism that are developed by the MPEG) in the 3D scene.

The 128^{th} MPEG meeting decides to formulate an MPEG-I scene description standard based on the glTF2.0 (ISO/IEC 12113). A first version of the MPEG scene description standard has been formulated and is currently in a Final Draft International Standard (FDIS) voting stage. On a basis of the first version, the MPEG scene description standard adds a corresponding extension to address needs that have not yet been realized in the cross-platform description of the 3D scene, including interactivity, augmented reality (AR) anchoring, user and avatar representation, haptic support, extended support for an immersive media codec, and the like.

The first version of the MPEG scene description standard mainly includes following content:
1) The MPEG scene description standard defines a scene description document format for describing an immersive 3D scene. The scene description document format combines content of the glTF2.0 (ISO/IEC 12113), and achieves a series of extensions based on the content of the glTF2.0 (ISO/IEC 12113).
2) The MPEG scene description standard defines a scene description framework and an API for inter-module cooperation, thereby decoupling an obtaining and processing process of the immersive media from a rendering process of the immersive media. This is beneficial for optimizing adaptation of the immersive media to different network conditions, partial obtaining of an immersive media file, access to the immersive media at different levels of detail, and adjustment of content quality. The decoupling of the obtaining and processing process of the immersive media from the rendering process of the immersive media is a key to achieving the cross-platform description of the 3D scene.
3) The MPEG scene description standard proposes a series of extensions based on an International Standardization Organization Base Media File Format (ISOBMFF) (ISO/IEC 14496-12) for transmitting immersive media content.

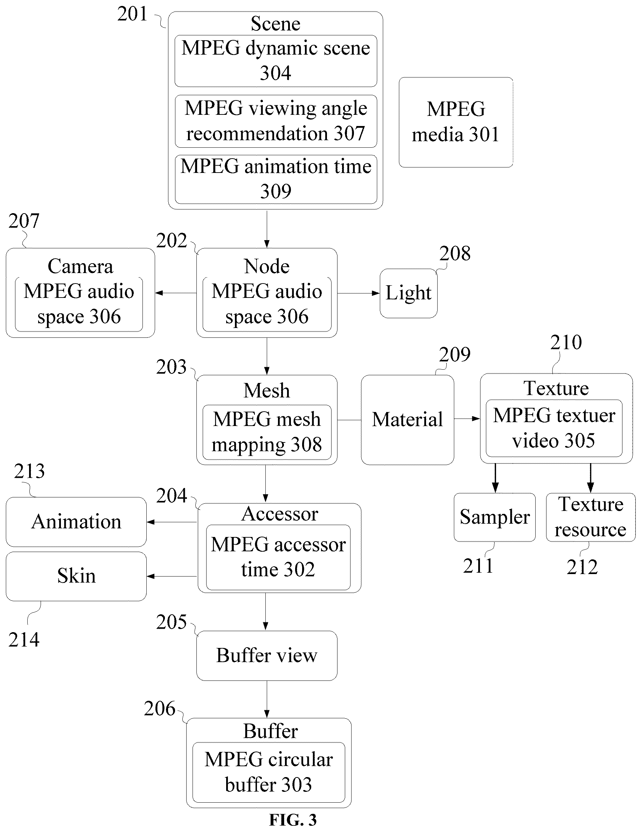

Referring to FIG. 3, based on the scene description document shown in FIG. 2, the MPEG scene description standard extends the scene description document. Compared with the scene description document (shown in FIG. 2) in the glTF2.0 scene description standard, two groups of extensions are made to the scene description document in the MPEG scene description standard:
A first group of extensions includes: MPEG media (MPEG_media) 301, an MPEG time-varying accessor (MPEG_accessor_timed) 302, and an MPEG circular buffer (MPEG_buffer_circular) 303. The MPEG media 301 is an independent extension and configured to reference an external media source. The MPEG time-varying accessor 302 is an accessor-level extension and configured to access time-varying media. The MPEG circular buffer is a buffer-level extension and configured to support a circular buffer. The first group of extensions provides a basic description and format of media in a scene, meeting basic needs of describing time-varying immersive media in the scene description framework. The MPEG time-varying accessor (MPEG_accessor_timed) 302 is configured to access time-varying media. Because the glTF2.0 scene description standard does not support the time-varying media, it is necessary to update the scene description document in the glTF2.0 scene description standard when the media data needs to change over time. For example, in the glTF2.0 scene description standard, it is necessary to update the texture resource on the object surface, such that the texture resource on the object surface may change over time. Therefore, the scene description document in the glTF2.0 scene description standard must be updated. However, frequent updates to the scene description document require frequent parsing, processing, and transmission of the scene description document, which increases a performance overhead in a process of rendering the 3D scene. Based on this, the MPEG designs the MPEG time-varying accessor (MPEG_accessor_timed) 302 whose parameter may change over time to alter a way of accessing the media data. This enables data that is accessed to change over time, thereby avoiding the frequent parsing, processing, and transmission of the scene description document.

The second group of extensions includes: an MPEG dynamic scene (MPEG_scene_dynamic) 304, an MPEG texture (MPEG_texture_video) 305, MPEG audio space (MPEG_audio_spatial) 306, MPEG viewing angle recommendation (MPEG_viewport_recommended) 307, MPEG mesh mapping (MPEG_mesh_linking) 308, and MPEG animation time (MPEG_animation_timing) 309. The MPEG_scene_dynamic 304 is a scene-level extension and configured to support a dynamic scene update. The MPEG_texture_video 305 is a texture-level extension and configured to support a texture in a video format. The MPEG_audio_spatial 306 is a node-level and camera-level extension and configured to support a spatial 3D audio. The MPEG_viewport_recommended 307 is a scene-level extension and configured to support describing a recommended viewing angle in 2D displaying. The MPEG_mesh_linking 308 is a mesh-level extension and configured to support linking two meshes and providing mapping information. The MPEG_animation_timing 309 is a scene-level extension and configured to support controlling an animation timeline.

The above extensions are described in detail below.

The MPEG media in the MPEG scene description document is configured to describe a type of the media file and provide a necessary description for a media file of an MPEG type to facilitate subsequent retrieval of the media file of the MPEG type. First-level syntax elements in the MPEG media description module (MPEG_media) are defined in following Table 8:

**Table 8**

| Syntax element name | Data type | Default value | Usage | Description |
|---|---|---|---|---|
| media | Array | N/A | Compulsory | A collection including many syntax sub-elements, which is used to describe external media referenced in a scene |

Syntax elements in a media list (MPEG_media.media) of the MPEG media description module are defined in following Table 9:

**Table 9**

| Syntax element name | Data type | Default value | Usage | Description |
|---|---|---|---|---|
| name | String | N/A | Non-compulsory | A customized media name |
| startTime | Value (number) | 0 | Non-compulsory | Start time: It specifies time at which rendering of the time-varying media begins, which is provided to the display engine and is in units of seconds. If a value of this syntax element is 0, it means that the current scene is rendered. |
| | | | | At least one of the startTime syntax element and an autoplay syntax element should exist in the scene description document |
| startTimeOffset | Value | 0 | Non-compulsory | A start time offset, which indicates an offset of start time of a media source and is in units of |
| | | | | seconds. When a value of this syntax element is 0, it indicates that start time is the start time of the media source |
| endTimeOffset | Value | N/A | Non-compulsory | An end time offset, which indicates an offset of end time of the media source and is in units of seconds. If this syntax element does not exist, end time is the end time of the media source |
| autoplay | Boolean | true | Non-compulsory | Indicates whether to enable automatic playback. This syntax element is used to indicate whether to play the media as soon as the media is ready. At least one of the startTime syntax element and the autoplay syntax element should exist in the scene description document. All media with the autoplay syntax element set to true should be rendered simultaneously |
| autoplayGroup | Integer | N/A | Non-compulsory | An automatic playback group. All media in the automatic playback group declared by the autoplayGroup syntax element should be simultaneously played after all the media is ready. An automatic playback group identifier may be used only when the value of the autoplay syntax element is set to true |
| loop | Boolean | false | Non-compulsory | Indicates whether to perform loop playback, and used to indicate whether the media is automatically played again after each playback is completed. When the media source is looped, a value of a timestamp in the buffer should continuously increase, that is, as the loop playback is performed on the media, playback duration of the media is continuously accumulated |
| controls | Boolean | false | Non-compulsory | Indicates whether to display media controls |
| | | | | such as playback and stop buttons |
| alternatives | Array | N/A | Compulsory | Indicates a syntax sub-element collection of an alternative version of the media. A client may select a syntax element included in an alternative list based on its own need |

Syntax elements in the alternative version list (MPEG_media.alternatives) in the media list of the MPEG media description module are defined in following Table 10:

**Table 10**

| Syntax element name | Data type | Default value | Usage | Description |
|---|---|---|---|---|
| mimeType | String | N/A | Compulsory | Indicates a resource type of the media file. A configuration parameter defined in IETF RFC6381 may be part of a media resource type, and is used to specify a configuration of a media container |
| uri | String | N/A | Compulsory | Indicates a URI of the media. A relative path is related to a gltf file. If the media has track information, a last part (namely a stream identifier) of the URI is provided by the track information |
| tracks | Array | 0 | Non-compulsory | A track list, which is a collection of to-be-used components that reference the media source The track list may include an index of a track of an ISOBMFF file, dynamic adaptive streaming over Hyper Text Transfer Protocol (HTTP) (DASH), a common media application format (CMAF) switch identifier, or a media identifier of a Real-time Transport Protocol (RTP) stream |
| extraParams | Object type (object) | N/A | Non-compulsory | An object that may include any additional specific media parameter |

Syntax elements in a track array (MPEG_media. media.alternatives.tracks) in the alternative version list in the media list of the MPEG media description module are defined in following Table 11:

**Table 11**

| Syntax element name | Data type | Default value | Usage | Description |
|---|---|---|---|---|
| track | String | N/A | Compulsory | A track, which is used to access a URI fragment in the tracks in the media. alternatives |
| codecs | String | N/A | Compulsory | A codec parameter, which indicates a codec type of media included in the track. When the track includes different types of codecs, the codec parameter may be represented by a list of codec values separated by a comma |

In addition, based on the ISOBMFF (ISO/IEC 14496-12), the ISO/IEC 23090-14 also defines a transmission format for delivering the scene description document and data related to a glTF 2.0 extension. In order to facilitate delivery of the scene description document to the client, the ISO/IEC 23090-14 defines how to encapsulate a glTF file and related data in the ISOBMFF file as non-time-varying data and time-varying data (for example, as a track sample). The MPEG_scene_dynamic, the MPEG_mesh_linking, and the MPEG_animation_timing provide the display engine with time-varying data in a specific form, and the display engine 11 should perform a corresponding operation based on the changing information. The ISO/IEC 23090-14 also defines a format for time-varying data of each extension and a method for encapsulating the time-varying data in the ISOBMFF file.

The MPEF media (MPEG_media) allows referencing an external media stream transmitted through protocols such as the RTP/Secure Real-time Transport Protocol (SRTP) and MPEG-DASH. In order to address a media stream without knowing an actual protocol scheme, a host name, or a port value, the ISO/IEC 23090-14 defines a new URL scheme. This scheme requires existence of a stream identifier in a query part, but does not specify a specific identifier type, allowing use of a media stream identification scheme (RFC5888), a labeling scheme (RFC4575), or a 0-based indexing scheme.

For example, the following is a JSON example of one MPEG media description module:

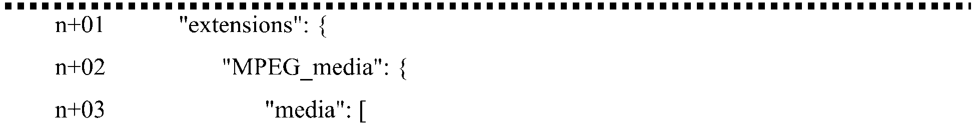

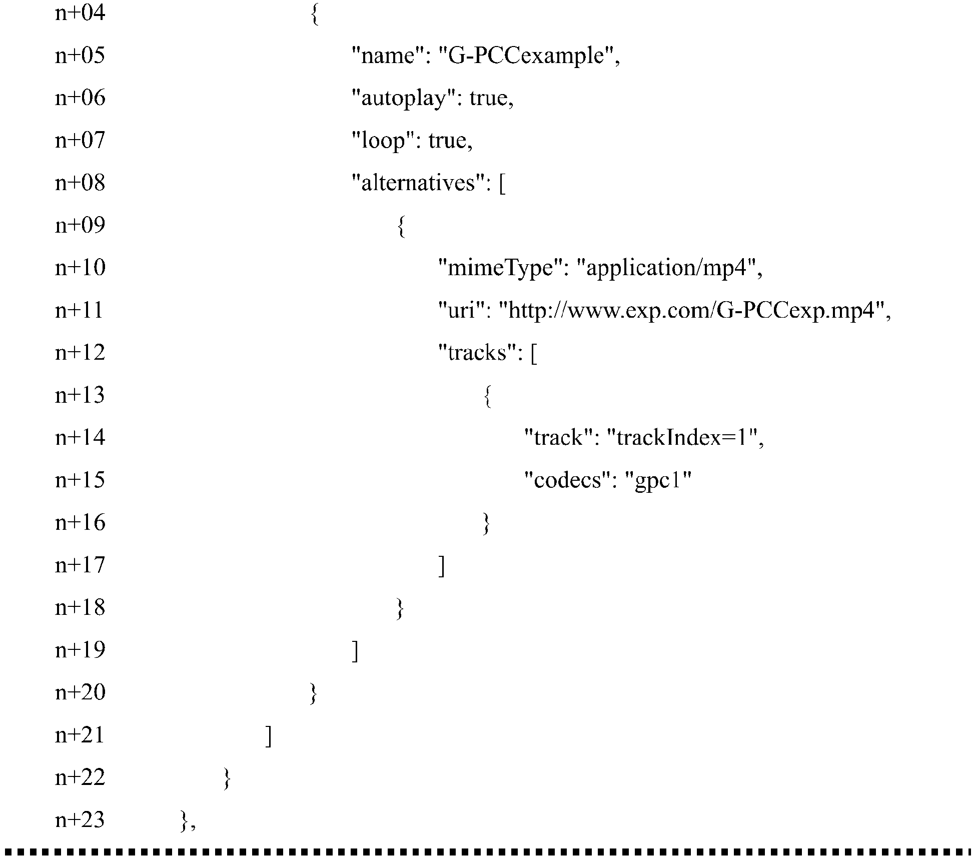

A haptic sense provides the user with additional entertainment and sensory immersion, and experience and enjoyment that media content brings to the user may be significantly enhanced by correctly adding the haptic sense to audio/video content. If there is a standardized and unified data model for representing haptic data, and the data model includes all information required for a designated synthesizer to present a haptic effect, the haptic data may be standardly decoded.

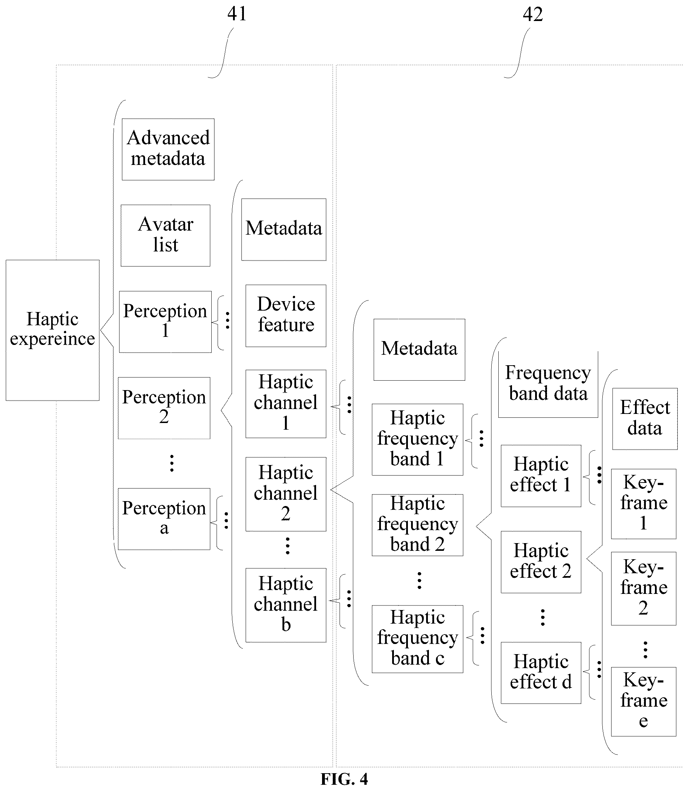

FIG. 4 is a schematic structural diagram of a haptic data model. As shown in FIG. 4, the haptic data model includes a description part 41 and an encoding part 42, and adopts a hierarchical structure to describe the haptic data layer by layer. The description part 41 focuses on perceptual and haptic channel information as main description content in a data structure, while the encoding part 42 focuses on a haptic frequency band, a haptic effect, and a keyframe as main description content in the data structure. A highest layer of the description part 41 includes an overall description of content included in the data structure, and is typically used to describe entire haptic experience defined in a file or a media stream. The haptic experience includes some advanced metadata and provides a pre-defined list of avatars (namely representations of body parts) for subsequently specifying a position at which a haptic stimulus is implemented on a body. The haptic data is described through a perception list (perceptions 1 to a). Each haptic perception in the haptic perception list corresponds to a haptic signal related to a specific perception modality (such as vibration, force, position, speed, or temperature). Each perception in the perception list includes some features related to a haptic implementation device and metadata information associated with the perception, such as an avatar. A perceptual signal itself is generated by mixing a plurality of haptic channels (haptic channels 1 to b) together in addition to the metadata. Each haptic channel not only includes metadata on a channel configuration (such as a mixing gain), but also includes a haptic frequency band list (haptic frequency bands 1 to c) decomposed by frequency band. A partial signal within a frequency range is given for frequency band data of each haptic frequency band. The haptic frequency band is described using the frequency band data and a haptic effect list (haptic effects 1 to d). Each haptic effect in the haptic effect list includes a keyframe list (keyframes 1 to e). Different frequency bands include different signals, and a haptic signal in a channel may be reconstructed by combining data from different frequency bands.

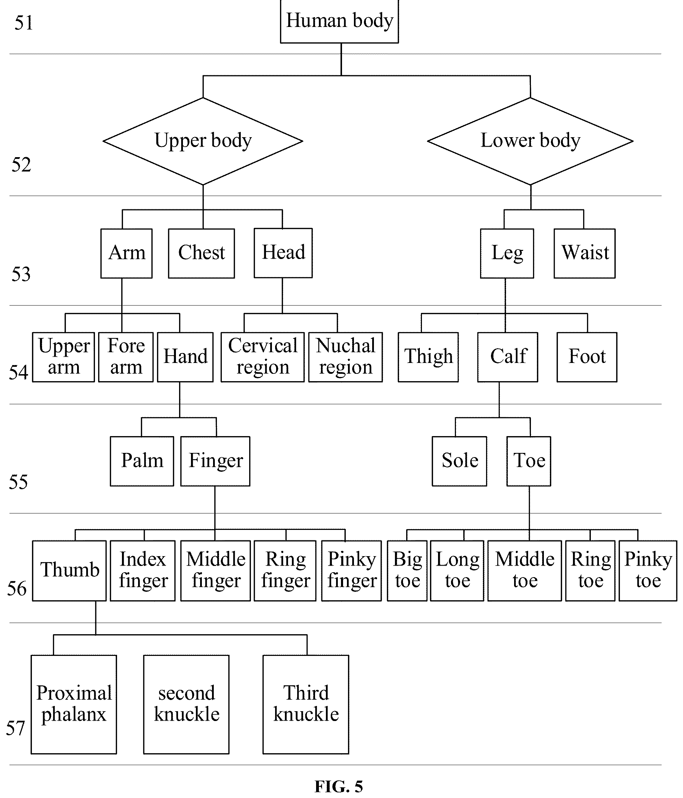

In some embodiments, in order to achieve a channel-level haptic effect in a designated body part, the hierarchical structure may also be used to describe a part of a human body layer by layer. As shown in FIG. 5, the human body hierarchically includes: a first hierarchy 51 including all parts of the human body; a second hierarchy 52 including an upper body and a lower body; a third hierarchy 53 including an arm, a chest, a head of the upper body, as well as a leg and a waist of the lower body; a fourth hierarchy 54 including an upper arm, a forearm hand, cervical and nuchal regions of the head, a thigh, a calf and a foot; a fifth hierarchy 55 including a palm, a finger, a sole, and a toe; a sixth hierarchy 56 including a thumb, an index finger, a middle finger, a ring finger, a pinky finger, a big toe, a long toe, a middle toe, a ring toe, and a pinky toe; and a seventh hierarchy 57 including a proximal phalanx, a second knuckle, and a third knuckle of the thumb.

All perception modalities of the haptic perception in the haptic data model are shown in following Table 12:

**Table 12**

| Modality name | Physical unit of the haptic perception | Unit of an independent variable |
|---|---|---|
| Pressure | Pa | **S** |
| Acceleration | m/s^2 | **S** |
| Speed | m/s | **S** |
| Position | m | **S** |
| Temperature | K | **S** |
| Vibratory haptic sense | -1/1 (normalized) | **S** |
| Water | m^3 | **S** |
| Wind | m/s | **S** |
| Force | N | **S** |
| Electric haptic sensation | -1/1 (normalized) | **S** |
| Vibration texture | -1/1 (normalized) | m |
| Stiffness | N | m |
| Friction | -1/1 (normalized) | m |
| Others | -1/1 (normalized) | s |

Digital encoding is crucial for allowing a digital haptic device to run. As a first-order media type similar to audio and video, a haptic media file also stores the haptic data in a digital format. At present, there is no unified encoding format for the haptic media file, and encoding formats developed and used by various technology manufacturers are different. As a result, the haptic media file is incompatible with a decoder-end format, hindering widespread application of the haptic sense in the market. Therefore, when developing an ISO/IEC 23090-31 haptic standard, Working Group 7 of the ISO/IEC MPEG highlights necessity of standardizing a haptic encoding representation. A standard haptic encoding format (and a related standardized decoder) will help incorporate the haptic sense into ISOBMFF, MPEG-DASH, and MPEG-I standards, making it easier for a content creator and a media/streaming content provider to integrate the haptic sense in a standardized manner and improve overall user experience.

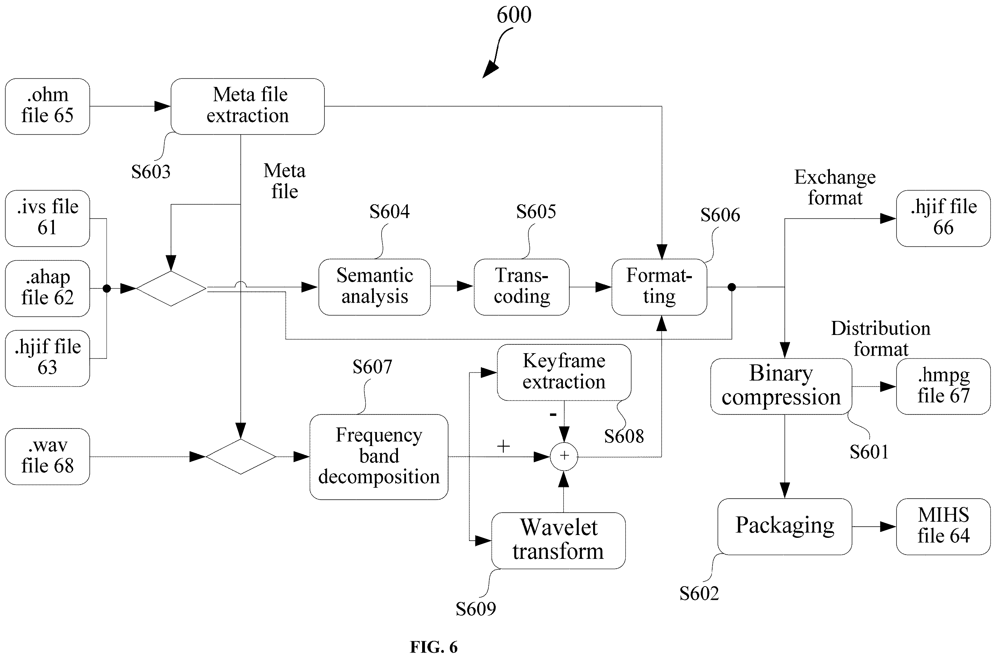

A codec architecture proposed by Working Group 7 of the ISO/IEC MPEG in developing an ISO/IEC 23090-31 haptic encoding and decoding standard may be a pulse code modulation (PCM) file (WAV files/. wav files), and may also process a descriptive haptic file (AHAP file/. ahap file or IVS file/. ivs file or HJIF file/. hjif file). The metadata information is provided to a codec in a format of an .ohm file. The haptic encoding representation allows descriptive and quantitative data to be encoded in a human-readable JSON format, and an encoding process is shown in FIG. 6.

FIG. 6 is a schematic flowchart of encoding the haptic signal. As shown in FIG. 6, a haptic signal encoder 600 processes a PCM haptic file and a descriptive haptic file in different ways. For the descriptive haptic file (an .ivs file 61 or an .ahap file 62, or an .hjif file 63), the haptic signal encoder 600 first recognizes a format of the haptic file. If a to-be-encoded haptic file is the .hjif file 63, no transcoding is required, and the .hjif file 63 and a meta file are directly packaged into an MIHS file 64 through a binary compression step S601 and a packaging step S602. The meta file is obtained by performing meta file extraction on the .ohm file 65 through a meta file extraction step S603. If a to-be-encoded haptic file is the .ahap file 62 or the .ivs file 61, transcoding is required. The haptic signal encoder 600 first analyzes the to-be-encoded haptic file semantically through a semantic analysis step S604, and then transcodes and formats the to-be-encoded haptic file into the data model shown in FIG. 4 through a transcoding step S605 and a formatting step S606. Transcoded data may be exported as an exchange file format (.hjif) 66 encoded in a JSON readable form, a distribution format (.hmpg) 67 encoded as a compressed binary file, or a stream format (MIHS) 64 for defining a data packet-based bitstream. A signal analysis process of the haptic signal encoder 600 for a PCM file (.wav) 68 is divided into two sub-processes. In a first sub-process, a frequency band decomposition step S607 is performed on an original signal, and then a low-frequency signal obtained from frequency band decomposition is encoded based on a keyframe extraction step S608. In a second sub-process, the low-frequency signal is reconstructed, a residual between a reconstructed low-frequency signal and the original low-frequency signal is calculated, and a residual signal is obtained. Then, the residual signal is added to the original high-frequency signal and encoded through a wavelet transform step S609 to output an encoding result in at least one format of the .hjif file 66, the .hmpg file 67, or the MIHS file 64.

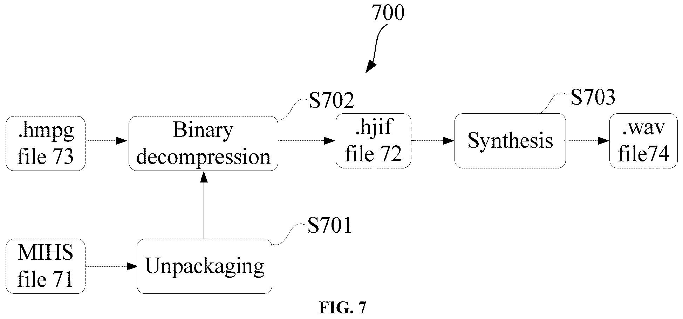

FIG. 7 is a schematic flowchart of decoding the haptic signal. As shown in FIG. 7, a haptic signal decoder 700 may perform, through an unpacking step S701 and a binary decompression step S702, unpacking and decompression on a stream format input (MIHS file 71) packaged into a data packet to obtain an .hjif file 72, and may also select an .hmpg file 73 as an input, and decompress the input through the binary decompression step S702 to output the .hjif file 72. Then, haptic data included in the .hjif file 72 may be directly presented on the haptic device, or an intermediate synthesizer that generates PCM data may be used to output a .wav file 74 through a synthesis step S703 for rendering on the haptic device. An .hjif format is a JSON-based human-readable format and has not been optimized for memory usage. The .hjif format may be easily parsed and manually edited, facilitating content design and creation, and therefore becomes an ideal exchange format. For a distribution purpose, .hjif data may be compressed into a more memory-efficient binary .hmpg bitstream. This compression is lossy, and different parameters may affect encoding depths of an amplitude and a frequency that make up a bitstream. For a streaming transmission purpose, data may be compressed and packaged into an MPEG-I haptic stream (MIHS). This method can meet expectations of related technologies for compatibility with descriptive and quantitative formats of the haptic media file, as well as interoperability between haptic terminal devices, to achieve 3D immersive experience and the distribution purpose. The MIHS is also a basis for encapsulating the haptic media file into the ISOBMFF.

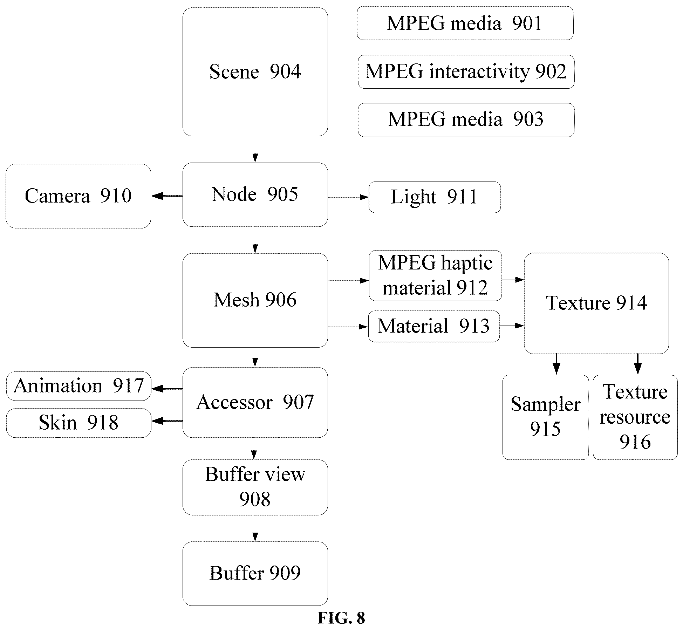

In some embodiments, referring to FIG. 8, in order to associate the haptic media file with an object in the scene and incorporate the haptic sense as a part of immersive media experience, a proposal is approved at the 140^{th} MPEG meeting to add MPEG haptic (MPEG_haptic) 801 and an MPEG haptic material (MPEG_material_haptic) 802 to the MPEG scene description document (the scene description document shown in FIG. 3). In a new version of a haptic extension based on the glTF, the haptic support may be enabled in scene description. The MPEG haptic 801 may index the accessor description module in an accessor list of the scene description document to obtain description information of an accessor for accessing rendering data that is of the haptic media file and stored in the buffer. The MPEG haptic material (MPEG_material_haptic) 802 is a lower-level description module of the mesh description module and configured to support the user to obtain a corresponding haptic feedback through active and/or passive interaction in a virtual scene.

Texture mapping is a technique that efficiently and realistically displays details of a 3D model without a need for a high-resolution mesh. This method is originally developed in computer graphics and is now widely used in haptic rendering. The texture mapping may enable a virtual object to enhance an additional haptic material attribute distributed on a surface of the virtual object, thereby increasing authenticity of the virtual object. Based on the texture mapping, a concept of a haptic material is further proposed in related technologies. In the computer graphics, a material is an easy-to-use data packet that includes all data required for visually rendering the virtual object. By analogy, the haptic material should provide all necessary elements for the haptic rendering, and different haptic materials contain different haptic features. Different haptic material attributes are stored in different haptic material packages, which facilitates related tasks of haptic design and implementation. The haptic material attributes are defined in following Table 13.

**Table 13**

| Name | Data type | Default value | Description |
|---|---|---|---|
| Stiffness | Array | 0 | Defines perception stiffness of the object surface. Force perceived by the user is opposite to force exerted by a body |
| | | | part on the object. This attribute is described using a texture that stores a stiffness coefficient. A rendering model is: F=kx, where k represents a stiffness value of a displacement x along the stiffness attribute. The rendering model is applicable to various isotropic materials |
| Friction | Array | 0 | Defines perceived friction, which is a type of force that impedes sliding of the body part on the object surface. |
| | | | This attribute is described using a texture that stores a friction coefficient. A rendering model is: Ff=µ*F, where µ represents the friction coefficient, and F represents the force exerted by the body part on the object surface |
| Haptic texture | Array | 0 | Defines a texture perceived by the body part when sliding on a physical surface |
| Temperature | Array | 0 | Defines a perceived temperature of the object. This attribute is described using a texture that stores a temperature distribution |
| Vibration | Array | 0 | Defines a vibration signal. This attribute is described using a texture that stores an amplitude and/or a frequency of a signal |
| Custom | Array | 0 | Defines a texture of customized haptic data |

Each haptic material attribute in Table 13 is represented by a texture array, and texture arrays of different attributes are combined to form a specific haptic perception. The haptic material attribute may serve as a traditional 2D texture to provide a relevant haptic texture value, and may also serve as a haptic element map. Each pixel in the haptic element map includes a plurality of haptic unit elements, and is associated with a sequential index of a corresponding haptic object (hapticObject) in the MPEG haptic (MPEG_haptic). The rendering engine may select a most suitable texture array for rendering. In this way, each array element includes a haptic texture and an enumerated texture type. An enumerated haptic material texture type includes:
High_resolution: The haptic texture is a high-resolution 2D texture that directly stores a haptic value.

Low_resolution: The haptic texture is a low-resolution 2D texture that directly stores the haptic value.

Reference: The haptic texture is a 2D haptic element map that includes a haptic signal reference. Each pixel in the haptic texture corresponds to a sequential index of an accessor in the haptic object (hapticObject) in the MPEG haptic (MPEG_haptic).

Other: Unknown proprietary texture format.

To explain data included in a 2D texture, it is necessary to specify a bit depth and a range of the 2D texture. Tables 14 and 15 below show a bit depth and a range of each haptic material attribute for a low-resolution haptic texture and a high-resolution haptic texture, respectively.

**Table 14**

| Name | Bit depth | Range | Resolution |
|---|---|---|---|
| Stiffness | 8-bit | 0-10000 *N.s⁻¹*/*m.s⁻¹* | *40 N.s⁻¹*/*m.s⁻¹* |
| Friction | 8-bit | +5 | 0.04 |
| Vibrotactile texture | 8-bit | ±10 | 0.08 |
| Temperature | 8-bit | [-50:+75]°C | 0.5°C |
| Vibration | 8-bit | [0-1] | 0.004 |
| custom | 8-bit | 0-255 | 1 |

**Table 15**

| Name | Bit depth | Range | Resolution |
|---|---|---|---|
| Stiffness | 16-bit | 0-10000 *N.s⁻¹*/*m.s⁻¹* | 40 *N.s⁻¹*/*m.s⁻¹* |
| Friction | 16-bit | ±5 | 0.003 |
| Vibrotactile texture | 16-bit | ±10 | 0.0015 |
| Temperature | 16-bit | [-50:+75]°C | 0.004°C |
| Vibration | 8-bit (amplitude) | [0-1] [0-300] Hz | 0.004 1.17Hz |
| | 8-bit (frequency) | | |
| custom | 8-bit | 0-65535 | 1 |

As shown in Table 15, a value of a pixel mapped to each texture in a high-resolution vibration texture is divided into two bytes: a first byte is used to describe an amplitude value, and a second byte is used to describe a frequency value.

Syntax elements in the MPEG haptic material (MPEG_material_haptic) 802 are defined in following Table 16:

**Table 16**

| Name | Data type | Default value | Usage | Description |
|---|---|---|---|---|
| Stiffness | Attay | N/A | Compulsory | Defines a type of a stiffness material |
| | | | | in the haptic material attribute |
| Friction | Attay | N/A | Compulsory | Defines a type of a friction material in the haptic material attribute |
| Vibrotactile texture | Attay | N/A | Compulsory | Defines a type of a haptic texture material in the haptic material attribute |
| Temperature | Attay | N/A | Compulsory | Defines a type of a temperature material in the haptic material attribute |
| Vibration | Attay | N/A | Compulsory | Defines a type of a vibration material in the haptic material attribute. |
| custom | Attay | N/A | Compulsory | Defines a type of a customized material in the haptic material attribute |

Table 16 shows semantic meanings of the syntax elements included in the MPEG haptic material (MPEG_material_haptic) 802, and the enumerated values in Table 16 are the haptic material attributes included in Table 13. The MPEG haptic material (MPEG_material_haptic) 802 in the MPEG scene description document may associate the object in the scene with the haptic material, and the user may obtain a corresponding haptic perception when interacting with the object.

Each haptic material attribute includes different haptic features, but is internally stored in a same manner. Table 17 takes the stiffness in the haptic material attribute as an example to further describe stiffness (MPEG_material_haptic.stiffness) enumerated in the MPEG haptic material.

**Table 17**

| Element name | Data type | Default value | Usage | Description |
|---|---|---|---|---|
| Texture | Array | N/A | Compulsory | Defines a stiffness texture, which is described as a stiffness coefficient that is stored by the 2D texture. For a specific definition of the syntax element, reference is made to Table 6. |
| type | String | High_resuolution | Compulsory | Defines a texture type, including |
| | | | | High_resolution, Low-resolution, and Reference. |

### 2. Display engine

Referring to FIG. 1, in the working process of the scene description framework for the immersive media, the display engine 11 is mainly used to obtain the scene description document, parse the obtained scene description document to obtain a composition structure of a 3D-scene-to-be-rendered and detailed information in the 3D-scene-to-be-rendered, and render and display the 3D-scene-to-be-rendered based on the information obtained by parsing the scene description document. In the embodiments of the present disclosure, a specific working process and principle of the display engine 11 are not limited. The display engine 11 may parse the scene description document, issue the instruction to the MAF 12 through the MAF API, issues an instruction to a buffer management module 13 through a buffer API, retrieve processed data from the buffer, and render and display the 3D scene and its object.

### 3. MAF

In the working process of the scene description framework for the immersive media, the MAF 12 may receive the instruction from the display engine 11, and access and process the media file based on the instruction sent by the display engine 11. Specifically, after obtaining the media file, the MAF 12 processes the media file. Processing procedures of different types of media files are significantly different. In order to support a wide variety of media types and consider efficiency of the MAF, a plurality types of pipelines are designed in the MAF, and only a pipeline that matches a media type is enabled during the processing.

An input of the pipeline is a media file downloaded from a server or read from a local storage control. The media file often has a complex structure and cannot be directly used by the display engine 11. Therefore, the pipeline is mainly used to process data of the media file, such that the data of the media file meets a requirement of the display engine 11.

In the working process of the scene description framework for the immersive media, media data processed by the pipeline needs to be delivered to the display engine 11 in a standardized arrangement structure, which requires participation of the buffer API and the buffer management module 13. The buffer API and the buffer management create a corresponding buffer based on a format of the processed media data, and are responsible for subsequent management of the buffer, such as updating, releasing, and other operations. The buffer management module 13 may communicate with the MAF 12 through the buffer API, and may also communicate with the display engine 11, so as to manage the buffer. When the buffer management module 13 communicates with the MAF 12, the display engine 11 needs to first send a relevant buffer management instruction to the MAF 12 through the MAF API. The MAF 12 then sends the relevant buffer management instruction to the buffer management module 13 through the buffer API. When the buffer management module 13 communicates with the display engine 11, the display engine 11 only needs to directly send, through the buffer API, buffer management description information obtained by parsing the scene description document to the buffer management module 13.

As shown in FIG. 8, at present, the 140^{th} MPEG meeting approves the proposal to add the MPEG haptic (MPEG_haptic) 801 and the MPEG haptic material (MPEG_material_haptic) 802, and allows the MPEG haptic 801 to be indexed to the accessor description module in the accessor list of the scene description document to obtain haptic rendering data of the haptic media file. The haptic rendering data of the haptic media file mostly describes overall haptic experience related to an event or an environment. The haptic rendering data of the indexed haptic media file is regarded as the haptic signal, which may essentially and directly drive the haptic device to generate a corresponding haptic feedback on the human body.

As described above, in relevant technologies, each array element includes a haptic texture and an enumerated type of the haptic material attribute, and the type of the haptic material attribute includes the High_resolution, the Low_resolution, the Reference, and the Other. When the type of the haptic material attribute is the High_resolution or the Low_resolution, a texture image or the haptic texture material data packet that is indexed by the texture stores the haptic value instead of a color value. The haptic value only represents a size of a specific attribute (such as a size of the friction coefficient and a size of the stiffness coefficient), and may be directly obtained by the display engine for the haptic rendering. However, when the type of the haptic material attribute is the Reference, each pixel in the texture image or the haptic texture material data packet does not directly store the haptic value. Each pixel in the texture image or the haptic texture material data packet points to one haptic media accessor, and a haptic value of a haptic material attribute whose type is the Reference needs to be obtained from the haptic media file. Therefore, how to support the haptic media file in the scene description framework to support the haptic material attribute whose type is the Reference has become one of research hotspots in this field.

Some embodiments of the present disclosure provide a scene description framework supporting a haptic media file, including: support by a scene description document for the haptic media file, support by a MAF API for the haptic media file, support by a MAF for the haptic media file, support by a buffer API for the haptic media file, support by buffer management for the haptic media file, and other content.

A process of indexing a haptic media file in a 3D scene based on the scene description framework and rendering and displaying the 3D scene based on the haptic media file is as follows: Firstly, a display engine downloads, through a network protocol, the scene description document provided by a 3D scene provider, or reads the scene description document from a local memory. The scene description document obtained by the display engine includes description information of the 3D scene and description information of the haptic media file in the 3D scene. The description information of the haptic media file includes an access address of the haptic media file, attribute information (a media type, a codec parameter used, and the like) of the haptic media file, and the like. In addition, a format requirement of haptic rendering data obtained by decoding the haptic media file is also included. The format requirement of the haptic rendering data obtained by decoding the haptic media includes a format requirement (a data type, a data length, a data access method, and the like) of information data such as a description part and an encoding part (namely, the description part 41 and the encoding part 42 in FIG. 4, which are collectively referred to as the haptic media file in the following description) of haptic data obtained by processing the haptic media file, and a format requirement and an address of other media data, including description information of a texture resource and a haptic material attribute that need to be subsequently used, and other data. After parsing the scene description document, the display engine calls the MAF API to transfer the access address of the haptic media file, the attribute information (the media type, a codec used, and the like) of the haptic media file, and other information to the MAF. In addition, the display engine transfers format requirements of specific decoded haptic media data and other media data in the parsed scene description document to the MAF by calling the MAF API. Then, based on the access address that is of the haptic media file and transferred by the display engine, the MAF requests to download the haptic media file from a server or locally obtains the haptic media file. Afterwards, the MAF establishes a corresponding pipeline for the media file based on the media type, the codec parameter, and other information, and converts obtained media data from an encapsulation format to a format required in the scene description document, that is, converts the haptic media file into the format (the data type, the data length, the data access method, and the like) specified in the scene description document in the corresponding pipeline. The haptic media file may be decapsulated, decrypted, decoded, and post-processed in the pipeline. Subsequently, the pipeline stores the haptic rendering data that is of the haptic media file and in the format specified in the scene description document and other media data in a buffer. The buffer may be created by the display engine by calling a buffer management module through the buffer API. If the display engine has not created the buffer, the MAF may invoke the buffer management module through the buffer API to create the buffer. In this way, the buffer may be created, updated, and released. Finally, in the buffer, the display engine reads the haptic rendering data of the haptic media file in the format specified in the scene description document to render a haptic part in the 3D scene.

The following separately describes the scene description document, the MAF API, the MAF, the buffer API, and the buffer management that support the haptic media file.

### 1. Scene description document that supports the haptic media file

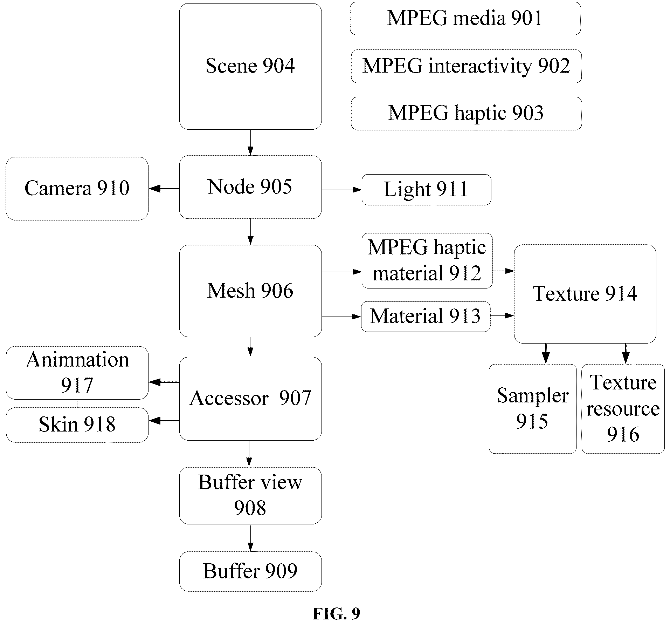

FIG. 9 is a schematic structural diagram of the scene description document that supports the haptic media file according to an embodiment of the present disclosure. As shown in FIG. 9, the scene description document that supports the haptic media file includes but is not limited to: an MPEG media description module (MPEG_media) 901, an MPEG interactivity description module (MPEG_interactivity) 902, an MPEG haptic description module (MPEG_haptic) 903, a scene description module (scene) 904, a node description module (node) 905, a mesh description module (mesh) 906, an accessor description module (accessor) 907, a buffer view description module (bufferView) 908, a buffer description module (buffer) 909, a camera description module (camera) 910, a light description module (light) 911, an MPEG haptic material (MPEG_material_haptic) 912, a material description module (material) 913, a texture description module (texture) 914, a sampler description module (sampler) 915, a texture resource (image) 916, an animation description module (animation) 917, and a skin description module (skin) 918. The following describes in detail each part in the scene description modules shown in FIG. 9.

In order to enable the scene description document to correctly describe relevant information of the haptic media file in the 3D scene, some embodiments of the present disclosure extend a value of a syntax element in the MPEG media description module (MPEG_media) 901 in the scene description document, and at least one of following extensions is included:
Extension 1: A value of a media type syntax element (mimeType) used to declare a media resource type of a media file of media in an alternative version list (alternatives) of a media list (media) of the MPEG media description module (MPEG_media) in the scene description document is extended. The extension of the media type syntax element (mimeType) includes adding a value associated with the haptic media file to the media type syntax element (mimeType). For example, in a case where the media list of the MPEG media description module in the scene description document includes haptic media, and the value of the media type syntax element (mimeType) used to declare the media resource type of the media file follows a relevant provision in an ISO/IEC 23090-32 standard, when the media file includes audio data, video data, and haptic data, the value of the media type syntax element (mimeType) is "video/mp4"; when the media file includes only the audio data and the haptic data, the value of the media type syntax element (mimeType) is the "video/mp4"; and when the media file includes only the haptic data, the value of the media type syntax element (mimeType) is "haptics/mp4".

Extension 2: A value of a first track index syntax element (track) used to declare track information of the media file in a track array (tracks) of the alternative version list (alternatives) of the media list (media) of the MPEG media description module (MPEG_media) in the scene description document is extended. The extension of the first track index syntax element (track) includes: When an encoded haptic media file is referenced by the scene description document as an item in an array of the alternative version list of the media list of the MPEG media description module, a selection method of a reference track in the ISO/IEC 23090-32 standard should be followed. For example, when the haptic media is encapsulated into one MIHS track by using an ISOBMFF, the one MIHS track should be referenced in the MPEG media description module. When the haptic media is encapsulated into a plurality of MIHS tracks by using the ISOBMFF, reference should be made to subsequent supplementary content of the ISO/IEC 23090-32 standard.

Extension 3: A value of a codec parameter syntax element (codecs) used to declare a codec type of media data included in a bitstream track in the track array (tracks) of the alternative version list (alternatives) of the media list (media) of the MPEG media description module (MPEG_media) in the scene description document is extended. A codec parameter of a media file included in the bitstream track is defined in IETFRFC 6381. When the bitstream track includes different types of codecs (for example, AdaptationSet includes representations for different codecs), the codec parameter syntax element (codecs) may be represented by a list of codec values separated by a comma. That is, the extension of the value of the codec parameter syntax element (codecs) includes: When the media data is the haptic data and its encapsulation follows the ISO/IEC 23090-32 standard, the value of the codec parameter syntax element (codecs) should be set according to a provision in a standard for carriage of haptics data in the ISO/IEC 23090-32 standard. For example, when the haptic data is encapsulated by using an ISMBOFF, a first group of elements in the codec parameter syntax element (codecs) represents a code of a codec in an ISO/IEC 23090-31 standard. A parameter of the codec parameter syntax element (codecs) and its form are "codecs":"mih1.oo", where "mih1" represents a type of data format description for encapsulating the haptic data in the ISOBMFF. This value is not unique and may be replaced by another sample format name that complies with ISOBMFF encapsulation. "oo" represents an object type indication value defined on an "Object Type" page at a website of the MP4 registration authority.

That is, in order to enable the scene description document to correctly describe the haptic media file, some embodiments of the present disclosure extend a value of a syntax element in the MPEG media description module (MPEG_media) in the scene description document, and at least one of syntax elements shown in following Table 18 is specifically extended:

**Table 18**

| Syntax element name | Data type | Default value | Usage | Description |
|---|---|---|---|---|
| mimeType | String | N/A | Compulsory | When a media resource includes an audio resource, a video resource, and a haptic resource, the value of the "mimeType" is the "video/mp4". |
| | | | | When a media resource includes only the audio resource and the haptic resource, the value of the "mimeType" is the "video/mp4". |
| | | | | When a media resource includes only the haptic resource, the value of the "mimeType" is the "haptics/mp4". |
| track | String | N/A | Compulsory | When the haptic data is referenced by the scene description document as an item in the MPEG_media.alternative.tracks, and the referenced item complies with a provision of the track in the ISOBMFF: |
| | | | | For haptic media data encapsulated into a single track, a single track of a haptic media encapsulation file is referenced in the MPEG_media. |
| | | | | For haptic data encapsulated into a plurality of tracks, a reference track referenced in the MPEG_media should be selected according to a relevant provision in the ISO/IEC 23090-32 standard. |
| codecs | String | N/A | Compulsory | When the media data is the haptic data, the value of the 'codecs' should be set according to the provision in the standard for carriage of haptics data in the ISO/IEC 23090-32 standard. |

It should be noted that the haptic media file is encapsulated based on a data structure shown in FIG. 4. The haptic media file not only includes an information part, but also allows for a metadata configuration part. An encapsulation method of the haptic media file is not limited in the embodiments of the present disclosure, and an encoded and encapsulated haptic media file may be obtained based on the access address of the haptic media file in the MPEG media description module.

In order to enable the scene description document to correctly describe relevant haptic information in the 3D scene, some embodiments of the present disclosure independently extend the MPEG interactivity description module (MPEG_interactivity) 902 in the scene description document. The MPEG interactivity description module (MPEG_interactivity) 902 is configured to describe interaction triggering, an interaction action, and a correlation between the interaction triggering and the interaction action. First-level syntax elements in the MPEG interactivity description module (MPEG_interactivity) 902 are defined in following Table 19:

**Table 19**

| Syntax element name | Data type | Description |
|---|---|---|
| triggers | Array | Includes definitions of all triggers used in the 3D scene. |
| actions | Array | Includes definitions of all actions used in the 3D scene. |
| behaviors | Array | Includes definitions of all behaviors used in the scene. |
| | | One behavior consists of a control parameter, a priority weight, and an optional interrupt action that are of a paired trigger and action. |

It should be noted that Table 19 only lists partial content related to support for the haptic media, and the MPEG interactivity description module (MPEG_interactivity) 902 may also include other first-level syntax elements, which is not limited in the embodiments of the present disclosure.

A syntax element in the triggers in the MPEG interactivity description module (MPEG_interactivity) 902 is defined in following Table 20:

**Table 20**

| Syntax element name | Data type | Description |
|---|---|---|
| type | Enum | Defines a type of a trigger, including: |
| | | TRIGGER COLLISION, TRIGGER PROXIMITY, |
| | | TRIGGER USER INPUT, and TRIGGER VISIBILITY. |

Syntax elements in the "actions" in the MPEG interactivity description module (MPEG_interactivity) 902 are defined in following Table 21:

**Table 21**

| Syntax element name | Data type | Description |
|---|---|---|
| | | Defines an action type, including: |
| | | ACTION_ACTIVATE=0 (setting an activation status of a node) |
| | | ACTION_TRANSFORM (setting transformation as a node) |
| | | ACTION_BLOCK (preventing node transformation) |
| | | ACTION_ANIMATION (selecting and controlling an animation) |
| type | Enum | ACTION_MEDIA (selecting and controlling media) |
| | | ACTION_MANIPULATE (selecting a to-be-manipulated operation) |
| | | ACTION_SET_MATERIAL (setting a new material as a node) |
| | | ACTION_HAPTIC (obtaining haptic feedbacks on a group of nodes) |
| | | ACTION_SET_AVATAR (obtaining an avatar-related operation) |
| hapticActionNodes | Array | Describes an index of a node corresponding to a haptic action (this syntax element is enabled only when the action type is the ACTION_HAPTIC). |

Syntax elements in the hapticActionNodes of the "actions" in the MPEG interactivity description module (MPEG_interactivity) 902 are defined in following Table 22:

**Table 22**

| Syntax element name | Data type | Description |
|---|---|---|
| triggers | Array | Describes an index value of a trigger description module of a behavior. |
| actions | Array | Describes an index value of an action description module of the behavior. |

Syntax elements in the "behaviors" in the MPEG interactivity description module (MPEG_interactivity) 902 are defined in following Table 23:

**Table 23**

| Syntax element name | Data type | Description |
|---|---|---|
| triggers | Array | Describes the index value of the trigger description module of the behavior. |
| actions | Array | Describes the index value of the action description module of the behavior. |

In order to support the haptic media file in the scene description framework, some embodiments of the present disclosure independently extend the MPEG haptic description module (MPEG_haptic) 903 in the scene description document. Compared with the MPEG haptic (MPEG_haptic) 801 in the scene description document shown in FIG. 8, the MPEG haptic description module (MPEG_haptic) 903 in the embodiments of the present disclosure is no longer a lower-level description module of the node description module (node), but a top-level description module in the scene description document. The MPEG haptic description module (MPEG _haptic) 903 is also no longer configured to index a media description module in the media list of the MPEG media description module (MPEG_media) 901, but declares, on a haptic object basis, an accessor for accessing the haptic rendering data of the haptic media file. A top-level syntax element in the MPEG haptic description module (MPEG_haptic) 903 is defined in following Table 24:

**Table 24**

| Syntax element name | Data type | Description |
|---|---|---|
| HapticObject | Array | Provides a haptic element list to enable haptic support. |

A syntax element in the "hapticObject" of the MPEG haptic description module (MPEG _haptic) 903 is defined in following Table 25:

**Table 25**

| Syntax element name | Data type | Description |
|---|---|---|
| accessor | Array | Includes an index value of an accessor description |
| | | module corresponding to an accessor for accessing decoded data from at least one media source in an MPEG media.media array. |

In some embodiments, description methods of the scene description module (scene) 904 and the node description module (node) 905 in the scene description document that supports the haptic media file include: when the haptic media file is included in the 3D scene, using scene and node description methods to describe an overall structure of the 3D scene, as well as a structural hierarchy and a position of the haptic media file in the 3D scene. Each 3D scene is described using one independent scene description module. In the 3D scene, there may be many specific objects, such as a virtual digital human, a nearby 3D object, a distant background image, and a virtual camera representing a user's viewpoint and viewing angle. The scene description document uses these specific objects as nodes in the 3D scene, and each node may represent one object or an object set composed of a plurality of objects. A relationship between nodes reflects a relationship between various components in the 3D scene. Each scene description document may describe at least one 3D scene, and there is only a parallel relationship instead of a hierarchical relationship between 3D scenes, that is, there is no inclusion relationship between the 3D scenes. There may be a parallel or hierarchical relationship between the nodes, that is, there is an inclusion relationship between the nodes. In this way, a plurality of specific objects may be integrated together for representation. If one node is included in another node, the included node is referred to as a child node, and the child node is represented by "children" instead of "node". A hierarchical node structure may be formed by flexibly combining the node and the child node.

In some embodiments, a description method of the mesh description module (mesh) 906 in the scene description document that supports the haptic media file includes: describing, by the scene description document by using a data format of a 3D mesh, in other words, by using the mesh description module (mesh) 906, a node representing a 3D object. The mesh description module includes various types of specific information, such as a 3D coordinate and a color. The above information belongs to a syntax element in an attribute (mesh.primitives.attribute) of a primitive of the mesh description module (mesh). A most basic mesh description module includes a 3D coordinate of a vertex, a connection relationship between vertices, color information of the vertex, and a 3D coordinate of a required texture value. In the mesh description module, it is necessary to enable a texture coordinate (Texcoord) of a 3D coordinate set of the required texture value, such that a haptic value obtained from a texture may be subsequently attached to a corresponding 3D coordinate of the 3D object. The texture coordinate (Texcoord), color data, and other information belong to the attribute (mesh. primitives. attribute) of the primitive of the mesh description module. However, the haptic media does not need to be defined temporarily in the mesh description module by referencing the attribute (attribute) such as a color count. It is only required to enable the MPEG haptic material description module (MPEG_material_haptic) 912 as a content supplement parallel to the material description module (material) 913 to support further definition of a haptic material.

In some embodiments, description methods of the material description module (material) 913 and the texture description module (texture) 914 in the scene description document that supports the haptic media file include: describing additional information of a surface of the 3D object through the material description module (material) 913 and the texture description module (texture) 914. When a conventional 3D object is described, if only geometric information of the 3D object is described with the help of the mesh description module, or a color of a vertex of the 3D mesh is defined monotonously, it is far from enough to enhance authenticity of a virtual object. Therefore, more information needs to be added to a surface of the 3D object. For a conventional 3D modeling technique, this process may also be referred to as texture mapping, texture addition, or the like. That is, the scene description document that supports the haptic media file is based on glTF2.0, and the material description module (material) 913 and the texture description module (texture) 914 are continuously used. In addition, a cooperative relationship between the material description module (material) 913 and the texture description module (texture) 914 includes: The material description module (material) 913 and the texture description module (texture) 914 jointly define color and physical information of an object surface. Under the texture description module (texture) 914, the sampler description module (sampler) 915 and the texture resource description module (image) 916 are specified. The sampler description module (sampler) 915 defines how to map a texture image onto the object surface, achieving specific adjustment and packaging of the texture. The texture resource description module (image) 916 uses a ULR to identify and index the texture resource.

In some embodiments, a description method of the MPEG haptic material description module (MPEG_material_haptic) 912 in the scene description document that supports the haptic media file includes: further describing the haptic material attribute through the MPEG haptic material description module (MPEG_material_haptic) 912. When the haptic media file is included in the 3D scene, it is necessary to consider the haptic material attribute in a material characteristic. The MPEG haptic material description module (MPEG_material_haptic) 912 includes haptic material attribute description modules corresponding to various haptic material attributes (stiffness, friction, haptic texture, temperature, vibration, and custom). The haptic material attribute description module includes an attribute type syntax element (type), and a value of the attribute type syntax element may be High_resolution, Low_resolution, or Reference. An object including a haptic feedback in the 3D scene may include different types of haptic material attributes. For different haptic material attributes on a same object, haptic values or haptic media perceived by the user for the haptic values may be obtained in different ways, in order to associate the haptic media in the scene description document to obtain the haptic feedback.

It may be seen from Table 17 that the MPEG haptic material description module (MPEG_material_haptic) 912 includes the haptic material attribute description modules corresponding to the haptic material attributes (the stiffness, the friction, the haptic texture, the temperature, the vibration, and the custom). A haptic material attribute description module corresponding to each haptic material attribute includes a type of the haptic material attribute, specifically including the High_resolution, the Low_resolution, the Reference, or Other. If a type of a haptic material texture of a haptic material attribute is the Low_resolution or the High_resolution, it means that a haptic value on a texture coordinate point may be obtained from a texture image or another haptic texture material data packet. A value included in each pixel of the texture image or the haptic texture material data packet represents the haptic value. In addition, as shown in Table 15 and Table 16, haptic values of different types of haptic material textures have different bit depths. For example, a bit depth of a haptic value of a haptic material attribute whose type is the High_resolution is 16 bits, while a bit depth of an attribute value of a haptic material attribute whose type is the Low_resolution is 8 bits. If the type of the haptic material attribute is the Reference, it is required that the haptic value of the texture coordinate point or haptic values of a group of texture coordinate points may be indexed to a group of temporal or spatial haptic values. At this time, a relevant supplementary description may be provided through the MPEG interactivity description module (MPEG_interactivity) 902 and the MPEG haptic description module (MPEG_haptic) 903. The MPEG interactivity description module 902 and the MPEG haptic description module 900 are enabled when the haptic media file is included in the scene description document. The MPEG haptic material description module (MPEG_material_haptic) 912 includes a type of each haptic material attribute internally.

In some embodiments, description methods of the accessor description module (accessor) 907, the buffer view description module (bufferView) 908, and the buffer description module (buffer) 908 in the scene description document that supports the haptic media file include: pointing to, based on a value of a media index syntax element (buffer.MPEG_buffer_circular.media) of an MPEG circular buffer of the buffer description module, a media description module corresponding to the haptic media file in the MPEG media description module (MPEG_media). That is, the haptic media file needs to be specified in the buffer description module (buffer), but a URL of the haptic media file is not directly added to the buffer description module (buffer). Instead, an index value of the media description module corresponding to the corresponding haptic media file in the MPEG media description module (MPEG_media) is declared by the media index syntax element (MPEG_buffer_circular. media) in the MPEG circular buffer of the buffer description module (buffer).

For example, if the media description module corresponding to the haptic media file in the MPEG media description module (MPEG_media) is a third media description module in the media list of the MPEG media description module (MPEG_media), the value of the media index syntax element (buffer.MPEG_buffer_circular.media) in the MPEG circular buffer of the buffer description module may be set to "2", such that an access address of the third media description module in the MPEG media description module is indexed in the MPEG circular buffer of the buffer description module, so as to index the haptic media file based on the media index syntax element in the MPEG circular buffer (MPEG_buffer_circular) of the buffer description module.

In some embodiments, description methods of the accessor description module (accessor) 907, the buffer view description module (bufferView) 908, and the buffer description module (buffer) 908 in the scene description document that supports the haptic media file include: indicating, through a track (buffer.MPEG_buffer_circular.tracks.track) in a track array of the MPEG circular buffer of the buffer description module, track information when an encapsulated file of the haptic media file is accessed. Specifically, when the track array (buffer.MPEG_buffer_circular.tracks) of the MPEG circular buffer of the buffer description module includes a plurality of tracks, the pipeline should perform necessary processing on all referenced tracks to generate a data format requested by the buffer description module. If a media file referenced in the track (buffer.MPEG_buffer_circular.tracks) in the track array of the MPEG circular buffer of the buffer description module has a plurality of alternative versions (alternatives), each alternative version (alternatives) should record a selection status of the track. When the track array (buffer.MPEG_buffer_circular.tracks) of the MPEG circular buffer of the buffer description module is not defined, the pipeline should perform necessary processing on all tracks in the MPEG media description module (MPEG_media) to generate the data format requested by the buffer description module (buffer), that is, to guide the buffer description module (buffer) on how to correctly store data in the MPEG media description module (MPEG_media).

Syntax elements included in the MPEG circular buffer (MPEG_buffer_circular) are shown in Table 26.

**Table 26**

| Element name | Data type | Default value | Usage | Description |
|---|---|---|---|---|
| count | Integer | 2 | Non-compulsory | Indicates a quantity of circular buffer sections included in the MPEG circular buffer. The MAF may use this information and establish a corresponding circular buffer structure for the display engine. |
| media | Integer | N/A | Compulsory | Indicates an index of a media file in the MPEG media, where the media file may be used as an input media source in the buffer. |
| tracks | Array | N/A | Non-compulsory | Indicates an index of a track (track) of a media file from an extension of the MPEG media, where the index may be used as an input media source in the buffer. |
| | | | | When the syntax element "tracks" is not defined, the pipeline should perform the necessary processing on all the tracks in the MPEG media to generate the data format requested by the buffer, that is, to guide the buffer on how to correctly store the data in the MPEG media. |
| | | | | When the syntax element "tracks" includes a plurality of tracks, the pipeline should perform the necessary processing on all the referenced tracks to generate the data format requested by the buffer. |
| | | | | If a media source referenced in the track has a plurality of alternative versions, each alternative version should record the selection status of the track. |

That is, based on a value setting rule of the media index syntax element (media) in Table 26, the value of the media index syntax element (media) in Table 26 is set to the index value of the media description module corresponding to the corresponding haptic media file in the MPEG media description module (MPEG_media), so as to index the haptic media file in the buffer description module. That is, based on a value setting rule of the syntax element "tracks" in Table 26, a value of the syntax element "tracks" in Table 26 is set to an index of a track including the haptic media file in the MPEG media description module, so as to index the track of the haptic media file in the buffer description module.

In some embodiments, a description method of the camera description module (camera) 910 in the scene description document that supports the haptic media file includes: defining a viewpoint, a viewing angle, and other viewing related visual information of the node through the camera description module (camera) 910.

In some embodiments, a description method of the animation description module (animation) 917 in the scene description document that supports the haptic media file includes: defining, through the animation description module (animation) 917, an animation added to the node.

In some embodiments, the animation description module (animation) 917 may describe, through at least one of position movement, angle rotation, and size scaling, the animation added to the node.

In some embodiments, the animation description module (animation) 917 may also indicate at least one of start time, end time, and an implementation of the animation added to the node.

That is, in the scene description document that supports the haptic media file, an animation may also be added to a node representing an object in the 3D object. The animation description module (animation) 917 describes, through the position movement, the angle rotation, and the size scaling, the animation added to the node, and may also specify the start time, the end time, and the implementation of the animation.

In some embodiments, a description method of the skin description module (skin) 918 in the scene description document that supports the haptic media file includes: defining a motion and deformation relationship between a 3D mesh mounted on the node and a corresponding skeleton through the skin description module (skin) 918.

For example, the scene description document shown in FIG. 9 is described below with an example of the scene description document.

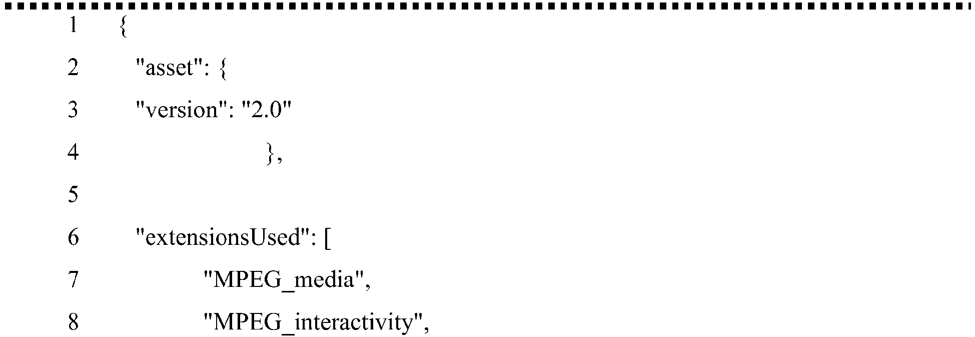

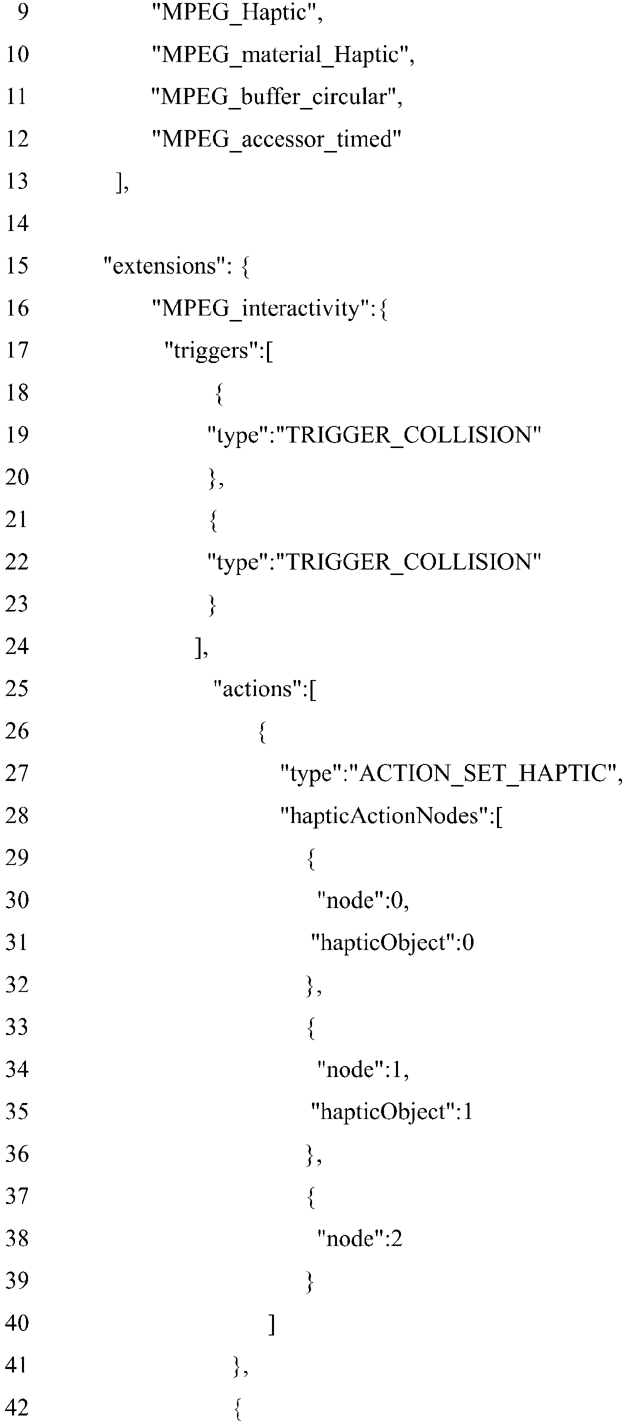

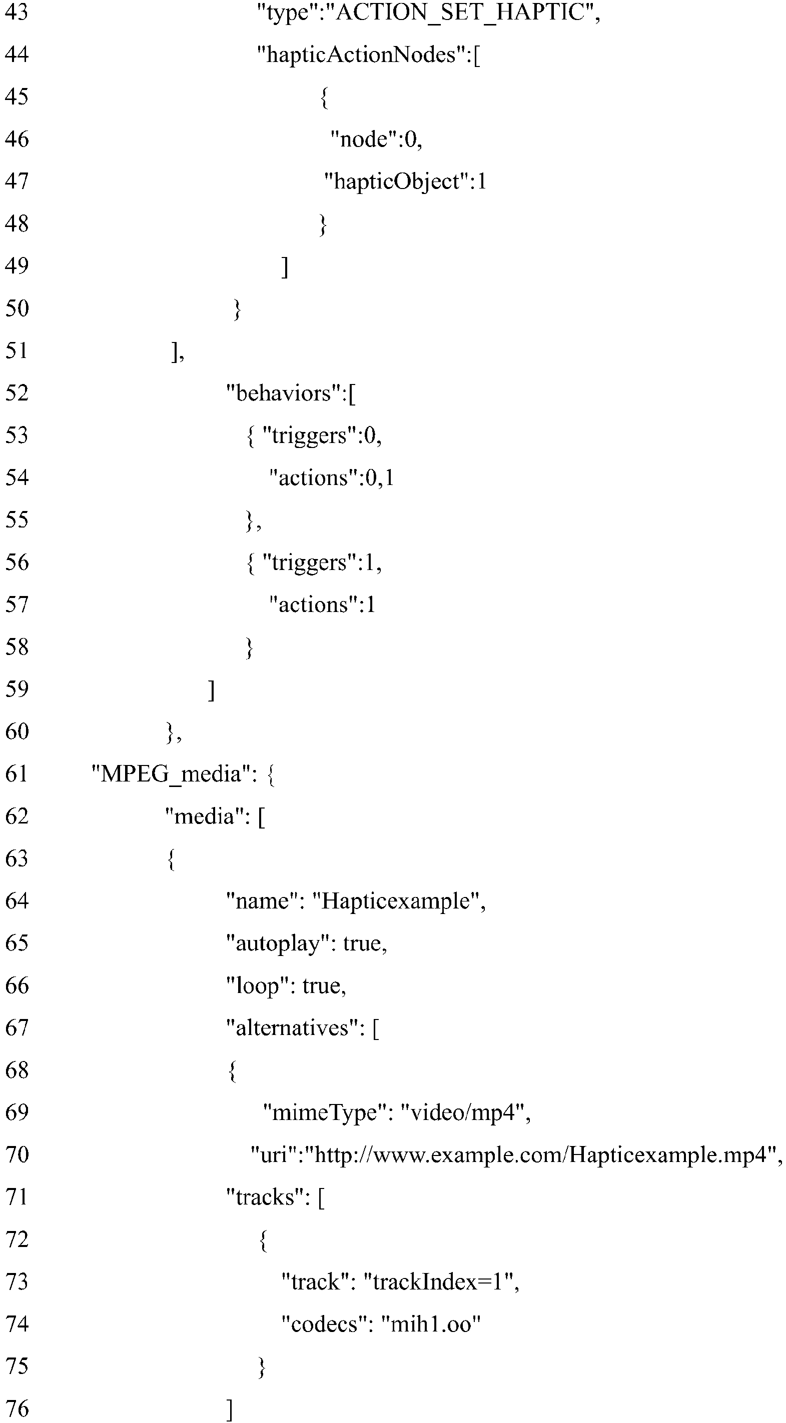

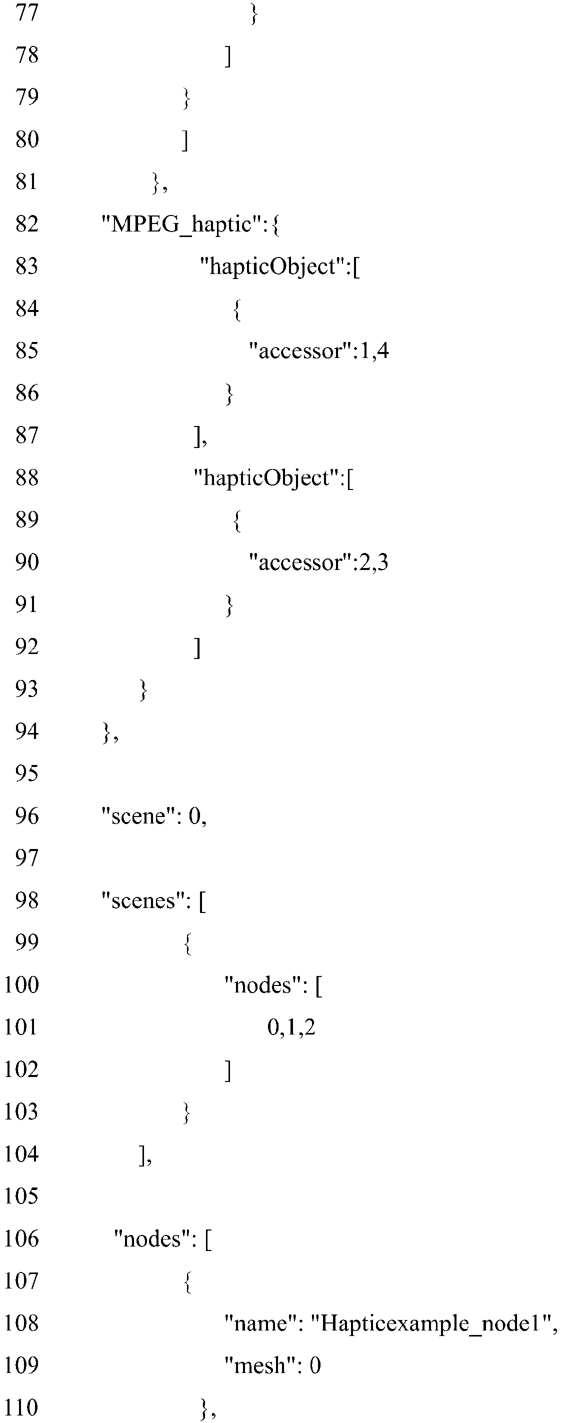

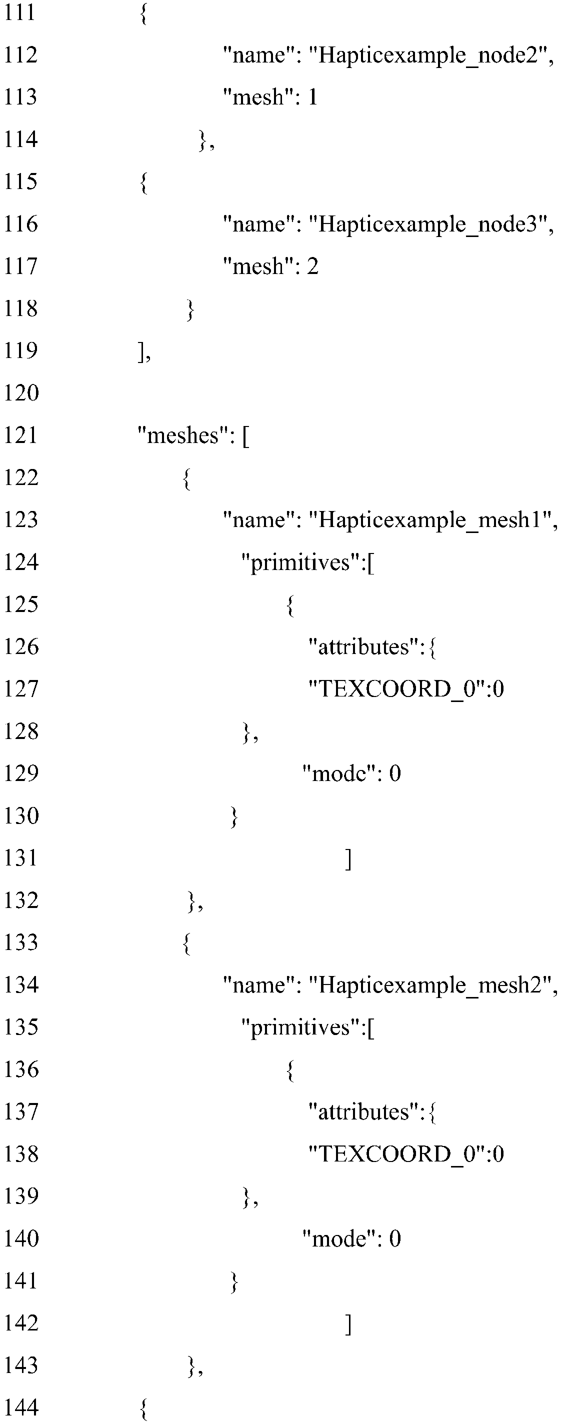

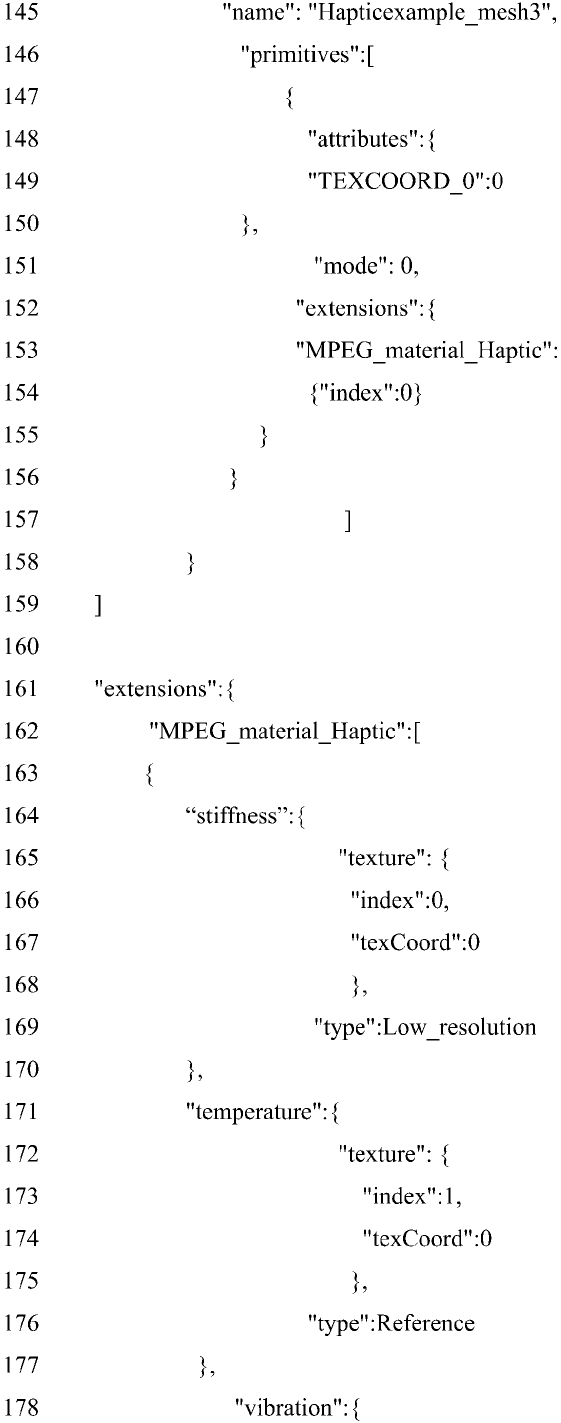

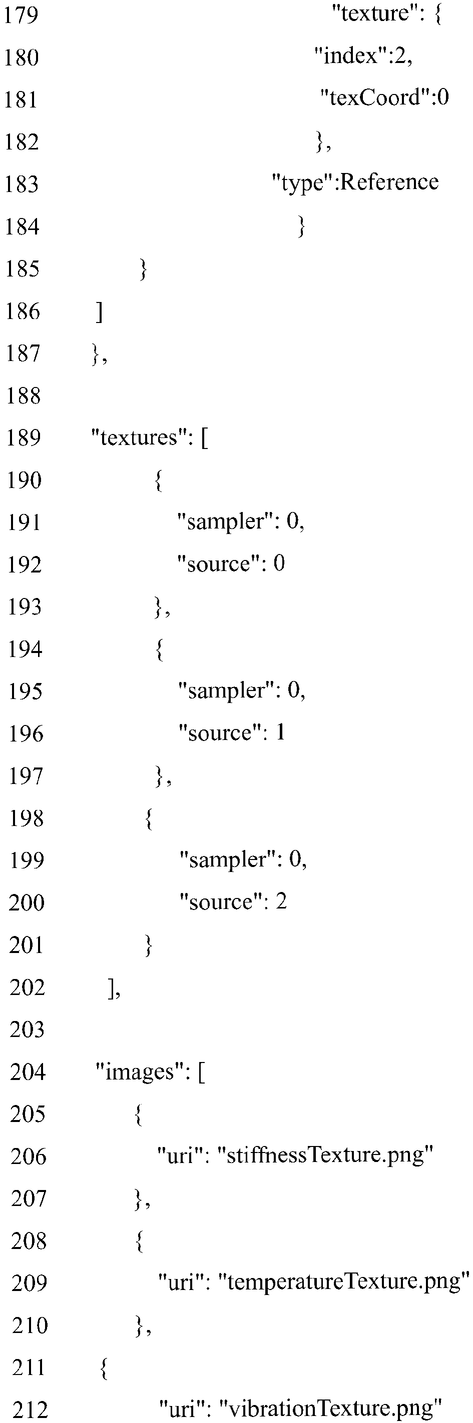

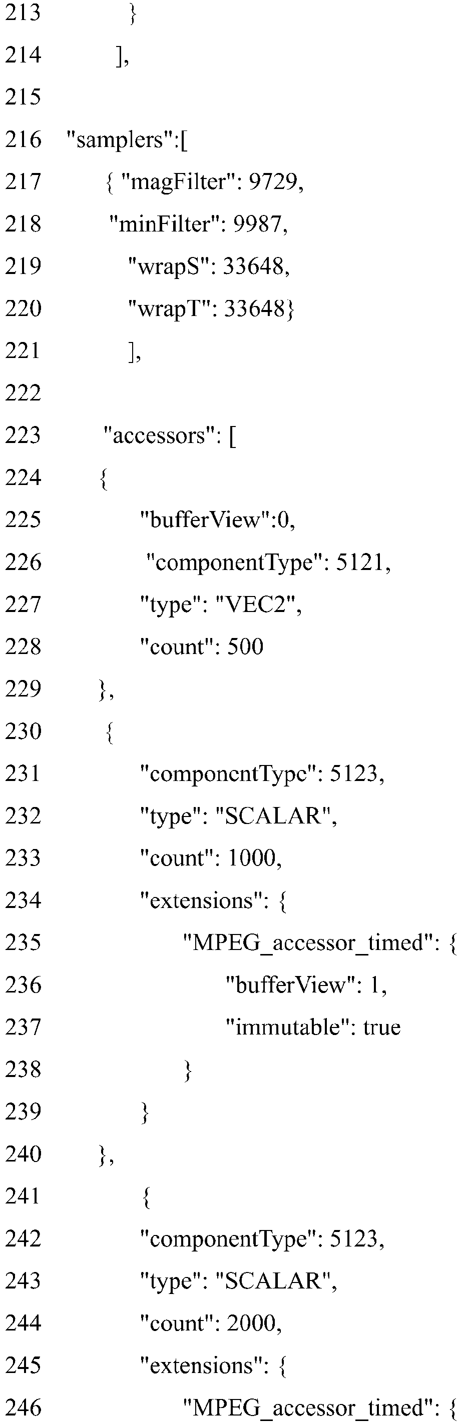

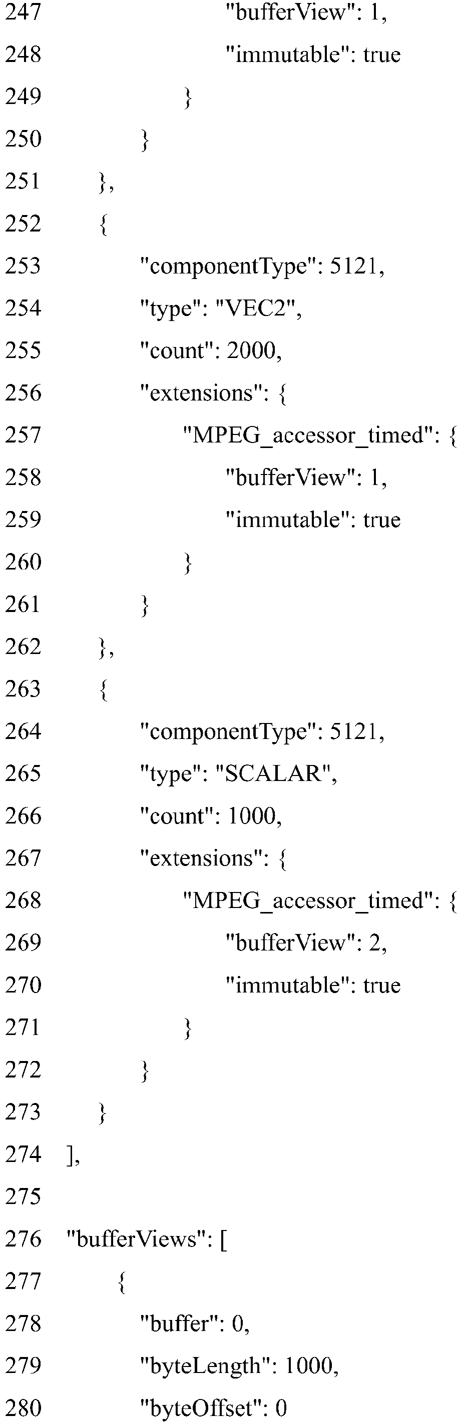

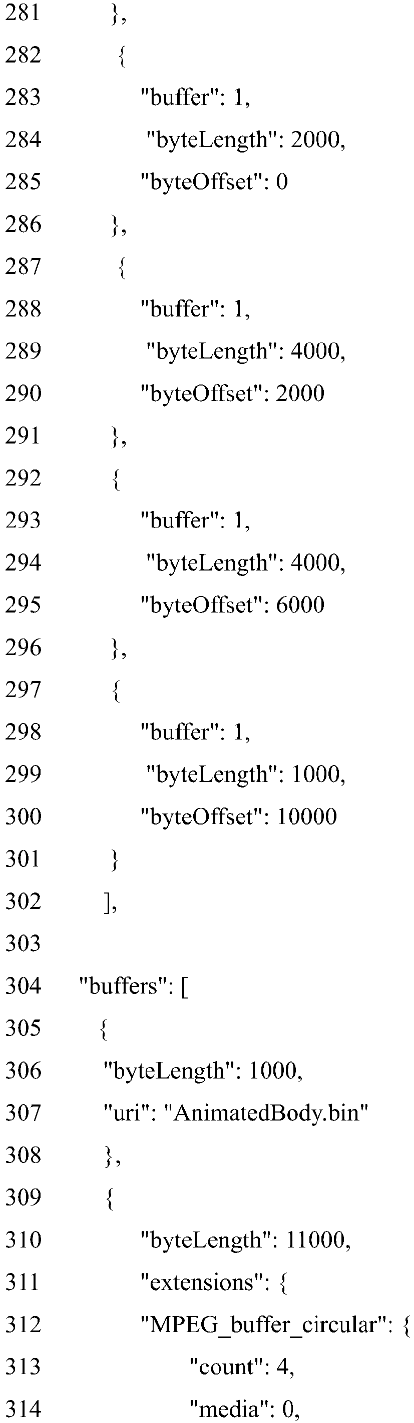

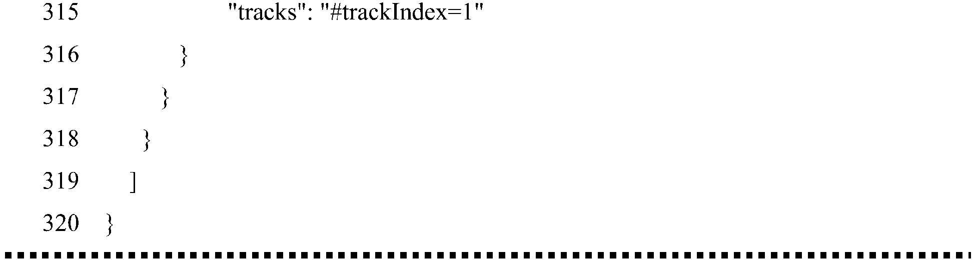

Main content of the scene description document shown in FIG. 9 is included in a pair of braces from lines 1 to 320 in the above example. The scene description document that supports the haptic media file includes: a digital asset description module ("asset": {}), a list of extensions used ("extensionsUsed": [ ]), an extension description module ("extensions": {}), a scene declaration (scene), a scene list ("scenes":[ ]), a node list ("nodes": []), a mesh list ("meshes": []), a haptic material list ("MPEG_material_Haptic": []), a texture list ("textures": []), a texture resource list ("images": []), a sampler list ("samplers": []), an accessor list (" accessors ": []), a buffer view list ("bufferViews": []), and a buffer list ("buffers": []). The following describes each part and information included in each part from a parsing perspective.
1. Digital asset description module ("asset": {}): The digital asset description module is located at lines 2 to 4. Based on "version": "2.0" at line 3 in the digital asset description module, it may be determined that the scene description document is compiled based on the glTF2.0, which is also a reference version of a scene description standard. From the parsing perspective, the display engine may determine a parser based on the digital asset description module to parse the scene description document.
2. List of extensions used ("extensionsUsed": [ ]): The list of extensions used is located at lines 6 to 13. Because the list of extensions used includes six extensions that respectively involve the MPEG media (MPEG_media), the MPEG interactivity (MPEG_interactivity), the MPEG haptic (MPEG_Haptic), the MPEG haptic material (MPEG_material_Haptic), the MPEG circular buffer (MPEG_buffer_circular), and an MPEG time-varying accessor (MPEG_accessor_timed), it may be determined that the scene description document uses six MPEG extensions that respectively involve the MPEG media (MPEG_media), the MPEG interactivity (MPEG_interactivity), the MPEG haptic (MPEG_Haptic), the MPEG haptic material (MPEG_material_Haptic), the MPEG circular buffer (MPEG_buffer_circular), and the MPEG time-varying accessor (MPEG_accessor_timed). From the parsing perspective, the display engine may learn in advance based on content of the list of extensions that extension items involved in subsequent parsing includes: the MPEG media, the MPEG interactivity, the MPEG haptic, the MPEG haptic material, the MPEG circular buffer, and the MPEG time-varying accessor.
3. Extension description module ("extensions": {}): An extension list is located at lines 15 to 94. The extension description module includes three extended description modules: the MPEG interactivity description module ("MPEG_interactivity": {}), the MPEG media description module ("MPEG_media": {}), and the MPEG haptic description module ("MPEG_haptic": {}).
   3.1. MPEG interactivity description module ("MPEG_interactivity": {}): The MPEG interactivity description module is located at lines 16 to 60. The MPEG interactivity description module includes three parts: a trigger list ("triggers": []), an action list ("actions": []), and a behavior list ("behaviors": []). The trigger list ("triggers": []) is located at lines 17 to 24, and includes two parallel braces, indicating that two triggers are declared in the trigger list through two trigger description modules, and "type":"TRIGGER_COLLISION" at lines 19 and 22 indicates that types of the two triggers are the TRIGGER_COLLISION. The action list ("actions": []) is located at lines 25 to 51 and includes two parallel braces, indicating that two actions are declared in the action list through two action description modules. A first action description module (content enclosed in a brace at lines 26 to 41) first indicates, through "type":"ACTION_SET_HAPTIC" at line 27, that a type of an action corresponding to the first action description module is a haptic action, and indicates, through three haptic action node arrays (content enclosed in braces at lines 29 to 32, 33 to 36, and 37 to 39) in a haptic action node list ("hapticActionNodes":[ ]), that the following nodes need to be enabled for the haptic action: nodes corresponding to node description modules whose index values are 0, 1, and 2 (first, second, and third node description modules in the node list). The node corresponding to the node description module whose index value is 0 needs to enable the haptic media file, and needs to access the haptic rendering data of the haptic media file based on a first haptic object description module ("hapticObject":[ ]) in the MPEG haptic description module ("MPEG_haptic":{}). The node corresponding to the node description module whose index value is 1 also needs to enable the haptic media file, and needs to access the haptic rendering data of the haptic media file based on a second haptic object description module ("hapticObject":[ ]) in the MPEG haptic description module ("MPEG_haptic":{}). The node corresponding to the node description module whose index value is 3 also needs to enable the haptic media file, but there is no index declaration about a haptic object description module, which indicates that the node corresponding to the node description module whose index value is 3 declares access to the haptic rendering data of the haptic media file through the MPEG haptic material (MPEG_material_Haptic) in a corresponding mesh description module. Content declared by a second action description module (content enclosed in a brace at lines 42 to 50) is similar to the content declared by a first action array. To avoid repetition, details are not described herein again. The behavior list ("behaviors":[ ]) is located at lines 52 to 59 and includes two parallel braces, indicating that two behaviors are declared in the behavior list through two behavior arrays. A first behavior array (content enclosed in a brace at lines 53 to 55) implements mutual association between a first trigger description module in the trigger list ("triggers":[ ]) and the first and second action description modules in the action list ("actions":[ ]) through "triggers":0 at line 53 and "actions":0,1 at line 54. A second behavior description module implements mutual association between a second trigger description module in the trigger list ("triggers":[ ]) and the second action description module in the action list ("actions":[ ]) through "triggers":1 at line 56 and "actions":1 at line 57.
   3.2. MPEG media description module ("MPEG _media": {}): The MPEG media description module is located at lines 61 to 81. The MPEG media description module declares a media file included in the 3D scene. The media list ("media": []) of the MPEG media description module includes only one brace (one media description module), indicating that only one media file is declared in the MPEG media in the scene description document. The media description module indicates, through "mimeType": "video/mp4" at line 69, that a file type of an encapsulated file corresponding to the one media file is MP4, indicates an access address of the one media file through "uri":"http://www.example.com/Hapticexample.mp4" at line 70, indicates track information of the one media file through "track":"trackIndex=1" at line 73, indicates decoding information of the one media file through "codecs":""mih1.oo" at line 74, indicates a name of the one media file through "name":"Hapticexample" at line 64, indicates, through "autoplay":true at line 65, that the one media file should be automatically played, and indicates, through "loop":true at line 66, that the one media file should be cyclically played. From the parsing perspective, the display engine may determine existence of one haptic media file in a 3D-scene-to-be-rendered by parsing the MPEG media, and learns a method for accessing and parsing the one haptic media file.
   3.3. MPEG haptic description module ("MPEG _haptic": {}): The MPEG haptic includes two haptic object description modules ("hapticObject":[ ]). The first haptic object description module declares corresponding accessors of second and fifth accessor description modules in the accessor list through "accessor":1,4 at line 85. Combined with content of a haptic action node list of the first action description module in the action list ("actions":[ ]), it may be learned that the node corresponding to the node description module whose index value is 0 needs to access the haptic rendering data of the haptic media file through the corresponding accessors of the second and fifth accessor description modules in the accessor list. The second haptic object array declares corresponding accessors of third and fourth accessor description modules in the accessor list through "accessor":2,3 at line 90. Combined with content of a haptic action node list of the second action array in the action list ("actions":[ ]), it may be learned that the node corresponding to the node description module whose index value is 1 needs to access the haptic rendering data of the haptic media file through the corresponding accessors of the third and fourth accessor description modules in the accessor list.
4. Scene declaration (scene): The scene declaration is located at line 96. Because one scene description document theoretically may include scene description modules of a plurality of 3D scenes, the scene description document first indicates, through "scene":0 at line 96, that a scene to be processed and rendered subsequently (the 3D-scene-to-be-rendered) is a 3D scene corresponding to a first scene description module in the scene list ("scenes": [ ]) of the scene description document, that is, a scene that is described in the scene description document and enclosed in a brace at lines 99 to 103. From the parsing perspective, the scene declaration clarifies that the scene description framework should select the 3D scene corresponding to the first scene description module in the scene list ("scenes": [ ]) for subsequent processing and rendering.
5. Scene list ("scenes": [ ]): The scene list is located at lines 98 to 104. The scene list includes only one brace, indicating that the scene description document includes only one scene description module (scene). The scene description document only describes one 3D scene. In the one brace (scene description module), a node index list at lines 100 to 102 and its content "nodes":[0,1,2] indicate the one 3D scene includes three nodes, namely the nodes corresponding to the first to third node description modules in the node list ("nodes": [ ]). From the parsing perspective, the scene list ("scenes": [ ]) clarifies an overall structure of the one 3D scene and points to a more detailed lower-level node description module (node).
6. Node list ("nodes": [ ]): The node list is located at lines 106 to 119. The node list includes three braces, indicating that the scene description document includes three node description modules. The 3D scene has three nodes, and the three nodes correspond one-to-one with nodes indexed in the node index list of the unique scene description module in the scene list ("scenes":[ ]), and the three nodes and the nodes indexed in the node index list are associated through indexing. In the first node description module (content enclosed in a brace at lines 107 to 110), "name": "Hapticexample_node1" at line 108 indicates that a corresponding node is named "Hapticexample_node1", and "mesh": "0" at line 109 indicates that content mounted on the corresponding node is a first 3D mesh in the mesh list ("meshes": [ ]), which corresponds to a lower-level mesh description module. From the parsing perspective, the first node description module in the node list ("nodes": [ ]) indicates that the content mounted on the node is the 3D mesh and an index of a mesh description module of the 3D mesh is 0. Content declared by the second node description module (content enclosed in a brace at lines 111 to 114) and content declared by the third node description module (content enclosed in a brace at lines 115 to 118) are similar to the content declared by the first node description module. To avoid repetition, details are not described herein again.
7. Mesh List ("meshes": []): The mesh list is located at lines 121 to 159 and includes three braces, indicating that the scene description document includes three mesh description modules (mesh). The 3D scene has three 3D meshes, and each 3D mesh is a mesh description module indexed by a node description module based on a mesh index syntax element ("mesh"). In a target mesh description module (content enclosed in a brace at lines 122 to 132), "name":"Hapticexample_mesh1" at line 123 indicates that the corresponding 3D mesh is named "Hapticexample_mesh1", which is only used as an identification marker; and "primitives" at line 124 indicates that the corresponding 3D mesh has primitive information, namely primitives. "attributes" at line 126 and "mode" at line 129 respectively indicate existence of attribute information (attribute) and mode information (mode). "TEXCOORD_0":0 at line 127 indicates that an accessor corresponding to the texture coordinate is a first accessor description module in the accessor list. "mode": 0 at line 129 indicates that a topology of the corresponding 3D mesh is a scattered structure. Content declared by a second mesh description module (content enclosed in a brace at lines 133 to 158) and content declared by a third mesh description module (content enclosed in a brace at lines 133 to 132) are similar to the content declared by the first mesh description module, except that the third mesh description module also includes the extension of the MPEG_material_Haptic in a primitive (primitives), and indicates, through an MPEG haptic material description module ("MPEG_material_Haptic": {}) at lines 153 and 154, that a 3D mesh corresponding to the third mesh description module carries a haptic material attribute and points to a first haptic material array in a more detailed lower-level haptic material list ("MPEG_material_Haptic":[ ]).
8. Haptic material list ("MPEG_material_Haptic":[ ]): The haptic material list is located at lines 161 to 187. The haptic material list (MPEG_material_Haptic) includes only one brace, indicating that the scene description document includes only one haptic material array (content enclosed in a brace at lines 162 to 185). The one haptic material array defines three haptic material attributes (namely the stiffness, the temperature, and the vibration) through a haptic material description module at lines 164 to 170, a haptic material description module at lines 171 to 177, and a haptic material description module at lines 178 to 184, respectively. Each haptic material attribute includes two types of information: a texture array ("texture": {}) and a haptic material type (type). The description module corresponding to the stiffness is located at lines 164 to 170, where "index":0 at line 166 defines that the stiffness points to a first texture description module in the texture list; "texCoord":0 at line 167 defines that the stiffness uses a texture coordinate accessed by an accessor indexed by a first texture coordinate syntax element (TexCoord_n) in the mesh list as a coordinate reference for performing texture addition on the haptic material attribute; "type":Low_resolution at line 169 defines that a type of the stiffness is the Low_resolution; and a length of a subsequently obtained haptic value of the stiffness is 8 bits. The description module corresponding to the temperature is located at lines 171 to 177, where "index":1 at line 173 defines that the temperature points to a second texture description module in the texture list; and "type":Reference at line 176 defines that a type of a haptic material texture of the temperature is the Reference. The description module corresponding to the vibration is located at lines 178 to 185, where "index": 2 at line 180 defines that the vibration points to a third texture description module (texture) in the texture list; and "type":Reference at line 183 defines that a type of a haptic material texture of the vibration is the Reference. From the parsing perspective, a texture type and source of a haptic material attribute included in an object may be determined based on the haptic material list (MPEG_material_Haptic), and point to a more detailed lower-level texture description module.
9. Texture list ("textures": [ ]): The texture list is located at lines 189 to 202. The texture list includes three braces, indicating that the scene description document includes three texture description modules, which respectively correspond to the stiffness, the temperature, and the vibration. The texture description modules corresponding to the stiffness, the temperature, and the vibration each include a sampler syntax element (sampler) and a source syntax element (source). Based on values of a sampler index syntax element (sampler) and a texture resource index syntax element (source), access addresses of samplers and texture resources for the stiffness, the temperature, and the vibration may be determined. The access address of the texture resource corresponds to a lower-level texture resource list ("images": []), and sampler information corresponds to a lower-level sampler list ("samplers": []).
10. Texture resource list ("images": [ ]): The texture resource list is located at lines 204 to 214. The texture resource list includes three braces, respectively corresponding to access addresses of texture resources referenced in the texture description modules respectively corresponding to the stiffness, the temperature, and the vibration. Based on {"uri": "stiffnessTexture.png"} at lines 205 to 207, it may be determined that the access address of the texture resource of the stiffness is stiffnessTexture.png. Based on {"uri": "temperatureTexture.png"} at lines 208 to 210, it may be determined that the access address of the texture resource of the temperature is temperatureTexture.png. Based on {"uri": "Texture.png"} at lines 211 to 213, it may be determined that the access address of the texture resource of the vibration is vibrationTexture.png.
11. Sampler list ("samplers":[ ]): The sampler list is located at lines 216 to 221. The sampler list includes one brace, indicating that the scene description document includes one sampler description module. Only one sampler is required to display the 3D scene, and description information of the one sampler may be determined based on "magFilter": 9729, "minFilter": 9987, "wrapS": 33648, and "wrapT": 33648 at lines 217 to 220.
12. Buffer list ("buffers": [ ]): The buffer list is located at lines 304 to 319. The buffer list includes two braces, indicating that the scene description document includes two buffer description modules, and two buffers are required to display the 3D scene. Based on a first buffer description module (content enclosed in a brace at lines 305 to 308), it may be determined that a size of a first buffer is 1000, an address of a media file that needs to be stored is "AnimatedBody.bin", and the media file includes coordinate content of texture information that needs to be added to a specific 3D coordinate. Based on an MPEG circular buffer ("MPEG_buffer_circular": {}) in a second buffer description module (content enclosed in a brace at lines 309 to 318), it may be determined that a second buffer is a circular buffer reconstructed using an MPEG extension. "media: 0" at line 314 indicates that a data source in the circular buffer is a first media file declared in the MPEG media (MPEG_media). "tracks":"#trackIndex=1" at line 315 indicates that a track whose index is 1 should be referenced when the haptic media encapsulation file is accessed. Herein, the track whose index is 1 is not limited, and may be a unique track of a haptic file encapsulated into a single track or a reference track of a haptic file encapsulated into a plurality of tracks. In addition, based on "count": 3 at line 313, it may also be determined that the MPEG circular buffer has three storage stages, and based on "byteLength":11000 at line 310, it may also be determined that a byte length (capacity) of the MPEG circular buffer is 11000 bytes. From the parsing perspective, the buffer list enables the haptic media file declared in the MPEG media (MPEG_media) to correspond to a buffer, in other words, enables the buffer to reference a haptic media file that is previously declared but not used. It should be noted that the haptic media file referenced herein is an encapsulated file of an unprocessed haptic media file. The encapsulated file of the haptic media file needs to be processed by the MAF in order to extract information that may be directly used for rendering.
13. Buffer view list ("bufferViews": [ ]): The buffer view list is located at lines 276 to 302. The buffer view list includes five braces, indicating that the scene description document includes five buffer view description modules. Based on "buffer": 0 at line 278 in a first buffer view description module (content enclosed in a brace at lines 277 to 281), it may be determined that a buffer view corresponding to the first buffer view description module is a buffer view of a buffer corresponding to the first buffer description module in the buffer list. "byteLength": 1000 at line 279 and "byteOffset": 0 at line 280 declare that a data view range of the buffer view is the first 1000 bytes of the first buffer. Based on "buffer": 1 at line 283 in a second buffer view description module (content enclosed in a brace at lines 282 to 286), it may be determined that a buffer view corresponding to the second buffer view description module is a buffer view of a buffer corresponding to the second buffer description module in the buffer list. "byteLength": 2000 at line 284 and "byteOffset": 0 at line 285 declare that a data view range of the buffer view is the first 2000 bytes of the second buffer. Content declared by a third buffer view description module, content declared by a fourth buffer view description module, and content declared by a fifth buffer view description module are similar to the content declared by the second buffer view description module. To avoid repetition, details are not described herein again. From the parsing perspective, the buffer view list groups data of the media file, which is beneficial to refine definition of a subsequent accessor description module.
14. Accessor List ("accessors": []): The accessor list is located at lines 223 to 274. Structurally similar to the buffer view list, the accessor list also includes five parallel braces, indicating that the s3D cene description document includes five accessor description modules (accessor), and three accessors are required to access the media data to display the 3D scene. The first accessor description module (content enclosed in a brace at lines 224 to 229) indicates, through "bufferView":0 at line 225, that an accessor corresponding to the first accessor description module is configured to access a first buffer view in the buffer view list, indicates, through "componentType": 5121 at line 226, that a data format of data accessed by the accessor corresponding to the first accessor description module is 8-bit unsigned short (unsign short, 8 bits), indicates, through "type":"VEC2" at line 227, that a type is a 2D vector (VEC2), and indicates, through "count":500 at line 228, that 500 pieces of data need to be accessed by the accessor. The second accessor description module (content enclosed in a brace at lines 230 to 240), the third accessor description module (content enclosed in a brace at lines 241 to 251), the fourth accessor description module (content enclosed in a brace at lines 252 to 262), and the fifth accessor description module (content enclosed in a brace at lines 263 to 273) each have the MPEG time-varying accessor ("MPEG_accessor_timed"), indicating that corresponding accessors are all MPEG time-varying accessors, pointing to time-varying media defined by the MPEG. In the second accessor description module, it may be determined based on "bufferView":1 at line 236 that the corresponding accessor is configured to access a buffer view corresponding to a second buffer view description module in the buffer view list ("bufferViews": [ ]); "immutable":true at line 237 indicates that a syntax element value in the corresponding accessor does not change over time; and "componentType", "type", and "count" declare a data type of data accessed by the corresponding accessor, a type of the corresponding accessor, and a count of the data accessed by the corresponding accessor. Content declared by the third accessor description module, content declared by the fourth accessor description module, and content declared by the fifth accessor description module are similar to the content declared by the second accessor description module. To avoid repetition, details are not described herein again. From the parsing perspective, the accessor list provides a complete definition of data required for the rendering, for example, missing data types in the buffer view and the buffer are defined in the corresponding accessor description modules.

### 2. Display engine that supports the haptic media file

In a working process of a scene description framework for immersive media, main functions of the display engine include: parsing the scene description document to obtain a 3D scene rendering method; sending a media access instruction or a media data processing instruction to the MAF through the MAF API; sending a buffer management instruction to the buffer management module through the buffer API; and reading processed data from the buffer, and rendering and displaying a 3D scene and an object in the 3D scene based on the read data. Therefore, functions of the display engine that supports the haptic media file include: 1. parsing a scene description document including the haptic media and obtaining a corresponding 3D scene rendering method; 2. transferring a media access instruction or a media data processing instruction to the MAF through the MAF API, where the media access instruction or the media data processing instruction comes from a result of parsing the scene description document including the haptic media; 3. sending a buffer management instruction to the buffer management module through a buffer management API; and 4. reading haptic rending data of a processed haptic media file from the buffer, and rendering and displaying a 3D scene and a haptic media file in the 3D scene based on the read haptic rendering data.

### 3. MAF API that supports the haptic media file

In the working process of the scene description framework for the immersive media, the display engine may obtain the 3D scene rendering method by parsing the scene description document, and needs to transfer the 3D scene rendering method to the MAF or send an instruction to the MAF based on the 3D scene rendering method. A process for transferring the 3D scene rendering method to the MAF or sending the instruction to the MAF based on the 3D scene rendering method is implemented through the MAF API.

In some embodiments, the display engine may send the media access instruction or the media data processing instruction to the MAF through the MAF API. The instruction issued by the display engine comes from a result of parsing the scene description document including the attribute information of the haptic media. The instruction may include an address of the media file, attribute information (a media type, a codec used, and the like) of the media file, a format requirement for processed haptic media data and other media data, and the like.

In some embodiments, the MAF may also request the media access instruction or the media data processing instruction from the display engine through the MAF API.

### 4. MAF that supports the haptic media file

In the working process of the scene description framework for the immersive media, after receiving the media access instruction or the media data processing instruction that is issued by the display engine through the MAF API, the MAF executes the media access instruction or the media data processing instruction that is issued by the display engine through the MAF API. For example, the MAF obtains the haptic media file, establishes an appropriate pipeline for the haptic media file to convert data in the haptic media file into a format specified in the instruction, and allocates an appropriate buffer configured for haptic media data and other media data that are processed into the format specified in the scene description document.

In some embodiments, that the MAF obtains the haptic media file includes: downloading the haptic media file from the server using a network transmission service.

In some embodiments, that the MAF obtains the haptic media file includes: reading the haptic media file from local storage space.

After obtaining the haptic media file, the MAF needs to process the haptic media file. Processing procedures of different types of media files are significantly different. In order to support a wide variety of media types and consider efficiency of the MAF, a plurality types of pipelines are designed in the MAF, and only a pipeline that matches a media type is enabled during the media file processing.

### 5. Buffer API that supports the haptic media file

After processing the data in the haptic media file, the MAF also needs to deliver processed data to the display engine in a standardized arrangement structure. Therefore, the processed data needs to be correctly stored in the buffer, which is completed by the buffer management module. However, the buffer management module needs to obtain the buffer management instruction from the MAF or the display engine through the buffer API.

In some embodiments, the MAF may send the buffer management instruction to the buffer management module through the buffer API. The buffer management instruction is sent by the display engine to the MAF through the MAF API.

In some embodiments, the display engine may send the buffer management instruction to the buffer management module through the buffer API.

That is, the buffer management module may communicate with the MAF through the buffer API and may also communicate with the display engine through the buffer API, so as to manage the buffer. When the buffer management module communicates with the MAF through the buffer API, the display engine needs to first send the buffer management instruction to the MAF through the MAF API, and the MAF then sends the buffer management instruction to the buffer management module through the buffer API. When the buffer management module communicates with the display engine through the buffer API, the display engine only needs to generate the buffer management instruction based on buffer management information parsed from the scene description document, and sends the buffer management instruction to the buffer management module through the buffer API.

In some embodiments, the buffer management instruction may include at least one of a buffer creation instruction, a buffer updating instruction, and a buffer releasing instruction.

### 6. Buffer management module that supports the haptic media file

In the working process of the scene description framework for the immersive media, after the MAF processes the data in the haptic media file through the pipeline, the processed data needs to be delivered to the display engine in the standardized arrangement structure. Therefore, the processed data needs to be correctly stored in the buffer, which is completed by the buffer management module.

The buffer management module implements management operations such as buffer creation, updating, and releasing, and instructions for these operations are received through the buffer API. A buffer management rule is recorded in the scene description document, parsed by the display engine, and finally issued to the buffer management module by the display engine or the MAF. After being processed by the MAF, the media file needs to be stored in an appropriate buffer and then retrieved by the display engine. The buffer management is to manage the buffer well, such that the buffer matches a format of processed media data without disrupting the processed media data. A specific method for designing the media management module should be based on designs of the display engine and the MAF.

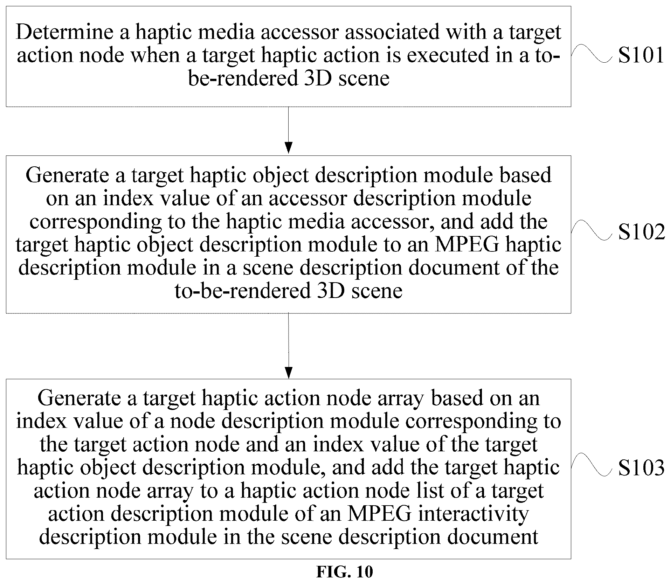

Based on the above content, some embodiments of the present disclosure provide a method for generating a scene description document. Referring to FIG. 10, the method for generating a scene description document includes following steps S101 to S105:
S101: Determine a haptic media accessor associated with a target action node when a target haptic action is executed in a 3D-scene-to-be-rendered.

The haptic media accessor is an accessor configured to access haptic rendering data of a haptic media file declared in an MPEG media description module ("MPEG_media": {}) associated with the target action node when the target haptic action is executed.

The haptic rendering data in the haptic media file in the embodiments of the present disclosure may be data that is obtained by performing processing such as decapsulation, decoding, decryption, and format conversion on the haptic media file and may be directly used for rendering the 3D scene, or may be data that is obtained by performing other processing on the haptic media file and may be directly used for rendering the 3D scene. The haptic rendering data of the haptic media file may include a haptic value of a haptic material attribute, and the haptic material attribute may include at least one of stiffness, friction, haptic texture (Vibrotactile texture), temperature, vibration, and custom.

It should be noted that when different haptic actions are performed in the 3D-scene-to-be-rendered, haptic rendering data of haptic media files associated with a same node in the 3D-scene-to-be-rendered may be different (haptic media files for rendering the node may include different haptic rendering data). Therefore, when different haptic actions are performed in the 3D-scene-to-be-rendered, haptic media accessors associated with the same node in the 3D-scene-to-be-rendered may be different. For example, when a haptic action A is executed in the 3D-scene-to-be-rendered, haptic media accessors associated with a node 1 in the 3D-scene-to-be-rendered are an accessor 1 and an accessor 2. When a haptic action B is executed in the 3D-scene-to-be-rendered, haptic media accessors associated with the node 1 in the 3D-scene-to-be-rendered are the accessor 2 and an accessor 3. For another example, when a haptic action C is executed in the 3D-scene-to-be-rendered, haptic media accessors associated with a node 2 in the 3D-scene-to-be-rendered are an accessor 0 and the accessor 1. When a haptic action D is executed in the 3D-scene-to-be-rendered, the node 2 in the 3D-scene-to-be-rendered does not need to provide a haptic feedback and does not perform haptic rendering. Therefore, the node 2 is not associated with any haptic media accessor.

It should also be noted that any quantity of haptic media accessors may be associated with the target action node when the target haptic action is executed. That is, there may be at least one haptic media accessor associated with the target action node when the target haptic action is executed.

S102: Generate a target haptic object description module ("hapticObject":[ ]) based on an index value of an accessor description module corresponding to the haptic media accessor, and add the target haptic object description module to an MPEG haptic description module ("MPEG_haptic": {}) in a scene description document of the 3D-scene-to-be-rendered.

That is, in order to associate the haptic rendering data of the haptic media file with a node in the 3D scene, the embodiments of the present disclosure introduce a concept of a haptic object (hapticObject) through MPEG haptic (MPEG_haptic), and associate the haptic rendering data of the haptic media file with the node in the 3D scene based on the haptic object.

In some embodiments, the generating a target haptic object description module based on an index value of an accessor description module corresponding to the haptic media accessor includes:
adding an accessor index syntax element (accessor) to the target haptic object description module, and setting a value of the accessor index syntax element to the index value of the accessor description module corresponding to the haptic media accessor.

For example, when there are two haptic media accessors, and index values of accessor description modules corresponding to the two haptic media accessors are respectively 1 and 4, the target haptic object description module generated based on the index value of the accessor description module corresponding to the haptic media accessor may be as follows:

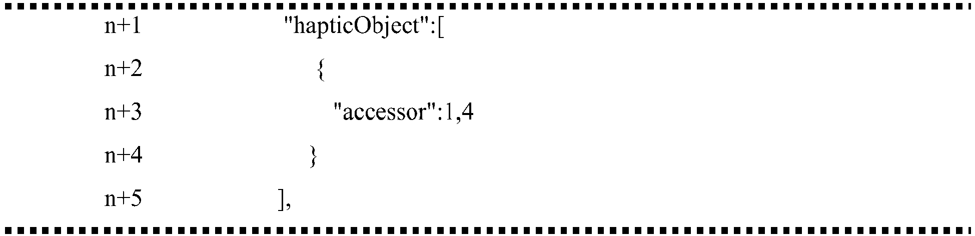

As described in the above example, index values of accessor description modules corresponding to a plurality of haptic media accessors may be separated by ",".

S103: Generate a target haptic action node array based on an index value of a node description module corresponding to the target action node and an index value of the target haptic object description module, and add the target haptic action node array to a haptic action node list ("hapticActionNodes":[]) of a target action description module of an MPEG interactivity description module ("MPEG_interactivity":{}) in the scene description document.

The target action description module is an action description module corresponding to the target haptic action.

In some embodiments, the generating a target haptic action node array based on an index value of a node description module corresponding to the target action node and an index value of the target haptic object description module includes following steps 1031 and 1032:
Step 1031: Add a node index syntax element (node) to the target haptic action node array, and set a value of the node index syntax element to the index value of the node description module corresponding to the target action node.

Step 1032: Add a haptic object index syntax element (hapticObject) to the target haptic action node array, and set a value of the haptic object index syntax element to the index value of the target haptic object description module.

For example, when the index value of the node description module corresponding to the target action node is 0, and the index value of the target tactile object description module is 1, the target haptic action node array generated based on the index value of the node description module corresponding to the target action node and the index value of the target haptic object description module may be as follows:

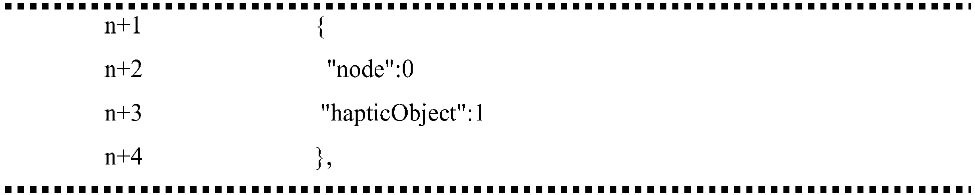

It should be noted that when the target haptic action is executed in the 3D-scene-to-be-rendered, there may be a plurality of nodes that require the haptic rendering, and some nodes obtain the haptic value from the haptic texture (by using a haptic material in a mesh description module of a 3D mesh on which the nodes are mounted), and do not need to associate the haptic object. Therefore, a haptic action node list of the target action description module may include a plurality of haptic action node arrays, and the haptic action node arrays may include a haptic action node array that does not include the haptic object index syntax element (hapticObject).

For example, when a haptic action is executed in the 3D-scene-to-be-rendered, three nodes need to be rendered, namely a node A, a node B, and a node C. Index values of node description modules corresponding to the node A, the node B, and the node C are respectively 0, 1, and 2. An index value of a haptic object description module corresponding to a haptic object associated with the node A is 0, and an index value of a haptic object description module corresponding to a haptic object associated with the node B is 1. The node C obtains a relevant haptic value by using a haptic material in a mesh description module of a 3D mesh mounted on the node C. If no haptic object is associated, a haptic action node list of an action description module corresponding to the haptic action may be as follows:

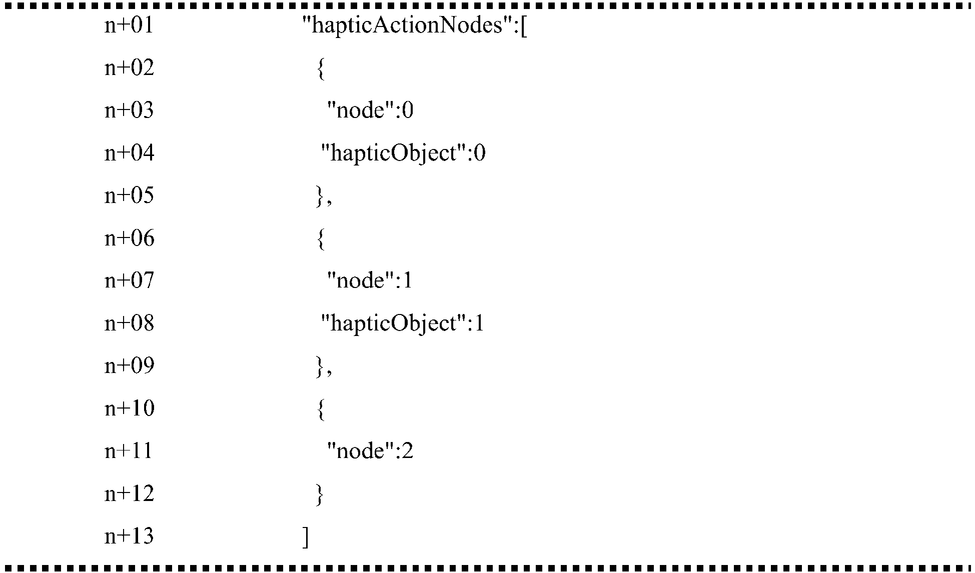

Content of lines n+02 to n+05 is a haptic action node array corresponding to the node A, content of lines n+06 to n+09 is a haptic action node array corresponding to the node B, and content of lines n+10 to n+12 is a haptic action node array corresponding to the node C.

When generating the scene description document of the 3D-scene-to-be-rendered, the method for generating a scene description document provided in the embodiments of the present disclosure first determines the haptic media accessor associated with the target action node when executing the target haptic action in the 3D-scene-to-be-rendered, where the haptic media accessor is the accessor configured to access the haptic rendering data of the haptic media file declared in the MPEG media description module associated with the target action node when the target haptic action is executed; generates the target haptic object description module based on the index value of the accessor description module corresponding to the haptic media accessor, and adds the target haptic object description module to the MPEG haptic description module in the scene description document of the 3D-scene-to-be-rendered; and generates the target haptic action node array based on the index value of the node description module corresponding to the target action node and the index value of the target haptic object description module, and adds the target haptic action node array to the haptic action node list of the target action description module of the MPEG interactivity description module in the scene description document. The haptic media accessor is the accessor configured to access the haptic rendering data of the haptic media file associated with the target action node when the target haptic action is executed, and the target action description module is the action description module corresponding to the target haptic action. Therefore, when the execution of the target haptic action in the 3D-scene-to-be-rendered is triggered, it may be determined based on the target haptic action node array and the target haptic object description module that the target action node needs to be rendered, and to-be-rendered data of the target action node is the haptic rendering data that is of the haptic media file and accessed through the haptic media accessor. Therefore, the above embodiments realize an association between a haptic action, a node, and haptic rendering data of a haptic media file, thus achieving support for the haptic media file in a scene description framework.

In some embodiments, the method for generating a scene description document further includes:
adding an action type syntax element (type) to the target action description module, and setting a value of the action type syntax element based on the action type of a target action.

As described in the above example, after the action type syntax element is added to the target action description module, and the value of the action type syntax element is set based on the action type of the target action, the target action description module may be as follows:

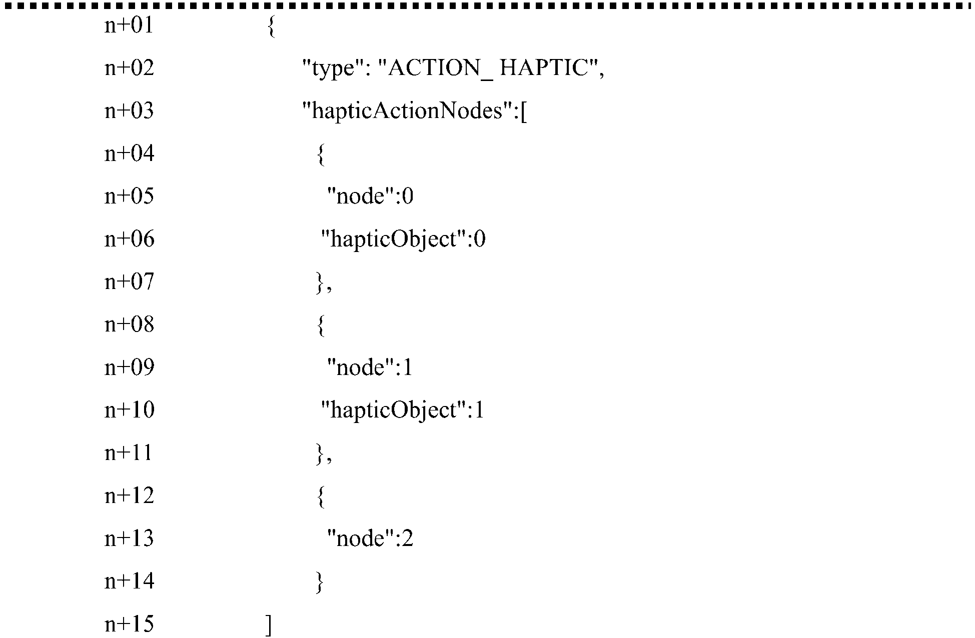

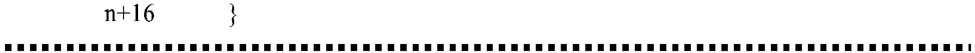

In some embodiments, the method for generating a scene description document further includes: generating a corresponding target behavior array of a target behavior based on an index value of a trigger description module corresponding to a trigger associated with the target behavior and an index value of an action description module corresponding to an action associated with the target behavior, and adding the target behavior array to a behavior list (behaviors":[ ]) of the MPEG interactivity description module ("MPEG_interactivity":{ }). The target behavior is any behavior in the 3D-scene-to-be-rendered.

In some embodiments, the generating a corresponding target behavior array of a target behavior based on an index value of a trigger description module corresponding to a trigger associated with the target behavior and an index value of an action description module corresponding to an action associated with the target behavior includes following steps 1 and 2:
Step 1: Add a trigger index syntax element (triggers) to the target behavior array, and set a value of the trigger index syntax element to the index value of the trigger description module corresponding to the trigger associated with the target behavior.

Step 2: Add an action index syntax element (actions) to the target behavior array, and set a value of the action index syntax element to the index value of the action description module corresponding to the action associated with the target behavior.

It should be noted that one behavior may be associated with at least one action.

For example, if the index value of the trigger description module corresponding to the trigger associated with the target behavior is 0, the target behavior is associated with two actions, and index values of action description modules corresponding to the two actions are respectively 1 and 2, the corresponding target behavior array of the target behavior may be as follows:

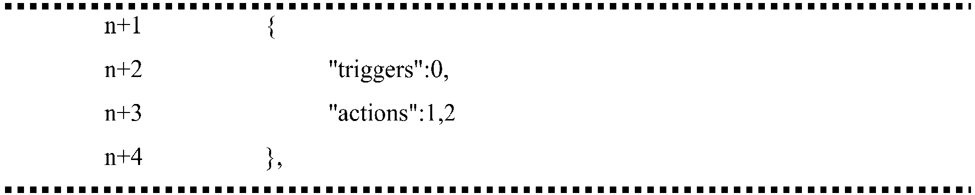

In some embodiments, the method for generating a scene description document further includes: generating, based on a type of a target trigger, a target trigger description module corresponding to the target trigger, and adding the target trigger description module to a trigger list ("triggers":[ ]) of the MPEG interactivity description module ("MPEG_interactivity":{ }). The target trigger is any trigger in the 3D-scene-to-be-rendered.

In some embodiments, the generating, based on a type of a target trigger, a target trigger description module corresponding to the target trigger includes: adding a trigger type syntax element (type) to the target trigger description module, and setting a value of the trigger type syntax element based on the type of the target trigger.

As shown in Table 20 above, if the type of the target trigger is TRIGGER COLLISION, the trigger type syntax element and its value are set to "type":"TRIGGER_COLLISION". If the type of the target trigger is TRIGGER PROXIMITY, the trigger type syntax element and its value are set to "type":"TRIGGER_PROXIMITY". If the type of the target trigger is TRIGGER USER INPUT, the trigger type syntax element and its value are set to "type":"RIGGER_USER_INPUT". If the type of the target trigger type is TRIGGER VISIBILITY, the trigger type syntax element and its value are set to "type":"TRIGGER_VISIBILITY".

For example, if the type of the target trigger is the TRIGGER COLLISION, the target trigger description module corresponding to the target trigger may be as follows:

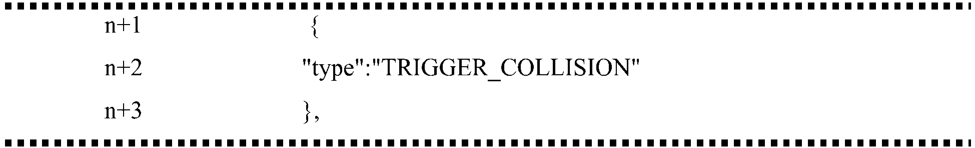

In some embodiments, the method for generating a scene description document further includes: generating, based on description information of the haptic media file, a target media description module corresponding to the haptic media file, and adding the target media description module to a media list ("media") of the MPEG media description module ("MPEG_media": {}) in the scene description document.

In some embodiments, the generating, based on description information of the haptic media file, a target media description module corresponding to the haptic media file includes at least one of following steps 31 to 35:
Step 31: Add a media name syntax element (name) to the target media description module, and set a value of the media name syntax element based on a name of the haptic media file.

For example, if the name of the haptic media file is "Hapticexample", the media name syntax element (name) is added to the target media description module, and the media name syntax element and its value are set to "name":"Hapticexample".

Step 32: Add an autoplay syntax element (autoplay) to the target media description module, and set a value of the autoplay syntax element in accordance with a determination regarding whether the haptic media file needs to be automatically played.

For example, if the haptic media file needs to be automatically played, the syntax element "autoplay" is added to the target media description module, and the syntax element "autoplay" and its value are set to "autoplay": true or "autoplay": 1.

For another example, if the haptic media file does not need to be automatically played, the syntax element "autoplay" is added to the target media description module, and the syntax element "autoplay" and its value are set to "autoplay": false or "autoplay": 0.

Step 33: Add a loop syntax element (loop) to the target media description module, and set a value of the loop syntax element based on whether the haptic media file needs to be cyclically played.

For example, if the haptic media file needs to be cyclically played, the syntax element "loop" is added to the target media description module, and the syntax element "loop" and its value are set to "loop": true or "autoplay": 1.

For another example, if the haptic media file does not need to be cyclically played, the syntax element "loop" is added to the target media description module, and the syntax element "loop" and its value are set to "loop": false or "autoplay": 0.

Step 34: Add an alternative version list ("alternatives": [ ]) to the target media description module.

Step 35: Generate, based on description information of each alternative version of the haptic media file, an alternative version description module corresponding to each alternative version of the haptic media file, and add the alternative version description module corresponding to each alternative version of the haptic media file to the alternative version list ("alternatives": [ ]).

In some embodiments, the generating, based on description information of each alternative version of the haptic media file, an alternative version description module corresponding to each alternative version of the haptic media file in the above-mentioned step 35 includes at least one of following steps 351 to 355:
Step 351: Add a media type syntax element (mimeType) to a target alternative version description module corresponding to a target alternative version of the haptic media file, and set a value of the media type syntax element based on data included in the target alternative version.

The target alternative version is any alternative version of the haptic media file. The alternative version description module may be generated for each alternative version of the haptic media file according to the embodiments of the present disclosure.

In some embodiments, the setting a value of the media type syntax element based on data included in the target alternative version includes: when the haptic media file includes audio data and/or video data, setting the value of the media type syntax element to a first preset value; or
when the haptic media file does not include audio data or video data, setting the value of the media type syntax element to a second preset value.

For example, the first preset value may be "video /mp4", and the second preset value may be "haptic /mp4".

Step 352: Add a URI syntax element (uri) to the target alternative version description module, and set a value of the URI syntax element based on a URI of the target alternative version.

For example, if the URI of the target alternative version of the haptic media file is "http://www.Hapticexample.mp4", the URI syntax element (uri) is added to the target alternative version description module, and the URI syntax element (uri) and its value are set to "uri":" http://www.Hapticexample.mp4".

Step 353: Add a track array (tracks[ ]) to the target alternative version description module.

Step 354: Add a first track index syntax element (track) to the track array (tracks[ ]), and set a value of the first track index syntax element to an index value of each bitstream track of the target alternative version.

That is, when encoded haptic media is referenced by the scene description document as an item in the MPEG_media.alternative.tracks, and the referenced item complies with a provision on the track in an ISOBMFF in an ISO/IEC 23090-32 standard, for a haptic media file encapsulated into a single track, a track referenced in the MPEG_media is a single track into which the haptic media is encapsulated. For a haptic media file encapsulated into a plurality of tracks, a plurality of tracks into which the haptic media is encapsulated are referenced in the MPEG_media. For example, a non-zero value is defined in advance in TrackHeaderBox of configuration information alternate_group in an encapsulated file to indicate that the haptic media is encapsulated into a plurality of MIHS tracks, which are also indexed by the MPEG_media.

Step 355: Add a codec parameter syntax element (codecs) to the track array (tracks[ ]), and set a value of the codec parameter syntax element based on an encoding parameter of data in each bitstream track of the target alternative version and a provision in a standard for carriage of haptics data in the ISO/IEC 23090-32 standard.

A codec parameter of media included in the track array (tracks) is defined in IETF RFC 6381. When the track array includes different types of codecs (for example, AdaptationSet includes representations for different codecs), the codec parameter syntax element may be represented by a list of codec values separated by a comma.

When media data is haptic data, a relevant detailed provision in the standard for carriage of haptics data in the ISO/IEC 23090-32 standard should be followed. For example, when the haptic data is encapsulated by using an ISMBOFF, a first group of elements in the codec parameter syntax element represents a code of a codec in an ISO/IEC 23090-31 standard. A format of the value of the codec parameter syntax element is 'codec=mih1.oo', where "mih1" represents a type of data format description for encapsulating the haptic data in the ISOBMFF. This value is not unique and may be replaced by another sample format name that complies with ISOBMFF encapsulation. "oo" represents an object type indication value defined on an "Object Type" page at a website of the MP4 registration authority.

For example, if the name of the haptic media file is Hapticexample, the haptic media file needs to be automatically and cyclically played, the haptic media file includes the audio data and/or the video data, an access address of the haptic media file is www.example.com/Hapticexample.mp4, the haptic media file is a single-track encapsulated file, and the index value of the bitstream track is 1, the target media description module may be as follows:

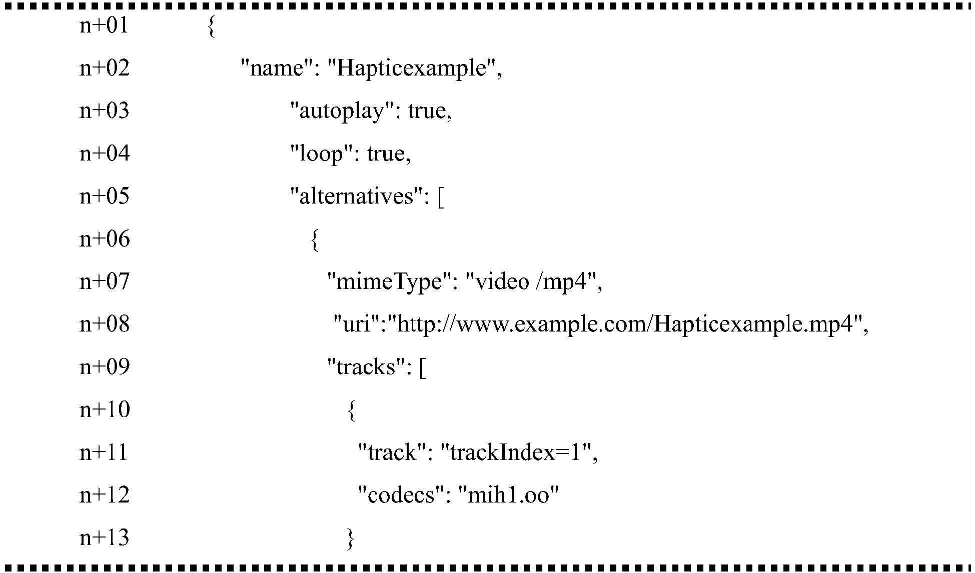

In some embodiments, the method for generating a scene description document further includes:
generating, based on description information of the 3D-scene-to-be-rendered, a target scene description module corresponding to the 3D-scene-to-be-rendered, and adding the target scene description module to a scene list ("scenes": [ ]) of the scene description document.

In some embodiments, the generating, based on description information of the 3D-scene-to-be-rendered, a target scene description module corresponding to the 3D-scene-to-be-rendered includes: adding a node index list ("nodes": [ ]) to the target scene description module, and adding an index value of a node description module corresponding to each top-level node in the 3D-scene-to-be-rendered to the node index list.

It should be emphasized that in the embodiments of the present disclosure, only the index value of the node description module corresponding to the top-level node in the 3D-scene-to-be-rendered, instead of index values of node description modules corresponding to all nodes (excluding an index value of a node description module corresponding to a child node), is added to the node index list.

For example, if the scene-to-be-rendered includes three top-level nodes, and index values of node description modules corresponding to the three top-level nodes are 0, 1, and 2 respectively, the target scene description module may be as follows:

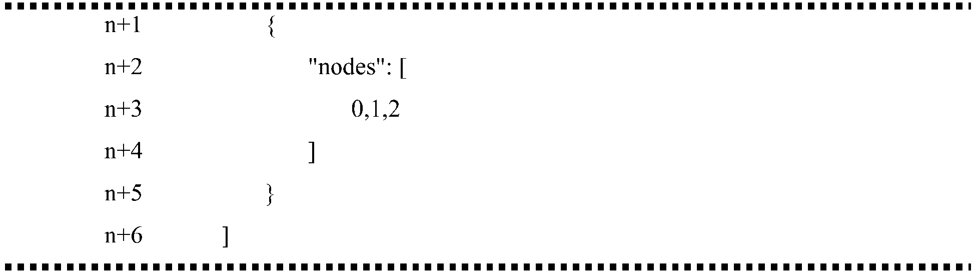

In some embodiments, the method for generating a scene description document further includes: generating, based on description information of a target node, a target node description module corresponding to the target node, and adding the target node description module to a node list ("nodes":[ ]) of the scene description document. The target node is any node in the 3D-scene-to-be-rendered.

In some embodiments, the generating, based on description information of a target node, a target node description module corresponding to the target node includes at least one of following steps 41 to 44:
Step 41: Add a node name syntax element (name) to the target node description module, and set a value of the node name syntax element based on a name of the target node.

For example, if the name of the target node is "Haptic_node", the node name syntax element (name) is added to the target media description module, and the node name syntax element in the target node description module and its value are set to "name": "Haptic_node".

Step 42: Add a child node index list ("children":[ ]) to the target node description module, and add an index value of a node description module corresponding to each child node mounted to the target node to the child node index list.

For example, if two child nodes are mounted to the target node, an index value of a node description module corresponding to one child node is 1, and an index value of a node description module corresponding to the other child node is 2, the child node index list of the target node description module may be as follows:

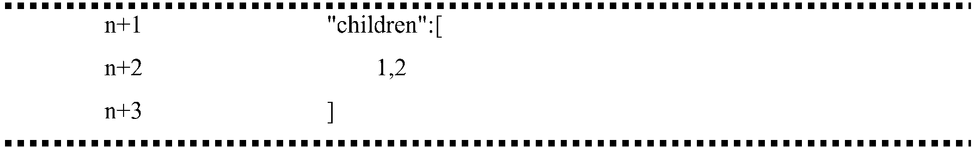

Step 43: Add a mesh index syntax element (mesh) to the target node description module, and set a value of the mesh index syntax element (mesh) to an index value of a mesh description module corresponding to a 3D mesh mounted to the target node.

For example, if one 3D mesh is mounted to the target node, and an index value of a mesh description module corresponding to the one 3D mesh is 0, the mesh index syntax element (mesh) is added to the target media description module, and the mesh index syntax element in the target node description module and its value are set to "mesh": 0.

Step 44: Add a position offset syntax element (translation) to the target node description module, and set a value of the position offset syntax element based on a spatial position offset of the target node relative to a parent node of the target node.

It should be clarified that a spatial position offset of a node relative to a parent node of the node is directly obtained based on a value of a position offset syntax element in a node description module. The spatial position offset does not necessarily mean a spatial position offset of the node relative to a node representing a target digital human. The spatial position offset of the node relative to the node representing the target digital human is a sum of spatial offsets of all nodes on a path from the node to the node representing the target digital human.

For example, a node A is a child node of the node representing the target digital human, a node B is a child node of the node A, a position offset syntax element in a node description module corresponding to the node A and its value are "translation": [ 0.0, 10.0, 25.0 ], and a position offset syntax element in a node description module corresponding to the node B and its value are "translation": [ 0.0, 10.0, 20.0 ]. Therefore, it may be first obtained that an offset of the node A relative to the node representing the target digital human is [0.0, 10.0, 25.0] and an offset of the node B relative to the node A is [0.0, 00.0, 20.0]. Then, the position offsets are superimposed to obtain an offset of the node B relative to the node representing the target digital human, namely [0.0, 10.0, 45.0].

For example, if the name of the target node is "Hapticexample_mesh", the target node includes two child nodes, index values of node description modules corresponding to the two child nodes are 1 and 2 respectively, the index value of the mesh description module corresponding to the 3D mesh mounted to the target node is 0, and the spatial position offset of the target node relative to the parent node of the target node is [0.0, 10.0, 25.0], the node description module generated based on the description information of the target node may be as follows:

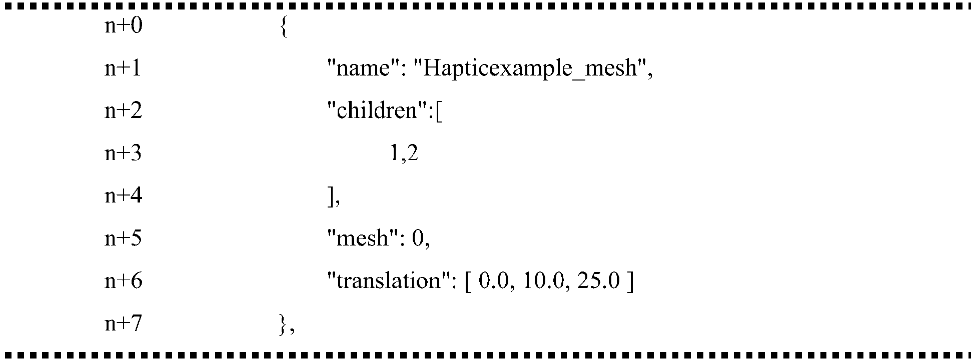

In some embodiments, the method for generating a scene description document further includes: generating, based on description information of a target 3D mesh, a target mesh description module corresponding to the target 3D mesh, and adding the target mesh description module to a mesh list ("meshes": [ ]) of the scene description document. The target 3D mesh is any 3D mesh in the 3D-scene-to-be-rendered.

In some embodiments, the generating, based on description information of a target 3D mesh, a target mesh description module corresponding to the target 3D mesh includes at least one of following steps 51 to 56:
Step 51: Add a mesh name syntax element (name) to the target mesh description module, and set a value of the mesh name syntax element based on a name of the target 3D mesh.

For example, if the name of the target 3D mesh is "example_mesh", the mesh name syntax element is added to the target mesh description module, and the mesh name syntax element and its value are set to "name": "example_mesh".

Step 52: Add a texture coordinate syntax element (TEXCOORD_n) to an attribute (attributes) of a primitive (primitives) of the target mesh description module, and set the texture coordinate syntax element to an index value of an accessor description module corresponding to an accessor for accessing a texture coordinate of the target 3D mesh.

Step 53: Add a mode syntax element (mode) to the primitive of the target mesh description module, and set a value of the mode syntax element based on a topology type of the target 3D mesh.

Step 54: Add an MPEG haptic material description module ("MPEG_material_Haptic":{}) to the primitive (primitives) of the target mesh description module, add a haptic material array index syntax element (index) to the MPEG haptic material description module ("MPEG_material_Haptic": 11), and set a value of the haptic material array index syntax element to an index value of a haptic material array associated with the target 3D mesh.

For example, if the name of the target 3D mesh is Hapticexample_mesh, a topology of the target 3D mesh is scattered, and an index value of a haptic material attribute array associated with the target 3D mesh is 2, the target mesh description module corresponding to the target 3D mesh may be as follows:

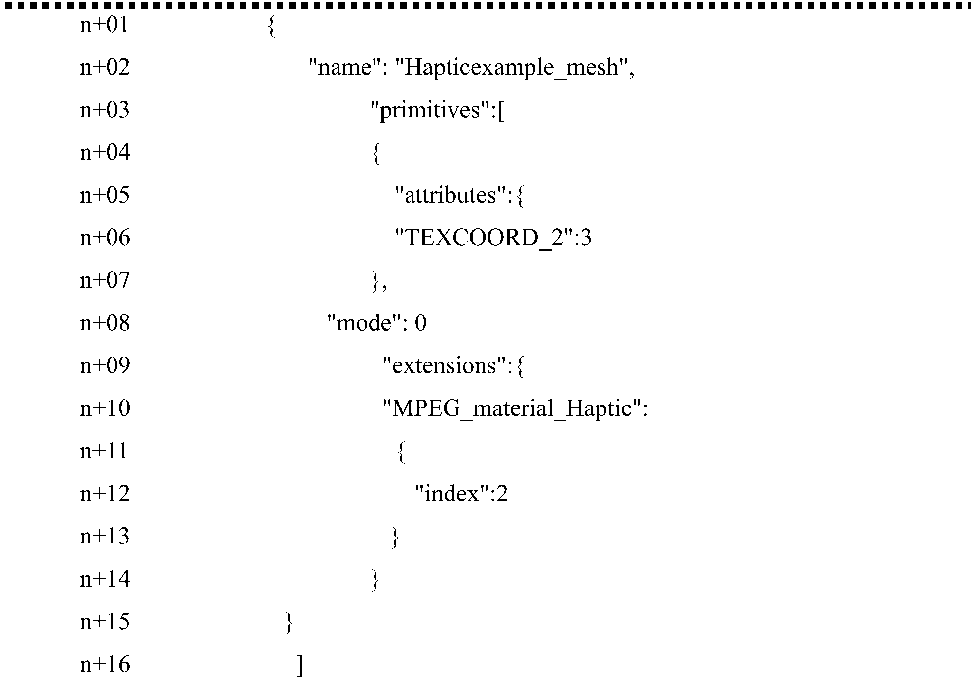

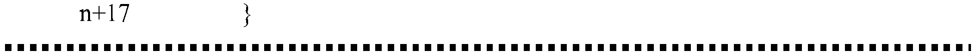

In some embodiments, the method for generating a scene description document further includes following steps 6 to 8:
Step 6: Generate, based on description information of each haptic material attribute carried by the target 3D mesh, a haptic material attribute description module corresponding to each haptic material attribute carried by the target 3D mesh.

In some embodiments, the generating, based on description information of each haptic material attribute carried by the target 3D mesh, a haptic material attribute description module corresponding to each haptic material attribute carried by the target 3D mesh in the above-mentioned step 6 includes at least one of following steps 61 to 64:
Step 61: Add a texture array to a target haptic material attribute description module corresponding to a target haptic material attribute.

The target haptic material attribute is any haptic material attribute carried by the target 3D mesh.

Step 62: Add a texture index syntax element (index) to the texture array, and set a value of the texture index syntax element to an index value of a texture array associated with the target haptic material attribute.

Step 63: Add a texture coordinate index syntax element (texCoord) to the texture array, and set a value of the texture coordinate index syntax element to an index value of a texture coordinate syntax element (TEXCOORD_n) associated with the target haptic material attribute.

Step 64: Add a haptic material type syntax element (type) to the target haptic material attribute description module, and set a value of the haptic material type syntax element based on a type of the target haptic material attribute.

In some embodiments, a type of the haptic material attribute includes High_resolution, Low_resolution, and Reference.

For example, if a haptic material type of stiffness is the Low_resolution, the index value of the associated texture array is 0, and the index value of the associated texture coordinate syntax element is 0, a haptic material attribute description module corresponding to the stiffness may be as follows:

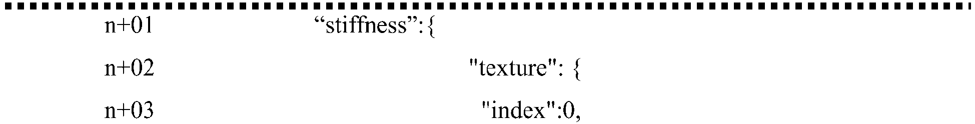

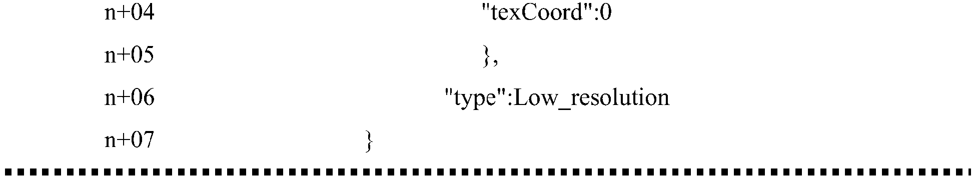

Step 7: Generate, based on the haptic material attribute description module corresponding to each haptic material attribute carried by the target 3D mesh, the haptic material array associated with the target 3D mesh, and add the haptic material array associated with the target 3D mesh to a haptic material list ("MPEG_material_Haptic":[ ]) of the scene description document.

For example, if the haptic material attribute carried by the target 3D mesh includes the stiffness and temperature, a type of the stiffness is the Low_resolution, and a type of the temperature is the Reference, the haptic material attribute array of the target 3D mesh may be as follows:

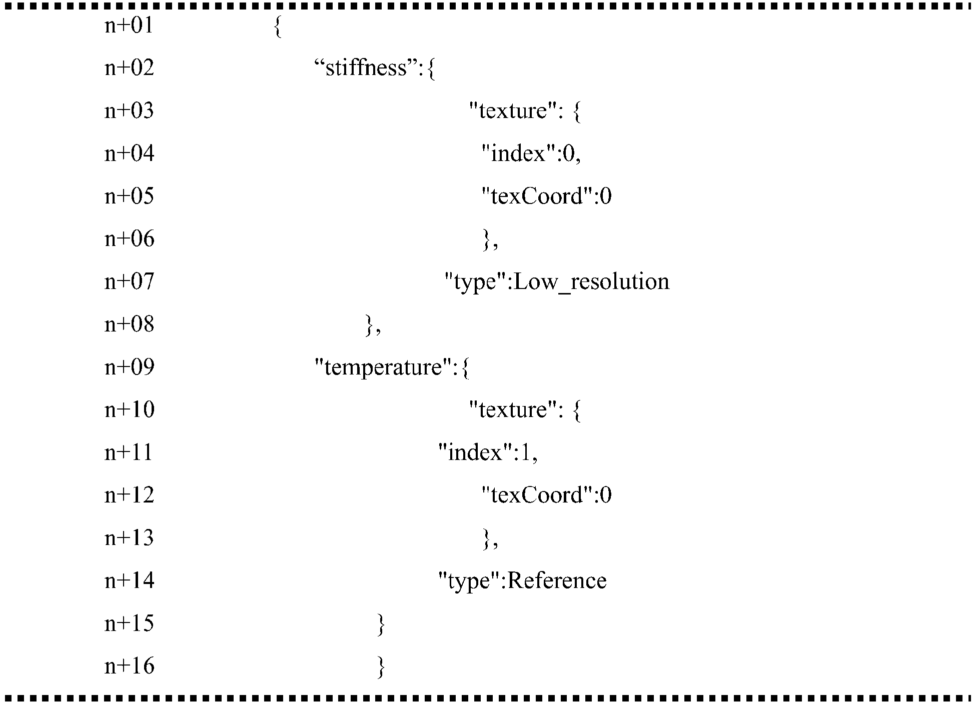

For example, if two 3D meshes in the scene-to-be-rendered each carry a haptic material attribute, the haptic material attribute carried by one 3D mesh is the stiffness whose type is the Low_resolution, and the haptic material attribute carried by the other mesh description module is the temperature whose type is the Reference, a haptic material array list of the scene description document may be as follows:

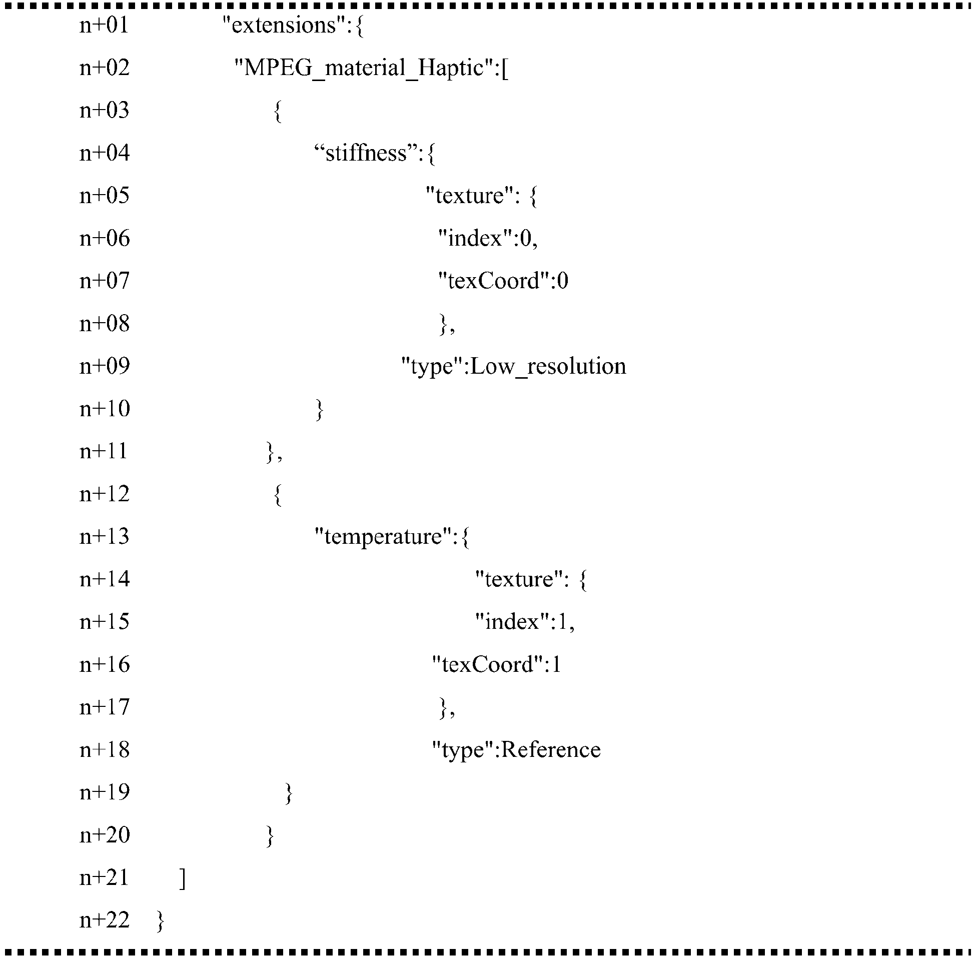

In some embodiments, the method for generating a scene description document further includes: generating, based on texture description information of the target haptic material attribute, the texture array associated with the target haptic material attribute; and adding the texture array associated with the target haptic material attribute to a texture list ("textures": [ ]) of the scene description document.

In some embodiments, the generating, based on texture description information of the target haptic material attribute, the texture array associated with the target haptic material attribute includes at least one of following steps 81 and 82:
Step 81: Add a sampler index syntax element (sampler) to the texture array associated with the target haptic material attribute, and set a value of the sampler index syntax element to an index value of a sampler description module corresponding to a sampler of the target haptic material attribute.

Step 82: Add a texture resource index syntax element (source) to the texture array associated with the target haptic material attribute, and set a value of the texture resource index syntax element to an index value of a texture resource description module corresponding to a texture resource of the target haptic material attribute.

For example, if the index value of the texture resource description module corresponding to the texture resource of the target haptic material attribute is 2, and the index value of the sampler description module corresponding to the sample of the target haptic material attribute is 3, the texture array that is associated with the target haptic material attribute and generated based on the texture description information of the target haptic material attribute may be as follows:

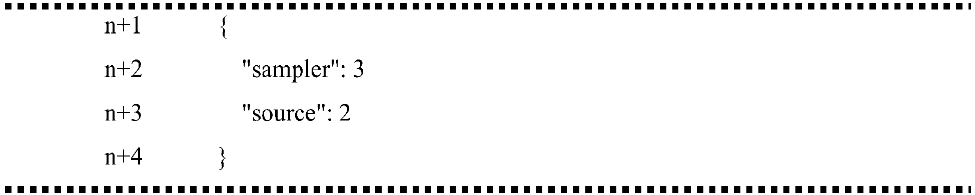

In some embodiments, the method for generating a scene description document further includes: generating, based on description information of the sampler of the target haptic material attribute, the sampler description module corresponding to the sampler of the target haptic material attribute; and adding the sampler description module corresponding to the sampler of the target haptic material attribute to a sampler list ("samplers":[ ]) of the scene description document.

For example, for the sampler of the target haptic material attribute, if a Mag filter parameter is 9729, a Min filter parameter is 9987, a horizontal wrapping parameter is 33648, and a value wrapping parameter is: 33648, the sampler description module corresponding to the sampler of the target haptic material attribute may be as follows:

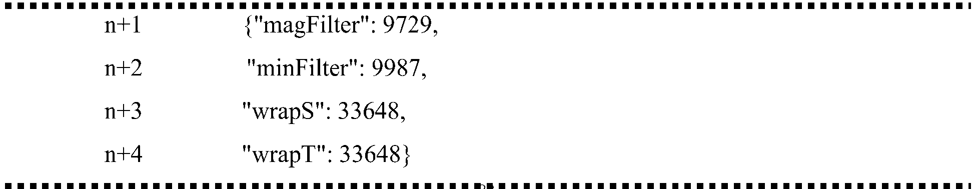

In some embodiments, the method for generating a scene description document further includes: generating, based on an access address of the texture resource of the target haptic material attribute, the texture resource description module corresponding to the texture resource of the target haptic material attribute; and adding the texture resource description module corresponding to the texture resource of the target haptic material attribute to a texture resource list ("images": [ ]) of the scene description document.

For example, if the access address of the texture resource of the target haptic material attribute is temperatureTexture.png, the texture resource description module that corresponds to the texture resource of the target haptic material attribute and is generated based on the access address of the texture resource of the target haptic material attribute may be as follows:

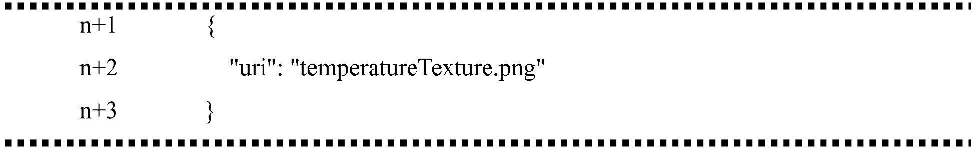

In some embodiments, the method for generating a scene description document further includes: generating, based on description information of a target accessor, a target accessor description module corresponding to the target accessor, and adding the target accessor description module to an accessor list ("accessors": [ ]) of the scene description document. The target accessor is any accessor for rendering the 3D-scene-to-be-rendered.

In some embodiments, the generating, based on description information of a target accessor, a target accessor description module corresponding to the target accessor includes at least one of following steps 91 to 96:
Step 91: Add a data type syntax element (componentType) to the target accessor description module, and set a value of the data type syntax element based on a data type of data accessed by the target accessor.

For example, if a data type of data accessed by an accessor is 5126, a data type syntax element in an accessor description module corresponding to the accessor and its value are set to: componentType":5126.

Step 92: Add an accessor type syntax element (type) to the target accessor description module, and set a value of the accessor type syntax element based on a type of the target accessor.

For example, if a type of an accessor is a 3D vector, an accessor type syntax element in an accessor description module corresponding to the accessor and its value are set to: "type":"VEC3".

Step 93: Add a count syntax element (count) to the target accessor description module, and set a value of the data count syntax element based on a count of the data accessed by the target accessor.

For example, if an accessor accesses 1024 pieces of data, a data count syntax element (count) in an accessor description module corresponding to the accessor and its value are set to: count":1024.

Step 94: Add a first buffer view index syntax element (bufferView) to the target accessor description module, and set a value of the first buffer view index syntax element based on an index value of a buffer view description module corresponding to a buffer view for caching the data accessed by the target accessor.

For example, if a buffer view description module corresponding to a buffer view for caching data accessed by an accessor is a fourth buffer view description module (with an index value of 3) in a buffer view list (bufferViews) of the scene description document, a target buffer view index syntax element in an accessor description module corresponding to the accessor and its value are set to: "bufferView":3.

Step 95: Add an MPEG time-varying accessor ("MPEG_accessor_timed": {}) to an extension list of the target accessor description module.

Step 96: Add a second buffer view index syntax element (bufferView) to the MPEG time-varying accessor, and set a value of the second buffer view index syntax element based on an index value of a buffer view description module corresponding to a buffer view for caching a time-varying parameter of the target accessor.

For example, if a buffer view description module corresponding to a buffer view for caching a time-varying parameter of an accessor is a second buffer view description module in the buffer view list (bufferViews) of the scene description document, a second buffer view index syntax element in an accessor description module corresponding to the accessor and its value are set to: "bufferView":1.

Step 97: Add a time-varying syntax element (immutable) to the MPEG time-varying accessor, and set a value of the time-varying syntax element based on whether a value of a syntax element in the target accessor changes over time.

In some embodiments, the setting a value of the time-varying syntax element based on whether a value of a syntax element in the target accessor changes over time includes: when the value of the syntax element in the target accessor does not change over time, setting the time-varying syntax element in the MPEG time-varying accessor of the target accessor description module and its value to "immutable":true or "immutable": 1; or when the value of the syntax element in the target accessor changes over time, setting the time-varying syntax element in the MPEG time-varying accessor of the target accessor description module and its value to "immutable": false or "immutable": 0.

Step 98: Add an accessor name syntax element (name) to the target accessor description module, and set a value of the accessor name syntax element based on a name of the target accessor.

For example, if a type of data accessed by an accessor is 5126, a name of the accessor is "hapticAccessor", a type of the accessor is VEC3, 1828 pieces of data are accessed by the accessor, an index value of a buffer view description module corresponding to a buffer view for caching the data accessed by the accessor is 0, a value of a syntax element in the accessor changes over time, and an index value of a buffer view description module corresponding to a buffer view for caching a time-varying parameter of the accessor is 2, an accessor description module corresponding to the accessor may be as follows:

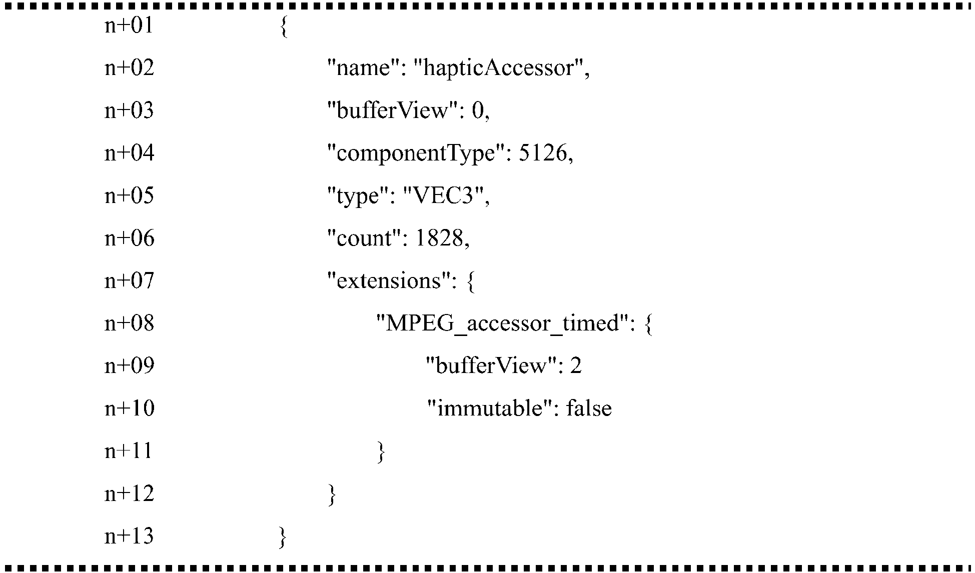

In some embodiments, the method for generating a scene description document provided in the embodiments of the present disclosure further includes: generating, based on description information of a target buffer, a target buffer description module corresponding to the target buffer, and adding the target buffer description module to a buffer list ("buffers":[ ]) of the scene description document. The target buffer is any buffer configured for rendering the 3D-scene-to-be-rendered.

In some embodiments, the generating, based on description information of a target buffer, a target buffer description module corresponding to the target buffer includes at least one of following steps 101 to 107:
Step 101: Add a first byte length syntax element (byteLength) to the target buffer description module, and set a value of the first byte length syntax element based on a capacity of the target buffer.

For example, when a capacity of a buffer is 15000 bytes, a first byte length syntax element in a buffer description module corresponding to the buffer and its value are set to "byteLenth":15000.

Step 102: Add an MPEG circular buffer ("MPEG_buffer_circular": {}) to the target buffer description module.

Step 103: Add a stage count syntax element (count) to the MPEG circular buffer ("MPEG_buffer_circular": {}), and set a value of the stage count syntax element based on a quantity of storage stages of the target buffer.

For example, if a quantity of storage stages of a buffer is 5, a stage count syntax element in an MPEG circular buffer of a buffer description module corresponding to the buffer and its value are set to "count":5.

Step 104: Add a media index syntax element (media) to the MPEG circular buffer, and set a value of the media index syntax element based on an index value of a media description module corresponding to a media file to which source data of data cached in the target buffer belongs.

For example, if an index value of a media description module corresponding to a media file to which source data of data cached in a buffer belongs is 0, a media index syntax element in an MPEG circular buffer of a buffer description module corresponding to the buffer and its value are set to "media":0.

Step 105: Add a track index syntax element (tracks) to the MPEG circular buffer, and set a value of the track index syntax element based on a track index value of the source data of the data cached in the target buffer.

Step 106: Add a buffer name syntax element (name) to a buffer description module corresponding to the target buffer, and set a value of the buffer name syntax element based on a name of the target buffer.

Step 107: Add a URI syntax element (uri) to the target buffer description module, and set a value of the URI syntax element to a URI of the source data of the data cached in the target buffer.

For example, if a capacity of a buffer named "happy Buffer" is 108940 bytes, a quantity of storage stages of the buffer is 3, and an index value of a media description module corresponding to a media file to which source data of data cached in the buffer is 1, a buffer description module that corresponds to the buffer and is added to the buffer list of the scene description document may be as follows:

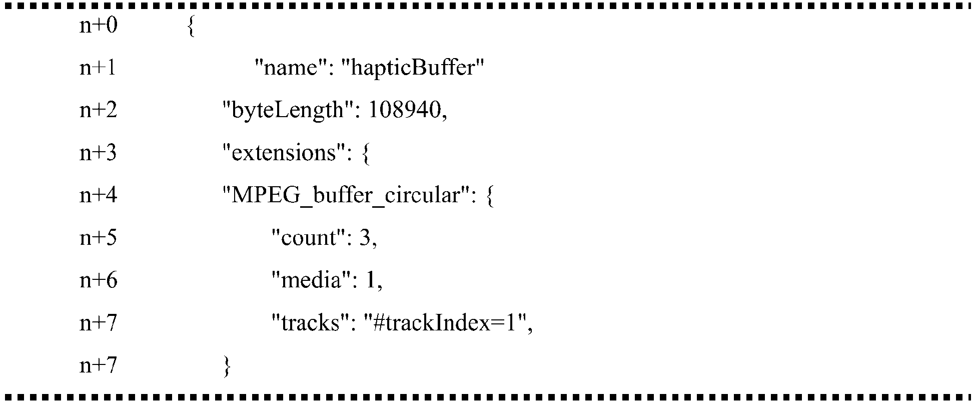

In some embodiments, the method for generating a scene description document further includes: generating, based on description information of a target buffer view, a target buffer view description module corresponding to the target buffer view, and adding the target buffer view description module to the buffer view list ("bufferViews": [ ]) of the scene description document. The target buffer view is any buffer view of a buffer configured for rendering the 3D-scene-to-be-rendered.

In some embodiments, the generating, based on description information of a target buffer view, a target buffer view description module corresponding to the target buffer view includes at least one of following steps 111 to 114:
Step m1: Add a buffer index syntax element (buffer) to the target buffer view description module, and set a value of the buffer index syntax element based on an index value of a buffer description module corresponding to a buffer which the target buffer view is included in.

For example, if an index value of a buffer description module corresponding to a buffer is 2, a buffer index syntax element in a buffer view description module corresponding to a buffer view of the buffer and its value are set to "buffer":2.

Step 112: Add a second byte length syntax element (byteLength) to the buffer view description module corresponding to the target buffer view, and set a value of the second byte length syntax element (byteLength) based on a capacity of the target buffer view.

Step 113: Add an offset syntax element (byteOffset) to the target buffer view description module, and set a value of the offset syntax element based on an offset of data cached in the target buffer view.

Step 114: Add a buffer view name syntax element (name) to the target buffer view description module, and set a value of the buffer view name syntax element based on a name of the target buffer view.

For example, if an index value of a buffer description module corresponding to a buffer is 0, a capacity of the buffer is 43972, the buffer includes three buffer views, a first buffer view is named "hapticbufferViews1" with a capacity of 21936 and an offset of 0, a second buffer view is named "hapticbufferViews2" with a capacity of 21936 and an offset of 21936, and a third buffer view is named "hapticbufferViews3" with a capacity of 100 and an offset of 43872, a buffer view description module corresponding to a buffer view of the buffer in the scene description document may be as follows:

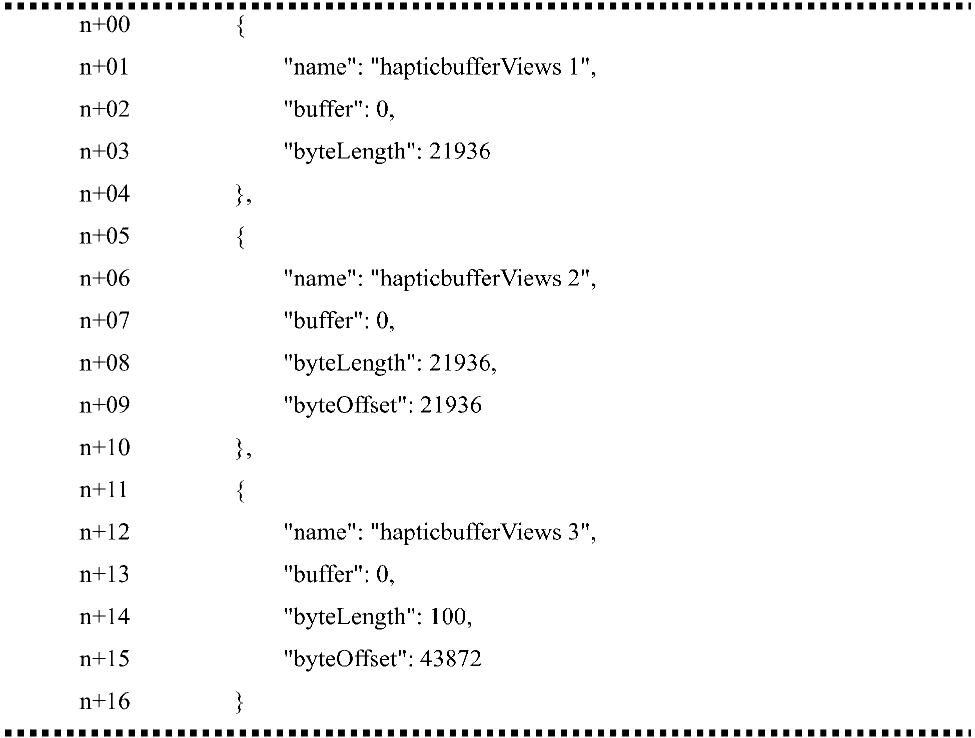

In some embodiments, the method for generating a scene description document further includes:
adding a digital asset description module ("asset": {}) to the scene description document, adding a version syntax element (version) to the digital asset description module, and setting a value of the version syntax element based on version information of the scene description document.

For example, when the scene description document is compiled based on glTF2.0, the value of the version syntax element is set to 2.0.

For example, the digital asset description module added to the scene description document may be as follows:

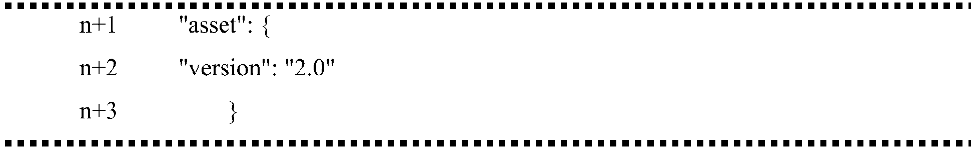

In some embodiments, the method for generating a scene description document further includes:
adding a list of extensions used ("extendesUsed": []) to the scene description document, and adding a top-level extension that is made by the MPEG for the glTF2.0 scene description document and used in the scene description document to the list of extensions used.

For example, if MPEG extension items used in the scene description document include: the MPEG media (MPEG_media), the MPEG interactivity (MPEG_interactivity), the MPEG haptic (MPEG_Haptic), an MPEG haptic material (MPEG_material_Haptic), the MPEG circular buffer (MPEG_buffer_circular), and the MPEG time-varying accessor (MPEG_accessor_timed), the list of extensions used, which is added to the scene description document, may be as follows:

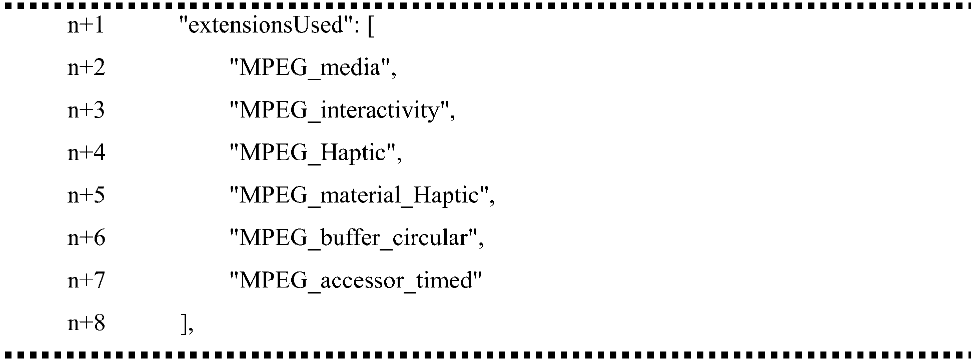

In some embodiments, the method for generating a scene description document further includes:
adding a scene declaration (scene) to the scene description document, and setting a value of the scene declaration to an index value of a scene description module corresponding to the scene-to-be-rendered.

For example, if the index value of the scene description module corresponding to the scene-to-be-rendered is 0, the scene declaration added to the scene description document may be as follows:

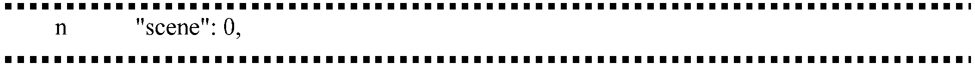

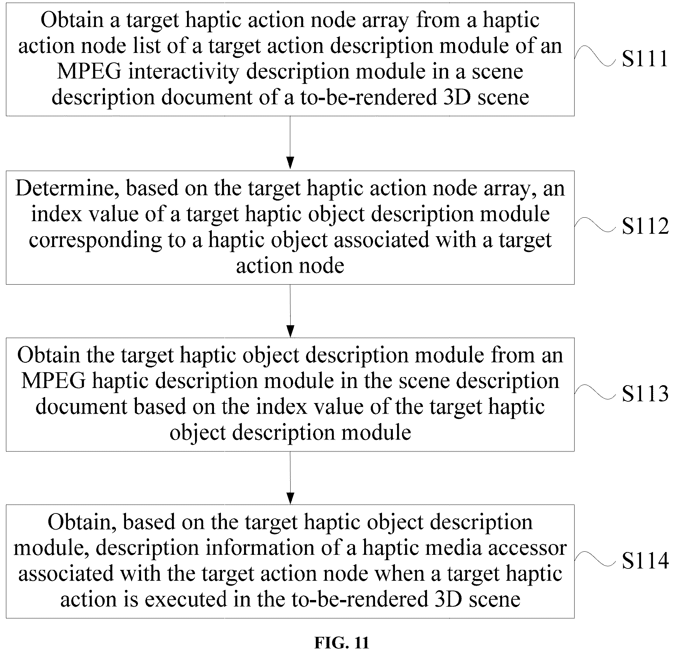

Some embodiments of the present disclosure further provide a method for parsing a scene description document. Referring to FIG. 11, the method for parsing a scene description document includes following steps S111 to S113:
S111: Obtain a target haptic action node array from a haptic action node list ("hapticActionNodes":[ ]) of a target action description module of an MPEG interactivity description module ("MPEG_interactivity": {}) in a scene description document of a 3D-scene-to-be-rendered.

The target action description module may be any action description module of the MPEG interactivity description module, and the target haptic action node array may be any haptic action node array in the haptic action node list of the target action description module.

For example, the target action description module may be as follows:

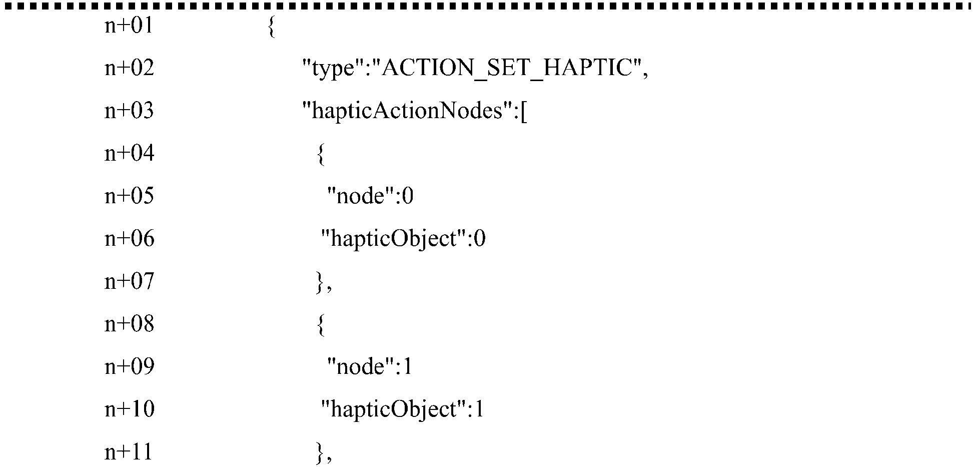

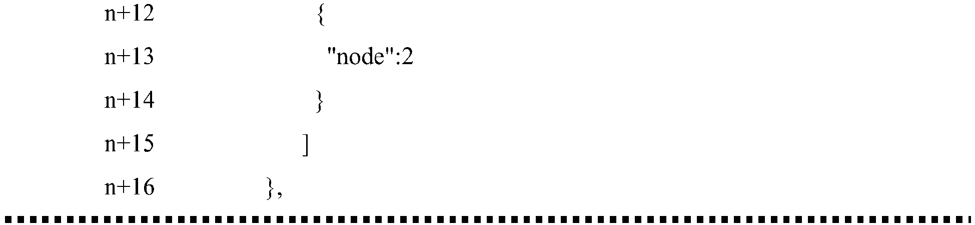

It should be noted that although a third haptic action node array (lines n+12 to n+14) in the haptic action node list ("hapticActionNodes":[ ]) of the target action description module does not include a haptic object syntax element (hapticObject), a node (corresponding to a node description module with an index value of 2) declared in the third haptic action node array also needs to be associated with haptic data. The haptic data associated with the node will be associated with relevant haptic data in a mesh description module by using an MPEG haptic material (MPEG _haptic_material).

S112: Determine, based on the target haptic action node array, an index value of a target haptic object description module corresponding to a haptic object associated with a target action node.

For example, it is assumed that the target haptic action node array is as follows:

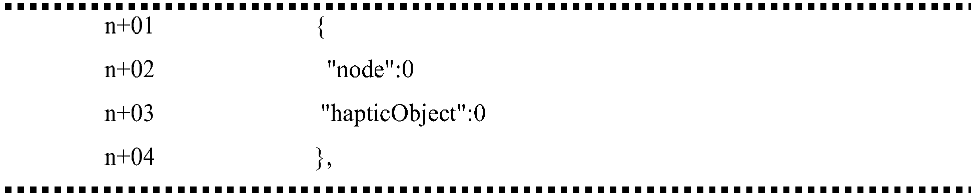

Therefore, a node corresponding to a node description module with an index value of 0 (a first node description module in a node list) is the target action node, and the index value of the target haptic object description module corresponding to the haptic object associated with the target action node is 0 (a first haptic object description module in an MPEG haptic description module).

S113: Obtain the target haptic object description module from the MPEG haptic description module ("MPEG_haptic": {}) in the scene description document based on the index value of the target haptic object description module.

In some embodiments, the determining, based on the target haptic action node array, an index value of a target haptic object description module corresponding to a haptic object associated with a target action node includes: obtaining a value of a haptic object index syntax element (hapticObject) in the target haptic action node array, and determining the index value of the target haptic object description module based on the value of the haptic object index syntax element.

As described in the above example, the haptic object index syntax element in the target haptic action node array and its value are "hapticObject":0. Therefore, it may be determined that the index value of the target haptic object description module is 0, and the first haptic object description module may be obtained as the target haptic object description module from the MPEG haptic description module ("MPEG_haptic": {}) in the scene description document.

S114: Obtain, based on the target haptic object description module, description information of a haptic media accessor associated with the target action node when a target haptic action is executed in the 3D-scene-to-be-rendered.

The target haptic action is a haptic action corresponding to the target action description module. The haptic media accessor is an accessor configured to access haptic rendering data of a haptic media file declared in an MPEG media description module ("MPEG_media": {}) associated with the target action node when the target haptic action is executed.

It should be noted that there may be at least one haptic media accessor associated with an action node.

In some embodiments, the obtaining, based on the target haptic object description module, description information of a haptic media accessor associated with the target action node when a target haptic action is executed in the 3D-scene-to-be-rendered in the above-mentioned step S114 includes following steps 1141 to 1143:
Step 1141: Obtain a value of an accessor index syntax element (accessor) in the target haptic object description module.

Step 1142: Obtain an accessor description module corresponding to the haptic media accessor from an accessor list ("accessors": [ ]) of the scene description document based on the value of the accessor index syntax element.

Step 1143: Obtain the description information of the haptic media accessor based on the accessor description module corresponding to the haptic media accessor.

For example, it is assumed that the target haptic object description module is as follows:

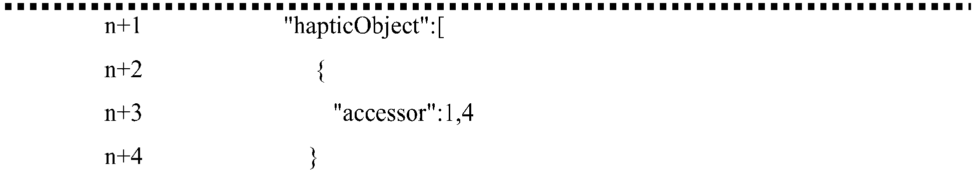

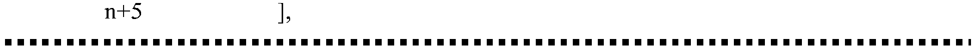

Therefore, the above-mentioned steps 1141 to 1143 include: obtaining second and fifth accessor description modules from the accessor list ("accessors": [ ]) of the scene description document based on values (1 and 4) of the accessor index syntax element (accessor), and obtaining the description information of the haptic media accessor based on the second and fifth accessor description modules.

The method for parsing a scene description document provided in the embodiments of the present disclosure may obtain the target haptic action node array from the haptic action node list of the target action description module of the MPEG interactivity description module in the scene description document of the 3D-scene-to-be-rendered, determine, based on the target haptic action node array, the index value of the target haptic object description module corresponding to the haptic object associated with the target action node, obtain the target haptic object description module from the MPEG haptic description module in the scene description document based on the index value of the target haptic object description module, and obtain, based on the target haptic object description module, the description information of the accessor that is associated with the target action node and configured to access the haptic rendering data of the haptic media file declared in the MPEG media description module when the haptic action corresponding to the target action description module is executed in the 3D-scene-to-be-rendered. The method for parsing a scene description document provided in the embodiments of the present disclosure may obtain description information of an accessor that is associated with an action node and configured to access haptic rendering data of a haptic media file when a haptic action is executed in the 3D-scene-to-be-rendered, realizing an association between a haptic action, a node, and haptic rendering data of a haptic media file. Therefore, the above embodiments realize support for the haptic media file in a scene description framework.

In some embodiments, the method for parsing a scene description document further includes: obtaining a value of an action type syntax element (type) in the target action description module, and obtaining an action type of a target action based on the value of the action type syntax element.

For example, when the action type syntax element and its value are "type":"ACTION_ HAPTIC", it is determined that the action type of the target action is to obtain a haptic feedback on a group of nodes.

In some embodiments, the method for parsing a scene description document further includes: obtaining a target behavior array from a behavior list (behaviors":[ ]) of the MPEG interactivity description module ("MPEG_interactivity":{}), and obtaining, based on the target behavior array, description information of a target behavior corresponding to the target behavior array. The target behavior array is any behavior array in the behavior list (behaviors":[ ]).

For example, the target behavior array may be as follows:

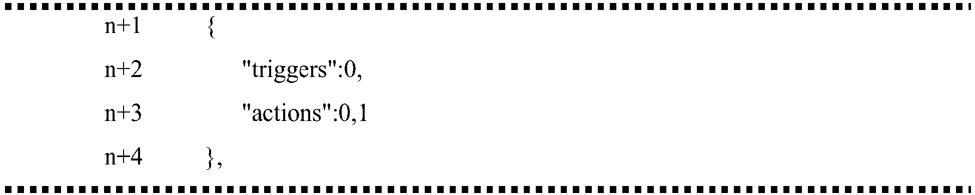

In some embodiments, the obtaining, based on the target behavior array, description information of a target behavior corresponding to the target behavior array includes at least one of following steps a1 and a2:
Step a1: Determine, based on a value of a trigger index syntax element (triggers) in the target behavior array, an index value of a trigger description module corresponding to a trigger of the target behavior.

As described in the above example, the value of the trigger index syntax element (triggers) in the target behavior array is 0. Therefore, it may be determined that the index value of the trigger description module corresponding to the trigger of the target behavior is 0.

Step a2: Determine, based on a value of an action index syntax element (actions) in the target behavior array, an index value of an action description module corresponding to an action of the target behavior.

As described in the above example, values of the trigger index syntax element (triggers) in the target behavior array are 0 and 1. Therefore, it may be determined that the target behavior includes two actions, and the two actions respectively correspond to an action description module with an index value of 0 and an action description module with an index value of 1.

In some embodiments, the method for parsing a scene description document further includes: obtaining a target trigger description module from a trigger list ("triggers":[ ]) of the MPEG interactivity description module ("MPEG_interactivity":{}), and obtaining, based on the target trigger description module, description information of a target trigger corresponding to the target trigger description module.

The target trigger description module is any trigger description module in the trigger list.

For example, the target trigger description module may be as follows:

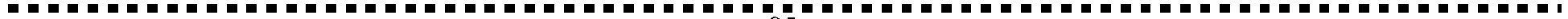

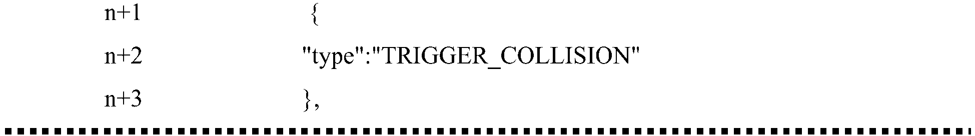

In some embodiments, the obtaining, based on the target trigger description module, description information of a target trigger corresponding to the target trigger description module includes: obtaining a type of the target trigger based on a value of a trigger type syntax element (type) in the target trigger description module.

For example, when the trigger type syntax element in the target trigger description module and its value are "type":"TRIGGER_COLLISION", it may be determined that the type of the target trigger is TRIGGER COLLISION.

For another example, when the trigger type syntax element in the target trigger description module and its value are "type":"TRIGGER_ VISIBILITY", it may be determined that the type of the target trigger is TRIGGER VISIBILITY.

In some embodiments, the method for parsing a scene description document further includes: obtaining a target media description module corresponding to the haptic media file from a media list ("media": [ ]) of the MPEG media description module ("MPEG_media": {}) in the scene description document, and obtaining description information of the haptic media file based on the target media description module.

In some embodiments, the obtaining description information of the haptic media file based on the target media description module includes at least one of following steps b1 to b4:
Step b1: Obtain a name of the haptic media file based on a value of a media name syntax element (name) in the target media description module.

For example, if the media name syntax element in the target media description module and its value are "name":"Hapticexample", it may be determined that the name of the haptic media file is Hapticexample.

Step b2: Determine, based on a value of an autoplay syntax element (autoplay) in the target media description module, whether the haptic media file needs to be automatically played.

In some embodiments, the determining, based on a value of an autoplay syntax element (autoplay) in the target media description module, whether the haptic media file needs to be automatically played includes: if the autoplay syntax element (autoplay) in the target media description module and its value are "autoplay": true or "autoplay": 1, determining that the haptic media file needs to be automatically played; or if the autoplay syntax element (autoplay) in the target media description module and its value are "autoplay": false or "autoplay": 0, determining that the haptic media file does not need to be automatically played.

Step b3: Determine, based on a value of a loop syntax element (loop) in the target media description module, whether the haptic media file needs to be cyclically played.

In some embodiments, the determining, based on a value of a loop syntax element (loop) in the target media description module, whether the haptic media file needs to be cyclically played includes: if the loop syntax element (loop) in the target media description module and its value are "loop": true or "loop": 1, determining that the haptic media file needs to be cyclically played; or if the loop syntax element (loop) in the target media description module and its value are "loop": false or "loop": 0, determining that the haptic media file does not need to be cyclically played.

Step b4: Obtain description information of each alternative version of the haptic media file based on each alternative version description module in an alternative version list ("alternatives": [ ]) in the target media description module.

In some embodiments, the obtaining description information of each alternative version of the haptic media file based on each alternative version description module in an alternative version list of the target media description module in the above-mentioned step b4 may include at least one of following steps b41 to b44:
Step b41: Obtain, based on a value of a media type syntax element (mimeType) in a target alternative version description module, data included in a target alternative version corresponding to the target alternative version description module.

The target alternative version description module is any alternative version description module in the alternative version list.

In some embodiments, the obtaining, based on a value of a media type syntax element (mimeType) in a target alternative version description module, data included in a target alternative version corresponding to the target alternative version description module includes: in accordance with a determination that the value of the media type syntax element is a first preset value, determining that the target alternative version includes haptic data and audio and/or video data; alternatively, in accordance with a determination that the value of the media type syntax element is a second preset value, determining that the target alternative version includes haptic data.

For example, the first preset value may be video/mp4, and the second preset value may be haptic/mp4.

Step b42: Obtain a URI of the target alternative version based on a value of a URI syntax element (uri) in the target alternative version description module.

For example, if a URI syntax element (uri) in an alternative version description module in the alternative version list ("alternatives": []) of the target media description module and its value are "uri": "http://www.example.com/Hapticexample.mp4", it may be determined that a URI (access address) of an alternative version of a haptic media file corresponding to the alternative version description module is "http://www.example.com/Hapticexample.mp4".

Step b43: Obtain an index value of each bitstream track of the target alternative version based on a value of a first track index syntax element (track) in a track array ("tracks": [ ]) of the target alternative version description module.

Step b44: Obtain a decoding parameter of a bitstream of the target alternative version based on a value of a codec parameter syntax element (codecs) in the track array ("tracks": [ ]) of the target alternative version description module and a provision in a standard for carriage of haptics data in an ISO/IEC 23090-32 standard.

In some embodiments, the method for parsing a scene description document provided in the embodiments of the present disclosure further includes: obtaining a target scene description module corresponding to the 3D-scene-to-be-rendered from a scene list ("scenes": [ ]) of the scene description document, and obtaining description information of the 3D-scene-to-be-rendered based on the target scene description module.

In some embodiments, the obtaining description information of the 3D-scene-to-be-rendered based on the target scene description module includes:
determining, based on an index value declared in a node index list ("nodes": [ ]) of the target scene description module, an index value of a node description module corresponding to each top-level node in the 3D-scene-to-be-rendered.

For example, if the node index list of the target scene description module and its declared index value are "nodes": [0], it may be determined that the 3D-scene-to-be-rendered includes only one top-level node, and a node description module corresponding to the one top-level node is the first node description module in the node list of the scene description document.

For another example, if the node index list of the target scene description module and its declared index value are "nodes": [0,4], it may be determined that the 3D-scene-to-be-rendered includes two top-level nodes, and node description modules corresponding to the two top-level nodes are respectively the first node description module and a fifth node description module in the node list of the scene description document.

In some embodiments, the method for parsing a scene description document provided in the embodiments of the present disclosure further includes: obtaining a target node description module from the node list ("nodes": [ ]) of the scene description document, and obtaining, based on the target node description module, description information of a target node corresponding to the target node description module.

The target node description module is any node description module in the node list.

In some embodiments, the obtaining, based on the target node description module, description information of a target node corresponding to the target node description module includes at least one of following steps c1 to c4:
Step c1: Obtain a name of the target node based on a value of a node name syntax element in the target node description module.

For example, if the node name syntax element in the target node description module and its value are "name": "Haptic_node1", it may be obtained based on the value of the node name syntax element in the target node description module that the name of the target node is Haptic_node1.

Step c2: Obtain, based on an index value declared in a child node index list ("children":[ ]) of the target node description module, an index value of a node description module corresponding to each child node mounted to the target node.

For example, if the child node index list of the target node description module and its declared index value are "children":[1,2], it may be determined based on the index value declared in the child node index list of the target node description module that two child nodes are mounted to the target node, and the two child nodes mounted to the target node respectively correspond to a second node description module and a third node description module in the node list of the scene description document.

Step c3: Obtain, based on an index value declared in a mesh index syntax element (mesh) in the target node description module, an index value of a mesh description module corresponding to each 3D mesh mounted to the target node.

For example, if the mesh index syntax element in the target node description module and its value are "mesh": 0, it may be determined based on the index value declared in the mesh index syntax element in the target node description module that the 3D mesh mounted to the target node is a 3D mesh corresponding to a first mesh description module in a mesh list ("meshes": [ ]) of the scene description document.

Step c4: Obtain a spatial position offset of the target node relative to a parent node of the target node based on a value of a position offset syntax element (translation) in the target node description module.

For example, if the position offset syntax element in the target node description module and its value are "translation": [ 0.0, 0.0, 20.0 ], it may be obtained based on the value of the position offset syntax element in the target node description module that the spatial position offset of the target node relative to the parent node of the target node is [ 0.0, 0.0, 20.0 ].

It should be noted that the spatial position offset of the target node relative to the parent node of the target node is directly obtained based on the position offset syntax element in the target node description module. If the parent node of the target node is not a root node, the spatial position offset may not be an offset of the target node relative to the root node. The offset of the target node relative to the root node is a sum of spatial offsets of all nodes on a path from the target node to the root node.

For example, a node A is a child node of the root node, a node B is a child node of the node A, a position offset syntax element in a node description module corresponding to the node A and its value are "translation": [ 0.0, 10.0, 25.0 ], and a position offset syntax element in a node description module corresponding to the node B and its value are "translation": [ 0.0, 10.0, 20.0 ], it may be first obtained that an offset of the node A relative to the target node is [0.0, 10.0, 25.0] and an offset of the node B relative to the node A is [0.0, 00.0, 20.0]. Then, the position offsets are superimposed to obtain an offset of the node B relative to the root node, namely [ 0.0, 10.0, 45.0 ].

In some embodiments, the method for parsing a scene description document further includes:
obtaining a target mesh description module from the mesh list ("nodes": [ ]) in the scene description document, and obtaining, based on the target mesh description module, description information of a target 3D mesh corresponding to the target mesh description module. The target mesh description module is any mesh description module in the mesh list.

In some embodiments, the obtaining, based on the target mesh description module, description information of a target 3D mesh corresponding to the target mesh description module includes at least one of following steps d1 to d5:
Step d1: Obtain a name of the target 3D mesh based on a value of a mesh name syntax element (name) in the target mesh description module.

For example, if a mesh name syntax element in a mesh description module in the scene description document and its value are "name": "Haptic_mesh1", it may be obtained based on the value of the mesh name syntax element in the mesh description module that a name of a 3D mesh corresponding to the mesh description module is Haptic_mesh1.

Step d2: Obtain, based on a value of a texture coordinate syntax element (TEXCOORD_n) in an attribute (attributes) of a primitive (primitives) of the target mesh description module, an index value of an accessor description module corresponding to an accessor for accessing a texture coordinate of the target 3D mesh.

For example, if a texture coordinate syntax element in an attribute of a primitive of a mesh description module in the scene description document and its value are "TEXCOORD_0":1, it may be determined that an accessor for accessing a texture coordinate of a 3D mesh corresponding to the mesh description module is an accessor corresponding to the second accessor description module in the accessor list of the scene description document.

Step d3: Obtain a topology type of the target 3D mesh based on a value of a mode syntax element (mode) in the primitive (primitives) of the target mesh description module.

For example, if a mode syntax element in a primitive of a mesh description module in the scene description document and its value are "mode": 4, it may be obtained based on the value of the mode name syntax element in the primitive of the mesh description module that a topology type of a 3D mesh corresponding to the mesh description module is a triangular patch.

Step d4: Obtain, based on a value of a haptic material array index syntax element (index) in an MPEG haptic material description module ("MPEG_material _Haptic":{}) in the primitive of the target mesh description module, description information of a haptic material attribute carried by the target 3D mesh.

In some embodiments, the obtaining, based on a value of a haptic material array index syntax element (index) in an MPEG haptic material description module in the primitive of the target mesh description module, description information of a haptic material attribute carried by the target 3D mesh in the above-mentioned step d4 includes at least one of following steps d41 to d43:
Step d41: Obtain a haptic material array associated with the target 3D mesh from a haptic material list ("MPEG_material_Haptic":[ ]) of the scene description document based on the value of the haptic material array index syntax element (index).

For example, if the haptic material array index syntax element and its value are "index":0, a first haptic material array in the haptic material list of the scene description document is obtained as the haptic material array associated with the target 3D mesh.

For example, the haptic material array associated with the target 3D mesh may be as follows:

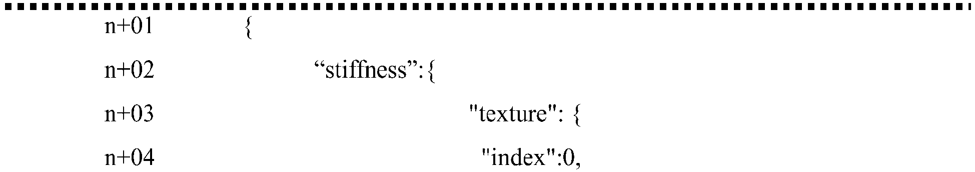

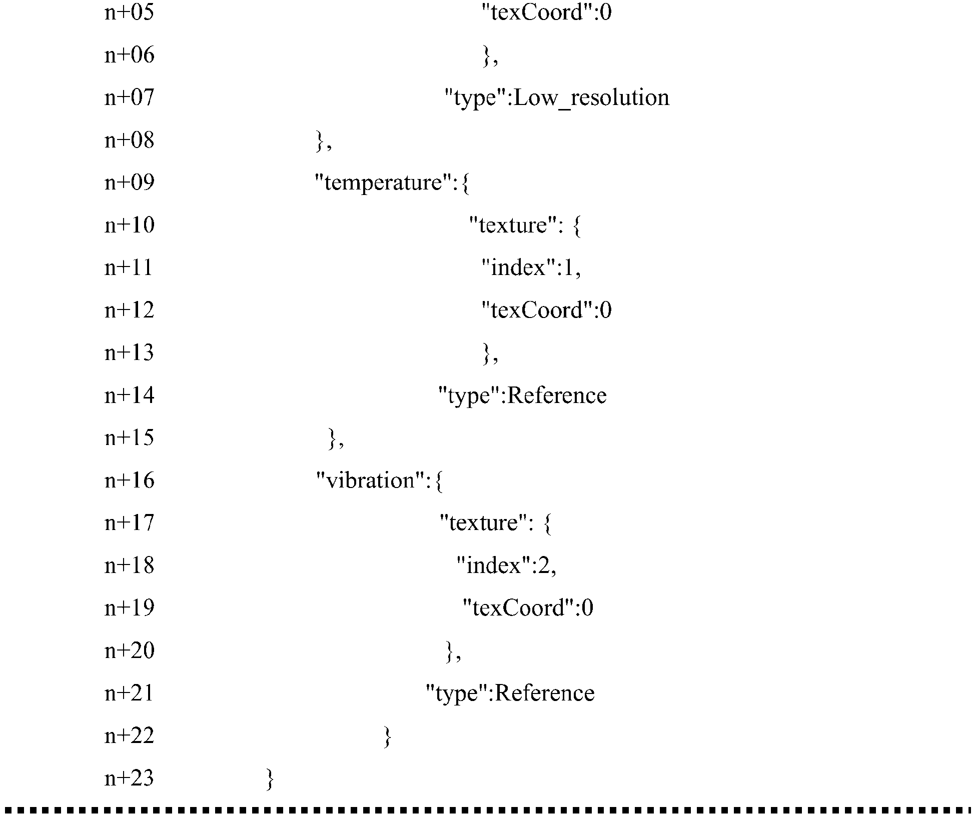

Step d42: Obtain a haptic material attribute description module corresponding to the haptic material attribute carried by the target 3D mesh from the haptic material array associated with the target 3D mesh.

As described in the above example, haptic material attribute description modules corresponding to stiffness, temperature, and vibration that are carried by the target 3D mesh may be obtained from the haptic material array associated with the target 3D mesh. The haptic material attribute description module corresponding to the stiffness is content at lines n+02 to n+08, the haptic material attribute description module corresponding to the temperature is content at lines n+09 to n+15, and the haptic material attribute description module corresponding to the vibration is content at lines n+16 to n+22.

Step d43: Obtain, based on a haptic material attribute description module corresponding to each haptic material attribute carried by the target 3D mesh, the description information of the haptic material attribute carried by the target 3D mesh.

In some embodiments, the obtaining, based on a haptic material attribute description module corresponding to each haptic material attribute carried by the target 3D mesh, the description information of the haptic material attribute carried by the target 3D mesh in above-mentioned step d43 includes at least one of following steps d431 to d433:
Step d431: Obtain, based on a value of a texture index syntax element (index) in a texture array ("texture": {}) of a target haptic material attribute description module, texture description information of a texture associated with a target haptic material corresponding to the target haptic material attribute description module.

The target haptic material attribute description module is any haptic material attribute description module in the haptic material array associated with the target 3D mesh.

In some embodiments, the obtaining, based on a value of a texture index syntax element in a texture array of a target haptic material attribute description module, texture description information of a texture associated with a target haptic material corresponding to the target haptic material attribute description module in the above-mentioned step d431 includes at least one of following steps d4311 and d4312:
Step d4311: Obtain a target texture description module from a texture list ("textures": [ ]) of the scene description document based on the value of the texture index syntax element.

For example, if the texture index syntax element and its value are "index":2, a third texture description module is obtained from the texture list ("textures": []) of the scene description document as the target texture description module.

Step d4312: Obtain, based on the target texture description module, the texture description information of the texture associated with the target haptic material.

In some embodiments, the obtaining, based on the target texture description module, the texture description information of the texture associated with the target haptic material in the above-mentioned step d4312 includes at least one of following steps e and f:
Step e: Obtain description information of a sampler of the target haptic material based on a value of a sampler index syntax element (sampler) in the target texture description module.

In some embodiments, the obtaining description information of a sampler of the target haptic material based on a value of a sampler index syntax element in the target texture description module in the above-mentioned step e includes following steps e1 and e2:
Step e1: Obtain a sampler description module corresponding to the sampler of the target haptic material from a sampler list ("samplers":[ ]) of the scene description document based on the value of the sampler index syntax element (sampler) in the target texture description module.

For example, the sampler description module corresponding to the sampler of the target haptic material may be as follows:

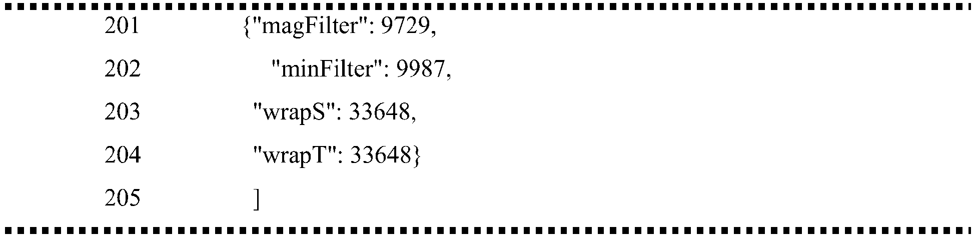

Step e2: Obtain the description information of the sampler of the target haptic material based on the sampler description module corresponding to the sampler of the target haptic material.

As described in the above example, the description information that is of the sampler of the target haptic material and may be obtained based on the sampler description module corresponding to the sampler of the target haptic material includes: a nearest point mode is used to enlarge a texture map, a Linear-mipmap-linear mode is used to reduce the texture map, a texture wrapping method in a horizontal direction is 33648, and a texture wrapping method in a vertical direction is 33648.

Step f: Obtain description information of a texture resource of the target haptic material based on a value of a texture resource index syntax element (source) in the target texture description module.

In some embodiments, the obtaining description information of a texture resource of the target haptic material based on a value of a texture resource index syntax element in the target texture description module in the above f includes following steps f1 and f2:
Step f1: Obtain a texture resource description module corresponding to the texture resource of the target haptic material from a texture resource list ("images": [ ]) of the scene description document based on the value of the texture resource index syntax element (source) in the target texture description module.

For example, the texture resource description module corresponding to the texture resource of the target haptic material may be as follows:

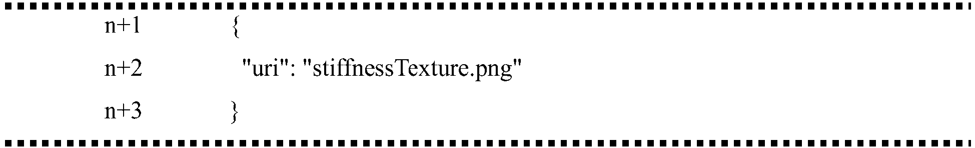

Step f2: Obtain the description information of the texture resource of the target haptic material based on the texture resource description module corresponding to the texture resource of the target haptic material.

As described in the above example, based on a value of a URI syntax element (uri) in the texture resource description module corresponding to the texture resource of the target haptic material, it may be obtained that an access address of the texture resource of the target haptic material is stiffnessTexture.png.

Step d432: Obtain, based on a value of a texture coordinate index syntax element (texCoord) in the texture array of the target haptic material attribute description module, an index value of a texture coordinate syntax element (TEXCOORD_n) associated with the target haptic material.

Step d433: Obtain a type of a target haptic material attribute based on a value of a haptic material type syntax element (type) in the texture array of the target haptic material attribute description module.

As described in the above embodiments, it may be determined based on "type": Low_resolution at line n+07 that a type of the stiffness is Low_resolution, it may be determined based on "type": Reference at line n+14 that a type of the temperature is Reference, and it may be determined based on "type": Reference at line n+21 that a type of the vibration is the Reference.

In some embodiments, the method for parsing a scene description document further includes: obtaining a target accessor description module from the accessor list ("accessors": [ ]) of the scene description document, and obtaining, based on the target accessor description module, description information of a target accessor corresponding to the target accessor description module. The target accessor description module is any accessor description module in the accessor list ("accessors": [ ]) of the scene description document.

In some embodiments, the obtaining, based on the target accessor description module, description information of a target accessor corresponding to the target accessor description module includes at least one of following steps g1 to g8:
Step g1: Obtain, based on a value of a data type syntax element (componentType) in the target accessor description module, a data type of data accessed by the target accessor.

For example, if a data type syntax element in an accessor description module and its value are "componentType":5126, it may be determined that a data type of data accessed by an accessor corresponding to the accessor description module is a 32-bit floating-point number (float).

Step g2: Determine a type of the target accessor based on a value of an accessor type syntax element (type) in the target accessor description module.

For example, if an accessor type syntax element in an accessor description module and its value are "type":"VEC3", it may be determined that a type of an accessor corresponding to the accessor description module is a 3D vector.

Step g3: Determine, based on a value of a data count syntax element (count) in the target accessor description module, a count of the data accessed by the target accessor.

For example, if a data count syntax element in an accessor description module and its value are "count":1828, it may be determined that 1828 pieces of data are accessed by an accessor corresponding to the accessor description module.

Step g4: Determine, based on a value of a first buffer view index syntax element (bufferView) in the target accessor description module, an index value of a buffer view description module corresponding to a buffer view for caching the data accessed by the target accessor.

For example, if a first buffer view index syntax element in an accessor description module and its value are "bufferView":1, it may be determined that data accessed by an accessor corresponding to the accessor description module is cached in a buffer view corresponding to a second buffer view description module in a buffer view list ("bufferViews": [ ]).

Step g5: Determine, based on whether the target accessor description module includes an MPEG time-varying accessor (MPEG_accessor_timed), whether the target accessor is a time-varying accessor reconstructed based on an MPEG extension.

In some embodiments, the determining, based on whether the target accessor description module includes an MPEG time-varying accessor ("MPEG_accessor_timed": {}), whether the target accessor is a time-varying accessor reconstructed based on the MPEG extension includes: if the target accessor description module includes the MPEG time-varying accessor, determining that the target accessor is the time-varying accessor reconstructed based on an MPEG extension; or if the target accessor description module does not include the MPEG time-varying accessor, determining that the target accessor is not the time-varying accessor reconstructed based on the MPEG extension.

Step g6: Determine, based on a value of a second buffer view index syntax element (bufferView) in the MPEG time-varying accessor (MPEG_accessor_timed) of the target accessor description module, a buffer view description module corresponding to a buffer view for caching a time-varying parameter of the target accessor.

For example, if a second buffer view index syntax element in an MPEG time-varying accessor of an accessor description module and its value are "bufferView"3, it may be determined that a time-varying parameter of an accessor corresponding to the accessor description module is cached in a buffer view corresponding to a fourth buffer view description module in the buffer view list ("bufferViews": [ ]).

Step g7: Determine, based on a time-varying syntax element (immutable) in the MPEG time-varying accessor (MPEG_accessor_timed) of the target accessor description module, whether a value of a syntax element in the target accessor changes over time.

In some embodiments, the determining, based on a time-varying syntax element (immutable) in the MPEG time-varying accessor of the target accessor description module, whether a value of a syntax element in the target accessor changes over time includes: if the time-varying syntax element in the MPEG time-varying accessor of the target accessor description module and its value are "immutable":true or "immutable":1, determining that the value of the syntax element in the target accessor does not change over time; or if the time-varying syntax element in the MPEG time-varying accessor of the target accessor description module and its value are "immutable":false or "immutable":0, determining that the value of the syntax element in the target accessor changes over time.

Step g8: Determine a name of the target accessor based on a value of an accessor name syntax element (name) in the target accessor description module.

In some embodiments, the method for parsing a scene description document further includes: obtaining a target buffer description module from a buffer list ("buffers": [ ]) of the scene description document, and obtaining, based on the target buffer description module, description information of a target buffer corresponding to the target buffer description module.

The target buffer description module is any buffer description module obtained in the buffer list ("buffers": [ ]) of the scene description document.

In some embodiments, the obtaining, based on the target buffer description module, description information of a target buffer corresponding to the target buffer description module includes at least one of following steps h1 to h7:
Step h1: Obtain a name of the target buffer based on a value of a buffer name syntax element (name) in the target buffer description module.

For example, if the buffer name syntax element in the target buffer description module and its value are "name":"haptic_buffer", it may be determined that the name of the target buffer is "name": "haptic_buffer".

Step h2: Obtain, based on a value of a first byte length syntax element (byteLength) in the target buffer description module, a capacity of the target buffer corresponding to the target buffer description module.

For example, if a first byte length syntax element in a buffer description module and its value are "byteLength": 43972, it may be determined that a capacity of a buffer corresponding to the buffer description module is 43972 bytes.

Step h3: Determine, based on whether the target buffer description module includes an MPEG circular buffer (MPEG_buffer_circular), whether the target buffer is a circular buffer reconstructed based on the MPEG extension.

In some embodiments, the determining, based on whether the target buffer description module includes an MPEG circular buffer, whether the target buffer is a circular buffer reconstructed based on the MPEG extension includes: if the target buffer description module includes the MPEG circular buffer, determining that the target buffer is the circular buffer reconstructed based on the MPEG extension; or if the target buffer description module does not include the MPEG circular buffer, determining that the target buffer is not the circular buffer reconstructed based on the MPEG extension.

Step h4: Obtain a quantity of storage stages of the target buffer based on a value of a stage count syntax element (count) in the MPEG circular buffer of the target buffer description module.

For example, if a stage count syntax element in an MPEG circular buffer of a buffer description module and its value are "count": 3, it may be determined that a buffer corresponding to the buffer description module includes three storage stages.

Step h5: Obtain, based on a value of a media index syntax element (media) in the MPEG circular buffer of the target buffer description module, an index value of a media description module corresponding to a media file to which source data of data cached in the target buffer belongs.

Step h6: Obtain, based on a value of a second track index syntax element (tracks) in the MPEG circular buffer of the target buffer description module, a track index value of the source data of the data cached in the target buffer.

Step h7: Obtain, based on a value of a URI syntax element (uri) in the target buffer description module, a URI of the source data of the data cached in the target buffer.

In some embodiments, the method for parsing a scene description document further includes: obtaining a target buffer view description module from the buffer view list ("bufferViews": [ ]) of the scene description document, and obtaining, based on the target buffer view description module, description information of a target buffer view corresponding to the target buffer view description module.

The target buffer view description module is any buffer view description module in the buffer view list.

In some embodiments, the obtaining, based on the target buffer view description module, description information of a target buffer view corresponding to the target buffer view description module includes at least one of following steps j1 to j3:
Step j1: Obtain, based on a value of a second byte length syntax element (byteLength) in the target buffer view description module, a capacity of the target buffer view corresponding to the target buffer view description module.

For example, if a second byte length syntax element in a buffer view description module and its value are "byteLength": 21936, it may be determined that a capacity of a buffer view corresponding to the buffer view description module is 21936 bytes.

Step j2: Obtain, based on a value of an offset syntax element (byteOffset) in the target buffer view description module, an offset of data cached in the target buffer view.

For example, if an offset syntax element in a buffer view description module and its value are "byteOffset": 0, it may be determined that an offset of data cached in a buffer view corresponding to the buffer view description module is 0.

Step j3: Obtain a name of the target buffer view based on a value of a buffer view name syntax element (name) in the target buffer view description module.

In some embodiments, the method for parsing a scene description document further includes: determining a version number of the scene description document based on a version syntax element (version) in a digital asset description module (asset) in the scene description document and its value.

For example, a digital asset of the scene description document may be as follows:

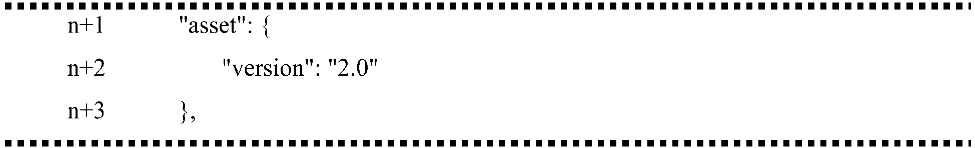

Therefore, it may be determined that the scene description document is compiled based on glTF2.0, and a version of the scene description document is a reference version of a scene description standard.

In some embodiments, the method for parsing a scene description document further includes: obtaining, based on a list of extensions used (extensionUsed) of the scene description document, an extension item used in the scene description document.

For example, the list of extensions used (extensionUsed) of the scene description document may be as follows:

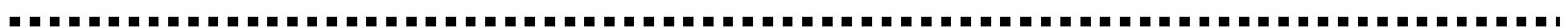

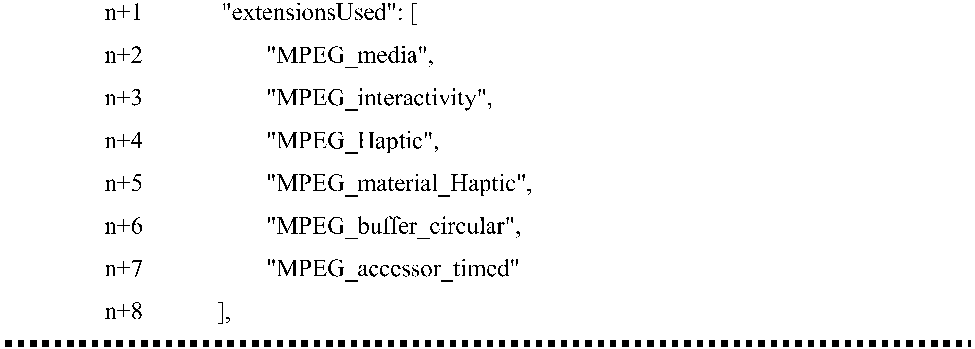

Therefore, the following extension items used in the scene description document may be obtained: the MPEG media (MPEG_media), the MPEG interactivity (MPEG_interactivity), the MPEG haptic (MPEG_Haptic), the MPEG haptic material (MPEG_material_Haptic), the MPEG circular buffer (MPEG_buffer_circular), and the MPEG time-varying accessor (MPEG_accessor_timed).

In some embodiments, the method for parsing a scene description document further includes: determining, based on a scene declaration of the scene description document, a scene description module corresponding to the 3D-scene-to-be-rendered.

For example, if the scene declaration of the scene description document is "scene": 0, it may be determined that the scene description module corresponding to the 3D-scene-to-be-rendered is a first scene description module in the scene list ("scenes": [ ]) of the scene description document.

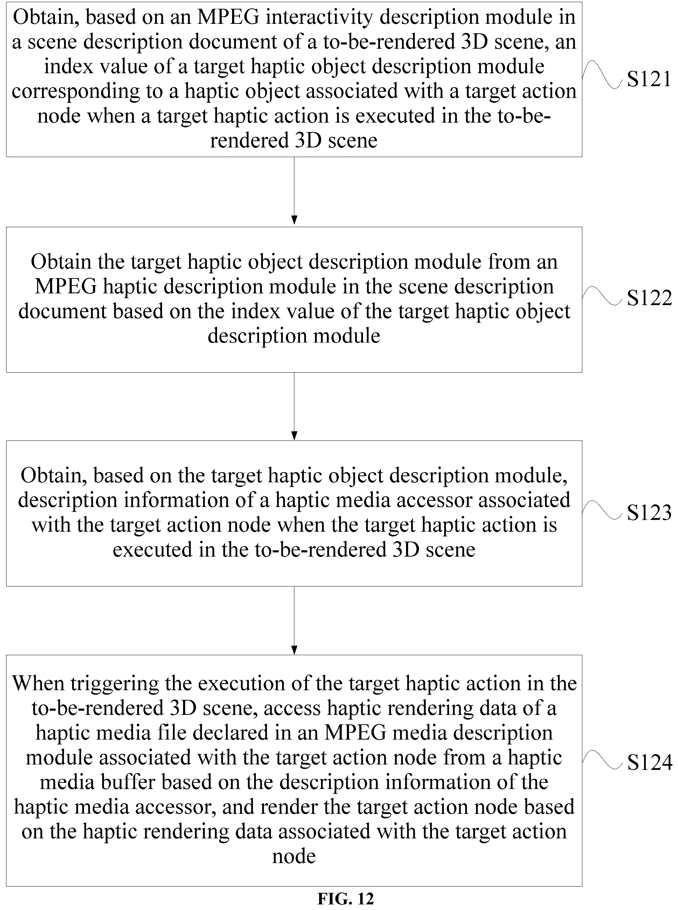

Some embodiments of the present disclosure also provide a 3D scene rendering method. The 3D scene rendering method is executed by a display engine in an immersive media description framework. Referring to FIG. 12, the 3D scene rendering method includes following steps S121 to S124:
S121: Obtain, based on an MPEG interactivity description module ("MPEG_interactivity":{}) in a scene description document of a 3D-scene-to-be-rendered, an index value of a target haptic object description module corresponding to a haptic object associated with a target action node when a target haptic action is executed in the 3D-scene-to-be-rendered.

In some embodiments, the obtaining, based on an MPEG interactivity description module in a scene description document of a 3D-scene-to-be-rendered, an index value of a target haptic object description module corresponding to a haptic object associated with a target action node when a target haptic action is executed in the 3D-scene-to-be-rendered in the above-mentioned step S121 includes follows steps 1211 to 1213:
Step 1211: Obtain a target action description module from the MPEG interactivity description module ("MPEG_interactivity": {}) of the scene description document of the 3D-scene-to-be-rendered.

The target action description module is an action description module corresponding to the target haptic action.

Step 1212: Obtain a target haptic action node array from a haptic action node list ("hapticActionNodes":[ ]) of the action description module.

The target haptic action node array is a haptic action node array with a value of a node index syntax element (node) being an index value of a node description module corresponding to the target action node.

Step 1213: Determine a value of a haptic object index syntax element in the target haptic action node array as the index value of the target haptic object description module.

S122: Obtain the target haptic object description module from an MPEG haptic description module ("MPEG _haptic": {}) in the scene description document based on the index value of the target haptic object description module.

For example, if the index value of the target haptic object description module is 1, a second haptic object description module is read from the MPEG haptic description module in the scene description document as the target haptic object description module.

S123: Obtain, based on the target haptic object description module, description information of a haptic media accessor associated with the target action node when the target haptic action is executed in the 3D-scene-to-be-rendered.

In some embodiments, the obtaining, based on the target haptic object description module, description information of a haptic media accessor associated with the target action node when the target haptic action is executed in the 3D-scene-to-be-rendered in the above-mentioned step S123 includes following steps 1231 to 1233:
Step 1231: Obtain a value of an accessor index syntax element (accessor) in the target haptic object description module.

Step 1232: Obtain an accessor description module corresponding to the haptic media accessor from an accessor list ("accessors": [ ]) of the scene description document based on the value of the accessor index syntax element (accessor).

Step 1233: Obtain the description information of the haptic media accessor based on the accessor description module corresponding to the haptic media accessor.

For an implementation of obtaining the description information of the haptic media accessor based on the accessor description module corresponding to the haptic media accessor, reference may be made to at least one of the steps g1 to g8 in the above embodiments, and details are not described herein again to avoid repetition.

S124: When triggering the execution of the target haptic action in the 3D-scene-to-be-rendered, access haptic rendering data of a haptic media file declared in an MPEG media description module ("MPEG_media": {}) associated with the target action node from a haptic media buffer based on the description information of the haptic media accessor, and render the target action node based on the haptic rendering data associated with the target action node.

The 3D scene rendering method provided in the embodiments of the present disclosure may obtain, based on the MPEG interactivity description module in the scene description document of the 3D-scene-to-be-rendered, the index value of the target haptic object description module corresponding to the haptic object associated with the target action node when the target haptic action is executed in the 3D-scene-to-be-rendered; obtain the target haptic object description module from the MPEG haptic description module in the scene description document based on the index value of the target haptic object description module, and obtain, based on the target haptic object description module, the description information of the haptic media accessor associated with the target action node when the target haptic action is executed in the 3D-scene-to-be-rendered; and when triggering the execution of the target haptic action in the 3D-scene-to-be-rendered, access the haptic rendering data of the haptic media file declared in the MPEG media description module associated with the target action node from the haptic media buffer based on the description information of the haptic media accessor, and render the target action node based on the haptic rendering data of the haptic media file associated with the target action node. When triggering the execution of the target haptic action in the 3D-scene-to-be-rendered, the 3D scene rendering method provided in the embodiments of the present disclosure may access haptic rendering data of a haptic media file associated with an action node, and render the action node based on the haptic rendering data of the haptic media file associated with the action node, such that an association between a haptic action, a node, and haptic rendering data of a haptic media file is obtained based on the scene description file. Therefore, the embodiments of the present disclosure may support the haptic media file in the scene description document.

When the execution of the target haptic action in the 3D-scene-to-be-rendered is triggered, the display engine needs to access the haptic rendering data of the haptic media file associated with the target action node from the haptic media buffer based on the description information of the haptic media accessor. Therefore, in some embodiments, the 3D scene rendering method further includes: before accessing the haptic rendering data of the haptic media file associated with the target action node from the haptic media buffer based on the description information of the haptic media accessor, performing following steps 1) to 3) to obtain the haptic rendering data of the haptic media file.

Step 1): Obtain a target media description module corresponding to the haptic media file from a media list ("media": [ ]) of the MPEG media description module ("MPEG_media": {}) in the scene description document.

Step 2): Obtain description information of the haptic media file based on the target media description module.

For an implementation of obtaining the description information of the haptic media file based on the target media description module, reference may be made to at least one of the steps b1 to b4 in the above embodiments, and details are not described herein again to avoid repetition.

Step 3): Send the description information of the haptic media file to a MAF, such that the MAF may obtain the haptic media file based on the description information of the haptic media file, and decapsulate and decode the haptic media file to obtain the haptic rendering data of the haptic media file.

In some embodiments, the sending the description information of the haptic media file to a MAF includes: sending the description information of the haptic media file to the MAF through a MAF API.

When the execution of the target haptic action in the 3D-scene-to-be-rendered is triggered, the display engine needs to access the haptic rendering data of the haptic media file associated with the target action node from the haptic media buffer based on the description information of the haptic media accessor. Therefore, in some embodiments, the 3D scene rendering method further includes: before accessing the haptic rendering data of the haptic media file associated with the target action node from the haptic media buffer based on the description information of the haptic media accessor, performing following steps 4) and 5) to write the haptic rendering data of the haptic media file into the haptic media buffer.

Step 4): Obtain description information of the haptic media buffer and description information of a buffer view of the haptic media buffer based on the scene description document.

In some embodiments, the obtaining description information of the haptic media buffer and description information of a buffer view of the haptic media buffer based on the scene description document includes: obtaining a buffer description module corresponding to the haptic media buffer from a buffer list ("buffers": [ ]) of the scene description document, obtaining a buffer view description module corresponding to the buffer view of the haptic media buffer from a buffer view list ("bufferViews": [ ]) of the scene description document, and obtaining the description information of the haptic media buffer and the description information of the buffer view of the haptic media buffer based on the buffer description module corresponding to the haptic media buffer and the buffer view description module corresponding to the buffer view of the haptic media buffer.

Step 5): Send the description information of the haptic media buffer, the description information of the buffer view of the haptic media buffer, and the description information of the haptic media accessor to the MAF, such that the MAF writes the haptic rendering data of the haptic media file into the haptic media buffer based on the description information of the haptic media buffer, the description information of the buffer view of the haptic media buffer, and the description information of the haptic media accessor.

In some embodiments, the sending the description information of the haptic media buffer, the description information of the buffer view of the haptic media buffer, and the description information of the haptic media accessor to the MAF includes: sending the description information of the haptic media buffer, the description information of the buffer view of the haptic media buffer, and the description information of the haptic media accessor to the MAF through the MAF API.

When the execution of the target haptic action in the 3D-scene-to-be-rendered is triggered, the display engine needs to access the haptic rendering data of the haptic media file associated with the target action node from the haptic media buffer based on the description information of the haptic media accessor. Therefore, in some embodiments, the 3D scene rendering method further includes: before accessing the haptic rendering data of the haptic media file associated with the target action node from the haptic media buffer based on the description information of the haptic media accessor, performing following steps 6) and 7) to create the haptic media buffer.

Step 6): Obtain the description information of the haptic media buffer and the description information of the buffer view of the haptic media buffer based on the scene description document.

Step 7): Send the description information of the haptic media buffer and the description information of the buffer view of the haptic media buffer to a buffer management module, such that the buffer management module creates the haptic media buffer based on the description information of the haptic media buffer and the description information of the buffer view of the haptic media buffer.

In some embodiments, the sending the description information of the haptic media buffer and the description information of the buffer view of the haptic media buffer to a buffer management module includes: sending the description information of the haptic media buffer and the description information of the buffer view of the haptic media buffer to the buffer management module through a buffer API.

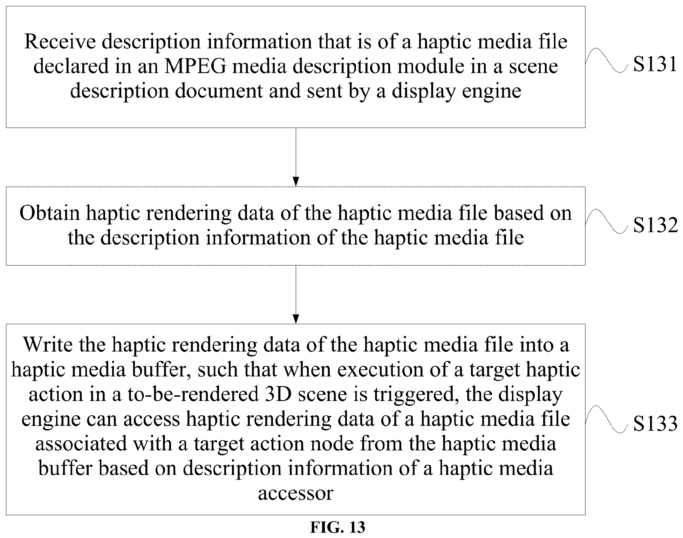

Some embodiments of the present disclosure also provide a method for processing a haptic media file. The method for processing a haptic media file is executed by a MAF in an immersive media description framework. Referring to FIG. 13, includes following steps S131 to S133:
S131: Receive description information that is of a haptic media file declared in an MPEG media description module ("MPEG_media":{}) in a scene description document and sent by a display engine.

In some embodiments, the receiving description information that is of a haptic media file declared in an MPEG media description module in a scene description document and sent by a display engine includes: receiving, through a MAF API, the description information that is of the haptic media file declared in the MPEG media description module in the scene description document and sent by the display engine.

S132: Obtain haptic rendering data of the haptic media file based on the description information of the haptic media file.

In some embodiments, the obtaining haptic rendering data of the haptic media file based on the description information of the haptic media file in the above-mentioned step S132 includes: creating, based on the description information of the haptic media file, a haptic media pipeline for processing the haptic media file, obtaining the haptic media file through the haptic media pipeline, and decapsulating and decoding the haptic media file to obtain the haptic rendering data of the haptic media file.

In some embodiments, the description information of the haptic media file includes an access address of the haptic media file, and the obtaining haptic rendering data of the haptic media file based on the description information of the haptic media file in the above-mentioned step S132 includes: obtaining the haptic media file based on the access address of the haptic media file.

In some embodiments, the obtaining the haptic media file based on the access address of the haptic media file includes: obtaining the haptic media file from a media resource server based on the access address of the haptic media file.

In some embodiments, the obtaining the haptic media file based on the access address of the haptic media file includes: reading the haptic media file from local storage space based on the access address of the haptic media file.

In some embodiments, the description information of the haptic media file further includes an index value of each bitstream track of the haptic media file, and the obtaining haptic rendering data of the haptic media file based on the description information of the haptic media file in the above-mentioned step S132 further includes: decapsulating the haptic media file based on the index value of each bitstream track of the haptic media file to obtain a bitstream of each bitstream track of the haptic media file.

In some embodiments, the description information of the haptic media file further includes a codec parameter of each bitstream track of the haptic media file, and the obtaining haptic rendering data of the haptic media file based on the description information of the haptic media file in the above-mentioned step S132 further includes: decoding the bitstream of each bitstream track of the haptic media file based on the codec parameter of each bitstream track of the haptic media file, and obtaining corresponding decoded data of each bitstream track of the haptic media file to obtain the haptic rendering data of the haptic media file.

S133: Write the haptic rendering data of the haptic media file into a haptic media buffer, such that when execution of a target haptic action in a 3D-scene-to-be-rendered is triggered, the display engine may access haptic rendering data of a haptic media file associated with a target action node from the haptic media buffer based on description information of a haptic media accessor.

The description information of the haptic media accessor is accessor description information obtained by the display engine based on a target haptic object description module in an MPEG haptic description module ("MPEG _interactivity": {}) in the 3D-scene-to-be-rendered. The target haptic object description module is a haptic object description module corresponding to a haptic object associated with the target action node when the target haptic action is executed in the 3D-scene-to-be-rendered.

After receiving the description information that is of the haptic media file declared in the MPEG media description module in the scene description document and sent by the display engine, the method for processing a haptic media file provided in the embodiments of the present disclosure may obtain the haptic rendering data of the haptic media file based on the description information of the haptic media file, and write the haptic rendering data of the haptic media file into the haptic media buffer. The method for processing a haptic media file provided in the embodiments of the present disclosure may obtain the haptic rendering data of the haptic media file and write the haptic rendering data of the haptic media file into the haptic media buffer. Therefore, the display engine may obtain the description information of the haptic media accessor based on the target haptic object description module in the MPEG haptic description module in the 3D-scene-to-be-rendered, and when the execution of the target haptic action in the 3D-scene-to-be-rendered is triggered, read the haptic rendering data of the haptic media file associated with the target action node from the haptic media buffer based on the description information of the haptic media accessor, thereby rendering the target action node based on the haptic rendering data of the haptic media file associated with the target action node. Therefore, the embodiments of the present disclosure may support the haptic media file in the scene description document.

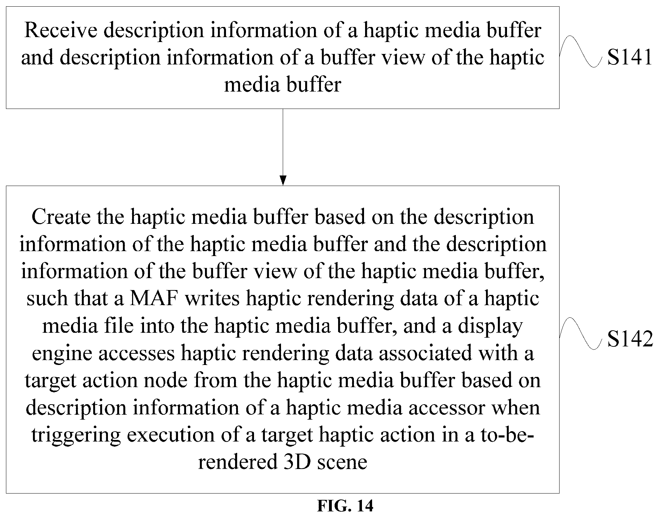

Some embodiments of the present disclosure also provide a buffer management method. The buffer management method is executed by a buffer management module in an immersive media description framework. Referring to FIG. 14, the buffer management method includes following steps S141 and S142:
S141: Receive description information of a haptic media buffer and description information of a buffer view of the haptic media buffer.

The haptic media buffer is a buffer configured to cache haptic rendering data of a haptic media file declared in an MPEG media description module ("MPEG_ media ": {}).

In some embodiments, the receiving description information of a haptic media buffer and description information of a buffer view of the haptic media buffer in the above-mentioned step S141 includes: receiving the description information of the haptic media buffer and the description information of the buffer view of the haptic media buffer that are sent by a display engine.

That is, after parsing a scene description document and obtaining the description information of the haptic media buffer and the description information of the buffer view of the haptic media buffer, the display engine directly sends the description information of the haptic media buffer and the description information of the buffer view of the haptic media buffer to the buffer management module.

In some embodiments, the receiving the description information of the haptic media buffer and the description information of the buffer view of the haptic media buffer that are sent by a display engine includes: receiving the description information of the haptic media buffer and the description information of the buffer view of the haptic media buffer that are sent by the display engine through a buffer API.

In some embodiments, the receiving description information of a haptic media buffer and description information of a buffer view of the haptic media buffer in the above-mentioned step S141 includes: receiving the description information of the haptic media buffer and the description information of the buffer view of the haptic media buffer that are sent by a MAF.

That is, after parsing the scene description document and obtaining the description information of the haptic media buffer and the description information of the buffer view of the haptic media buffer, the display engine first sends the description information of the haptic media buffer and the description information of the buffer view of the haptic media buffer to the MAF, and then the MAF sends the description information of the haptic media buffer and the description information of the buffer view of the haptic media buffer to the buffer management module.

In some embodiments, the receiving the description information of the haptic media buffer and the description information of the buffer view of the haptic media buffer that are sent by a MAF includes: receiving the description information of the haptic media buffer and the description information of the buffer view of the haptic media buffer that are sent by the MAF through the buffer API.

In some embodiments, the description information of the haptic media buffer includes at least one of following information:
a name of the haptic media buffer, a capacity of the haptic media buffer, whether the haptic media buffer is a circular buffer based on an MPEG extension, a quantity of storage stages of the haptic media buffer, an index value of a media description module corresponding to a media file to which source data of data cached in the haptic media buffer belongs, and a track index value of the source data of the data cached in the haptic media buffer.

In some embodiments, the description information of the buffer view of the haptic media buffer includes at least one of following information:
a name of the buffer view, an index value of a buffer description module corresponding to the haptic media buffer to which the buffer view belongs, a capacity of the buffer view, and an offset of the buffer view.

S142: Create the haptic media buffer based on the description information of the haptic media buffer and the description information of the buffer view of the haptic media buffer, such that the MAF writes the haptic rendering data of the haptic media file into the haptic media buffer, and the display engine accesses haptic rendering data associated with a target action node from the haptic media buffer based on description information of a haptic media accessor when triggering execution of a target haptic action in a 3D-scene-to-be-rendered.

The description information of the haptic media accessor is accessor description information obtained by the display engine based on a target haptic object description module in an MPEG haptic description module in the 3D-scene-to-be-rendered. The target haptic object description module is a haptic object description module corresponding to a haptic object associated with the target action node when the target haptic action is executed in the 3D-scene-to-be-rendered.

In some embodiments, the buffer management method provided in the embodiments of the present disclosure further includes: receiving description information that is of a target accessor and sent by the display engine and/or the MAF, where the target accessor is an accessor for accessing a dynamic 3D model of a target component; and performing buffer management on a target buffer based on the description information of the target accessor.

The description information of the target accessor includes at least one of following information:
an index value of a buffer view description module corresponding to a buffer view storing data accessed by the haptic media accessor, a data type of the data accessed by the haptic media accessor, a type of the haptic media accessor, a count of the data accessed by the haptic media accessor, whether the haptic media accessor is a time-varying accessor based on the MPEG extension, an index value of a buffer view description module corresponding to a buffer view storing a time-varying parameter of the haptic media accessor, and whether a parameter of the haptic media accessor changes over time.

In some embodiments, the buffer management method provided in the embodiments of the present disclosure further includes: receiving a buffer management instruction, where the buffer management instruction is used to indicate release of the target buffer or update of data cached in the target buffer; and in response to the buffer management instruction, releasing the target buffer or updating the data cached in the target buffer.

After receiving the description information of the haptic media buffer configured for storing the haptic rendering data of the haptic media file declared in the MPEG media description module and the description information of the buffer view of the haptic media buffer, the buffer management method provided in the embodiments of the present disclosure may create the haptic media buffer based on the description information of the haptic media buffer and the description information of the buffer view of the haptic media buffer. Therefore, the MAF may write the haptic rendering data of the haptic media file into the haptic media buffer, and the display engine may obtain the description information of the haptic media accessor based on the target haptic object description module in the MPEG haptic description module in the 3D-scene-to-be-rendered. When the execution of the target haptic action in the 3D-scene-to-be-rendered is triggered, haptic rendering data of a haptic media file associated with the target action node is accessed from the haptic media buffer based on the description information of the haptic media accessor, and the target action node is rendered based on the haptic rendering data of the haptic media file associated with the target action node. Therefore, the embodiments of the present disclosure may support the haptic media files in the scene description document.

With the increasing richness of 3D media content, a user has higher requirements for a sense of reality and richness of a virtual scene. As a part of sensory experience, a haptic sense becomes object experience that needs to be considered and added in immersive media. For example, the user may experience an explosion effect in the virtual scene, which not only requires participation of visual and auditory senses, but also requires participation of the haptic sense as a type of sensory experience, so as to enhance a sense of reality and a sense of presence that are brought by the explosion effect in the virtual scene to people.

In relevant technical standards, each haptic material attribute is represented by a texture array, and texture arrays of different attributes are combined to form a specific haptic perception. Each array element includes a haptic texture and an enumerated type of the haptic material attribute, and the type of the haptic material attribute includes High_resolution, Low_resolution, Reference, and Other. When the type of the haptic material attribute is the High_resolution or the Low_resolution, a texture map or a haptic texture material data packet that is indexed by a texture stores a haptic value instead of a color value. The haptic value may be directly obtained and haptically rendered by a display engine. When the type of the haptic material attribute is the Reference, each pixel in the texture map or the haptic texture material data packet does not directly store the haptic value, but stores an index value of a to-be-rendered haptic media file. As described above, when the type of the haptic material attribute is the Reference, data obtained from the texture map or the haptic texture material data packet is an index value of haptic media. Based on the index value, only an encoded and encapsulated haptic media file may be obtained, and a decoded haptic value that may be used for rendering cannot be obtained. As a result, the display engine cannot perform the rendering normally.

As shown in FIG. 8, in order to associate a haptic media file with an object in a scene and incorporate the haptic sense as a part of immersive media experience, a proposal is approved at the 140^{th} MPEG meeting to add MPEG haptic (MPEG _haptic) 801 and an MPEG haptic material (MPEG_material_haptic) 802 to an MPEG scene description document. In a new version of a haptic extension based on the glTF, haptic support may be enabled in scene description. The MPEG haptic 801 obtains an access address of the haptic media file by indexing a media description module in a media list of MPEG media (MPEG_media). It should be noted that haptic media that is haptically encoded and encoded is indexed from the MPEG media (MPEG_media). The MPEG haptic material serves as a supplementary explanation for a material attribute of an original virtual object, which supports direct indexing of the haptic media file while storing a value of the haptic material attribute.

The MPEG haptic (MPEG_haptic) 801 is a lower-level description module of a node description module and configured to support indexing a media file related to the haptic sense in the MPEG_media to add haptic information. A syntax element in the MPEG haptic 801 is defined in following Table 27:

**Table 27**

| Syntax element name | Data type | | Default value | Description |
|---|---|---|---|---|
| Media_reference | Array | | N/A | Reference to at least one media description module in MPEG_media.media including the haptic media file |

The MPEG haptic material (MPEG_material_haptic) 802 is a lower-level description module of a mesh description module and configured to support the user to obtain a corresponding haptic feedback through active and/or passive interaction in the virtual scene.

As described above, currently, the proposal to add the MPEG haptic (MPEG_haptic) 801 and the MPEG haptic material (MPEG_material_haptic) 802 has been approved at the 140^{th} MPEG 140 meeting, and the MPEG haptic 801 is allowed to be indexed to the haptic media file in the MPEG media (MPEG_media). The haptic media file mainly describes overall haptic experience related to an event or an environment. The indexed haptic media file is regarded as a haptic signal, which essentially may directly drive a haptic device to generate a corresponding haptic feedback on a human body. In related technologies, each array element includes the haptic texture and the enumerated type of the haptic material attribute, and the type of the haptic material attribute includes the High_resolution, the Low_resolution, the Reference, and the Other. When the type of the haptic material attribute is the High_resolution or the Low_resolution, the texture map or the haptic texture material data packet that is indexed by the texture stores the haptic value instead of the color value. The haptic value only represents a size of a specific attribute (such as a size of a friction coefficient and a size of a stiffness coefficient), and may be directly obtained by the display engine for the haptic rendering. When the type of the haptic material attribute is the Reference, each pixel in the texture map or the haptic texture material data packet does not directly store the haptic value, but stores the index value of the to-be-rendered haptic media file. Therefore, when the type of the haptic material attribute is the Reference, based on the index value, only the encoded and encapsulated haptic media file may be obtained, and the decoded haptic value that may be used for the rendering cannot be obtained. As a result, the display engine cannot perform the rendering normally. That is, in the related technologies, a haptic value of a haptic material attribute whose type is the Reference cannot be obtained.

Some embodiments of the present disclosure provide a scene description framework supporting a haptic value of a haptic material attribute whose type is Reference. Specific content includes: support by a scene description document for obtaining the haptic value of the haptic material attribute whose type is the Reference, support by a MAF API for obtaining the haptic value of the haptic material attribute whose type is the Reference, support by a MAF for obtaining the haptic value of the haptic material attribute whose type is the Reference, support by a buffer API for obtaining the haptic value of the haptic material attribute whose type is the Reference, support by buffer management for obtaining the haptic value of the haptic material attribute whose type is the Reference, and the like.

A process of indexing, rendering, and displaying a haptic media file in a 3D scene based on the scene description framework is as follows: Firstly, a display engine downloads, through a network protocol, the scene description document from a 3D scene provider, or reads the scene description document from a local memory. The scene description document obtained by the display engine includes description information of the 3D scene and description information of the haptic media file in the scene. The description information of the haptic media file includes an access address of the haptic media file, attribute information (a media type, a codec parameter used, and the like) about access to the haptic media file, and the like. In addition, a format requirement of data obtained by decoding the haptic media file is also included. The format requirement of the data obtained by decoding the haptic media file includes a format requirement (a data type, a data length, a data access method, and the like) of information data such as a description part and an encoding part (namely, the description part 41 and the encoding part 42 in FIG. 4, which are collectively referred to as the haptic media file in the following description) of haptic data obtained by processing the haptic media file, and a format requirement and an address of other media data, including description information of a texture map and a haptic material attribute that need to be subsequently used, and other data. After parsing the scene description document, the display engine calls the MAF API to transfer the access address of the haptic media file, the attribute information (the media type, a codec used, and the like) of the haptic media file, and other information to the MAF. In addition, the display engine transfers format requirements of specific decoded haptic media data and other media data in the parsed scene description document to the MAF by calling the MAF API. Then, based on the access address that is of the haptic media file and transferred by the display engine, the MAF requests to download the haptic media file from a server or locally obtains the haptic media file. Afterwards, the MAF establishes a corresponding pipeline for the media file based on the media type, the codec parameter, and other information, and converts obtained media data from an encapsulation format to a format required in the scene description document, that is, converts the haptic media file into the format (the data type, the data length, the data access method, and the like) specified in the scene description document in the corresponding pipeline. The haptic media file may be decapsulated, decrypted, decoded, and post-processed in the pipeline. Subsequently, the pipeline stores information data of decoded haptic media that is in the format specified in the scene description document and other media data in a buffer. The buffer may be created by the display engine by calling a buffer management module through the buffer API. If the display engine has not created the buffer, the MAF may invoke the buffer management module through the buffer API to create the buffer. In this way, the buffer may be created, updated, and released. Finally, in the buffer, the display engine reads the haptic media file in the format specified in the scene description document to render a haptic part in the 3D scene.

The following separately describes the scene description document, the MAF API, the MAF, the buffer API, and the buffer management that support obtaining the haptic value of the haptic material attribute whose type is the Reference.

### 1. Scene description document that supports obtaining the haptic value of the haptic material attribute whose type is the Reference

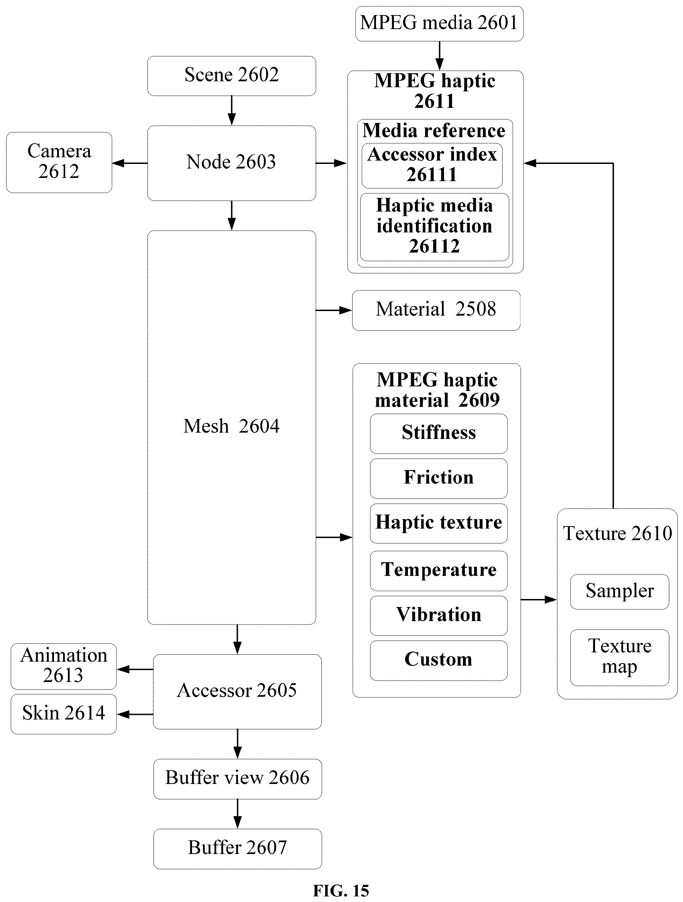

FIG. 15 is a schematic structural diagram of the scene description document that supports obtaining the haptic value of the haptic material attribute whose type is the Reference according to an embodiment of the present disclosure. As shown in FIG. 15, the scene description document that supports obtaining the haptic value of the haptic material attribute whose type is the Reference includes but is not limited to following modules: MPEG media (MPEG_media) 2601, a scene description module (scene) 2602, a node description module (node) 2603, a mesh description module (mesh) 2604, an accessor description module (accessor) 2605, a buffer view description module (bufferView) 2606, a buffer description module (buffer) 2607, a material description module (material) 2608, an MPEG haptic material (MPEG_material_haptic) 2609, a texture description module (texture) 2610, MPEG haptic (MPEG_haptic) 2611, a camera description module (camera) 2612, a skin description module (skin) 2613, and an animation description module (animation) 2614. The following separately describes in detail each description module in the scene description document shown in FIG. 15.

In order to enable the scene description document to correctly describe the haptic media file, some embodiments of the present disclosure extend a value of a syntax element in the MPEG media (MPEG_media) 2601 in the scene description document, and at least one of following extensions is included:
Extension 1 : A value of a media type syntax element (MPEG _media.media.alternatives.mimeType) used to describe a media resource type of media in an alternative item (MPEG_media.media.alternatives) of a media list of the MPEG media in the scene description document is extended. The extension of the media type syntax element (mimeType) includes adding a value associated with the haptic media file to the media type syntax element (mimeType). For example, in a case where the media list of the MPEG media in the scene description document includes haptic media, and the value of the media type syntax element (MPEG _media.media.alternatives.mimeType) used to describe the media resource type of the media follows a relevant provision in an ISO/IEC 23090-32 standard, when a media resource includes an audio resource, a video resource, and a haptic resource, the value of the "mimeType" is "video/mp4"; when a media resource includes only the audio resource and the haptic resource, the value of the "mimeType" is the "video/mp4"; when a media resource includes only the haptic resource, the value of the "mimeType" is "haptics/mp4".

Extension 2: A value of a track syntax element (MPEG_media.media.alternatives.tracks.track) used to declare track information of a media file in a track array (MPEG_media.media.alternatives.tracks) in the alternative item of the media list of the MPEG media in the scene description document is extended. The extension of the track syntax element (track) includes: When an encoded haptic media file is referenced by the scene description document as an item in the track array (MPEG_media.media.alternatives.tracks) in the alternative item of the media list of the MPEG media, a selection method of a reference track in the ISO/IEC 23090-32 standard should be followed. For example, when the haptic media is encapsulated into one MIHS track by using an ISOBMFF, the one MIHS track should be referenced in the MPEG media. When the haptic media is encapsulated into a plurality of MIHS tracks by using the ISOBMFF, reference should be made to subsequent supplementary content of the ISO/IEC 23090-32 standard.

Extension 3: A value of a codec parameter syntax element (MPEG_media.media.alternatives.tracks.codecs) used to describe a codec type of media data included in a bitstream track in the track array (MPEG_media.media.alternatives.tracks) in the alternative item of the media list of the MPEG media in the scene description document is extended. A codec parameter of a media file included in the bitstream track is defined in IETFRFC 6381. When the bitstream track includes different types of codecs (for example, AdaptationSet includes representations for different codecs), the codec parameter syntax element (codecs) may be represented by a list of codec values separated by a comma. Therefore, the extension of the value of the codec parameter syntax element (codecs) includes: When the media data is haptic data and its encapsulation rule follows the 23090-32 standard, the value of the codec parameter syntax element (codecs) should be set according to a provision in a standard for carriage of haptics data in the ISO/IEC 23090-32 standard. For example, when the haptic data is encapsulated by using an ISMBOFF, a first group of elements in the codec parameter syntax element (codecs) represents a code of a codec in an ISO/IEC 23090-31 standard. A parameter form of the codec parameter syntax element (codecs) is "codecs":"mihl.oo", where "mih1" represents a type of data format description for encapsulating the haptic data in the ISOBMFF. This value is not unique and may be replaced by another sample format name that complies with ISOBMFF encapsulation. "oo" represents an object type indication value defined on an "Object Type" page at a website of the MP4 registration authority.

That is, in order to enable the scene description document to correctly describe the haptic media file, some embodiments of the present disclosure extend the value of the syntax element in the MPEG media in the scene description document, and at least one of syntax elements shown in following Table 28 is specifically extended:

**Table 28**

| Syntax element name | Data type | Default value | Usage | Description |
|---|---|---|---|---|
| mimeType | String | N/A | Compulsory | When the media resource includes the audio resource, the video resource, and the haptic resource, the value of the "mimeType" is the "video/mp4". |
| | | | | When the media resource includes only the audio resource and the haptic resource, the value of the "mimeType" is the "video/mp4". |
| | | | | When the media resource includes only the haptic resource, the value of the "mimeType" is the "haptic s/mp4". |
| track | String | N/A | Compulsory | When the haptic data is referenced by the scene description document as an item in the MPEG_media.alternative .tracks, and the referenced |
| | | | | item complies with a provision of the track in the ISOBMFF: |
| | | | | For haptic media data encapsulated into a single track, a single track of a haptic media encapsulation file is referenced in the MPEG_media. |
| | | | | For haptic data encapsulated into a plurality of tracks, a reference track referenced in the MPEG_media should be selected according to a relevant provision in the ISO/IEC 23090-32 standard. |
| codecs | String | N/A | Compulsory | When the media data is the haptic data, the value of the 'codecs' should be set according to the provision in the standard for carriage of haptics data in the ISO/IEC 23090-32 standard. |

At least one of the extensions 1 to 3 is performed on the value of the syntax element in the MPEG_media in the scene description document, such that the MPEG media in the scene description document may describe the haptic media file.

It should be noted that the haptic media file is encapsulated based on a data structure shown in FIG. 4. The haptic media file not only includes an information part, but also allows for a metadata configuration part. An encapsulation method of the haptic media file is not limited in the embodiments of the present disclosure, and an encoded and encapsulated haptic media file may be obtained based on the access address of the haptic media file in the MPEG media.

In some embodiments, description methods of the scene description module (scene) 2602 and the node description module (node) 2603 in the scene description document that supports obtaining the haptic value of the haptic material attribute whose type is the Reference include: when the haptic media file is included in the 3D scene, using scene and node description methods to describe an overall structure of the 3D scene, as well as a structural hierarchy and a position of the haptic media file in the 3D scene. When the 3D scene includes a node description module (node) that needs to index the haptic media file, the MPEG haptic (MPEG _haptic) is enabled, and the haptic media file is indexed in the MPEG haptic. The MPEG haptic (MPEG _haptic) 2611 of the node description module (node) in the scene description document shown in FIG. 15 includes a media reference (Media_reference). The media reference (Media_reference) includes a haptic media identification syntax element (haptic_id) 26111, a value of the haptic media identification syntax element (haptic_id) 26111, an accessor index syntax element (accessor) 26112, and a value of the accessor index syntax element (accessor). A description method of the MPEG haptic (MPEG _haptic) 2611 in the scene description document that supports obtaining the haptic value of the haptic material attribute whose type is the Reference includes: indexing a texture coordinate point to an encoded and encapsulated haptic media file based on the haptic media identification syntax element (haptic_id) in the MPEG haptic (MPEG_ haptic) 2611 and its value, and indexing the texture coordinate point to a group of haptic values in decoded data of the corresponding haptic media file based on the accessor index syntax element (accessor) in the MPEG haptic (MPEG_ haptic) 2611 and its value. That is, when a type of a haptic material attribute carried by a 3D mesh is the Reference, it is necessary to extend one haptic media identification syntax element (haptic_id) and one accessor index syntax element (accessor) in a media reference (Media_reference) in MPEG haptic (MPEG_haptic) 2611 of a node description module corresponding to a node including the 3D mesh, and provide a relevant supplementary description based on values of the one haptic media identification syntax element (haptic_id) and the one accessor index syntax element (accessor). The relevant supplementary description specifically includes: The haptic media identification syntax element (accessor) 26112 in the media reference (Media_reference) in the MPEG haptic (MPEG _haptic) 2611 and its value are used to clarify a media description module corresponding to the haptic media file to which the texture coordinate point needs to be indexed, and the accessor index syntax element (accessor) 26111 in the MPEG haptic (MPEG_haptic) 2611 and its value are used to clarify an accessor description module corresponding to an accessor that may actually access the decoded data of the haptic media file to which the texture coordinate point needs to be indexed. This function corresponds to description of the buffer description module (buffer) and the buffer view description module (bufferview) in the scene description document, jointly achieving the direct indexing of the texture coordinate point to the decoded data of the haptic media file.

In addition, each 3D scene is described using one independent scene description module. In the 3D scene, there may be many specific objects, such as a virtual digital human, a nearby 3D object, a distant background image, and a virtual camera representing a user's viewpoint and viewing angle. The scene description document uses these specific objects as nodes in the 3D scene, and each node may represent one object or an object set composed of a plurality of objects. A relationship between nodes reflects a relationship between various components in the 3D scene. Each scene description document may describe at least one 3D scene, and there is only a parallel relationship instead of a hierarchical relationship between 3D scenes, that is, there is no inclusion relationship between the 3D scenes. There may be a parallel or hierarchical relationship between the nodes, that is, there is an inclusion relationship between the nodes. In this way, a plurality of specific objects may be integrated together for representation. If one node is included in another node, the included node is referred to as a child node, and the child node is represented by "children" instead of "node". A hierarchical node structure may be formed by flexibly combining the node and the child node.

In some embodiments, a description method of the mesh description module (mesh) 2604 in the scene description document that supports obtaining the haptic value of the haptic material attribute whose type is the Reference includes: describing, by the scene description document by using a data format of the 3D mesh, in other words, by using the mesh description module (mesh) 2604, a node representing a 3D object. The mesh description module includes various types of specific information, such as a 3D coordinate and a color. The above information belongs to a syntax element in an attribute (mesh.primitives.attribute) of a primitive of the mesh description module 2604. A most basic mesh description module includes a 3D coordinate of a vertex, a connection relationship between vertices, color information of the vertex, and a 3D coordinate of a required texture value. In the mesh description module, it is necessary to enable a texture coordinate (Texcoord) of a 3D coordinate set of the required texture value, such that a haptic value obtained from a texture may be subsequently attached to a corresponding 3D coordinate of the 3D object. The texture coordinate (Texcoord), color data, and other information belong to the attribute (mesh. primitives. attribute) of the primitive of the mesh description module. However, the haptic media does not need to be defined temporarily in the mesh description module by referencing the attribute (attribute) such as a color count. It is only required to enable the MPEG haptic material (MPEG_material_haptic) 2609 as a content supplement parallel to the material description module (material) 2604 to support further definition of a haptic material.

In some embodiments, description methods of the material description module (material) 2608 and the texture description module (texture) 2610 in the scene description document that supports obtaining the haptic value of the haptic material attribute whose type is Reference includes: describing additional information of a surface of the 3D object through the material description module (material) 2608 and the texture description module (texture) 2610. When a conventional 3D object is described, if only geometric information of the 3D object is described with the help of the mesh description module, or a color of a vertex of the 3D mesh is defined monotonously, it is far from enough to enhance authenticity of a virtual object. Therefore, more information needs to be added to a surface of the 3D object. For a conventional 3D modeling technique, this process may also be referred to as texture mapping, texture addition, or the like That is, the scene description document that supports obtaining the haptic value of the haptic material attribute whose type is Reference is based on glTF2.0, and the material description module (material) 2608 and the texture description module (texture) 2610 are continuously used. In addition, a cooperative relationship between the material description module (material) 2608 and the texture description module (texture) 2610 includes: The material description module (material) 2608 and the texture description module (texture) 2610 jointly define color and physical information of an object surface. Under the texture description module (texture) 2610, a sampler description module (sampler) and a texture map description module (image) are specified. The sampler description module (sampler) defines how to map a texture map onto the object surface, achieving specific adjustment and packaging of the texture. The texture map description module (image) uses a ULR to identify and index the texture map.

In some embodiments, a description method of the MPEG haptic material (MPEG_material_haptic) 2609 in the scene description document that supports obtaining the haptic value of the haptic material attribute whose type is Reference includes: further describing the haptic material attribute through the MPEG haptic material (MPEG_material_haptic) 2609. When the haptic media file is included in the 3D scene, it is necessary to consider the haptic material attribute in a material characteristic. The MPEG haptic material (MPEG_material_haptic) 2609 includes haptic material attribute description modules corresponding to various haptic material attributes (stiffness, friction, haptic texture, temperature, vibration, and custom). The haptic material attribute description module includes an attribute type syntax element, and a value of the attribute type syntax element may be High_resolution, Low_resolution, or the Reference. An object including a haptic feedback in the 3D scene may include different types of haptic material attributes. For different haptic material attributes on a same object, haptic values or haptic media perceived by the user for the haptic values may be obtained in different ways, in order to associate the haptic media in the scene description document to obtain the haptic feedback.

It may be seen from Table 16 that the MPEG haptic material (MPEG_material_haptic) includes the haptic material attribute description modules corresponding to the haptic material attributes (the stiffness, the friction, the haptic texture, the temperature, vibration, and the custom). A haptic material attribute description module corresponding to each haptic material attribute includes a type of the haptic material attribute, specifically including the High_resolution, the Low_resolution, the Reference, or Other. If a type of a haptic material texture of a haptic material attribute is the Low_resolution or the High_resolution, it means that a haptic value on a texture coordinate point may be obtained from a texture map or another haptic texture material data packet. A value included in each pixel of the texture map or the haptic texture material data packet represents the haptic value. In addition, as shown in Table 14 and Table 15, haptic values of different types of haptic material textures have different bit depths. For example, a bit depth of a haptic value of a haptic material attribute whose type is the High_resolution is 16 bits, while a bit depth of an attribute value of a haptic material attribute whose type is the Low_resolution is 8 bits.

If the type of the haptic material attribute is the Reference, it is required that the haptic value of the texture coordinate point or haptic values of a group of texture coordinate points may be indexed to a group of temporal or spatial haptic values. At this time, the haptic media identification syntax element (haptic_id) and the accessor index syntax element (accessor) in the media reference (Media_reference) in the MPEG haptic (MPEG_haptic) 2611 need to be enabled to provide a relevant supplementary description. The MPEG haptic material (MPEG_materia_haptic) 2609 internally includes a type of each haptic material attribute. When a type of a haptic material attribute is the Reference, it is necessary to add the haptic media identification syntax element and the accessor index syntax element to the media reference (Media_reference), in order to index the texture coordinate point to a group of encoded and encapsulated haptic media files and an accessor for accessing decoded data of the haptic media files. That is, there is the syntax element named accessor and the syntax element named haptic_id in the media reference (Media_reference) in the MPEG haptic (MPEG_haptic) 2611. The haptic_id clarifies the media description module of the haptic media file to which the texture coordinate point needs to be indexed, and the accessor clarifies the accessor description module corresponding to the accessor that may actually access the decoded data of the haptic media file to which the texture coordinate needs to be indexed. This function corresponds to the description of the buffer description module (buffer) and the buffer view description module (bufferview) in the scene description document, jointly achieving direct indexing of the texture coordinate point data to the haptic media file. Syntax elements in the media reference (Media_reference) in the MPEG haptic (MPEG _haptic) 2611 are defined in following Table 29:

**Table 29**

| Element name | Data type | Default value | Usage | Description |
|---|---|---|---|---|
| haptic_id | Integer | N/A | Compulsory | References an index value of a haptic media file in the media list of the MPEG_media. |
| accessor | Integer | N/A | Compulsory | Defines an index value of an accessor |
| | | | | for accessing decoded data of a haptic media file related to the haptic material attribute. |

In some embodiments, description methods of the accessor description module (accessor) 2605, the buffer view description module (bufferView) 2606, and the buffer description module (buffer) 2607 in the scene description document that supports obtaining the haptic value of the haptic material attribute whose type is the Reference include: pointing to, based on a value of a media index syntax element (buffer.MPEG_buffer_circular.media) of an MPEG circular buffer of the buffer description module, an index of the media description module corresponding to the haptic media file in the MPEG media (MPEG_media). That is, the haptic media file needs to be specified in the buffer description module (buffer), but a URL of the haptic media file is not directly added to the buffer description module (buffer). Instead, an index value of the media description module corresponding to the corresponding haptic media file in the MPEG media (MPEG_media) is declared by the media index syntax element (MPEG_buffer_circular. media) in the MPEG circular buffer of the buffer description module (buffer).

For example, if the media description module corresponding to the haptic media file in the MPEG media (MPEG_media) is a third media description module in the media list of the MPEG media (MPEG _media), the value of the media index syntax element (buffer.MPEG_buffer_circular.media) in the MPEG circular buffer of the buffer description module may be set to "2", such that an access address of the third media description module in the MPEG media is indexed in the MPEG circular buffer of the buffer description module, so as to index the haptic media file based on the media index syntax element in the MPEG circular buffer (MPEG_buffer_circular) of the buffer description module.

In some embodiments, description methods of the accessor description module (accessor) 2605, the buffer view description module (bufferView) 2606, and the buffer description module (buffer) 2607 in the scene description document that supports obtaining the haptic value of the haptic material attribute whose type is the Reference include: indicating, through a track (buffer.MPEG_buffer_circular.tracks.track) in a track array of the MPEG circular buffer of the buffer description module, track information when an encapsulated file of the haptic media file is accessed. Specifically, when the track array (buffer.MPEG_buffer_circular.tracks) of the MPEG circular buffer of the buffer description module includes a plurality of tracks, the pipeline should perform necessary processing on all referenced tracks to generate a data format requested by the buffer description module. If a media file referenced in the track (buffer.MPEG_buffer_circular.tracks) in the track array of the MPEG circular buffer of the buffer description module has a plurality of alternative items (alternatives), each alternative item (alternatives) should record a selection status of the track. When the track array (buffer.MPEG_buffer_circular.tracks) of the MPEG circular buffer of the buffer description module is not defined, the pipeline should perform the necessary processing on all tracks in the MPEG media (MPEG_media) to generate the data format requested by the buffer description module (buffer), that is, to guide the buffer description module (buffer) on how to correctly store data in the MPEG media (MPEG_media).

Syntax elements included in the MPEG circular buffer (MPEG_buffer_circular) are shown in following Table 30.

**Table 30**

| Element name | Data type | Default value | Usage | Description |
|---|---|---|---|---|
| count | Integer | 2 | Non-compulsory | Indicates a quantity of circular buffer sections included in the MPEG circular buffer. The MAF may use this information and establish a corresponding circular buffer structure for the display engine. |
| media | Integer | N/A | Compulsory | Indicates an index of a media file in the MPEG_media, where the media file may be used as an input media source in the buffer. |
| tracks | Array | N/A | Non-compulsory | Indicates an index of a track (track) of a media file from an extension of the MPEG_media, where the index may be used as an input media source in the buffer. |
| | | | | When the syntax element "tracks" is not defined, the pipeline should perform the necessary processing on all the tracks in the MPEG_media to generate the data format requested by the buffer, that is, to guide the buffer on how to correctly store the data in the MPEG_media. |
| | | | | When the syntax element "tracks" includes a plurality of tracks, the pipeline should perform the necessary processing on all the referenced tracks to generate the data format requested by the buffer. |
| | | | | If a media source referenced in the track has a plurality |
| | | | | of alternative items (alternatives), each alternative item should record the selection status of the track. |

That is, based on a value setting rule of the media index syntax element (media) in Table 30, the value of the media index syntax element (media) in Table 30 is set to the index value of the media description module corresponding to the haptic media file in the MPEG media (MPEG_media), so as to index the haptic media file in the buffer description module. Based on a value setting rule of the syntax element "tracks" in Table 30, a value of the syntax element "tracks" in Table 30 is set to an index of a track including the haptic media file in the MPEG media, so as to index the track of the haptic media file in the buffer description module.

In some embodiments, a description method of the camera description module (camera) 2612 in the scene description document that supports obtaining the haptic value of the haptic material attribute whose type is the Reference includes: defining a viewpoint, a viewing angle, and other viewing related visual information of the node description module (node) through the camera description module (camera) 2612.

In some embodiments, a description method of the animation description module (animation) 2613 in the scene description document that supports obtaining the haptic value of the haptic material attribute whose type is the Reference includes: defining, through the animation description module (animation) 2613, an animation added to the node description module (node).

In some embodiments, the animation description module (animation) may describe, through at least one of position movement, angle rotation, and size scaling, the animation added to the node description module (node).

In some embodiments, the animation description module (animation) may also indicate at least one of start time, end time, and an implementation of the animation added to the node description module (node).

That is, in the scene description document that supports obtaining the haptic value of the haptic material attribute whose type is the Reference, an animation may also be added to a node description module (node) representing an object in the 3D object. The animation description module (animation) describes, through the position movement, the angle rotation, and the size scaling, the animation added to the node, and may also specify the start time, the end time, and the implementation of the animation.

In some embodiments, a description method of the skin description module (skin) 2614 in the scene description document that supports obtaining the haptic value of the haptic material attribute whose type the Reference includes: defining a motion and deformation relationship between a mesh (mesh) in the node description module (node) and a corresponding skeleton through the skin description module (skin) 2614.

Based on improvements and extensions made to the MPEG media (MPEG_media), the scene (scene), the node (node), the mesh (mesh), the accessor (accessor), the buffer view (bufferView), the buffer (buffer), the skin (skin), the animation (animation), the camera (camera), the material (material), the texture (texture), the sampler (sampler), and the texture map (image) in the scene description document in the above embodiments, the scene description document is now able to correctly describe the haptic media file.

For example, the scene description document shown in FIG. 15 is described below by taking a scene description document of haptic media that includes haptic material attributes like the stiffness, the temperature, and the vibration and is encapsulated into a single track as an example.

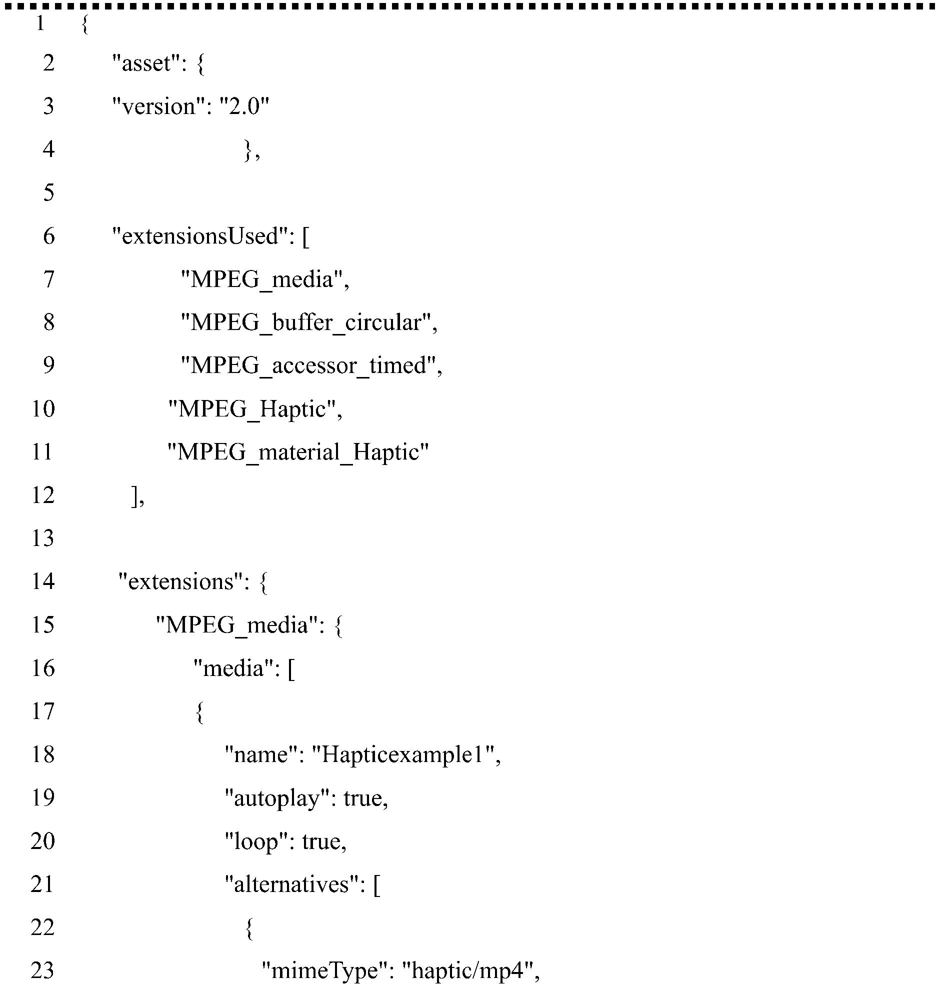

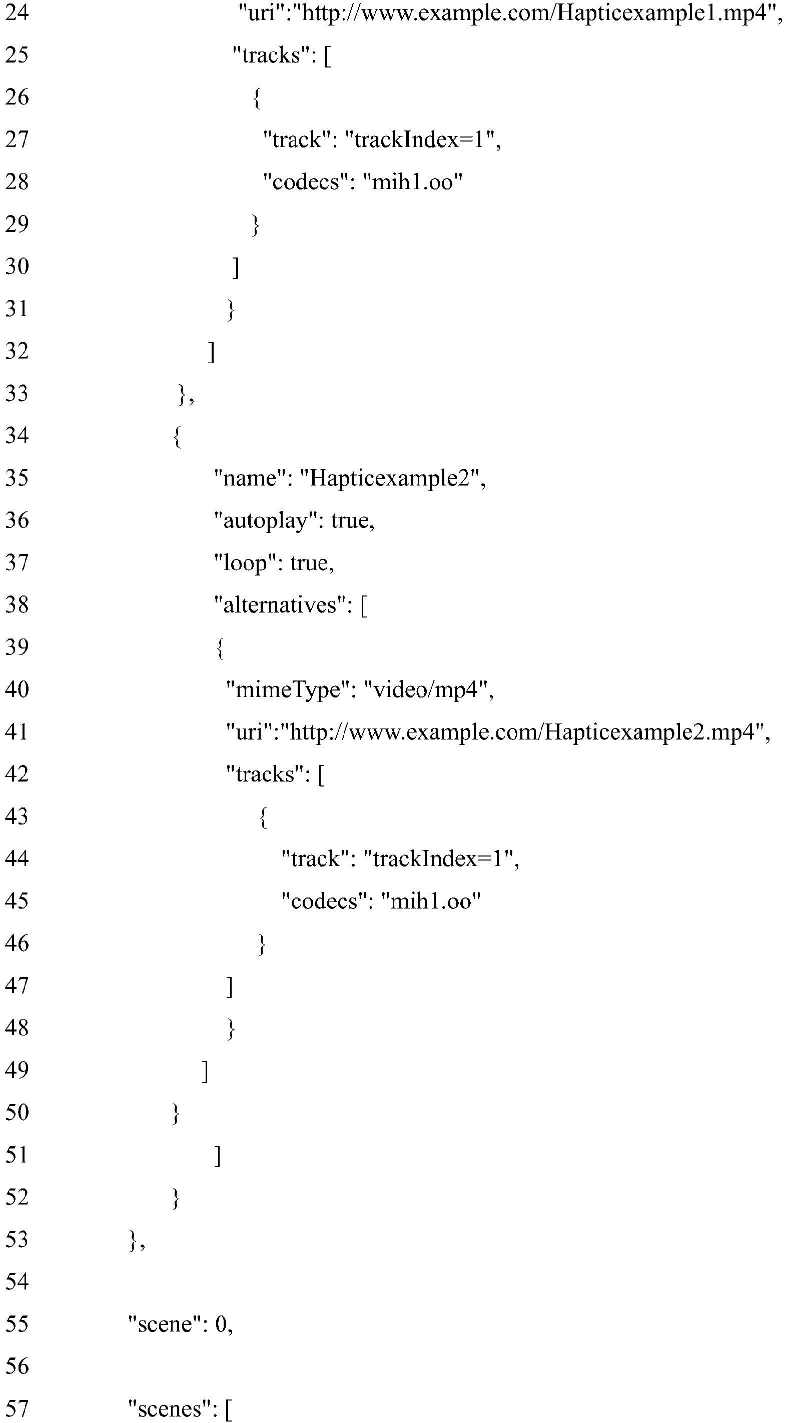

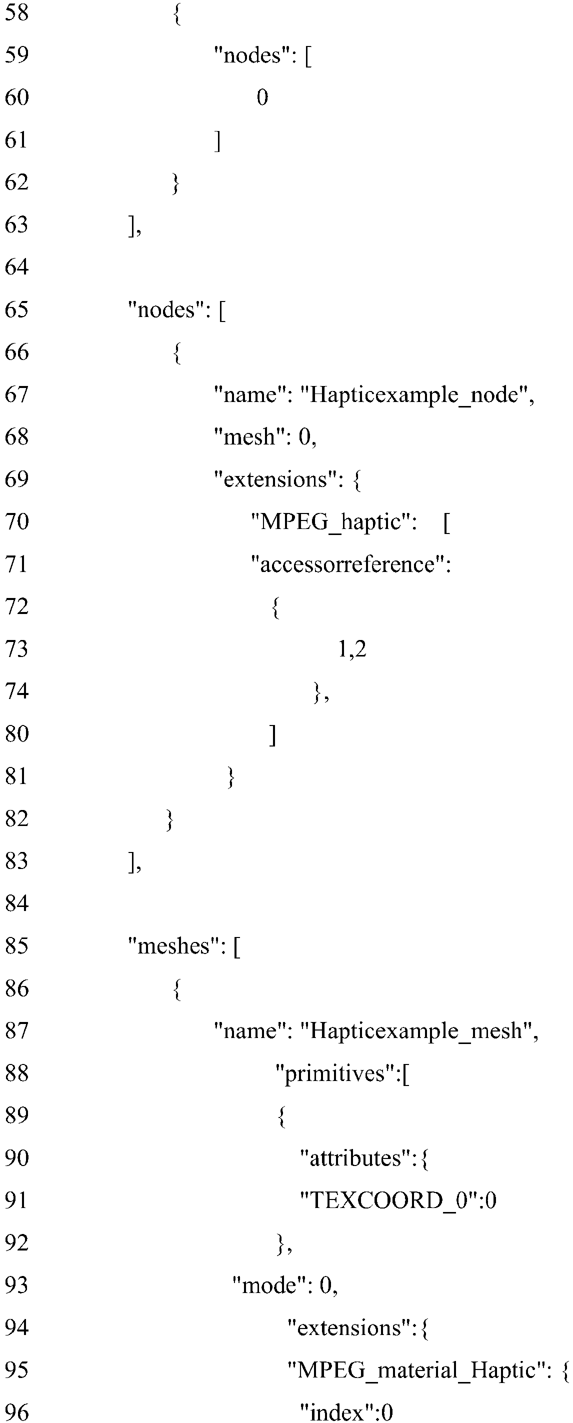

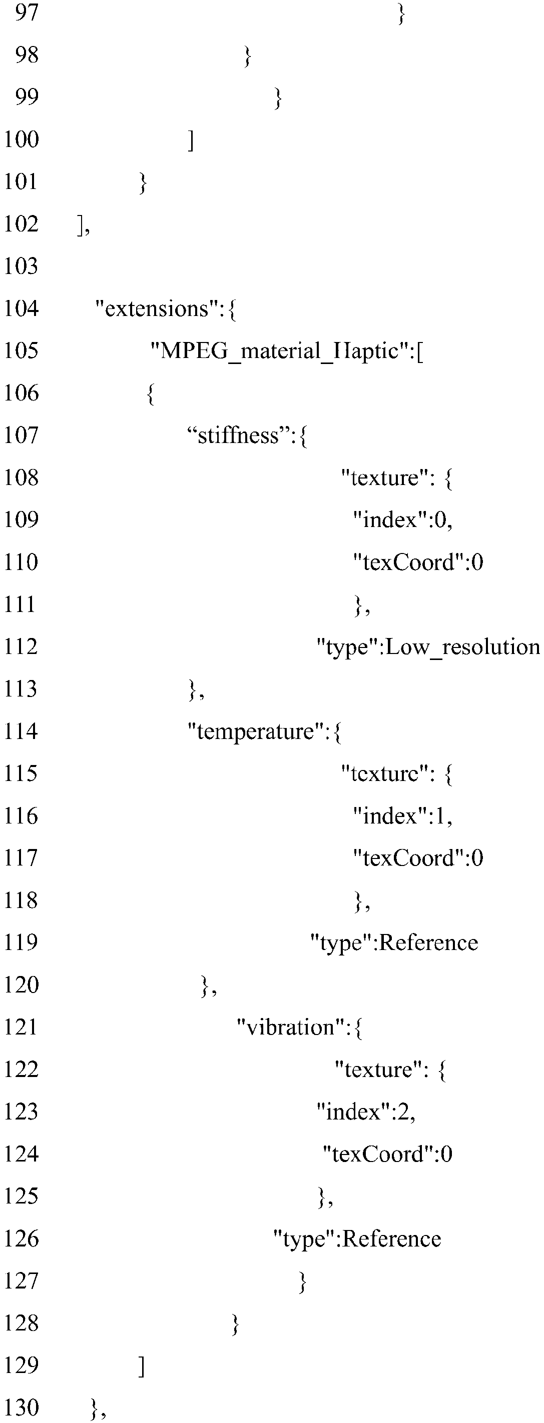

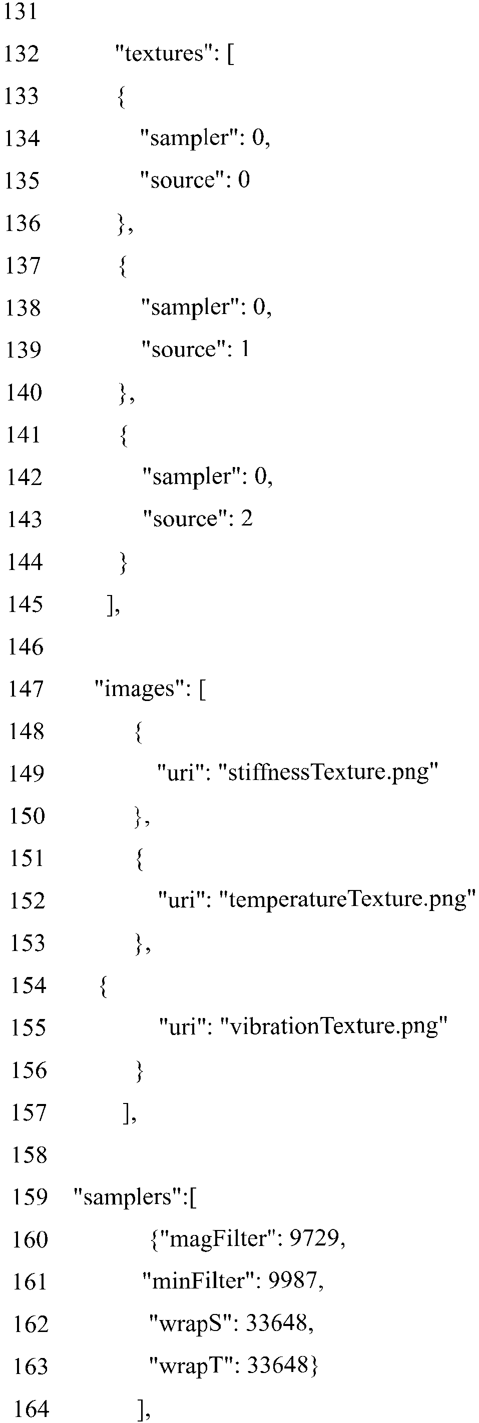

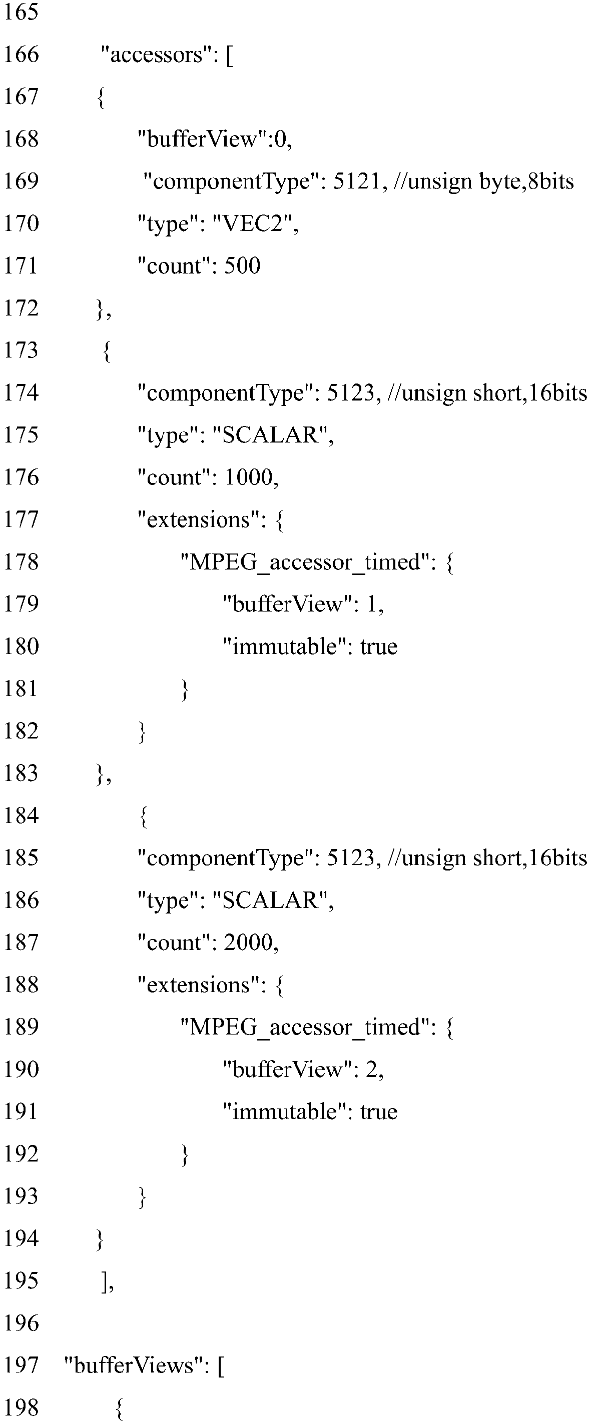

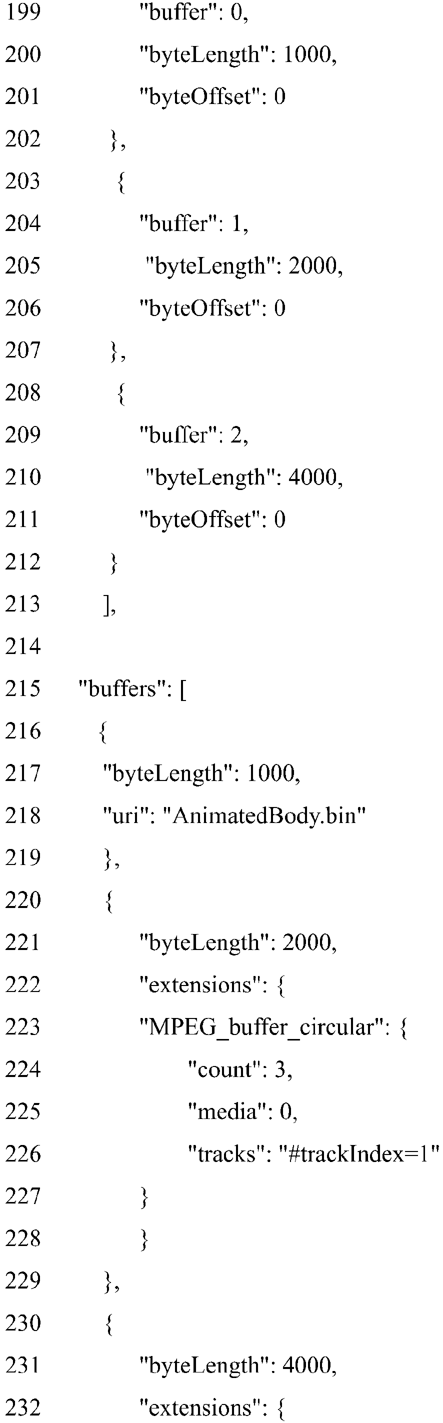

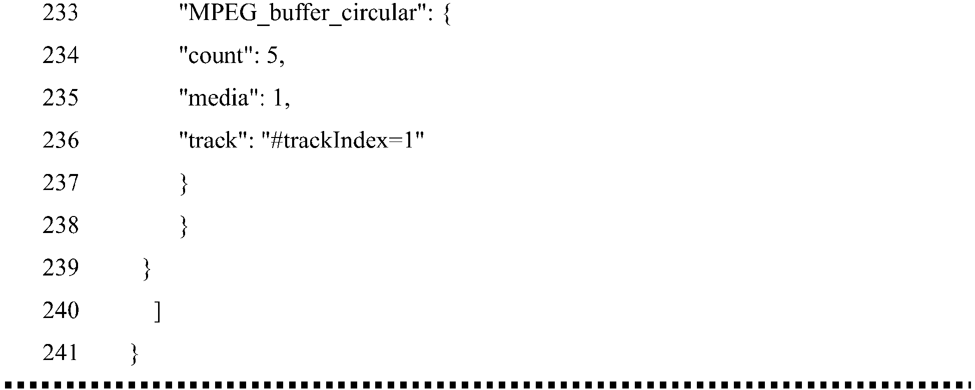

Main content of the scene description document shown in FIG. 15 is included in a pair of braces from lines 1 to 241 in the above example. The scene description document that supports obtaining the haptic value of the haptic material attribute whose type is the Reference includes: a digital asset description module (asset), an extension usage description module (extensionUsed), the MPEG media (MPEG_media), a scene declaration (scene), a scene list (scenes), a node list (nodes), a mesh list (meshes), a haptic material array list (MPEG_material_Haptic), a texture list (textures), a texture map list (images), a sampler list (samplers), an accessor list (accessors), a buffer view list (bufferView), and a buffer list (buffers). The following separately describes content of each description module and information included in each description module from a parsing perspective.
1. Digital asset description module (asset): The digital asset description module is located at lines 2 to 4. Based on "version":"2.0" at line 3 in the digital asset description module, it may be determined that the scene description document is compiled based on the glTF2.0, which is also a reference version of a scene description standard. From the parsing perspective, the display engine may determine a parser based on the digital asset description module to parse the scene description document.
2. Extension usage description module (extensionUsed): The extension usage description module is located at lines 6 to 12. Because the extension usage description module includes five extensions that respectively involve the MPEG media (MPEG_media), the MPEG circular buffer (MPEG_buffer_circular), an MPEG time-varying accessor (MPEG_accessor_timed), the MPEG haptic (MPEG_Haptic), and the MPEG haptic material (MPEG_material_Haptic), it may be determined that the scene description document uses five MPEG extensions that respectively involve the MPEG media, the MPEG circular buffer, the MPEG time-varying accessor, the MPEG haptic, and the MPEG haptic material. From the parsing perspective, the display engine may learn in advance based on content of the extension usage description module (extensionUsed) that extension items involved in subsequent parsing includes: the MPEG media, the MPEG circular buffer, the MPEG time-varying accessor, the MPEG haptic, and the MPEG haptic material.
3. MPEG media (MPEG_media): The MPEG media is located at lines 14 to 53. The MPEG media declares the haptic media file included in the 3D scene. The media list (media) of the MPEG media includes two braces (two media description modules: a media description module at lines 17 to 33 and a media description module at lines 34 to 50), indicating that two media files are declared in the MPEG media in the scene description document. The media description module at lines 17 to 33 indicates a file type of a corresponding encapsulated file of a corresponding media file through "mimeType": "video/mp4" at line 23, indicates an access address of the corresponding media file through "uri":"http://www.example.com/Hapticexample.mp4" at line 24, indicates track information of the corresponding media file through "track":"trackIndex=1" at line 27, indicates decoding information of the corresponding media file through "codecs":""mih1.oo" at line 28, indicates a name of the corresponding media file through "name":"Hapticexample1" at line 18, indicates, through "autoplay":true at line 19, that the corresponding media file should be automatically played, and indicates, through "loop":true at line 20, that the corresponding media file should be cyclically played. The media description module at lines 34 to 50 indicates a file type of an encapsulated file of a corresponding media file through "mimeType":"video/mp4" at line 40, indicates an access address of the corresponding media file through "uri":"http://www.example.com/Hapticexample.mp4" at line 41, indicates track information of the corresponding media file through "track":"trackIndex=1" at line 44, indicates decoding information of the corresponding media file through "codecs":""mih1.oo" at line 45, indicates a name of the corresponding media file through "name":"Hapticexample2" at line 35, indicates, through "autoplay":true at line 36, that the corresponding media file should be automatically played, and indicates, through "loop":true at line 37, that the corresponding media file should be cyclically played. From the parsing perspective, the display engine may determine existence of two haptic media files in a 3D-scene-to-be-rendered by parsing the MPEG media, and learns a method for accessing and parsing the two haptic media files.
4. Scene declaration (scene): The scene declaration is located at line 55. Because one scene description document theoretically may include a plurality of 3D scenes, the above scene description document first indicates, through "scene":0 at line 55, that a scene described in the scene description document is a 3D scene corresponding to a first scene description module in the scene list, that is, a scene that is described in the scene description document and enclosed in a brace at lines 57 to 63.
5. Scene list (scenes): The scene list is located at lines 57 to 63. The scene list includes only one brace, indicating that the scene description document includes only one scene description module (scene). The scene description document includes only one 3D scene. In the one brace (scene description module), "nodes":[0] at lines 58 to 61 indicates that the one 3D scene includes only one node with an index of 0. From the parsing perspective, the scene list clarifies that the scene description framework should select a first 3D scene in the scene list for subsequent processing and rendering, clarifies an overall structure of the 3D scene, and points to a more detailed lower-level node description module (node).
6. Node list (nodes): The node list is located at lines 65 to 83. The node list includes only one brace, indicating that the scene description document includes only one node description module, the 3D scene has only one node, the one node is the same as a node with an index value of 0 in the scene description module, and the two nodes are associated through indexing. In the one brace (node description module) representing the one node, "name":"Hapticexample_node" at line 67 indicates that the one node is named "Hapticexample_node", and "mesh":"0" at line 68 indicates that content mounted on the one node is a first 3D mesh in the mesh list (meshes), which corresponds to a lower-level mesh description module. In addition, the MPEG haptic (MPEG _Haptic) is also included at lines 69 to 81 of the one node description module, and the media reference list (Media_reference) in the MPEG haptic includes two braces, indicating that the one node description module includes two media reference arrays (a media reference array at lines 72 to 75 and a media reference array at lines 76 to 79). The media reference array at lines 72 to 75 indicates, through "haptic_id":0 at line 73, that a media file corresponding to the media reference array at lines 72 to 75 is a media file described by a first media description module in the media list in the MPEG media, and indicates, through "accessor":1 at line 74, that an accessor for accessing parsed data of the corresponding media file is an accessor described by a second accessor description module in the accessor list (accessors). The media reference array at lines 76 to 79 indicates, through "haptic_id":1 at line 77, that a media file corresponding to the media reference array at lines 76 to 79 is a media file described by a second media description module in the media list in the MPEG media, and indicates, through "accessor":2 at line 78, that an accessor for accessing parsed data of the corresponding media file is an accessor described by a third accessor description module in the accessor list (accessors). From the parsing perspective, the one node description module in the node list indicates that the content mounted on the one node is the 3D mesh, and an index of the mesh description module of the 3D mesh is 0. It is also indicated that haptic media files that may be indexed from the MPEG media are a first media file and a second media file in the MPEG media. It is also indicated that an accessor for accessing the first media file and an accessor for accessing the second media file are respectively the accessors described by the second accessor description module and the third accessor description module in the accessor list (accessors).
7. Mesh List (meshes): The mesh list is located at lines 85 to 102. The mesh list includes only one brace, indicating that the scene description document includes only one mesh description module (mesh), the 3D scene includes only one 3D mesh, and the one 3D mesh is the same as a 3D mesh with an index value of 0 in the node description module. In the one brace representing the mesh (mesh description module), "name":"Hapticexample_mesh" at line 87 indicates that the one 3D mesh is named "Hapticexample_mesh", which is only used as an identification marker; and "primitives" at line 88 indicates that the one 3D mesh has primitives. "attributes" at line 90, "mode" at line 93, and "MPEG_material_Haptic " at line 95 respectively indicate existence of attribute information (attribute), mode information (mode), and information of the MPEG haptic material (MPEG_material_Haptic). "TEXCOORD_0":0 at line 91 indicates that an accessor description module corresponding to the texture coordinate is a first accessor description module in the accessor list. "mode":0 at line 93 indicates that a topology of the one 3D mesh is a scattered structure. "MPEG_material_Haptic": {"index":0} at lines 95 to 97 indicates that the one 3D mesh corresponding to the one mesh description module carries an MPEG haptic material attribute and points to a more detailed lower-level haptic material array list (MPEG_material_Haptic). From the parsing perspective, the mesh list clarifies an actual data type and a topological type of the one 3D mesh.
8. Haptic material array list (MPEG_material_Haptic): The haptic material array list is located at lines 104 to 130. The haptic material array list (MPEG_material_Haptic) includes only one brace, indicating that the scene description document includes only one haptic material array (content enclosed in the one brace at lines 106 to 128). The one haptic material array defines three haptic material attributes (namely the stiffness, the temperature, and the vibration) through lines 107 to 113, lines 114 to 120, and lines 121 to 127, respectively. Each haptic material attribute includes two types of information: a texture array (texture) and a texture coordinate index. The description module corresponding to the stiffness is located at lines 107 to 113, where "index" at line 109 and its value define that the stiffness points to a first texture description module in the texture list; "texCoord" at line 110 defines that the stiffness uses a first texture coordinate set data packet as a coordinate reference for texture mapping on the haptic material attribute; "type":Low_resolution at line 112 defines that a type of the stiffness is the Low_resolution; and a length of a subsequently obtained haptic value of the stiffness is 8 bits. The description module corresponding to the temperature is located at lines 114 to 120, where "index" at line 116 and its value define that the temperature points to a second texture description module in the texture description list; and "type":Reference at line 119 defines that a type of a haptic material texture of the temperature is the Reference. The description module corresponding to the vibration is located at lines 121 to 127, where "index" at line 123 and its value define that the vibration points to a third texture description module (texture) in the texture description list; and "type" at line 107 and its value define that a type of a haptic material texture of the vibration is the Reference. From the parsing perspective, a texture type and source of a haptic material attribute included in an object may be determined based on the haptic material array list (MPEG_material_Haptic), and point to a more detailed lower-level texture description module.
9. Texture list (textures): The texture list is located at lines 132 to 145. The texture list includes three braces, indicating that the scene description document includes three texture description modules, which are respectively configured to describe texture information of the stiffness, the temperature, and the vibration. Texture description content of the stiffness and the temperature includes a sampler syntax element (sampler) and a texture map syntax element (source). Based on values of the sampler syntax element (sampler) and the texture map syntax element (source), a sampler description module and an access address of a texture map may be determined for the stiffness and the temperature. A source of the texture map corresponds to a lower-level texture map list (images).
10. Texture map list (images): The texture map list is located at lines 147 to 157. The texture map list includes three braces, which respectively correspond to access addresses of texture maps referenced in the texture description modules respectively corresponding to the stiffness, the temperature, and the vibration. Based on {"uri": "stiffnessTexture.png"} at lines 148 to 150, it may be determined that the access address of the texture map of the stiffness is stiffnessTexture.png. Based on {"uri": "temperatureTexture.png"} at lines 151 to 153, it may be determined that the access address of the texture map of the temperature is temperatureTexture.png. Based on {"uri": "Texture.png"} at lines 154 to 156, it may be determined that the access address of the texture map of the vibration is vibrationTexture.png.
11. Sampler list (samplers): The sampler list is located at lines 159 to 164. The sampler list includes one brace, indicating that the scene description document includes one sampler description module, and only one sampler is required to display the 3D scene, and description information of the one sampler may be determined based on "magFilter": 9729, "minFilter": 9987, "wrapS": 33648, and "wrapT": 33648 at lines 160 to 163.
12. Buffer List (buffers): The buffer list is located at lines 215 to 240. The buffer list includes three braces, indicating that the scene description document includes three buffer description modules, and only three buffers are required to display the 3D scene. Based on content in a first brace at lines 216 to 219 (a first buffer description module), it may be determined that a size of a first buffer is 1000, an address of a media file that needs to be stored is "AnimatedBody.bin", and the media file includes coordinate content of texture information that needs to be added to a specific 3D coordinate. Based on an MPEG circular buffer (MPEG_buffer_circular) included in a second brace at lines 220 to 229 (a second buffer description module), it may be determined that a second buffer is a circular buffer reconstructed using an MPEG extension. "media: 0" at line 225 indicates that a data source in the circular buffer is the first media file declared in the MPEG media (MPEG_media). "tracks":"#trackIndex=1" at line 226 indicates that a track whose index is 1 should be referenced when the haptic media encapsulation file is accessed. Herein, the track whose index is 1 is not limited, and may be a unique track of a haptic file encapsulated into a single track or a reference track of a haptic file encapsulated into a plurality of tracks. In addition, based on "count":3 at line 224, it may also be determined that the MPEG circular buffer has three storage stages, and based on "byteLength":2000 at line 221, it may also be determined that a byte length (capacity) of the MPEG circular buffer is 2000 bytes. Information declared by a third buffer description module is similar to that declared by the second buffer description module, and is not repeated herein again. From the parsing perspective, the buffer list enables the haptic media file declared in the MPEG media (MPEG_media) to correspond to a buffer, in other words, enables the buffer to reference a haptic media file that is previously declared but not used. It should be noted that the haptic media file referenced herein is an encapsulated file of an unprocessed haptic media file. The encapsulated file of the haptic media file needs to be processed by the MAF in order to extract information that may be directly used for rendering.
13. Buffer view list (bufferViews): The buffer view list is located at lines 197 to 213. The buffer view list includes three braces, indicating that the scene description document includes three buffer view description modules. Based on "buffer": 0 at line 199 in a first brace at lines 198 to 202 (a first buffer view description module), it may be determined that a buffer view corresponding to the first buffer view description module is a buffer view of a buffer corresponding to the first buffer description module in the buffer list. "byteLength": 1000 at line 200 and "byteOffset": 0 at line 201 declare that a data view range of the buffer view is the first 1000 bytes of the first buffer. Based on "buffer": 1 at line 204 in a second brace at lines 203 to 207 (a second buffer view description module), it may be determined that a buffer view corresponding to the second buffer view description module is a buffer view of a buffer corresponding to the second buffer description module in the buffer list. "byteLength": 2000 at line 205 and "byteOffset": 0 at line 206 declare that a data view range of the buffer view is the first 2000 bytes of the second buffer. Based on "buffer": 2 at line 209 in a third brace at lines 208 to 212 (a third buffer view description module), it may be determined that a buffer view corresponding to the third buffer view description module is a buffer view of a buffer corresponding to a third buffer description module in the buffer list. "byteLength": 4000 at line 210 and "byteOffset": 0 at line 211 declare that a data view range of the buffer view is the first 4000 bytes of a third buffer. From the parsing perspective, the buffer view list groups data of the media file, which is beneficial to refine definition of a subsequent accessor description module.
14. Accessor List (accessors): The accessor list is located at lines 166 to 195. Structurally similar to the buffer view list, the accessor list also includes three parallel braces, indicating that the 3D scene description document includes three accessor description modules (accessor), and three accessors are required to access the media data to display the 3D scene. "bufferView":0 at line 168 may indicate that an accessor corresponding to the first accessor description module is configured to access a first buffer view in the buffer view list. Additionally, based on "componentType": 5121 at line 169 and "type": "VEC2" at line 170, it may be determined that a data format stored in the accessor is a 2D vector composed of an 8-bit unsigned number. "count": 500 at line 171 indicates that there are 500 pieces of data that need to be accessed through the accessor, with each 8-bit unsigned number occupying 1 byte. Therefore, the accessor includes 1000-byte data, which complies with a rule in a buffer view description module with an index value of 0. In addition, both a second brace (the second accessor description module) and a third brace (the third accessor description module) include the MPEG time-varying accessor, indicating that these two accessors point to time-varying media defined by the MPEG. Based on "bufferView":1 at line 179, it may be determined that content in a first MPEG time-varying accessor points to a buffer view with an index value of 1, and it is also indicated that a value of a syntax element in the first MPEG time-varying accessor changes over time. Based on "bufferView":2 at line 190, it may be determined that content in a second MPEG time-varying accessor points to a buffer view with an index value of 2, and it is also indicated that a value of a syntax element in the second MPEG time-varying accessor changes over time. Both the second accessor description module and the third accessor description module may also declare a data type, an accessor type, and a data count through "componentType", "type", and "count". From the parsing perspective, the accessor list provides a complete definition of data required for the rendering, for example, missing data types in the buffer view and the buffer are defined in the corresponding accessor description modules.

### 2. Display engine that supports obtaining the haptic value of the haptic material attribute whose type is the Reference.

In a working process of a scene description framework for immersive media, main functions of the display engine include: parsing the scene description document to obtain a 3D scene rendering method; sending a media access instruction or a media data processing instruction to the MAF through the MAF API; sending a buffer management instruction to the buffer management module through the buffer API; and reading processed data from the buffer, and rendering and displaying a 3D scene and an object in the 3D scene based on the read data. Therefore, functions of a display engine supporting the haptic media file include: 1. parsing a scene description document including the haptic media and obtaining a corresponding 3D scene rendering method; 2. transferring a media access instruction or a media data processing instruction to the MAF through the MAF API, where the media access instruction or the media data processing instruction comes from a result of parsing the scene description document including the haptic media; 3. sending a buffer management instruction to the buffer management module through the buffer management API; and 4. reading decoded data of a processed haptic media file from the buffer, and rendering and displaying a 3D scene and a haptic media file in the 3D scene based on the read decoded data.

### 3. MAF API that supports obtaining the haptic value of the haptic material attribute whose type is the Reference.

In the working process of the scene description framework for the immersive media, the display engine may obtain the 3D scene rendering method by parsing the scene description document, and needs to transfer the 3D scene rendering method to the MAF or send an instruction to the MAF based on the 3D scene rendering method. A process for transferring the 3D scene rendering method to the MAF or sending the instruction to the MAF based on the 3D scene rendering method is implemented through the MAF API.

In some embodiments, the display engine may send the media access instruction or the media data processing instruction to the MAF through the MAF API. The instruction issued by the display engine comes from the result of parsing the scene description document including the attribute information of the haptic media. The instruction target haptic action may include an address of the media file, attribute information (a media type, a codec used, and the like) of the media file, a format requirement for processed haptic media data and other media data, and the like.

In some embodiments, the MAF may also request the media access instruction or the media data processing instruction from the display engine through the MAF API.

### 4. MAF that supports obtaining the haptic value of the haptic material attribute whose type is the Reference.

In the working process of the scene description framework for the immersive media, after receiving the media access instruction or the media data processing instruction that is issued by the display engine through the MAF API, the MAF executes the media access instruction or the media data processing instruction that is issued by the display engine through the MAF API. For example, the MAF obtains the haptic media file, establishes an appropriate pipeline for the haptic media file to convert data in the haptic media file into a format specified in the instruction, and allocates an appropriate buffer configured for haptic media data and other media data that are processed into the format specified in the scene description document.

In some embodiments, that the MAF obtains the haptic media file includes: downloading the haptic media file from the server using a network transmission service.

In some embodiments, that the MAF obtains the haptic media file includes: reading the haptic media file from local storage space.

After obtaining the haptic media file, the MAF needs to process the haptic media file. Processing procedures of different types of media files are significantly different. To support a wide variety of media types and consider efficiency of the MAF, a plurality types of pipelines are designed in the MAF, and only a pipeline that matches a media type is enabled during the media file processing.

### 5. Buffer API that supports obtaining the haptic value of the haptic material attribute whose type is the Reference.

After processing the data in the haptic media file, the MAF also needs to deliver processed data to the display engine in a standardized arrangement structure. Therefore, the processed data needs to be correctly stored in the buffer, which is completed by the buffer management module. However, the buffer management module needs to obtain the buffer management instruction from the MAF or the display engine through the buffer API.

In some embodiments, the MAF may send the buffer management instruction to the buffer management module through the buffer API. The buffer management instruction is sent by the display engine to the MAF through the MAF API.

In some embodiments, the display engine may send the buffer management instruction to the buffer management module through the buffer API.

That is, the buffer management module may communicate with the MAF through the buffer API and may also communicate with the display engine through the buffer API, so as to manage the buffer. When the buffer management module communicates with the MAF through the buffer API, the display engine needs to first send the buffer management instruction to the MAF through the MAF API, and the MAF then sends the buffer management instruction to the buffer management module through the buffer API. When the buffer management module communicates with the display engine through the buffer API, the display engine only needs to generate the buffer management instruction based on buffer management information parsed from the scene description document, and sends the buffer management instruction to the buffer management module through the buffer API.

In some embodiments, the buffer management instruction may include at least one of a buffer creation instruction, a buffer updating instruction, and a buffer releasing instruction.

### 6. Buffer management module that supports obtaining the haptic value of the haptic material attribute whose type is the Reference

In the working process of the scene description framework for the immersive media, after the MAF processes the data in the haptic media file through the pipeline, the processed data needs to be delivered to the display engine in the standardized arrangement structure. Therefore, the processed data needs to be correctly stored in the buffer, which is completed by the buffer management module.

The buffer management module implements management operations such as buffer creation, updating, and releasing, and instructions for these operations are received through the buffer API. A buffer management rule is recorded in the scene description document, parsed by the display engine, and finally issued to the buffer management module by the display engine or the MAF. After being processed by the MAF, the media file needs to be stored in an appropriate buffer and then retrieved by the display engine. The buffer management is to manage the buffer well, such that the buffer matches a format of processed media data without disrupting the processed media data. A specific method for designing the media management module should be based on designs of the display engine and the MAF.

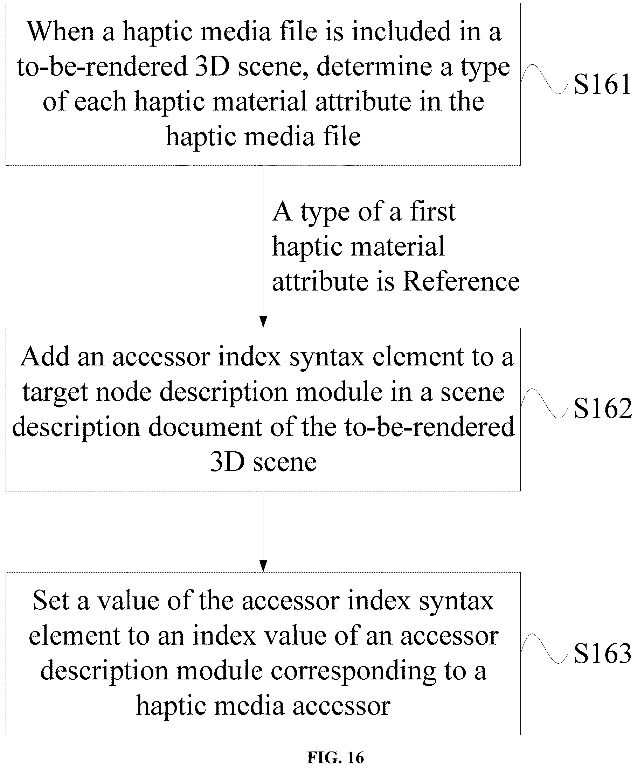

Based on the above content, some embodiments of the present disclosure provide a method for generating a scene description document. Referring to FIG. 16, the method for generating a scene description document includes following steps S161 to S165:
S161: When a haptic media file is included in a 3D-scene-to-be-rendered, determine a type of each haptic material attribute in the haptic media file.

The haptic material attribute in the embodiments of the present disclosure may include at least one of stiffness, friction, haptic texture (Vibrotactile texture), temperature, vibration, and custom. The type of the haptic material attribute includes High_resolution, Low_resolution, and Reference.

It should be noted that types of different haptic material attributes in the haptic media file may be different, so the haptic media file may include a plurality of types of haptic material attributes. The types of the haptic material attributes in the haptic media file needs to be determined one by one.

In the above-mentioned step S161, if a type of a first haptic material attribute in the haptic media file is the Reference, following steps S162 and S163 are performed:
S162: Add an accessor index syntax element (accessor) to a target node description module in the scene description document of the 3D-scene-to-be-rendered.

The target node description module is a node description module corresponding to a node including a target 3D mesh that carries the first haptic material attribute.

In some embodiments, the adding an accessor index syntax element to a target node description module in the scene description document of the 3D-scene-to-be-rendered in the above-mentioned step S162 includes:
adding the accessor index syntax element to MPEG haptic (MPEG _haptic) of the target node description module in the scene description document of the 3D-scene-to-be-rendered.

In some embodiments, an implementation of adding the accessor index syntax element to the MPEG haptic of the target node description module in the scene description document of the 3D-scene-to-be-rendered includes following steps 1621 to 1623:
Step 1621: Add a media reference list (Media_reference) to the MPEG haptic of the target node description module.

Step 1622: Add a media reference array corresponding to the haptic media file to the media reference list.

Step 1623: Add the accessor index syntax element to the media reference array corresponding to the haptic media file.

For example, when an index value of a mesh description module corresponding to the target 3D mesh carrying the first haptic material attribute is 0, and the node corresponding to the target node description module is named Hapticexample_node, after the accessor index syntax element is added to the target node description module based on the above-mentioned steps 1621 to 1623, the target node description module may be as follows:

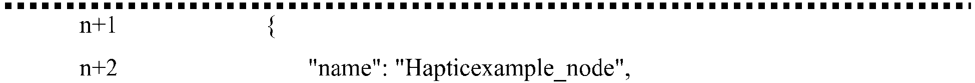

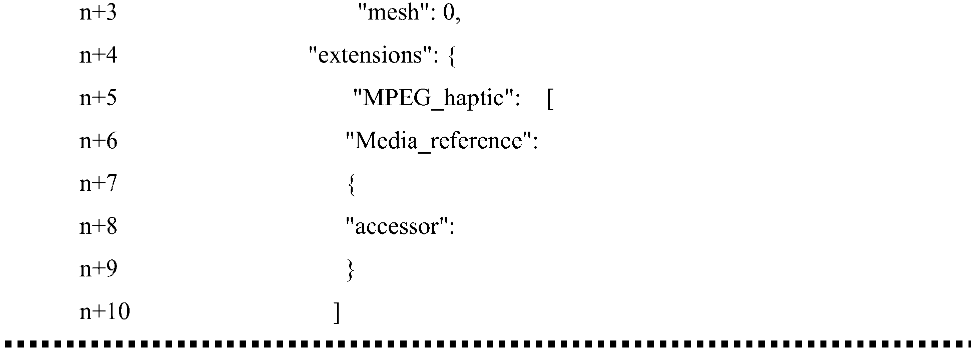

Content at lines n+6 to n+9 represents the media reference list added to the MPEG haptic of the target node description module, content at lines n+7 to n+9 represents the media reference array that corresponds to the haptic media file and added to the media reference list, and content at line n+8 represents the accessor index syntax element added to the media reference array corresponding to the haptic media file.

It should be noted that the 3D-scene-to-be-rendered may include a plurality of haptic media files, and the node corresponding to the target node description module may include a 3D mesh carrying a haptic material attribute whose type is the Reference for a plurality of haptic media files. When the node corresponding to the target node description module includes the 3D mesh carrying the haptic material attribute whose type is the Reference for the plurality of haptic media files, a media reference array corresponding to each haptic media file needs to be added to the media reference list of the MPEG haptic.

S163: Set a value of the accessor index syntax element to an index value of an accessor description module corresponding to a haptic media accessor.

The haptic media accessor is an accessor for accessing decoded data of the haptic media file.

As described in the above embodiments, if the index value of the accessor description module corresponding to the haptic media accessor for accessing the haptic media file is 2, after the accessor index syntax element (accessor) is added to the media reference array, and the value of the accessor index syntax element is set to the index value of the accessor description module corresponding to the haptic media accessor, the target node description module may be as follows: 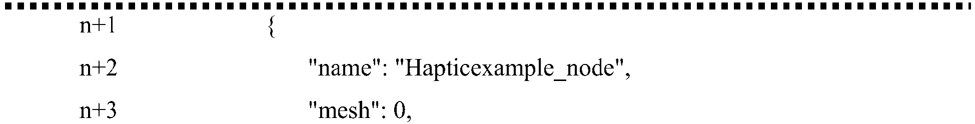 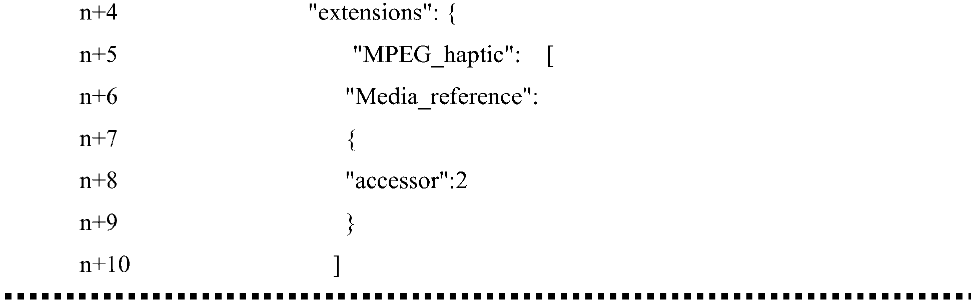 "accessor":2 at line n+8 represents the accessor index syntax element added to the media reference array and the value of the accessor index syntax element. "2" also represents the index value of the accessor description module corresponding to the haptic media accessor for accessing the haptic media file.

According to the method for generating a scene description document provided in the embodiments of the present disclosure, when the haptic media file is included in the 3D-scene-to-be-rendered and the type of the first haptic material attribute in the haptic media file is the Reference, the accessor index syntax element is first added to the target node description module corresponding to the node including the target 3D mesh that carries the first haptic material attribute, and the value of the accessor index syntax element is set to the index value of the accessor description module corresponding to the haptic media accessor for accessing the decoded data of the haptic media file. According to the method for generating a scene description document provided in the embodiments of the present disclosure, when the haptic media file is included in the 3D-scene-to-be-rendered and the type of the first haptic material attribute in the haptic media file is the Reference, the accessor index syntax element is first added to the target node description module, and the value of the accessor index syntax element is set to the index value of the accessor description module corresponding to the haptic media accessor for accessing the decoded data of the haptic media file. Therefore, when the 3D-scene-to-be-rendered is rendered based on the scene description document, the haptic media accessor for accessing the decoded data of the haptic media file may be determined based on the accessor index syntax element and its value. Furthermore, a haptic value of the first haptic material attribute is read from the decoded data of the haptic media file based on the haptic media accessor. Therefore, the embodiments of the present disclosure may support obtaining a haptic value of a haptic material attribute whose type is the Reference, solving a problem of being unable to obtain the haptic value of the haptic material attribute whose type is the Reference in related technologies.

In some embodiments, the method for generating a scene description document further includes following steps 1 and 2:
Step 1: Add a haptic media identification syntax element (haptic_id) to the media reference array corresponding to the haptic media file.

Step 2: Set a value of the haptic media identification syntax element to an index value of a target media description module.

The target media description module is a media description module corresponding to the haptic media file in a media list of MPEG media in the scene description document.

According to the above embodiments, the haptic media identification syntax element is also added to the media reference array, and the value of the haptic media identification syntax element is set to the index value of the target media description module corresponding to the haptic media file. Therefore, according to the above embodiments, when a plurality of haptic media files are included in a 3D scene, different haptic media files may be indexed based on the haptic media identification syntax element and its value, thereby supporting addition of a plurality of haptic media files in the 3D scene.

For example, when the index value of the target media description module corresponding to the haptic media file is 0, after the haptic media identification syntax element is added to the media reference array, and the value of the haptic media identification syntax element is set to the index value of the target media description module, the media reference array corresponding to the haptic media file may be as follows:

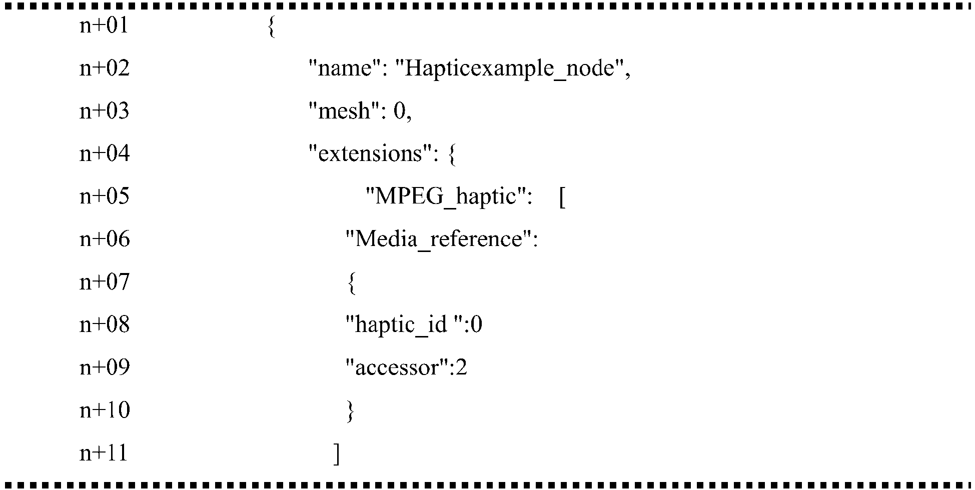

In some embodiments, before setting the value of the accessor index syntax element to the index value of the accessor description module corresponding to the accessor for accessing the decoded data of the haptic media file in the above-mentioned step S163, the method for generating a scene description document provided in the embodiments of the present disclosure further includes following steps a to c:
Step a: Add a buffer description module corresponding to a haptic media buffer to a buffer list (buffers) of the scene description document.

The haptic media buffer is a buffer configured for caching the decoded data of the haptic media file.

In some embodiments, the adding a buffer description module corresponding to a haptic media buffer to a buffer list of the scene description document in the above a includes at least one of following steps a1 to a5:
Step a1: Add a byte length syntax element (byteLength) to the buffer description module corresponding to the haptic media buffer, and set a value of the byte length syntax element to a byte length of the haptic media file.

Step a2: Add an MPEG circular buffer to the buffer description module corresponding to the haptic media buffer.

Step a3: Add a count syntax element (count) to the MPEG circular buffer, and set a value of the count syntax element based on a pre-configured quantity of storage stages of the MPEG circular buffer.

Step a4: Add a media index syntax element (media) to the MPEG circular buffer, and set a value of the media index syntax element based on an index value of the media description module corresponding to the haptic media file.

Step a5: Add a track index syntax element (tracks) to the MPEG circular buffer, and set a value of the track index syntax element based on a track index value of data stored in the MPEG circular buffer.

For example, if the adding a buffer description module corresponding to a haptic media buffer to a buffer list of the scene description document includes all the above-mentioned steps a1 to a5, the byte length of the haptic media file is 8000, the pre-configured quantity of storage stages of the MPEG circular buffer is 5, the index value of the media description module corresponding to the haptic media file is 0, and the track index value of the data stored in the MPEG circular buffer is 1, the buffer description module that corresponds to the haptic media buffer and is added to the buffer list of the scene description document may be as follows:

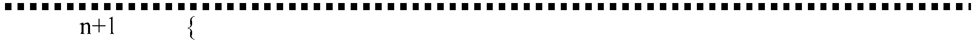

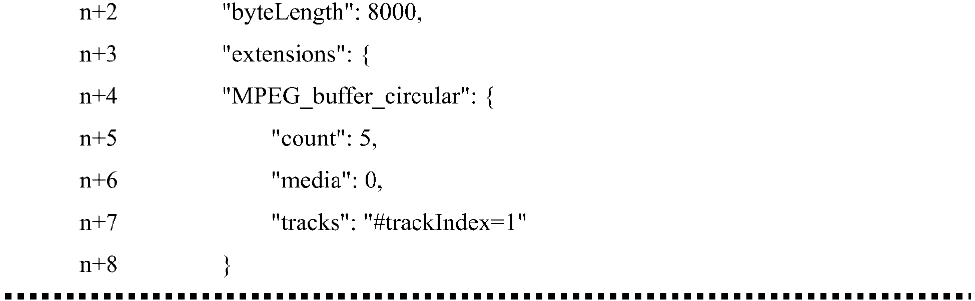

Step b: Add a buffer view description module corresponding to a buffer view of the haptic media buffer to a buffer view list (bufferViews) of the scene description document.

In some embodiments, the adding a buffer view description module corresponding to a buffer view of the haptic media buffer to a buffer view list of the scene description document in the above b includes at least one of following steps b1 to b3:
Step b1: Add a buffer index syntax element (buffer) to the buffer view description module corresponding to the buffer view of the haptic media buffer, and set a value of the buffer index syntax element based on an index value of the buffer description module corresponding to the haptic media buffer.

Step b2: Add a byte length syntax element (byteLength) to the buffer view description module corresponding to the buffer view of the haptic media buffer, and set a value of the byte length syntax element based on a capacity of the buffer view.

Step b3: Add an offset syntax element to the buffer view description module corresponding to the buffer view of the haptic media buffer, and set a value of the offset syntax element based on an offset of data stored in the buffer view.

For example, if the adding a buffer view description module corresponding to a buffer view of the haptic media buffer to a buffer view list (bufferViews) of the scene description document includes all the above-mentioned steps b1 to b3, the index value of the buffer description module corresponding to the haptic media buffer is 1, a capacity of the haptic media buffer is 8000, and the haptic media buffer includes only one buffer view, the buffer view description module that corresponds to the buffer view of the haptic media buffer and is added to the buffer view list of the scene description document may be as follows:

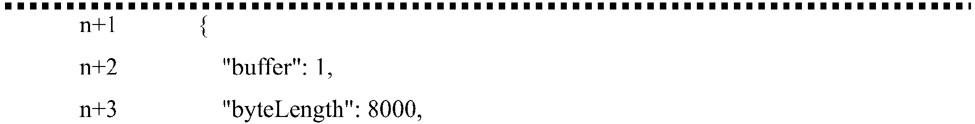

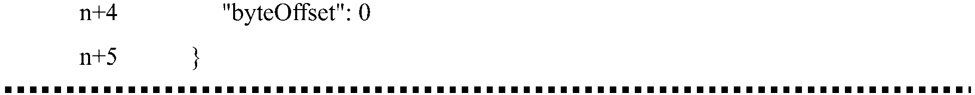

Step c: Add an accessor description module corresponding to a haptic media accessor for accessing the data in the buffer view of the haptic media buffer to an accessor list (accessors) of the scene description document.

Since the data in the buffer view of the haptic media buffer is the decoded data of the haptic media file, an accessor for accessing the data in the buffer view of the haptic media buffer is an accessor for accessing the decoded data of the haptic media file.

In some embodiments, the adding an accessor description module corresponding to the haptic media accessor for accessing the data in the buffer view of the haptic media buffer to an accessor list (accessors) of the scene description document in the above-mentioned step c includes at least one of following steps c1 to c6:
Step c1: Add a data type syntax element (componentType) to the accessor description module, and set a value of the data type syntax element based on a data type of the haptic value of the first haptic material attribute.

Step c2: Add an accessor type syntax element (type) to the accessor description module, and set a value of the accessor type syntax element based on a pre-configured accessor type.

Step c3: Add a count syntax element (count) to the accessor description module, and set a value of the count syntax element based on a quantity of haptic values of the first haptic material attribute.

Step c4: Add an MPEG time-varying accessor (MPEG_accessor_timed) to the accessor description module.

Step c5: Add a buffer view index syntax element (bufferView) to the MPEG time-varying accessor, and set a value of the buffer view index syntax element based on an index value of the buffer view description module corresponding to the buffer view of the haptic media buffer.

Step c6: Add a time-varying syntax element to the MPEG time-varying accessor, and set a value of the time-varying syntax element based on whether a value of a syntax element in the corresponding accessor changes over time.

For example, if the adding an accessor description module corresponding to the haptic media accessor for accessing the data in the buffer view of the haptic media buffer to an accessor list (accessors) of the scene description document includes all the above-mentioned steps c1 to c6, the data type of the haptic value of the first haptic material attribute is 5123, the pre-configured accessor type is SCALAR, the quantity of haptic values of the first haptic material attribute is 3000, the index value of the buffer view description module corresponding to the buffer view of the haptic media buffer is 1, and the value of the syntax element in the corresponding accessor changes over time, the accessor description module that corresponds to the haptic media accessor for accessing the data in the buffer view of the haptic media buffer and is added to the accessor list (accessors) of the scene description document may be as follows:

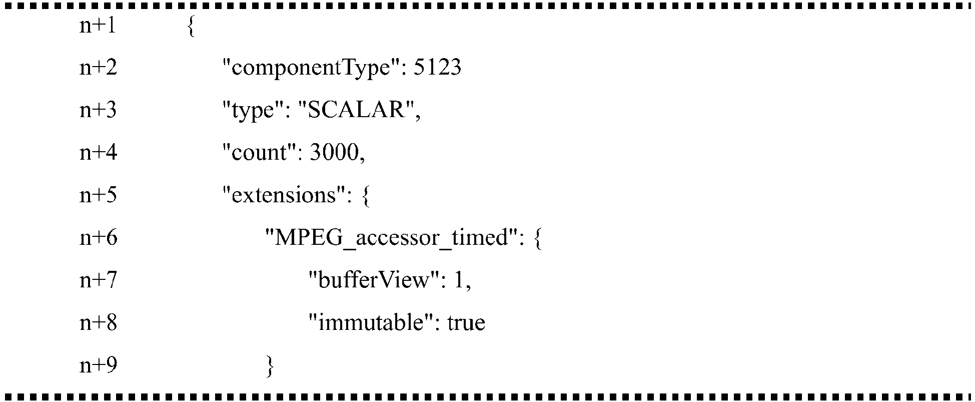

In some embodiments, before setting the value of the haptic media identification syntax element to the index value of the target media description module, the method for generating a scene description document further includes:
adding the target media description module corresponding to the haptic media file to the media list (media) of the MPEG media (MPEG_media) in the scene description document.

In some embodiments, the adding the target media description module corresponding to the haptic media file to the media list of the MPEG media in the scene description document includes at least one of following steps 11 to 19:
Step 11: Add a media name syntax element (name) to the target media description module, and set a value of the media name syntax element based on a name of the haptic media file.

Step 12: Add an autoplay syntax element (autoplay) to the target media description module, and set a value of the autoplay syntax element in accordance with a determination regarding whether the haptic media file needs to be automatically played.

Step 13: Add a loop syntax element (loop) to the target media description module, and set a value of the loop syntax element based on whether the haptic media file needs to be cyclically played.

Step 14: Add an alternative item (alternatives) to the target media description module.

Step 15: Add a media type syntax element (mimeType) to the alternative item, and set a value of the media type syntax element based on data included in the haptic media file.

In some embodiments, the setting a value of the media type syntax element based on data included in the haptic media file includes:
when the haptic media file includes audio data and/or video data, setting the value of the media type syntax element in the alternative item of the target media description module to a first preset value; or
when the haptic media file does not include audio data and/or video data, setting the value of the media type syntax element in the alternative item of the target media description module to a second preset value.

For example, the first preset value may be video/mp4, and the first preset value may be haptics/mp4. That is, when the haptic media file includes only haptic data, the value of the media type syntax element is set to the haptics/mp4. When the haptic media file not only includes the haptic data, but also includes the audio data and/or the video data, the value of the media type syntax element is set to the video/mp4.

When the haptic media file not only includes the haptic data, but also includes the audio data and/or the video data, the value of the media type syntax element is set to the video/mp4, which may be backward compatible with an existing .mp4 media file.

Step 16: Add an access address syntax element (uri) to the alternative item, and set a value of the access address syntax element to an access address of the haptic media file.

Step 17: Add a track array (tracks) to the alternative item.

Step 18: Add a track index syntax element (track) to the track array, and set a value of the track index syntax element in the track array in the alternative item of the target media description module to an index value of each bitstream track of the haptic media file.

That is, when encoded haptic media is referenced by the scene description document as an item in the MPEG_media.alternative.tracks, and the referenced item complies with a provision on the track in an ISOBMFF in an ISO/IEC 23090-32 standard, for a haptic media file encapsulated into a single track, a track referenced in the MPEG_media is a single track into which the haptic media is encapsulated. For example, if the haptic media is encapsulated into one MIHS track by using the ISOBMFF, the one MIHS track is referenced in the MPEG_media. For a haptic media file encapsulated into a plurality of tracks, a plurality of tracks into which the haptic media is encapsulated are referenced in the MPEG_media. For example, a non-zero value is defined in advance in TrackHeaderBox of configuration information altemate_group in an encapsulated file to indicate that the haptic media is encapsulated into a plurality of MIHS tracks, which are also indexed by the MPEG_media.

Step 19: Add a codec parameter syntax element (codec) to the track array, and set a value of the codec parameter syntax element based on an encoding parameter of data in each bitstream track of the haptic media file and a provision in a standard for carriage of haptics data in the ISO/IEC 23090-32 standard.

A codec parameter of media included in the track array (tracks) is defined in IETF RFC 6381. When the track array includes different types of codecs (for example, AdaptationSet includes representations for different codecs), the codec parameter syntax element may be represented by a list of codec values separated by a comma.

When media data is the haptic data, a relevant detailed provision in the standard for carriage of haptics data in the ISO/IEC 23090-32 standard should be followed. For example, when the haptic data is encapsulated by using an ISMBOFF, a first group of elements in the codec parameter syntax element represents a code of a codec in an ISO/IEC 23090-31 standard. A format of the value of the codec parameter syntax element is 'codec=mih1.oo', where "mih1" represents a type of data format description for encapsulating the haptic data in the ISOBMFF. This value is not unique and may be replaced by another sample format name that complies with ISOBMFF encapsulation. "oo" represents an object type indication value defined on an "Object Type" page at a website of the MP4 registration authority.

For example, if the adding the target media description module corresponding to the haptic media file to the media list of the MPEG media in the scene description document includes all the above-mentioned steps 11 to 19, the name of the haptic media file is Hapticexample, the haptic media file needs to be automatically and cyclically played, the haptic media file does not include the audio data and/or the video data, the access address of the haptic media file is www.example.com/Hapticexample1.mp4, the haptic media file is a single-track encapsulated file, and the index value of the bitstream track is 1, the target media description module may be as follows:

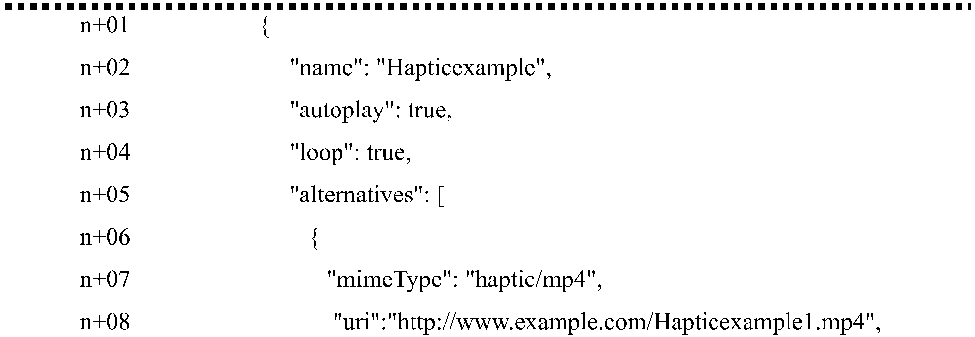

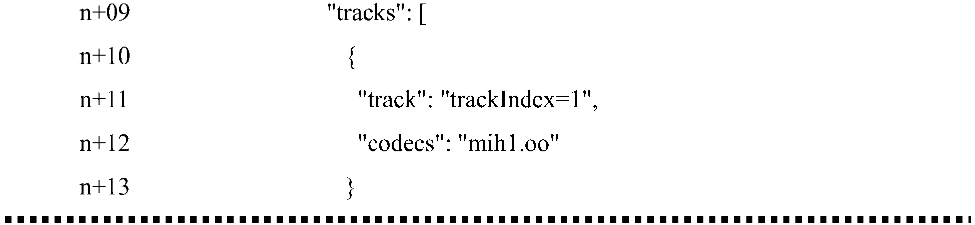

In some embodiments, the method for generating a scene description document further includes:
adding a target scene description module corresponding to the 3D-scene-to-be-rendered to a scene list (scenes) of the scene description document, and adding an index value of a node description module corresponding to each node in the scene-to-be-rendered to a node index list (nodes) of the target scene description module.

For example, if the scene-to-be-rendered includes two nodes, and index values of node description modules corresponding to the two nodes are 0 and 1 respectively, the target scene description module may be as follows:

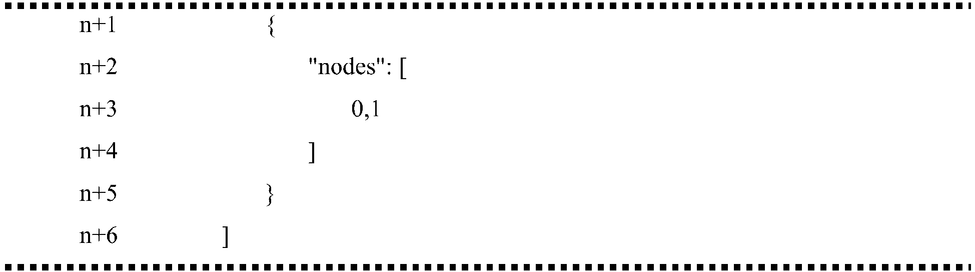

In some embodiments, the method for generating a scene description document further includes:
adding the node description module corresponding to each node in the scene-to-be-rendered to a node list (nodes) of the scene description document, and adding an index value of a mesh description module corresponding to a 3D mesh in each node to a mesh index list of each node description module.

It should be noted that when the node description module corresponding to each node in the scene-to-be-rendered is added to the node list of the scene description document, it is necessary to divide nodes in the scene-to-be-rendered into three categories based on whether a 3D mesh carrying a haptic material attribute is included and a type of the carried haptic material attribute. For a node that does not include the 3D mesh carrying the haptic material attribute, a corresponding node description module only needs to add the index value of the mesh description module corresponding to the 3D mesh in each node to the mesh index list of each node description module. For a node that includes a 3D mesh carrying a haptic material attribute whose type is not the Reference (the High_resolution or the Low_resolution), it is necessary to further add the MPEG haptic (MPEG_haptic) to a corresponding node description module. For a node that includes the 3D mesh carrying the haptic material attribute whose type is the Reference, a method for generating a corresponding node description module is similar to a method for generating the target node description module in the above embodiments, and details are not described herein again.

For example, if a node does not include the 3D mesh carrying the haptic material attribute, the node is named Hapticexample_node1, and the node includes only one 3D mesh corresponding to a mesh description module whose index value is 2, a node description module corresponding to the node may be as follows:

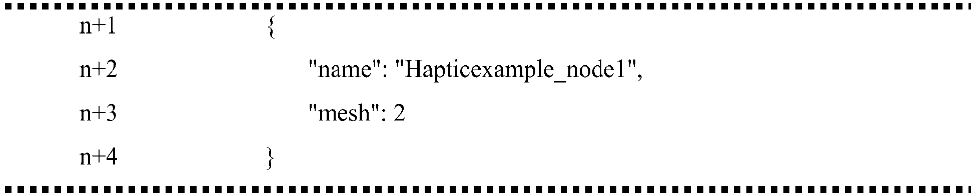

In some embodiments, the method for generating a scene description document further includes: adding the mesh description module corresponding to the target 3D mesh to a mesh list of the scene description document.

When the mesh description module corresponding to the 3D mesh mounted on each node in the scene-to-be-rendered is added to the scene list of the scene description document, it is necessary to divide 3D meshes in the scene-to-be-rendered into two categories based on whether the haptic material attribute is carried: a 3D mesh without carrying the haptic material attribute and a 3D mesh carrying the haptic material attribute.

For the 3D mesh without carrying the haptic material attribute, a corresponding mesh description module is added to the mesh list of the scene description document, which includes at least one of following steps d1 to d5:
Step d1: Add a mesh name syntax element (name) to the mesh description module corresponding to the 3D mesh, and set a value of the mesh name syntax element based on a name of the 3D mesh.

Step d2: Add an attribute (primitives) to the mesh description module corresponding to the 3D mesh.

Step d3: Add a primitive (attributes) to the attribute.

Step d4: Add a texture coordinate syntax element (TEXCOORD_n) to the primitive, and set a value of the texture coordinate syntax element to an index value of an accessor description module corresponding to a texture coordinate accessor.

The texture coordinate accessor is an accessor for accessing a texture coordinate of the 3D mesh.

Step d5: Add a mode syntax element (mode) to the mesh description module corresponding to the 3D mesh, and set a value of the mode syntax element based on a topology type of the 3D mesh.

For example, if the adding the mesh description module corresponding to the target 3D mesh to a mesh list of the scene description document includes all the above-mentioned steps d1 to d5, a 3D mesh does not carry the haptic material attribute, the 3D mesh is named example_mesh, and a topology of the 3D mesh is scattered, a mesh description module that corresponds to the 3D mesh and is added to the mesh list of the scene description document may be as follows:

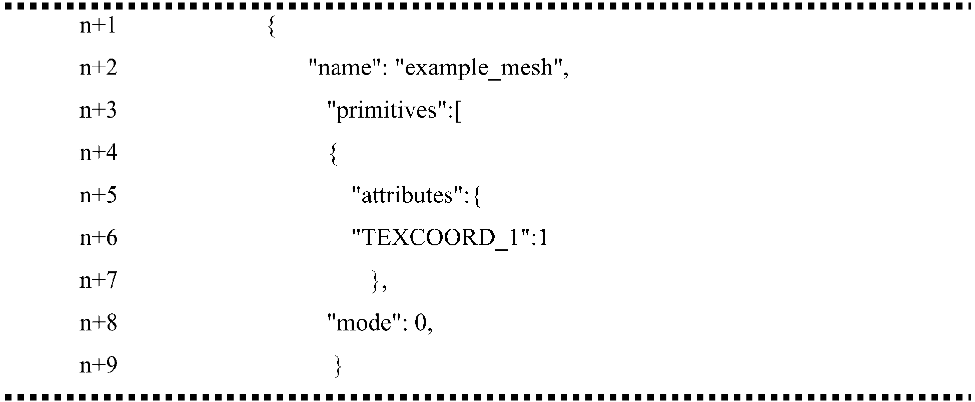

For the 3D mesh carrying the haptic material attribute (including the target 3D mesh carrying the first haptic material attribute), a corresponding mesh description module is added to the mesh list of the scene description document, which includes at least one of the above-mentioned steps d1 to d5 and following steps d6 and d7:
Step d6: Add an MPEG haptic material (MPEG_material_Haptic) to the mesh description module corresponding to the 3D mesh.

Step d7: Add an array index syntax element (index) to the MPEG haptic material, and set a value of the array index syntax element to an index value of a haptic material attribute array of the 3D mesh.

For example, if the adding the mesh description module corresponding to the target 3D mesh to a mesh list of the scene description document includes all the above-mentioned steps d1 to d7, a 3D mesh carries the haptic material attribute, the 3D mesh is named Hapticexample_mesh, and a topology of the 3D mesh is scattered, an index value of a haptic material attribute array of the 3D mesh is 2, a mesh description module that corresponds to the 3D mesh and is added to the mesh list of the scene description document may be as follows:

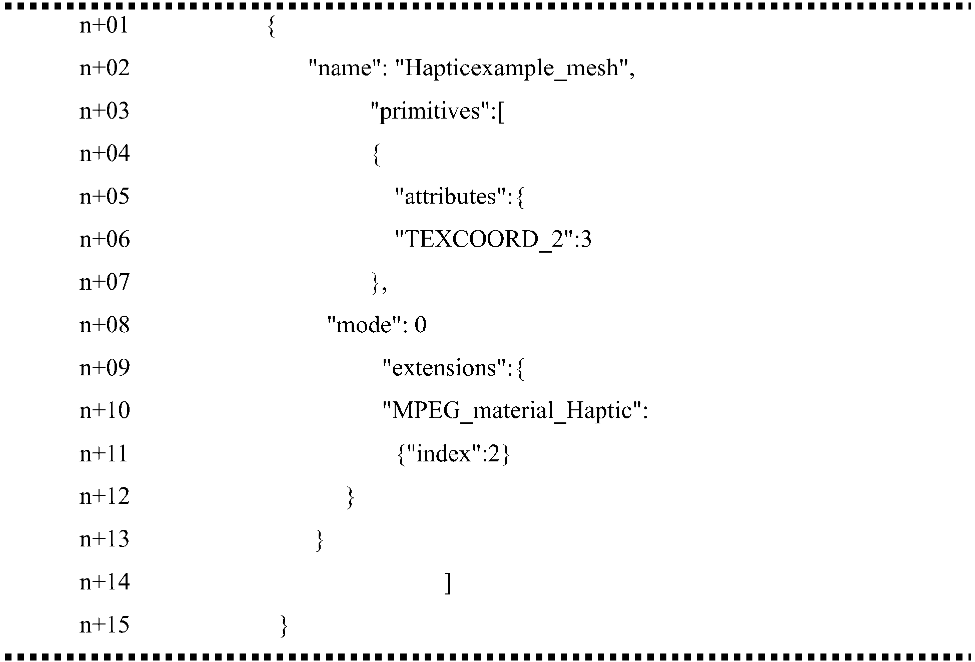

In some embodiments, before setting the value of the texture coordinate syntax element (TEXCOORD_n) to the index value of the accessor description module corresponding to the texture coordinate accessor, the method for generating a scene description document provided in the embodiments of the present disclosure further includes following steps e to g:
Step e: Add a buffer description module corresponding to a texture coordinate buffer to the buffer list (buffers) of the scene description document.

The texture coordinate buffer is a buffer configured for caching a texture coordinate of the target 3D mesh.

In some embodiments, the adding a buffer description module corresponding to a texture coordinate buffer to the buffer list of the scene description document in the above-mentioned step e includes at least one of following steps e1 and e2:
Step e1: Add a byte length syntax element (byteLength) to the buffer description module corresponding to the texture coordinate buffer, and set a value of the byte length syntax element to a byte length of the texture coordinate of the target 3D mesh.

Step e2: Add a texture coordinate access address syntax element (uri) to the buffer description module corresponding to the texture coordinate buffer, and set a value of the texture coordinate access address syntax element to an access address of the texture coordinate of the target 3D mesh.

For example, if the adding a buffer description module corresponding to a texture coordinate buffer to the buffer list (buffers) of the scene description document includes all the above-mentioned steps e1 and e2, the byte length of the texture coordinate of the target 3D mesh is 1000, and the access address of the texture coordinate of the target 3D mesh is AnimatedBody.bin, the buffer description module that corresponds to the texture coordinate buffer and is added to the buffer list of the scene description document may be as follows:

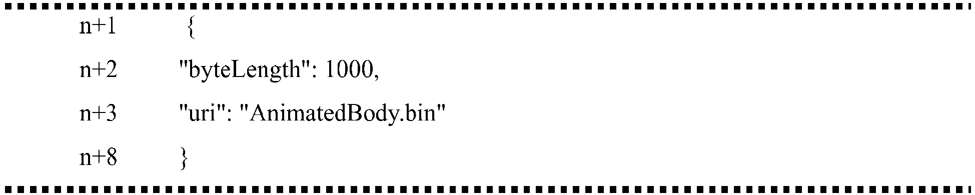

As shown above, a greatest difference between the buffer description module corresponding to the texture coordinate buffer and the buffer description module corresponding to the haptic media buffer is that in the buffer description module corresponding to the texture coordinate buffer, a media file declared in the MPEG media is no longer indexed, but the access address of the texture coordinate is directly added, such that the texture coordinate is accessed based on the access address of the texture coordinate.

Step f: Add a buffer view description module corresponding to a buffer view of the texture coordinate buffer to the buffer view list (bufferViews) of the scene description document.

In some embodiments, the adding a buffer view description module corresponding to a buffer view of the texture coordinate buffer to the buffer view list of the scene description document in the above-mentioned step f includes at least one of following steps f1 to f3:
Step f1: Add a buffer index syntax element (buffer) to the buffer view description module corresponding to the buffer view of the texture coordinate buffer, and set a value of the buffer index syntax element based on an index value of the buffer description module corresponding to the texture coordinate buffer.

Step f2: Add a byte length syntax element (byteLength) to the buffer view description module corresponding to the buffer view of the texture coordinate buffer, and set a value of the byte length syntax element based on a capacity of the buffer view.

Step f3: Add an offset syntax element to the buffer view description module corresponding to the buffer view of the texture coordinate buffer, and set a value of the offset syntax element based on an offset of data stored in the buffer view.

For example, if the adding a buffer view description module corresponding to a buffer view of the texture coordinate buffer to the buffer view list (bufferViews) of the scene description document includes all the above-mentioned steps f1 to f3, the index value of the buffer description module corresponding to the texture coordinate buffer is 0, a capacity of the texture coordinate buffer is 4000, and the texture coordinate buffer includes only one buffer view, the buffer view description module that corresponds to the buffer view of the texture coordinate buffer and is added to the buffer view list of the scene description document may be as follows:

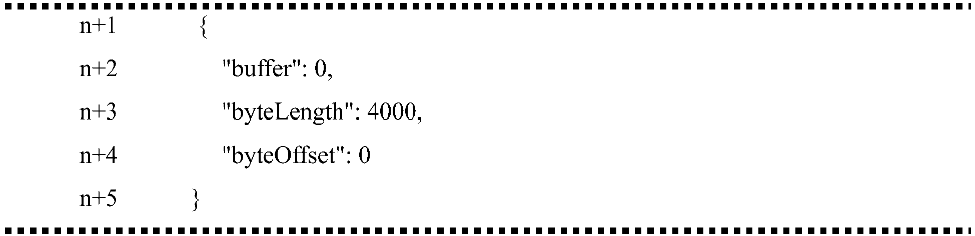

Step g: Add an accessor description module corresponding to an accessor for accessing the haptic value of the first haptic material attribute from the buffer view of the texture coordinate buffer to the accessor list (accessors) of the scene description document.

In some embodiments, the adding an accessor description module corresponding to an accessor for accessing data in the buffer view of the texture coordinate buffer to the accessor list (accessors) of the scene description document in the above-mentioned step g includes at least one of following steps g1 to g4:
Step g1: Add a buffer view index syntax element (bufferView) to the accessor description module, and set a value of the buffer view index syntax element based on an index value of the buffer view description module corresponding to the buffer view of the texture coordinate buffer.

Step g2: Add a data type syntax element (componentType) to the accessor description module, and set a value of the data type syntax element based on the data type of the haptic value of the first haptic material attribute.

Step g3: Add an accessor type syntax element (type) to the accessor description module, and set a value of the accessor type syntax element based on a pre-configured accessor type.

Step g4: Add a count syntax element (count) to the accessor description module, and set a value of the count syntax element based on the quantity of haptic values of the first haptic material attribute.

For example, if the adding an accessor description module corresponding to an accessor for accessing the haptic value of the first haptic material attribute from the buffer view of the texture coordinate buffer to the accessor list of the scene description document includes all the above-mentioned steps g1 to g4, a data type of the texture coordinate of the target 3D mesh is 5121, the pre-configured accessor type is VEC2, a quantity of texture coordinates of the target 3D mesh is 800, and the index value of the buffer view description module corresponding to the buffer view of the texture coordinate buffer is 0, the accessor description module that corresponds to the accessor for accessing the haptic value of the first haptic material attribute from the buffer view of the texture coordinate buffer and is added to the accessor list of the scene description document may be as follows:

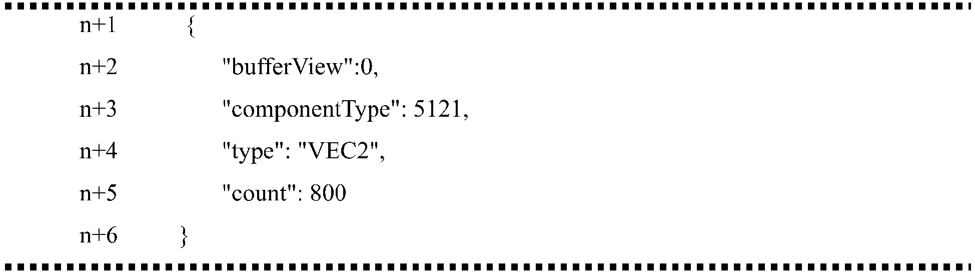

In some embodiments, before setting the value of the array index syntax element to an index value of a haptic material attribute array of the target 3D mesh, the method for generating a scene description document provided in the embodiments of the present disclosure further includes following steps h to k:
Step h: Add a haptic material array list (MPEG_material_Haptic) to the scene description document.

Step j: Add a haptic material attribute array of each 3D mesh carrying the haptic material attribute (including the target 3D mesh carrying the first haptic material attribute) to the haptic material array list.

The haptic material attribute array of each 3D mesh includes a haptic material attribute description module corresponding to each haptic material attribute carried by each 3D mesh. A haptic material attribute description module corresponding to any haptic material attribute includes: a texture array (texture) and an attribute type syntax element (type). The texture array includes a texture index syntax element (index) and a texture coordinate index syntax element (texCoord).

The haptic material attribute array of each 3D mesh includes the haptic material attribute description module corresponding to each haptic material attribute carried by each 3D mesh. The haptic material attribute description module corresponding to the any haptic material attribute includes: the texture array and the attribute type syntax element. The texture array includes the texture index syntax element and the texture coordinate index syntax element. Therefore, the adding a haptic material attribute array of each 3D mesh carrying the haptic material attribute to the haptic material array list in the above-mentioned step j includes following steps j1 to j3 to generate the haptic material attribute array list (MPEG _material_Haptic) of the scene description document:
Step j1: Add the haptic material attribute description module corresponding to each haptic material attribute carried by each 3D mesh to the haptic material attribute array of each 3D mesh.

Step j2: Add the texture array (texture) and the attribute type syntax element (type) to each haptic material attribute description module.

Step j3: Add the texture index syntax element and the texture coordinate index syntax element (texCoord) to each texture array.

Step i: Set a value of the texture index syntax element (index) in the texture array of the haptic material attribute description module corresponding to each haptic material attribute to an index value of a texture description module corresponding to each haptic material attribute

Step j: Set a value of the texture coordinate index syntax element (texCoord) in the texture array of the haptic material attribute description module corresponding to each haptic material attribute to an index value of a texture coordinate syntax element of a corresponding 3D mesh.

Step k: Set a value of the attribute type syntax element in the haptic material attribute description module corresponding to each haptic material attribute to the type of each haptic material attribute.

For example, if a haptic material attribute carried by a 3D mesh includes the stiffness and the temperature, a type of the stiffness is the Low_resolution, and a type of the temperature is the High_resolution, a haptic material attribute array of the 3D mesh may be as follows:

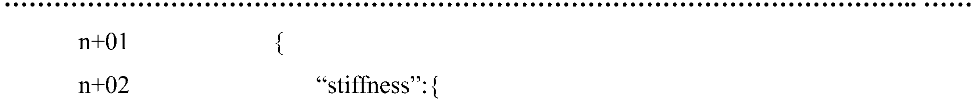

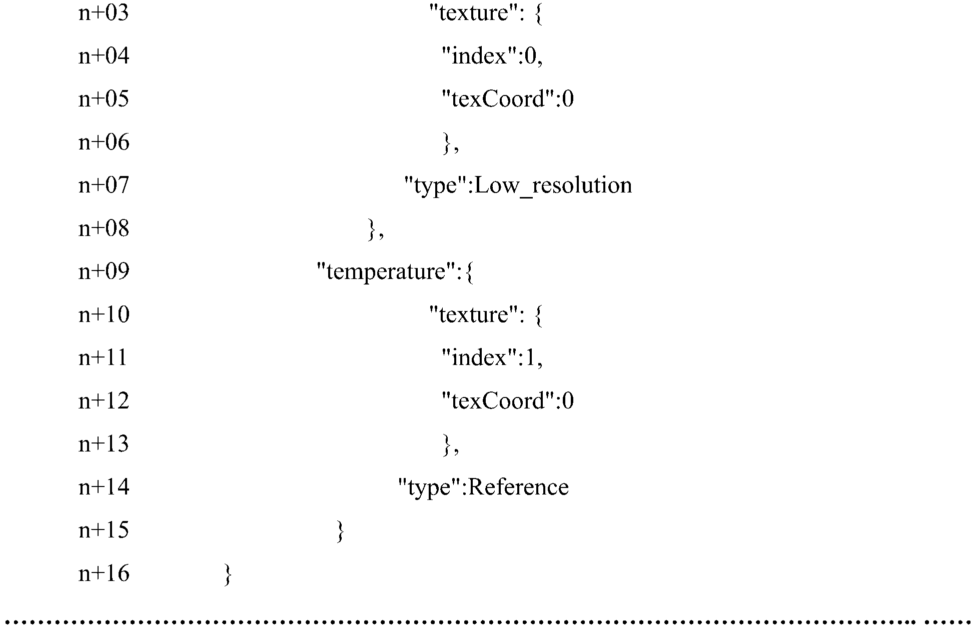

For example, if two 3D meshes in the scene-to-be-rendered each carry a haptic material attribute, the haptic material attribute carried by one 3D mesh is the stiffness whose type is the Low_resolution, and the haptic material attribute carried by the other mesh description module is the temperature whose type is the Reference, the haptic material array list added to the scene description document may be as follows:

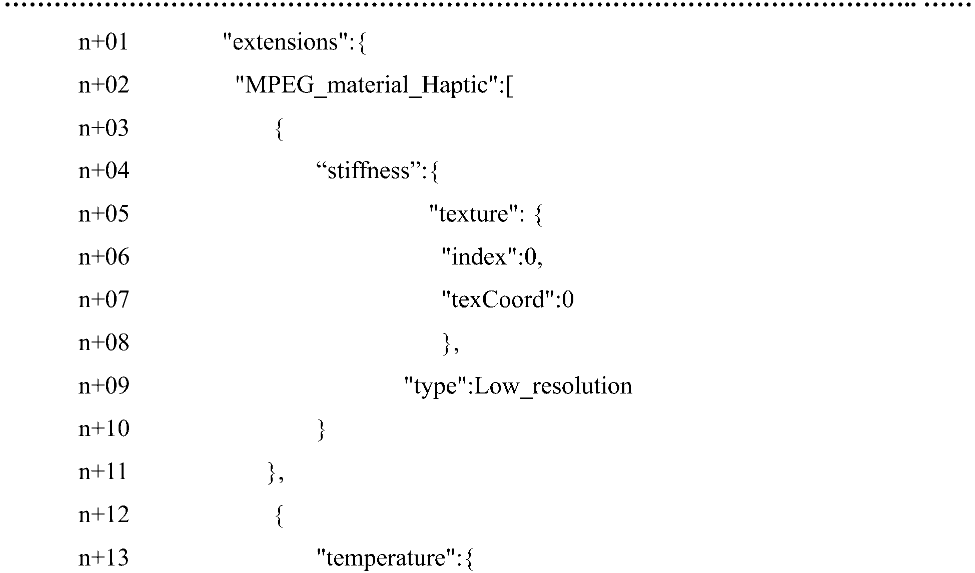

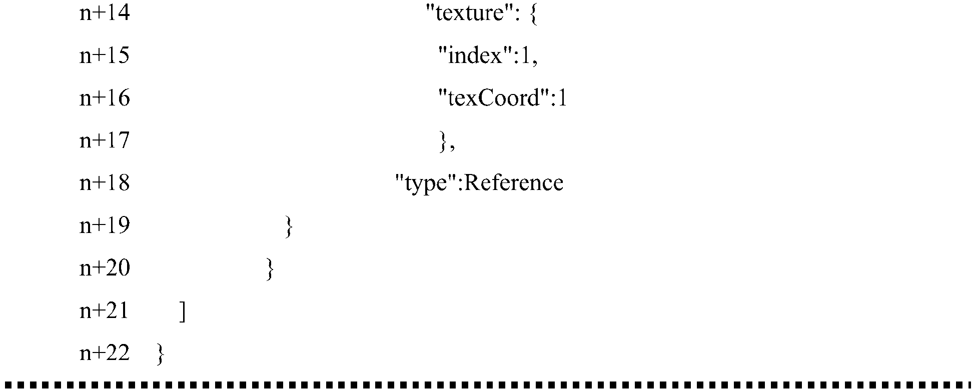

In some embodiments, the method for generating a scene description document further includes: before setting the value of the texture index syntax element in the texture array of the haptic material attribute description module corresponding to each haptic material attribute to the index value of the texture description module corresponding to each haptic material attribute, performing following steps l to n to generate a texture list (textures) of the scene description document:
Step 1: Add the texture description module corresponding to each haptic material attribute to the texture list of the scene description document.

A texture description module corresponding to any haptic material attribute includes a texture map syntax element (source) and a sampler syntax element (sampler).

Step m: Set a value of the texture map syntax element in the texture description module corresponding to each haptic material attribute to an index value of an access address of a texture map of each haptic material attribute.

Step n: Set a value of the sampler syntax element in the texture description module corresponding to each haptic material attribute to an index value of a sampler description module corresponding to a sampler of each haptic material attribute.

For example, if an index value of an access address of a texture map corresponding to a haptic material attribute is 2, and an index value of a sampler description module corresponding to a sampler of the haptic material attribute is 3, a texture description module that corresponds to the haptic material attribute and is added to the texture list of the scene description document may be as follows:

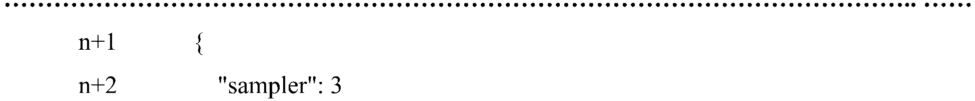

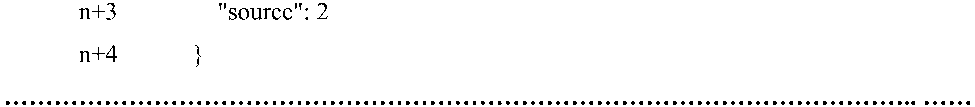

For example, if the scene description document includes texture description modules corresponding to three haptic material attributes, the texture list of the scene description document may be as follows:

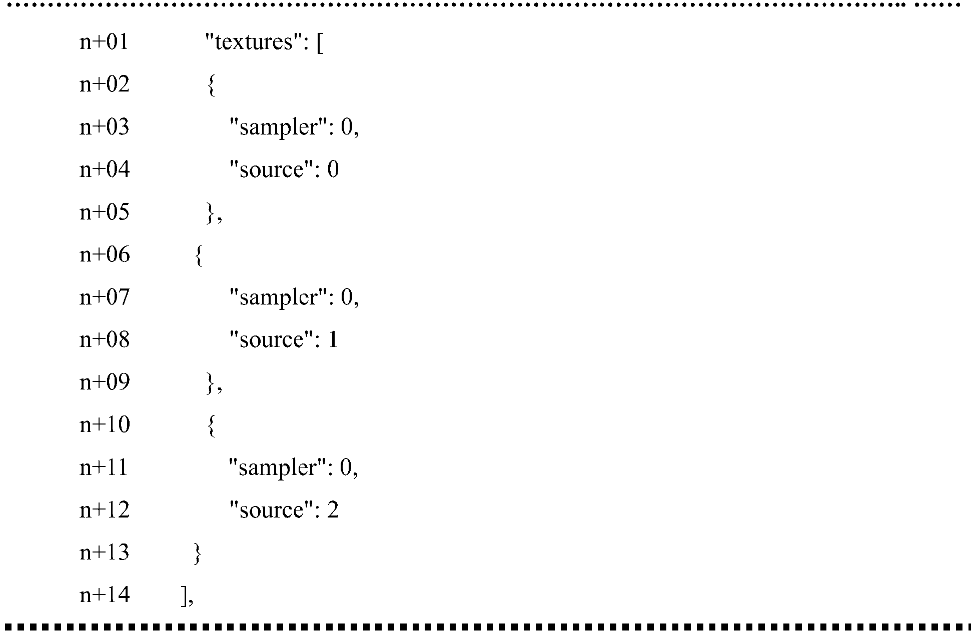

In some embodiments, the method for generating a scene description document further includes: before setting the value of the texture map syntax element in the texture description module corresponding to each haptic material attribute to the index value of the access address of the text map of each haptic material attribute, adding the access addresses of the texture map of each haptic material attribute in the haptic media file to a texture map list (images) of the scene description document.

It should be noted that if a type of a haptic material attribute is the High_resolution or the Low_resolution, a texture map of the haptic material attribute stores a haptic value of the haptic material attribute. If a type of a haptic material attribute is the Reference, a texture map of the haptic material attribute stores an index value of a haptic media file corresponding to the haptic material attribute.

For example, if an access address of a texture map of a haptic material attribute is temperatureTexture.png, the access address that is of the texture map of the haptic material attribute and added to the texture list of the scene description document may be as follows:

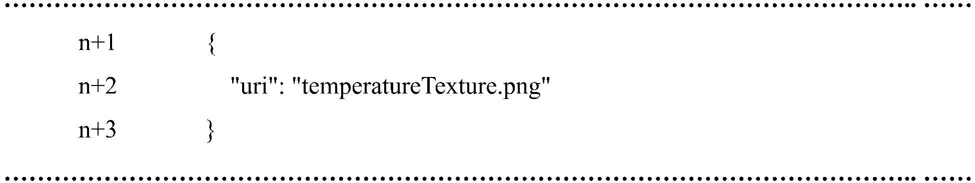

For example, if the scene description document includes access addresses of texture maps of three haptic material attributes, the texture map list of the scene description document may be as follows:

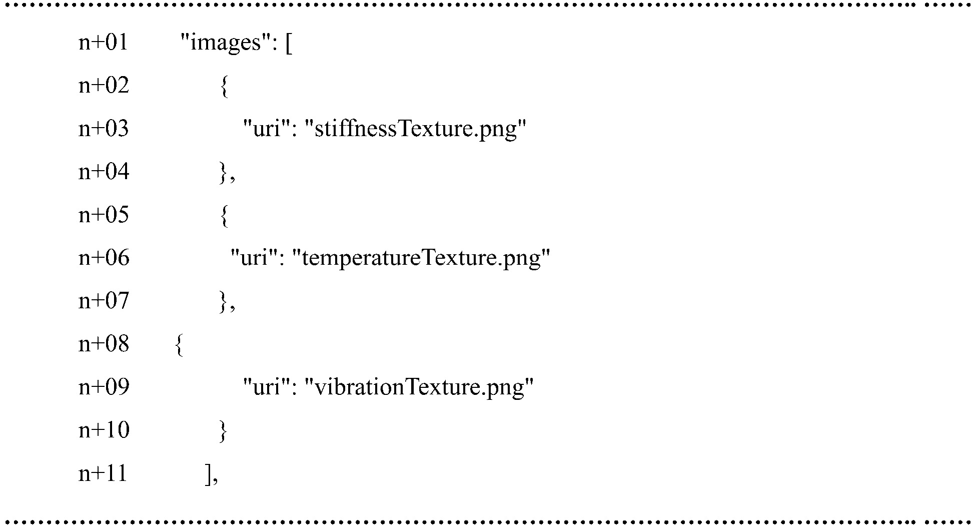

In some embodiments, the method for generating a scene description document further includes: before setting the value of the sampler syntax element in the texture description module corresponding to each haptic material attribute to the index value of the sampler description module corresponding to the sampler of each haptic material attribute, adding the sampler description module corresponding to the sampler of each haptic material attribute in the haptic media file to a sampler list (samplers) of the scene description document.

For example, for a sampler of a haptic material attribute, if a Mag filter parameter is 9729, a Min filter parameter is 9987, a horizontal wrapping parameter is 33648, and a value wrapping parameter is: 33648, a description module of a sampler of the haptic material attribute may be as follows:

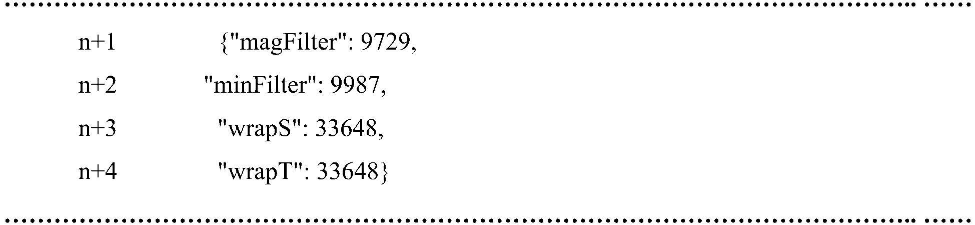

For example, if the scene description document includes only one sampler description module, the sampler list of the scene description document may be as follows:

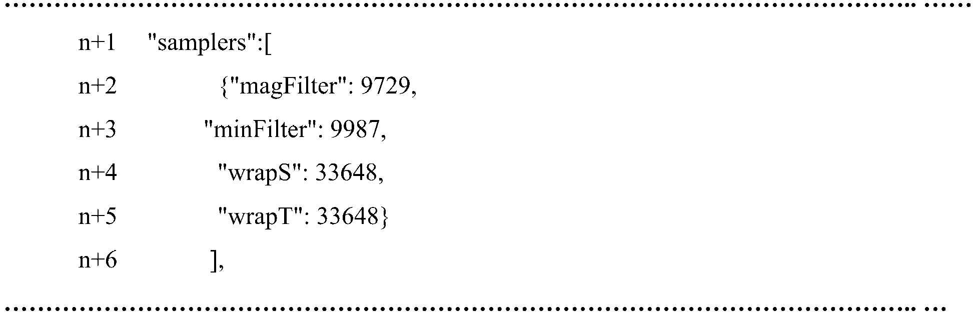

In some embodiments, the method for generating a scene description document further includes:
adding a digital asset description module (asset) to the scene description document, adding a version syntax element (version) to the digital asset description module, and setting a value of the version syntax element to 2.0 when the scene description document is compiled based on glTF2.0.

For example, the digital asset description module added to the scene description document may be as follows:

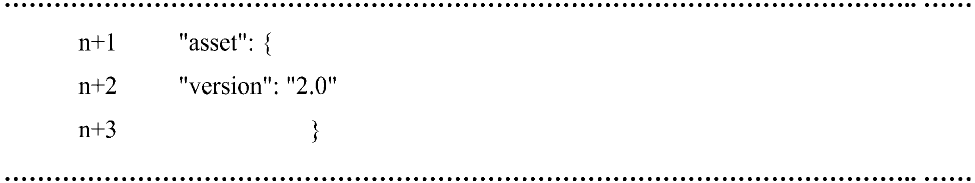

In some embodiments, the method for generating a scene description document further includes:
adding an extension usage description module (extendesUsed) to the scene description document, and adding each MPGE extension that is made to the scene description document of the glTF2.0 and used in the scene description document to the extension usage description module.

For example, if MPEG extensions used in the scene description document involve: the MPEG media (MPEG_media), the MPEG circular buffer (MPEG_buffer_circular), the MPEG time-varying accessor (MPEG_accessor_timed), the MPEG haptic (MPEG_Haptic), and the MPEG haptic material (MPEG_material_Haptic), the extension usage description module added to the scene description document may be as follows:

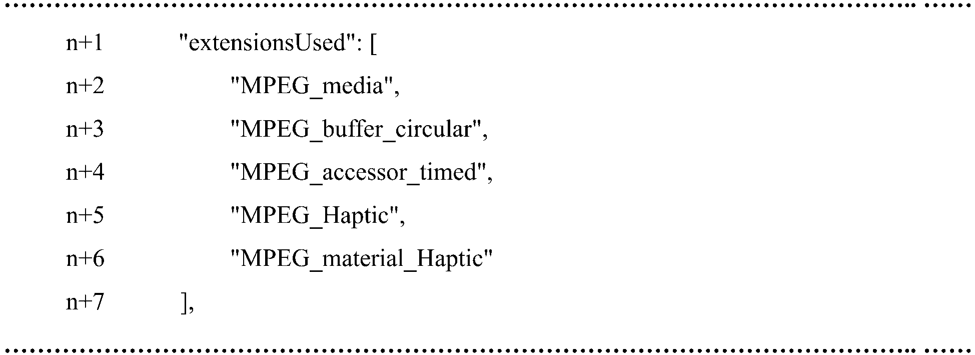

In some embodiments, the method for generating a scene description document further includes:
adding a scene declaration (scene) to the scene description document, and setting a value of the scene declaration to an index value of a scene description module corresponding to the scene-to-be-rendered.

For example, if the index value of the scene description module corresponding to the scene-to-be-rendered is 1, the scene declaration added to the scene description document may be as follows:

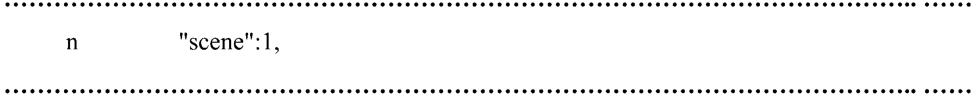

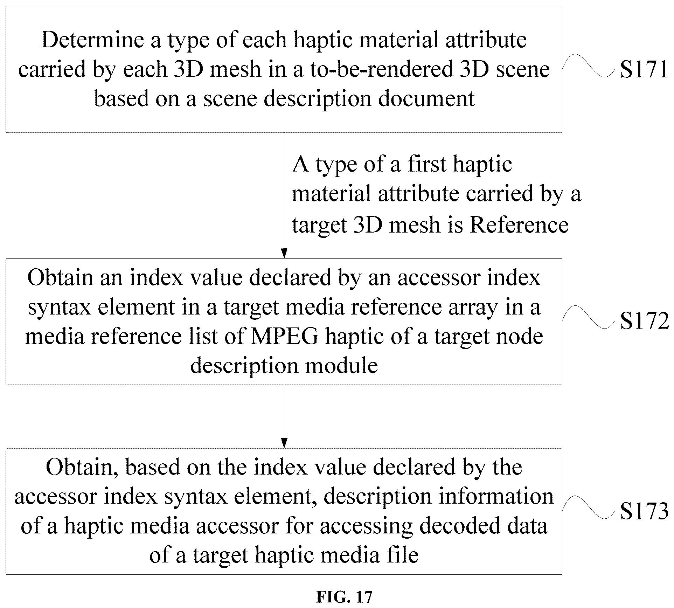

Some embodiments of the present disclosure further provide a method for parsing a scene description document. Referring to FIG. 17, the method for generating a scene description document includes following steps S171 to S173:
S171: Determine a type of each haptic material attribute carried by each 3D mesh in a 3D-scene-to-be-rendered based on the scene description document.

The haptic material attribute in the embodiments of the present disclosure may include at least one of stiffness, friction, haptic texture (Vibrotactile texture), temperature, vibration, and custom. The type of the haptic material attribute includes High_resolution, Low_resolution, and Reference.

It should be noted that one 3D mesh may carry a plurality of different types of haptic material attributes. Therefore, the type of each haptic material attribute carried by each 3D mesh in the 3D-scene-to-be-rendered needs to be determined one by one based on the scene description document.

In the above-mentioned step S171, if a type of a first haptic material attribute carried by a target 3D mesh in the 3D-scene-to-be-rendered is the Reference, following steps S172 and S173 are performed:
S172: Obtain an index value declared by an accessor index syntax element (accessor) in a target media reference array in a media reference list (Media_reference) of MPEG haptic (MPEG _haptic) of a target node description module.

The target node description module is a node description module corresponding to a node including the target 3D mesh, and the target media reference array is a media reference array corresponding to a haptic media file to which the first haptic material attribute belongs.

Since the target node description module may include a plurality of media reference arrays, before the accessor index syntax element in the target media reference array is obtained, it is necessary to first determine the haptic media file to which the first haptic material attribute belongs, and then determine the media reference array corresponding to the haptic media file to which the first haptic material attribute belongs as the target media reference array.

S173: Obtain, based on the index value declared by the accessor index syntax element, description information of a haptic media accessor for accessing decoded data of a target haptic media file.

After obtaining the scene description document, the method for parsing a scene description document provided in the embodiments of the present disclosure first determines, based on the scene description document, the type of each haptic material attribute carried by each 3D mesh in the 3D-scene-to-be-rendered; obtains the node description module corresponding to the node including the target 3D mesh when the type of the first haptic material attribute carried by the target 3D mesh in the 3D-scene-to-be-rendered is the Reference, and obtains the index value declared by the accessor index syntax element in the target media reference array corresponding to the target haptic media file to which the first haptic material attribute belongs in the MPEG haptic of the target node description module; and obtains, based on the index value declared by the accessor index syntax element, the description information of the haptic media accessor for accessing the decoded data of the target haptic media file. In the embodiments of the present disclosure, when the type of the first haptic material attribute carried by the target 3D mesh is the Reference, the index value declared by the accessor index syntax element in the target media reference array in the media reference list of the MPEG haptic of the target node description module may be obtained, and the description information of the haptic media accessor for accessing the decoded data of the target haptic media file is obtained based on the index value declared by the accessor index syntax element. Therefore, in the embodiments of the present disclosure, the haptic media accessor may be constructed based on the description information of the haptic media accessor, and then the decoded data of the target haptic media file is accessed through the haptic media accessor to obtain a haptic value of the first haptic material attribute. Therefore, the embodiments of the present disclosure may support obtaining a haptic value of a haptic material attribute whose type is the Reference, solving a problem of being unable to obtain the haptic value of the haptic material attribute whose type is the Reference in related technologies.

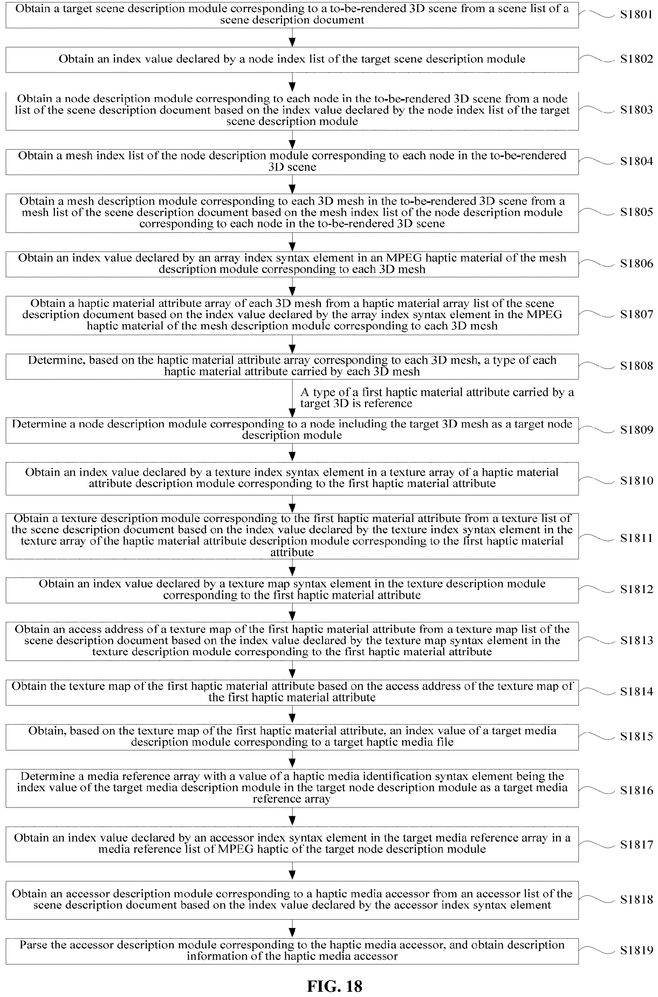

As an extension and refinement of the above method for parsing a scene description document, the present disclosure further provides another method for parsing a scene description document. Referring to FIG. 18, another method for parsing a scene description document includes:
S1801: Obtain a target scene description module corresponding to a 3D-scene-to-be-rendered from a scene list (scenes) of the scene description document.

In some embodiments, a scene declaration (senc) and an index value declared by the scene declaration may be obtained from the scene description document, and the target scene description module corresponding to the 3D-scene-to-be-rendered may be obtained from the scene list of the scene description document based on the scene declaration and the index value declared by the scene declaration.

For example, if the scene declaration and the index value declared by the scene declaration are "scene": 1, based on the scene declaration and the index value declared by the scene declaration, a second scene description module may be obtained from the scene list of the scene description document as the target scene description module corresponding to the 3D-scene-to-be-rendered.

S1802: Obtain an index value declared by a node index list (nodes) of the target scene description module.

For example, it is assumed that the node index list of the target scene description module is as follows:

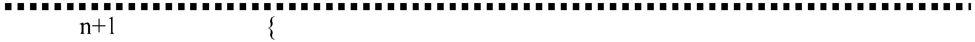

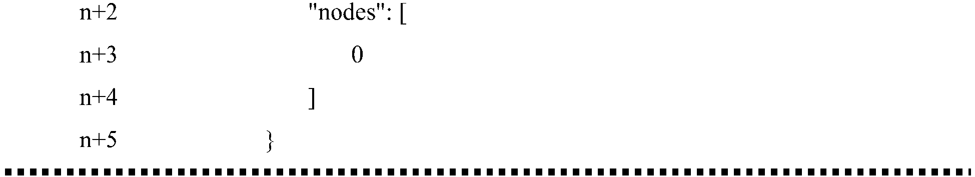

Therefore, the obtained index value declared by the node index list of the target scene description module is 0.

S1803: Obtain a node description module corresponding to each node in the 3D-scene-to-be-rendered from a node list of the scene description document based on the index value declared by the node index list of the target scene description module.

For example, when the index value declared by the node index list of the target scene description module is 0, a first node description module is obtained from the node list of the scene description document as the node description module corresponding to each node in the 3D-scene-to-be-rendered.

For another example, when the index value declared by the node index list of the target scene description module is 0 and 1, the first node description module and a second node description module are obtained from the node list of the scene description document as node description modules corresponding to each node in the 3D-scene-to-be-rendered.

S1804: Obtain a mesh index list (mesh) of the node description module corresponding to each node in the 3D-scene-to-be-rendered.

For example, it is assumed that a node description module corresponding to a node is as follows:

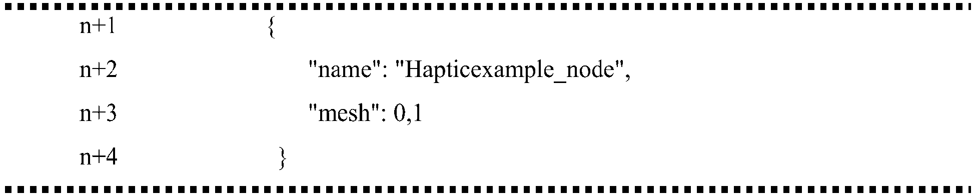

Therefore, an obtained mesh index list (mesh) of the node description module corresponding to the node is "mesh": 0,1.

S1805: Obtain a mesh description module corresponding to each 3D mesh in the 3D-scene-to-be-rendered from a mesh list (meshes) of the scene description document based on the mesh index list of the node description module corresponding to each node in the 3D-scene-to-be-rendered.

For example, when the 3D-scene-to-be-rendered includes a node 1 and a node 2, indexes value declared by a mesh index list of a node description module corresponding to the node 1 include 0 and 1, and indexes value declared by a mesh index list of a node description module corresponding to the node 2 include 1, 2, and 3, a first mesh description module, a second mesh description module, a third mesh description module, and a fourth mesh description module may be obtained from the mesh list of the scene description document.

For example, the mesh description module in the 3D-scene-to-be-rendered may be as follows:

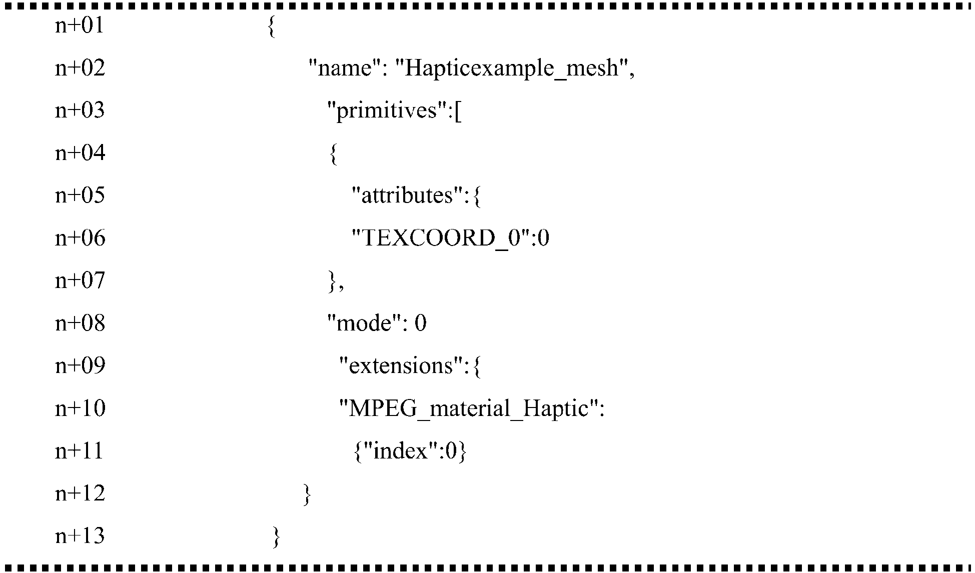

For example, the mesh description module in the 3D-scene-to-be-rendered may also be as follows:

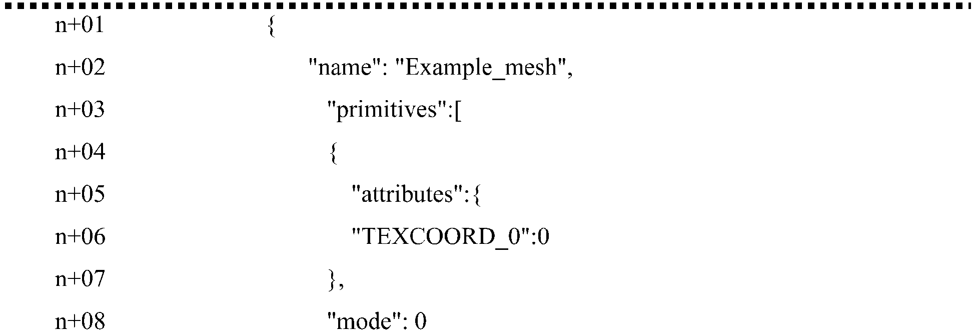

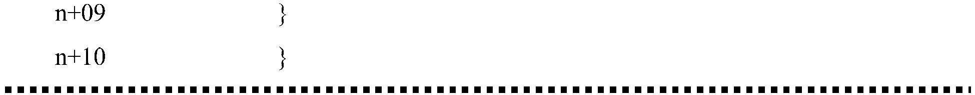

S1806: Obtain an index value declared by an array index syntax element (index) in an MPEG haptic material (MPEG _material_Haptic) of the mesh description module corresponding to each 3D mesh.

It should be noted that in the mesh list of the scene description document, some mesh description modules include the MPEG haptic material, while some mesh description modules do not include the MPEG haptic material. Therefore, the above-mentioned step S1806 needs to be performed only for a mesh description module that includes the MPEG haptic material.

S1807: Obtain a haptic material attribute array of each 3D mesh from a haptic material array list of the scene description document based on the index value declared by the array index syntax element in the MPEG haptic material of the mesh description module corresponding to each 3D mesh.

For example, when an index value declared by an array index syntax element in an MPEG haptic material of a mesh description module corresponding to a 3D mesh is 1, the haptic material array list of the scene description document is as follows:

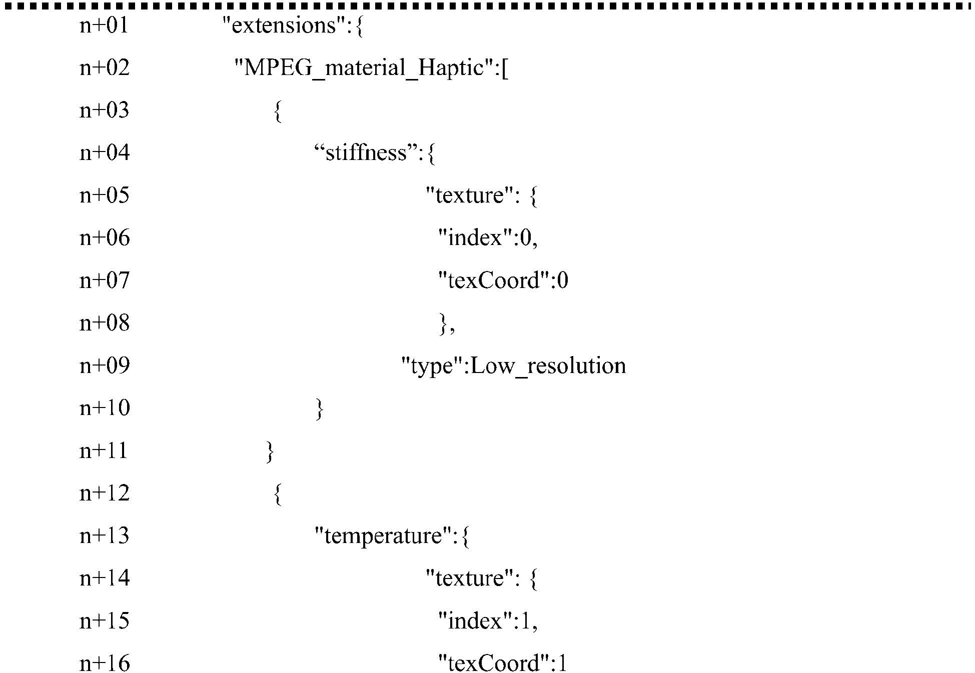

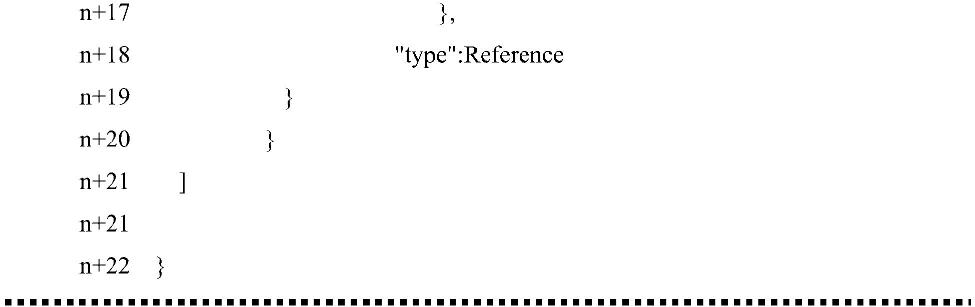

Because the index value declared by the array index syntax element in the MPEG haptic material of the mesh description module corresponding to the 3D mesh is 1, a second haptic material array may be obtained from the haptic material array list of the scene description document based on the index value declared by the array index syntax element in the MPEG haptic material of the mesh description module corresponding to the 3D mesh. Therefore, a haptic material attribute array that is of the 3D mesh and obtained from the haptic material array list of the scene description document is as follows:

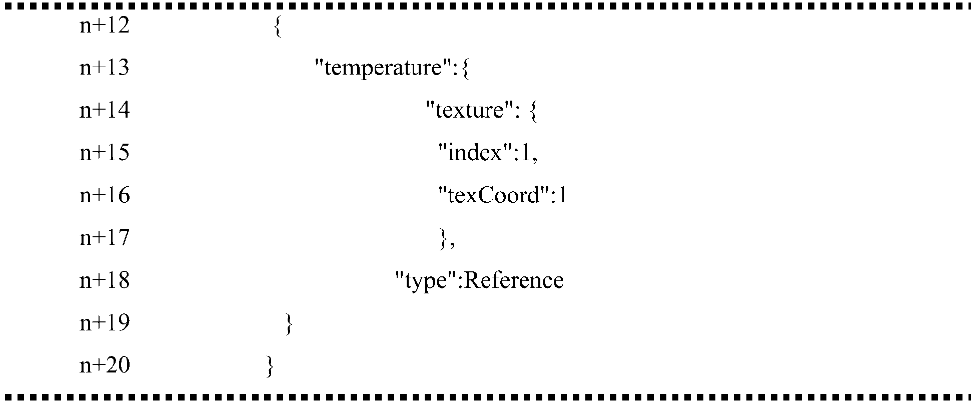

S1808: Determine, based on the haptic material attribute array corresponding to each 3D mesh, a type of each haptic material attribute carried by each 3D mesh.

In some embodiments, an implementation of determining, based on the haptic material attribute array corresponding to each 3D mesh, the type of each haptic material attribute carried by each 3D mesh in the above-mentioned step S1808 may include following steps 18081 to 18083:
Step 18081: Obtain a haptic material attribute description module corresponding to each haptic material attribute carried by each 3D mesh from the haptic material attribute array corresponding to each 3D mesh.

As shown in the above embodiments, a haptic material attribute array of a 3D mesh is as follows:

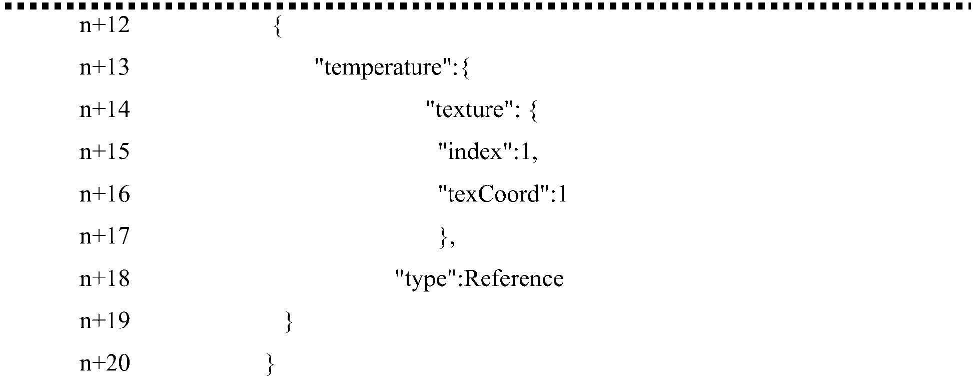

Therefore, it may be determined that the 3D mesh carries only temperature, and a haptic material attribute description module corresponding to the temperature is as follows:

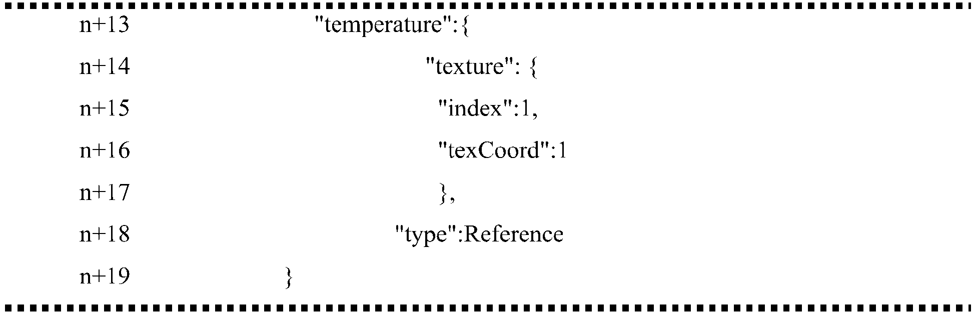

Step 18082: Obtain a value of an attribute type syntax element (type) in the haptic material attribute description module corresponding to each haptic material attribute.

As described in the above embodiments, based on "type":Reference at line n+18, it may be determined that a value of an attribute type syntax element in the haptic material attribute description module corresponding to the temperature is Reference.

Step 18083: Determine, based on the value of the attribute type syntax element in the haptic material attribute description module corresponding to each haptic material attribute, the type of each haptic material attribute carried by each 3D mesh.

As described in the above embodiments, because the value of the attribute type syntax element in the haptic material attribute description module corresponding to the temperature is the Reference, based on the value of the attribute type syntax element in the haptic material attribute description module corresponding to each haptic material attribute, it may be determined that a type of the temperature carried by the 3D mesh is the Reference.

In the above-mentioned step S1808, if a type of a first haptic material attribute carried by a target 3D mesh in the 3D-scene-to-be-rendered is the Reference, following steps are performed:
S1809: Determine a node description module corresponding to a node including the target 3D mesh as a target node description module.

That is, whether an index value declared in the mesh index list of each node description module includes an index value of a mesh description module corresponding to the target 3D mesh is determined. If the index value declared in the mesh index list of each node description module includes the index value of the mesh description module corresponding to the target 3D mesh, the node description module is determined as the target node description module.

S1810: Obtain an index value declared by a texture index syntax element (index) in a texture array (texture) of a haptic material attribute description module corresponding to the first haptic material attribute.

For example, it is assumed that a haptic material attribute description module corresponding to a haptic material attribute is as follows:

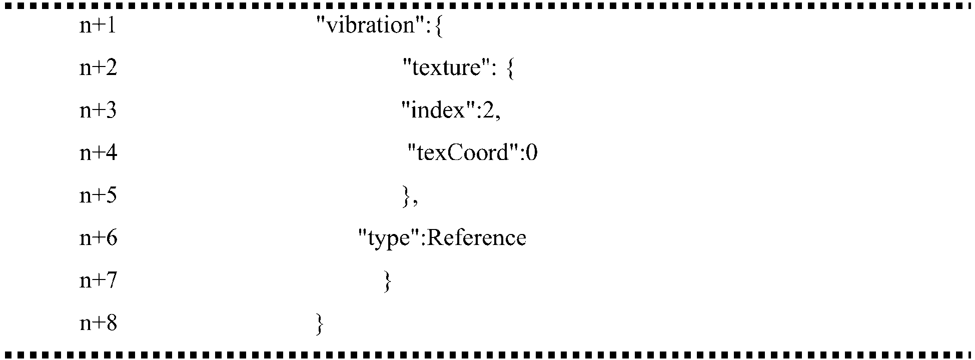

Therefore, it may be determined that an index value declared by a texture index syntax element (index) in a texture array (texture) of a haptic material attribute description module corresponding to the haptic material attribute is 2.

S1811: Obtain a texture description module corresponding to the first haptic material attribute from a texture list (textures) of the scene description document based on the index value declared by the texture index syntax element in the texture array of the haptic material attribute description module corresponding to the first haptic material attribute.

As described in the above embodiments, if an index value declared by a texture index syntax element (index) in a texture array (texture) of a haptic material attribute description module is 2, a third texture description module is obtained from the texture list (textures) of the scene description document as a texture description module corresponding to the haptic material attribute.

S1812: Obtain an index value declared by a texture map syntax element (source) in the texture description module corresponding to the first haptic material attribute.

For example, it is assumed that a texture description module corresponding to a haptic material attribute is as follows:

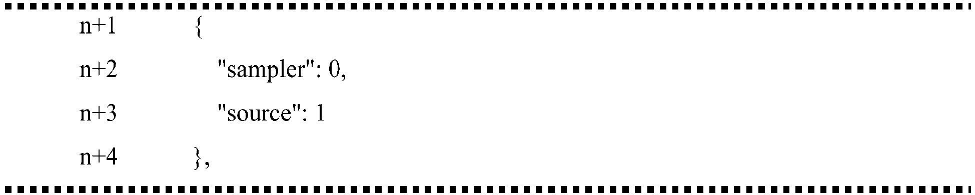

Therefore, it may be obtained that an index value declared by a texture map syntax element (source) in a texture description module corresponding to the haptic material attribute is 1.

S1813: Obtain an access address of a texture map of the first haptic material attribute from a texture map list (images) of the scene description document based on the index value declared by the texture map syntax element in the texture description module corresponding to the first haptic material attribute.

As described in the above embodiments, if an index value declared by a texture map syntax element (source) in a texture description module corresponding to a haptic material attribute is 1, an access address of a second texture map is obtained from the texture map list (images) of the scene description document as an access address of a texture map of the haptic material attribute.

S1814: Obtain the texture map of the first haptic material attribute based on the access address of the texture map of the first haptic material attribute.

In some embodiments, the obtaining the texture map of the first haptic material attribute based on the access address of the texture map of the first haptic material attribute includes: downloading a haptic media file from a server by using a network transmission service based on the access address of the texture map of the first haptic material attribute.

In some embodiments, the obtaining the texture map of the first haptic material attribute based on the access address of the texture map of the first haptic material attribute includes: reading the haptic media file from local storage space based on the access address of the texture map of the first haptic material attribute.

S1815: Obtain, based on the texture map of the first haptic material attribute, an index value of a target media description module corresponding to a target haptic media file.

Since the type of the first haptic material attribute is the Reference, the texture map of the first haptic material attribute does not store a haptic value, but an index value of a media description module corresponding to a haptic media file that stores a haptic value of the first haptic material attribute. Therefore, based on the texture map of the first haptic material attribute, the embodiments of the present disclosure may obtain the index value of the target media description module corresponding to the target haptic media file.

S1816: Determine a media reference array with a value of a haptic media identification syntax element being the index value of the target media description module in the target node description module as a target media reference array.

For example, it is assumed that the index value of the target media description module is 0, and a media reference list (Media_reference) in MPEG haptic of the target node description module is as follows:

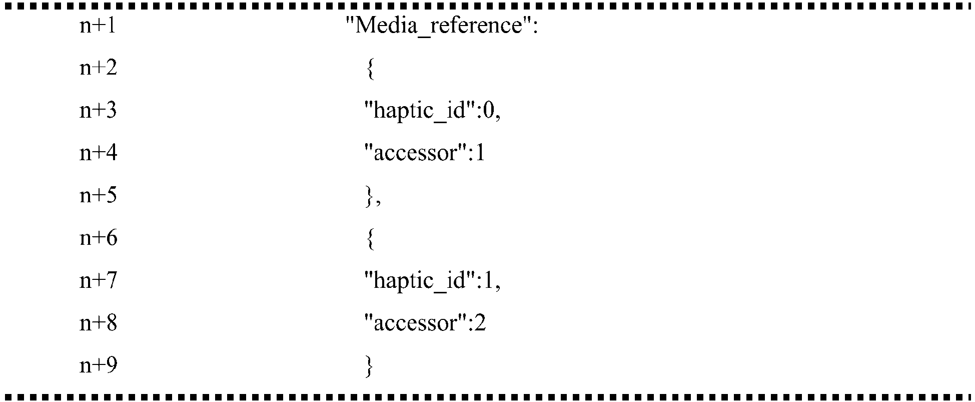

Since a value of a haptic media identification syntax element (haptic_id) in a first media reference array in the media reference list (Media_reference) is the same as the index value of the target media description module, namely 0, the first media reference array in the media reference list (Media_reference) is determined as the target media reference array.

S1817: Obtain an index value declared by an accessor index syntax element in the target media reference array in the media reference list of the MPEG haptic of the target node description module.

For example, if the accessor index syntax element in the target media reference array in the media reference list of the MPEG haptic of the target node description module and its value are "accessor":1, it may be determined that the index value declared by the accessor index syntax element in the target media reference array in the media reference list of the MPEG haptic of the target node description module is 1.

S1818: Obtain an accessor description module corresponding to a haptic media accessor from an accessor list (accessors) of the scene description document based on the index value declared by the accessor index syntax element.

For example, if the index value declared by the accessor index syntax element is 0, a first accessor description module in the accessor list of the scene description document is used as the accessor description module corresponding to the haptic media accessor.

For example, if the index value declared by the accessor index syntax element is 2, a third accessor description module in the accessor list of the scene description document is used as the accessor description module corresponding to the haptic media accessor.

S1819: Parse the accessor description module corresponding to the haptic media accessor, and obtain description information of the haptic media accessor.

For example, the accessor description module corresponding to the haptic media accessor is as follows:

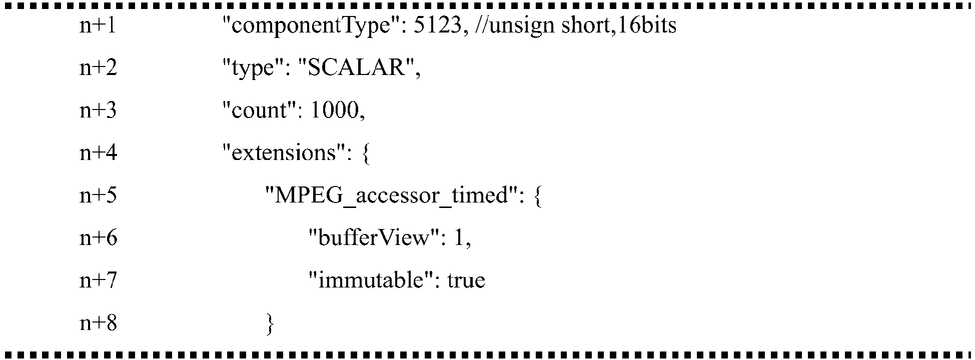

Therefore, information that may be obtained by parsing the accessor description module corresponding to the haptic media accessor includes: A data type is 5123, an accessor type is scalar, a data count is 1000, the accessor is a time-varying accessor reconstructed based on an MPEG extension, an access object of the accessor is a buffer view corresponding to a second buffer view description module in a buffer view list, and a parameter of the accessor changes over time.

So far, description information of a haptic media accessor that may access the haptic value of the first haptic material attribute may be obtained by parsing the scene description document, and then the haptic media accessor is constructed based on the description information of the haptic media accessor to read the haptic value of the first haptic material attribute.

In some embodiments, the another method for parsing a scene description document provided in the embodiments of the present disclosure further includes:
obtaining a sampler description module corresponding to a sampler of the first haptic material attribute from a sampler list (samplers) of the scene description document based on an index value declared by a sampler syntax element (sampler) in the texture description module corresponding to the first haptic material attribute, and obtaining description information of the sampler of the first haptic material attribute based on the sampler description module corresponding to the sampler of the first haptic material attribute.

For example, if the index value declared by the sampler syntax element (sampler) in the texture description module corresponding to the first haptic material attribute is 0, a first sampler description module is obtained from the sampler list of the scene description document, and the description information of the sampler of the first haptic material attribute is obtained based on the first sampler description module.

In some embodiments, the another method for parsing a scene description document provided in the embodiments of the present disclosure further includes following steps I to III:
Step I: Obtain, based on an index value declared by a texture coordinate index syntax element (texCoord) in the texture array (texture) of the haptic material attribute description module corresponding to the first haptic material attribute, a texture coordinate syntax element (TEXCORD_n) corresponding to the first haptic material attribute from an attribute (attributes) of a primitive (primitives) in the mesh description module corresponding to the target 3D mesh.

For example, if the texture coordinate index syntax element (texCoord) in the texture array (texture) of the haptic material attribute description module corresponding to the first haptic material attribute and its value are "texCoord": 0, a first texture coordinate syntax element (TEXCORD_0) is obtained from the attribute (attributes) of the primitive (primitives) in the mesh description module corresponding to the target 3D mesh as the texture coordinate syntax element corresponding to the first haptic material attribute.

Step II: Obtain, based on an index value declared by the texture coordinate syntax element corresponding to the first haptic material attribute, an accessor description module corresponding to a texture coordinate accessor of the first haptic material attribute.

For example, if the texture coordinate syntax element corresponding to the first haptic material attribute and its value are "TEXCOORD_0":0, a first accessor description module is obtained from the accessor list (accessors) of the scene description document as the accessor description module corresponding to the texture coordinate accessor of the first haptic material attribute.

Step III: Obtain description information of the texture coordinate accessor of the first haptic material attribute based on the accessor description module corresponding to the texture coordinate accessor of the first haptic material attribute.

For example, the accessor description module corresponding to the texture coordinate accessor of the first haptic material attribute is as follows:

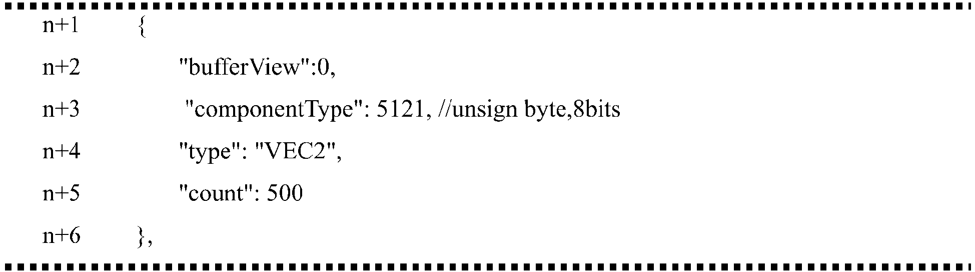

Therefore, information that may be obtained by parsing the accessor description module corresponding to the texture coordinate accessor of the first haptic material attribute includes: An access object of the accessor is a buffer view corresponding to a first buffer view description module in the buffer view list, a data type is 5121, an accessor type is a 2D vector, and a data count is 500.

So far, description information of the texture coordinate accessor that may access a texture coordinate corresponding to the first haptic material attribute may be obtained by parsing the scene description document, and then the texture coordinate accessor is constructed based on the description information of the texture coordinate accessor to read the texture coordinate corresponding to the first haptic material attribute.

In some embodiments, the another method for parsing a scene description document further includes:
when a type of a second haptic material attribute is High_resolution or Low_resolution, obtaining an index value declared by a texture index syntax element (index) in a texture array (texture) of a haptic material attribute description module corresponding to the second haptic material attribute; obtaining a texture description module corresponding to the second haptic material attribute from the texture list (textures) of the scene description document based on the index value declared by the texture index syntax element in the texture array of the haptic material attribute description module corresponding to the second haptic material attribute; obtaining an index value declared by a texture map syntax element (source) and an index value declared by a sampler syntax element (sampler) in the texture description module corresponding to the second haptic material attribute; and obtaining an access address of a texture map of the second haptic material attribute from the texture map list (images) of the scene description document based on the index value declared by the texture map syntax element (source) in the texture description module corresponding to the second haptic material attribute, and obtaining description information of a sampler of the second haptic material attribute from the sampler list (samplers) of the scene description document based on the index value declared by the sampler syntax element (sampler) in the texture description module corresponding to the second haptic material attribute.

When a type of a haptic material attribute is the High_resolution or the Low_resolution, data stored in a texture map of the haptic material attribute is a haptic value of the haptic material attribute. Therefore, when the type of the haptic material attribute is the High_resolution or the Low_resolution, an access address of the texture map of the haptic material attribute may be directly obtained from the texture map of the haptic material attribute through the above embodiments, and then the texture map of the haptic material attribute is obtained, thereby obtaining the haptic value of the haptic material attribute.

In some embodiments, the another method for parsing a scene description document further includes:
obtaining a buffer description module corresponding to each buffer in the 3D-scene-to-be-rendered from a buffer list of the scene description document, and obtaining description information of each buffer in the 3D-scene-to-be-rendered based on the buffer description module corresponding to each buffer.

The description information of the buffer includes at least one of following information:
a capacity of the buffer, an access address of data cached in the buffer, whether the buffer is an MPEG circular buffer, a quantity of storage stages of the circular buffer, an index value of a media description module corresponding to a media file cached in the circular buffer, and a track index value of data of the media file cached in the circular buffer.

For example, a buffer description module corresponding to a buffer is as follows:

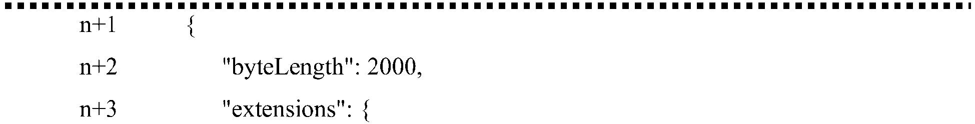

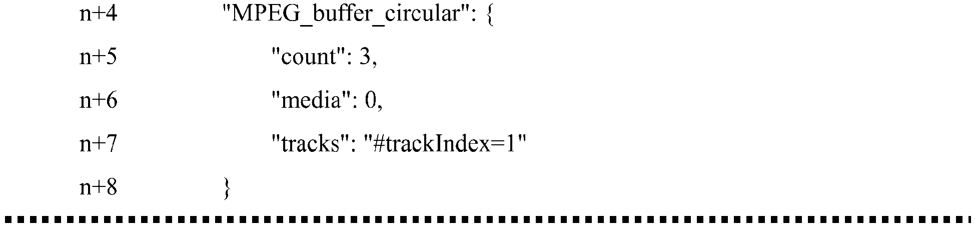

Therefore, description information that is of the buffer and may be obtained based on the buffer description module corresponding to the buffer includes: A capacity of the buffer is 2000 bytes, the buffer is a circular buffer reconstructed based on an MPEG extension, a quantity of storage stages of the circular buffer is 3, a media file stored in the circular buffer is a first media file declared in MPEG media, and a track index value of data of the media file cached in the circular buffer is 1.

For example, a buffer description module corresponding to a buffer is as follows:

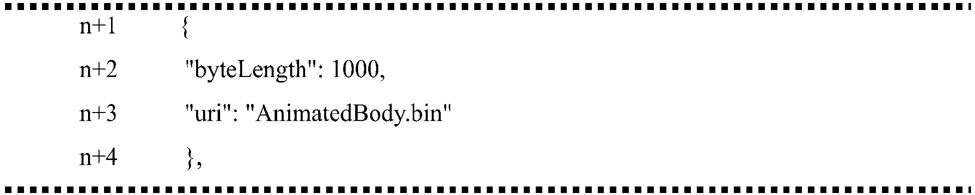

Therefore, description information that is of the buffer and may be obtained based on the buffer description module corresponding to the buffer includes: A capacity of the buffer is 1000 bytes, and an access address of data cached in the buffer is AnimatedBody.bin.

In some embodiments, the another method for parsing a scene description document further includes:
obtaining a buffer view description module corresponding to each buffer view of each buffer in the 3D-scene-to-be-rendered from the buffer view list of the scene description document, and obtaining description information of each buffer view based on the buffer view description module corresponding to each buffer view.

The description information of the buffer view includes at least one of following information:
a buffer to which the buffer view belongs, a capacity of the buffer view, and an offset of the buffer view.

For example, a buffer view description module corresponding to a buffer view is as follows:

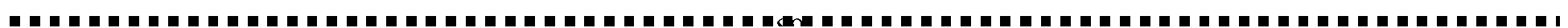

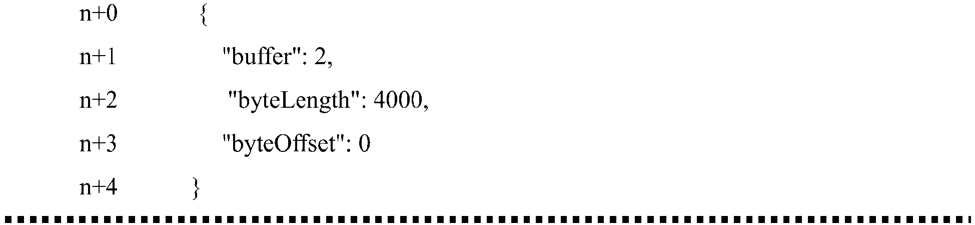

Therefore, description information that is of the buffer view and may be obtained based on the buffer view description module corresponding to the buffer view includes: The buffer view is a buffer view of a buffer corresponding to a third buffer description module in the buffer list, a capacity of the buffer view is 4000 bytes, and an offset of the buffer view is 0.

In some embodiments, the another method for parsing a scene description document further includes: obtaining an accessor description module corresponding to each accessor in the 3D-scene-to-be-rendered from the accessor list of the scene description document, and obtaining description information of each accessor based on the accessor description module corresponding to each accessor.

The description information of the accessor includes at least one of following information:
a buffer view accessed by the accessor, a data type of data accessed by the accessor, a type of the accessor, a quantity of accessors, whether the accessor is an MPEG time-varying accessor, a buffer view accessed by the time-varying accessor, and whether a parameter of the accessor changes over time.

For example, a buffer view description module corresponding to a buffer view is as follows:

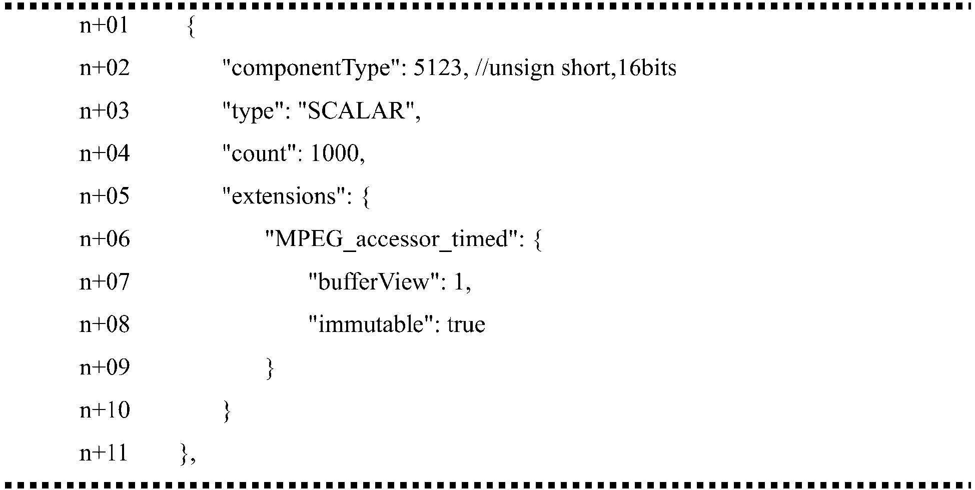

Therefore, description information that is of the accessor and obtained by parsing the accessor description module corresponding to the accessor includes: A data type of data accessed by the accessor is 5123, a type of the accessor is scalar, a quantity of accessors is 1000, the accessor is a time-varying accessor reconstructed based on the MPEG extension, a buffer view accessed by the accessor is a buffer view corresponding to a buffer view description module whose index value is 1, and a parameter of the accessor changes over time.

For another example, a buffer view description module corresponding to a buffer view is as follows:

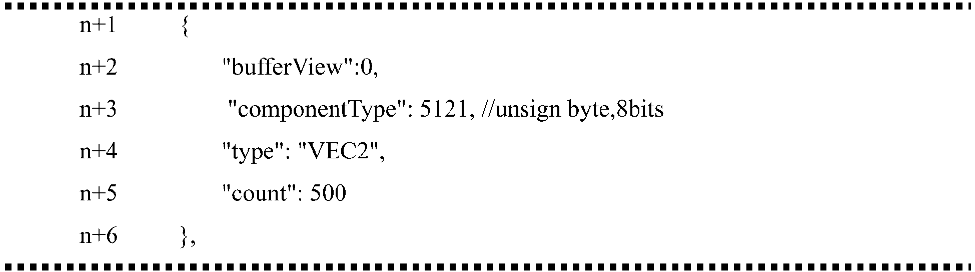

Therefore, description information that is of the accessor and obtained by parsing the accessor description module corresponding to the accessor includes: A buffer view accessed by the accessor is a buffer view corresponding to a buffer view description module whose index value is 0, a data type of data accessed by the accessor is 5121, a type of the accessor is a 2D vector, and a quantity of accessors is 500.

In some embodiments, the another method for parsing a scene description document further includes: obtaining a media description module corresponding to each media file in the 3D-scene-to-be-rendered from an extended media list of the MPEG media in the scene description document, and obtaining description information of each media file based on the media description module corresponding to each media file.

The description information of the media file includes at least one of following information:
a name of the media file, whether the media file is automatically played, whether the media file is cyclically played, a type of the media file, an access address of the media file, track information of an encapsulated file of the media file, and a codec parameter of the media file.

For example, a media description module corresponding to a media file is as follows:

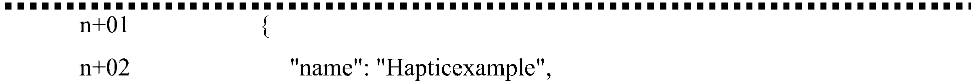

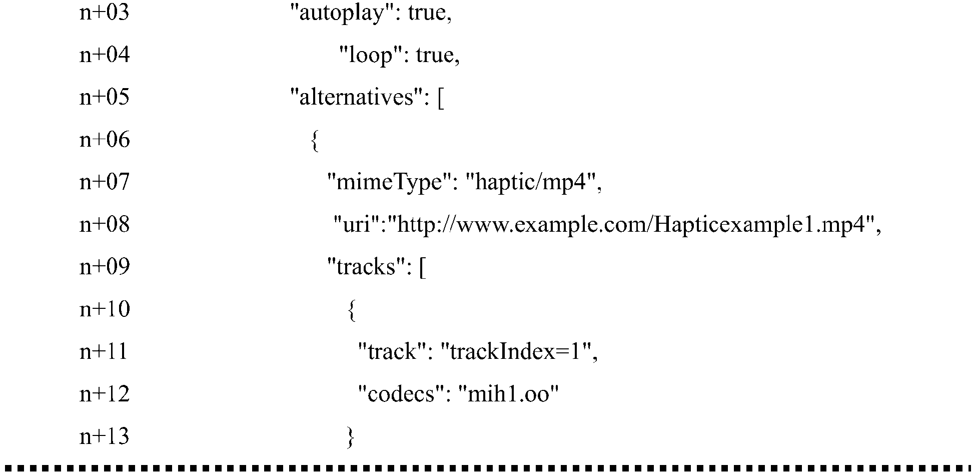

Therefore, description information that is of the media file and obtained based on the media description module corresponding to the media file includes: A name of the media file is Hapticexample, the media file is automatically played, the media file is cyclically played, a type of the media file is a haptic media file that includes only haptic data, an access address of the media file is http://www.example.com/Hapticexample1.mp4, an index value of a bitstream track of an encapsulated file of the media file is 1, and a codec parameter of the media file is mih1.oo.

In some embodiments, the another method for parsing a scene description document further includes: obtaining the scene declaration (scene) from the scene description document, and obtaining the target scene description module corresponding to the 3D-scene-to-be-rendered from the scene list (scenes) of the scene description document based on the index value declared by the scene declaration.

For example, if the scene declaration and the index value declared by the scene declaration are "scene": 0, a first scene description module is obtained from the scene list (scenes) of the scene description document as the target scene description module corresponding to the 3D-scene-to-be-rendered.

In some embodiments, the another method for parsing a scene description document further includes: obtaining an extension usage description module (extensionUsed) in the scene description document, and obtaining, based on the extension usage description module, an MPEG extension used in the scene description document.

For example, the extension usage description module is as follows:

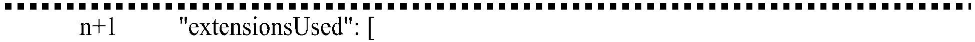

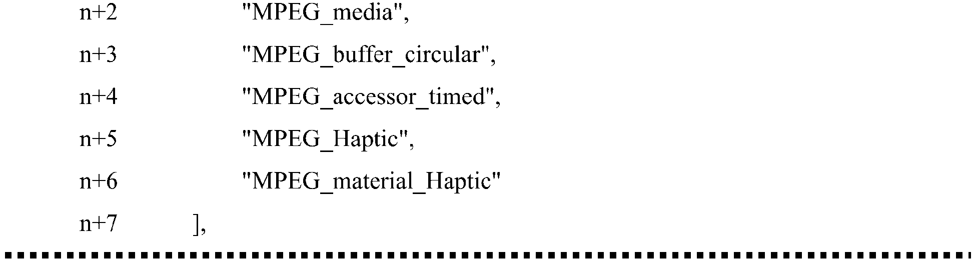

Therefore, MPEG extensions that are used in the scene description document and may be obtained based on the extension usage description module involve: the MPEG media (MPEG_media), an MPEG circular buffer (MPEG_buffer_circular), the MPEG time-varying accessor (MPEG_accessor_timed), the MPEG haptic (MPEG_Haptic), and the MPEG haptic material (MPEG_material _Haptic).

In some embodiments, the another method for parsing a scene description document further includes: obtaining a digital asset description module (version) in the scene description document, and determining version information of the scene description document based on the digital asset description module.

After the version information of the scene description document is determined based on the digital asset description module, a corresponding scene description document parser is selected based on the version information of the scene description document to parse the scene description document, thereby ensuring that the scene description document is correctly parsed.

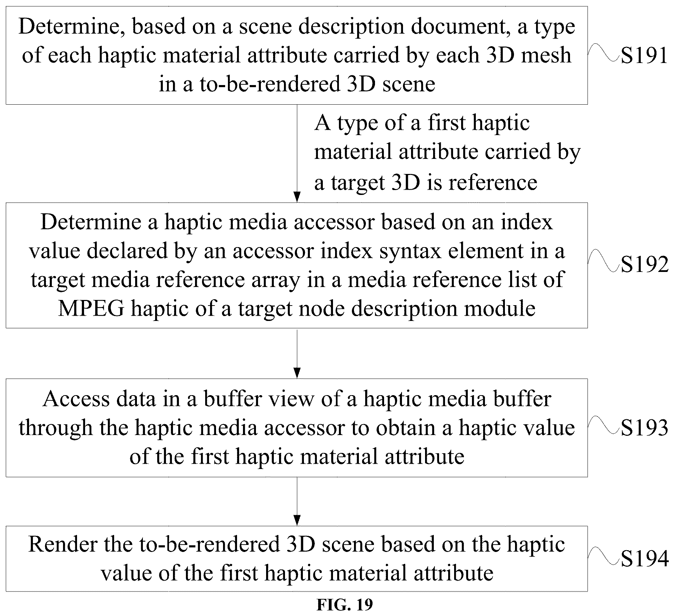

Some embodiments of the present disclosure also provide a 3D scene rendering method. The 3D scene rendering method is executed by a display engine in an immersive media description framework. Referring to FIG. 19, the 3D scene rendering method includes following steps:
S191: Determine, based on a scene description document, a type of each haptic material attribute carried by each 3D mesh in a 3D-scene-to-be-rendered.

The haptic material attribute in the embodiments of the present disclosure may include at least one of stiffness, friction, haptic texture (Vibrotactile texture), temperature, vibration, or custom. The type of the haptic material attribute includes High_resolution, Low_resolution, and Reference.

It should be noted that one 3D mesh may carry a plurality of different types of haptic material attributes. Therefore, the type of each haptic material attribute carried by each 3D mesh in the 3D-scene-to-be-rendered needs to be determined one by one based on the scene description document.

In the above-mentioned step S191 of determining the type of each haptic material attribute carried by each 3D mesh in the 3D-scene-to-be-rendered based on the scene description document, if it is determined that a type of a first haptic material attribute carried by a target 3D mesh in the 3D-scene-to-be-rendered is the Reference, following steps S192 to S194 are performed:
S192: Determine a haptic media accessor based on an index value declared by an accessor index syntax element (accessor) in a target media reference array in a media reference list (Media_reference) of MPEG haptic of a target node description module.

The target node description module is a node description module corresponding to a node including the target 3D mesh, and the target media reference array is a media reference array corresponding to a haptic media file to which the first haptic material attribute belongs.

For an implementation of obtaining the index value that is declared by the accessor index syntax element (accessor) in the target media reference array in the media reference list (Media_reference) of the MPEG haptic of the target node description module and determined by the display engine in the above-mentioned step S192, reference may be made to the embodiment shown in FIG. 18, and details are not described herein again.

S193: Access data in a buffer view of a haptic media buffer through the haptic media accessor to obtain a haptic value of the first haptic material attribute.

The haptic media buffer is a buffer configured for caching decoded data of a target haptic media file.

Data stored in the haptic media buffer is the decoded data obtained by a MAF by processing the target haptic media file. Therefore, a decoded haptic value that is of the first haptic material attribute and may be used for rendering may be directly obtained by accessing the data in the buffer view of the haptic media buffer through the haptic media accessor.

S194: Render the 3D-scene-to-be-rendered based on the haptic value of the first haptic material attribute.

After obtaining the scene description document, the 3D scene rendering method provided in the embodiments of the present disclosure first determines, based on the scene description document, the type of each haptic material attribute carried by each 3D mesh in the 3D-scene-to-be-rendered; obtains the node description module corresponding to the node including the target 3D mesh when the type of the first haptic material attribute carried by the target 3D mesh in the 3D-scene-to-be-rendered is the Reference, and obtains the index value declared by the accessor index syntax element in the target media reference array corresponding to the target haptic media file to which the first haptic material attribute belongs in the MPEG haptic of the target node description module; determines the haptic media accessor based on the index value declared by the accessor index syntax element; accesses, through the haptic media accessor, the data in the buffer view of the haptic media buffer configured for caching the target haptic media file, to obtain the haptic value of the first haptic material attribute; and finally, renders the 3D-scene-to-be-rendered based on the haptic value of the first haptic material attribute. In the embodiments of the present disclosure, when the type of the first haptic material attribute carried by the target 3D mesh is the Reference, the index value declared by the accessor index syntax element in the target media reference array in the media reference list of the MPEG haptic of the target node description module may be obtained, the haptic media accessor is determined based on the index value declared by the accessor index syntax element, the haptic value of the first haptic material attribute is obtained through the haptic media accessor, and the 3D-scene-to-be-rendered is rendered based on the haptic value of the first haptic material attribute. Therefore, the embodiments of the present disclosure may support obtaining a haptic value of a haptic material attribute whose type is the Reference, solving a problem of being unable to obtain the haptic value of the haptic material attribute whose type is the Reference in related technologies.

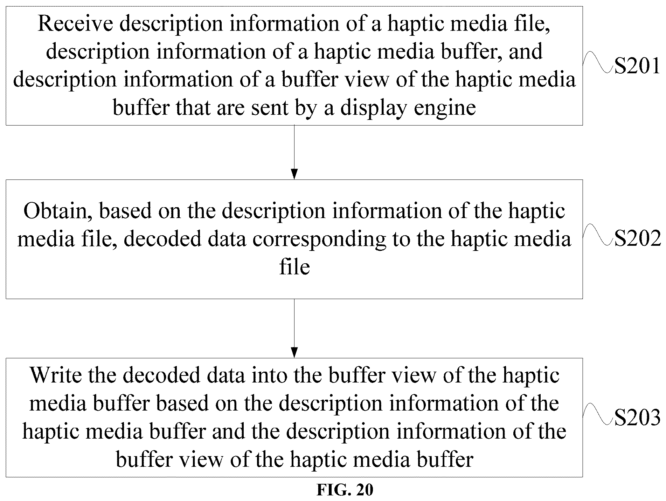

Some embodiments of the present disclosure also provide a method for processing a haptic media file. The method for processing a haptic media file is executed by a MAF in an immersive media description framework. Referring to FIG. 20, the method for processing a haptic media file includes following steps:
S201: Receive description information of a haptic media file, description information of a haptic media buffer, and description information of a buffer view of the haptic media buffer that are sent by a display engine.

The haptic media file includes a haptic value of a first haptic material attribute whose type is Reference.

In some embodiments, the description information of the haptic media file may include at least one of following information:
a name of the media file, whether the media file is automatically played, whether the media file is cyclically played, a type of the media file, an access address of the media file, track information of an encapsulated file of the media file, and a codec parameter of the media file.

In some embodiments, the description information of the haptic media buffer may include at least one of following information:
a capacity of the buffer, whether the buffer is an MPEG circular buffer, a quantity of storage stages of the circular buffer, an index value of a media description module corresponding to a media file cached in the circular buffer, and a track index value of data of the media file cached in the circular buffer.

In some embodiments, the description information of the buffer view of the haptic media buffer may include at least one of following information:
a buffer to which the buffer view belongs, a capacity of the buffer view, and an offset of the buffer view.

S202: Obtain, based on the description information of the haptic media file, decoded data corresponding to the haptic media file.

In some embodiments, the obtaining, by the MAF based on the description information of the haptic media file, decoded data corresponding to the haptic media file includes:
creating, based on the description information of the haptic media file, a haptic media pipeline for processing the haptic media file, obtaining the haptic media file through the haptic media pipeline, and decapsulating and decoding the haptic media file to obtain the decoded data corresponding to the haptic media file.

S203: Write the decoded data into the buffer view of the haptic media buffer based on the description information of the haptic media buffer and the description information of the buffer view of the haptic media buffer.

After writing the decoded data into the buffer view of the haptic media buffer, the display engine may determine a haptic media accessor based on an index value declared by an accessor index syntax element in a target media reference array in a media reference list of MPEG haptic of a target node description module, and obtain the haptic value of the first haptic material attribute by accessing data in the buffer view of the haptic media buffer through the haptic media accessor. The target node description module is a node description module corresponding to a node including a target 3D mesh that carries the first haptic material attribute, and the target media reference array is a media reference array corresponding to the haptic media file.

After receiving the description information of the haptic media file, the description information of the haptic media buffer, and the description information of the buffer view of the haptic media buffer that are sent by the display engine, the method for processing a haptic media file provided in the embodiments of the present disclosure obtains, based on the description information of the haptic media file, the decoded data corresponding to the haptic media file, and writes the decoded data into the buffer view of the haptic media buffer based on the description information of the haptic media buffer and the description information of the buffer view of the haptic media buffer. Therefore, the display engine may determine the haptic media accessor based on the index value declared by the accessor index syntax element in the target media reference array in the media reference list of the MPEG haptic of the target node description module, and obtain the haptic value of the first haptic material attribute by accessing the data in the buffer view of the haptic media buffer through the haptic media accessor. Therefore, the embodiments of the present disclosure may support obtaining a haptic value of a haptic material attribute whose type is the Reference, solving a problem of being unable to obtain the haptic value of the haptic material attribute whose type is the Reference in related technologies.

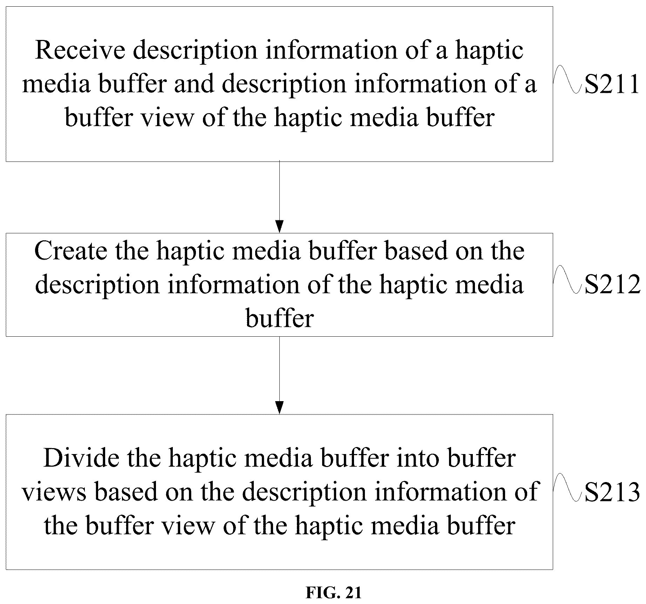

Some embodiments of the present disclosure also provide a buffer management method. The buffer management method is executed by a buffer management module in an immersive media description framework. Referring to FIG. 21, the buffer management method includes following steps:
S211: Receive description information of a haptic media buffer and description information of a buffer view of the haptic media buffer.

The haptic media buffer is a buffer configured for caching a target haptic media file, and the target haptic media file includes a first haptic material attribute whose type is Reference.

In some embodiments, the description information of the haptic media buffer may include at least one of following information:
a capacity of the buffer, information regarding whether the buffer is an MPEG circular buffer, a quantity of storage stages of the circular buffer, an index value of a media description module corresponding to a media file cached in the circular buffer, and a track index value of data of the media file cached in the circular buffer.

In some embodiments, the description information of the buffer view of the haptic media buffer may include at least one of following information:
a buffer to which the buffer view belongs, a capacity of the buffer view, and an offset of the buffer view.

S212: Create the haptic media buffer based on the description information of the haptic media buffer.

For example, the description information of the haptic media buffer includes: The capacity of the haptic media buffer is 2000 bytes, the haptic media buffer is the circular buffer reconstructed based on an MPEG extension, the quantity of storage stages of the circular buffer is 3, the media file stored in the circular buffer is a first media file declared in MPEG media, and the track index value of the data of the media file cached in the circular buffer is 1. Therefore, the buffer management module creates a circular buffer with a capacity of 2000 bytes and three storage stages as the haptic media buffer.

S213: Divide the haptic media buffer into buffer views based on the description information of the buffer view of the haptic media buffer.

As described in the above embodiments, the track index value of the data of the media file cached in the circular buffer is 1. Therefore, after the buffer management module creates the circular buffer with a capacity of 2000 bytes and three storage stages as the haptic media buffer, if the description information of the buffer view of the haptic media buffer includes: the capacity is 2000 bytes and the offset is 0, the haptic media buffer is divided into one buffer view.

After the buffer management module divides the haptic media buffer into the buffer views based on the description information of the buffer view of the haptic media buffer, a MAF may write decoded data of the target haptic media file into the buffer view of the haptic media buffer. A display engine may determine a haptic media accessor based on an index value declared by an accessor index syntax element in a target media reference array in a media reference list of MPEG haptic of a target node description module, and obtain a haptic value of the first haptic material attribute by accessing data in the buffer view of the haptic media buffer through the haptic media accessor. The target node description module is a node description module corresponding to a node including a target 3D mesh that carries the first haptic material attribute, and the target media reference array is a media reference array corresponding to the target haptic media file.

After receiving the description information of the haptic media buffer and the description information of the buffer view of the haptic media buffer, the buffer management method provided in the embodiments of the present disclosure may create the haptic media buffer based on the description information of the haptic media buffer, and divide the haptic media buffer into the buffer views based on the description information of the buffer view of the haptic media buffer. Therefore, the MAF may write the decoded data of the haptic media file including the haptic value of the first haptic material attribute whose type is the Reference into the buffer view of the haptic media buffer. The display engine may determine the haptic media accessor based on the index value declared by the accessor index syntax element in the target media reference array in the media reference list of the MPEG haptic of the target node description module, and obtain the haptic value of the first haptic material attribute by accessing the data in the buffer view of the haptic media buffer through the haptic media accessor. Therefore, the embodiments of the present disclosure may support obtaining a haptic value of a haptic material attribute whose type is the Reference, solving a problem of being unable to obtain the haptic value of the haptic material attribute whose type is the Reference in related technologies.

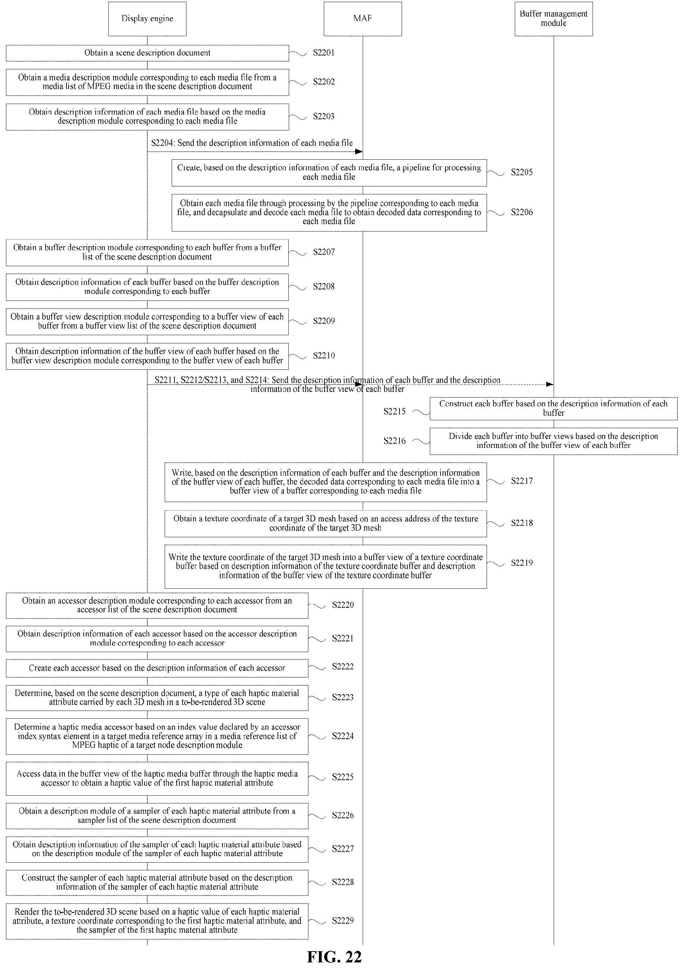

Some embodiments of the present disclosure also provide a 3D scene rendering method. The 3D scene rendering method includes: a method for parsing a scene description document and a 3D scene rendering method that are executed by a display engine, a method for processing a haptic media file and executed by a MAF, and a buffer management method executed by a buffer management module. The following describes the solutions provided in the embodiments of the present disclosure by using an example in which a scene-to-be-rendered includes a target haptic media file, a type of a first haptic material attribute in the target haptic media file is Reference, a buffer configured for caching the target haptic media file is a haptic media buffer, a buffer for accessing the target haptic media file is a haptic media accessor, a mesh carrying the first haptic material attribute is a target 3D mesh, a buffer configured for caching a texture coordinate of the target 3D mesh is a texture coordinate buffer, and an accessor for accessing the texture coordinate of the target 3D mesh is a texture coordinate accessor. As shown in FIG. 22, the 3D scene rendering method includes following steps:
S2201: The display engine obtains the scene description document.

In some embodiments, that the display engine obtains the scene description document of the scene-to-be-rendered includes: the display engine downloads the scene description document from a server using a network transmission service.

In some embodiments, that the display engine obtains the scene description document of the scene-to-be-rendered includes: reading the scene description document from local storage space.

S2202: The display engine obtains a media description module corresponding to each media file from a media list (media) of MPEG media in the scene description document (including: obtaining a media description module corresponding to the target haptic media file from the media list of the MPEG media in the scene description document).

S2203: The display engine obtains description information of each media file based on the media description module corresponding to each media file (including: obtaining description information of the target haptic media file based on the media description module corresponding to the target haptic media file).

In some embodiments, the description information of the media file includes at least one of following information:
a name of the media file, whether the media file is automatically played, whether the media file is cyclically played, a type of the media file, an access address of the media file, track information of an encapsulated file of the media file, and a codec parameter of the media file.

S2204: The display engine sends the description information of each media file to the MAF (sends the description information of the target haptic media file to the MAF).

Correspondingly, the MAF receives the description information that is of each media file and sent by the display engine.

In some embodiments, that the display engine sends the description information of each media file to the MAF includes: the display engine sends the description information of each media file to the MAF through a MAF API.

In some embodiments, that the MAF receives the description information that is of each media file and sent by the display engine includes: the MAF receives, through the MAF API, the description information that is of each media file and sent by the display engine.

S2205: The MAF creates, based on the description information of each media file, a pipeline for processing each media file (including creating, based on the description information of the target haptic media file, a haptic media pipeline for processing the target haptic media file).

In some embodiments, the haptic media pipeline includes an input module, a decapsulation module, a decoding module, and a post-processing module. The input module is configured to obtain the target haptic media file (encapsulated file). The decapsulation module is configured to decapsulate the target haptic media file. The decoding module is configured to decode a bitstream obtained through the decapsulation. The post-processing module is configured to perform format conversion and other post-processing on data obtained through the decoding to obtain decoded data of the target haptic media file.

S2206: The MAF obtains each media file through processing by the pipeline corresponding to each media file, and decapsulates and decodes each media file to obtain decoded data corresponding to each media file (including: obtaining the target haptic media file through the haptic media pipeline, and decapsulating and decoding the target haptic media file to obtain the decoded data corresponding to the target haptic media file).

In some embodiments, the description information of the target haptic media file includes an access address of the target haptic media file, and the above-mentioned step S2206 (in which the MAF obtains each media file through the processing by the pipeline corresponding to each media file, and decapsulates and decodes each media file to obtain the decoded data corresponding to each media file) includes:
the MAF obtains the target haptic media file based on the access address of the target haptic media file.

In some embodiments, that the MAF obtains the target haptic media file based on the access address of the target haptic media file includes: the MAF sends a media resource request to a media resource server based on the access address of the target haptic media file, and receives a media resource response that carries the target haptic media file and is sent by the media server.

In some embodiments, that the MAF obtains the target haptic media file based on the access address of the target haptic media file includes: the MAF reads the target haptic media file from preset storage space based on the access address of the target haptic media file.

In some embodiments, the description information of the target haptic media file further includes an index value of each bitstream track of the target haptic media file, and the above-mentioned step S2206 (in which the MAF obtains each media file through the processing by the pipeline corresponding to each media file, and decapsulates and decodes each media file to obtain the decoded data corresponding to each media file) includes:
the MAF decapsulates the target haptic media file based on the index value of each bitstream track of the target haptic media file to obtain a bitstream of each bitstream track of the target haptic media file.

In some embodiments, the description information of the target haptic media file further includes a codec parameter of each bitstream track of the target haptic media file, and the above-mentioned step S2206 (in which the MAF obtains each media file through the processing by the pipeline corresponding to each media file, and decapsulates and decodes each media file to obtain the decoded data corresponding to each media file) includes:
the MAF decodes the bitstream of each bitstream track of the target haptic media file based on the codec parameter of each bitstream track of the target haptic media file, and obtains decoded data corresponding to each bitstream track of the target haptic media file to obtain the decoded data corresponding to the target haptic media file.

S2207: The display engine obtains a buffer description module corresponding to each buffer from a buffer list (buffers) of the scene description document (including: obtaining a buffer description module corresponding to the haptic media buffer configured for caching the target haptic media file, and a buffer description module corresponding to the texture coordinate buffer configured for caching the texture coordinate of the 3D mesh that carries the first haptic material attribute from the buffer list of the scene description document).

S2208: The display engine obtains description information of each buffer based on the buffer description module corresponding to each buffer (including: obtaining description information of the haptic media buffer based on the buffer description module corresponding to the haptic media buffer, and obtaining description information of the texture coordinate buffer based on the buffer description module corresponding to the texture coordinate buffer).

In some embodiments, the description information of the buffer may include at least one of following information:
a capacity of the buffer, an access address of data cached in the buffer, whether the buffer is an MPEG circular buffer, a quantity of storage stages of the circular buffer, an index value of a media description module corresponding to a media file cached in the circular buffer, and a track index value of data of the media file cached in the circular buffer.

S2209: The display engine obtains a buffer view description module corresponding to a buffer view of each buffer from a buffer view list (bufferViews) of the scene description document (including: obtaining a buffer view description module corresponding to a buffer view of the haptic media buffer, and a buffer view description module corresponding to a buffer view of the texture coordinate buffer from the buffer list of the scene description document).

S2210: The display engine obtains description information of the buffer view of each buffer based on the buffer view description module corresponding to the buffer view of each buffer (including: obtaining description information of the buffer view of the haptic media buffer based on the buffer view description module corresponding to the buffer view of the haptic media buffer, and obtaining description information of the buffer view of the texture coordinate buffer based on the buffer view description module corresponding to the buffer view of the texture coordinate buffer).

In some embodiments, the description information of the buffer may include at least one of following information:
a buffer to which the buffer view belongs, a capacity of the buffer view, and an offset of the buffer view.

After the above-mentioned steps S2208 and S2210, the embodiments of the present disclosure may choose to execute either a scheme 1 or a scheme 2 to send the description information of each buffer and the description information of the buffer view of each buffer to the MAF and the buffer management module.

The scheme 1 includes following steps S2211 and S2212:
S2211: The display engine sends the description information of each buffer and the description information of the buffer view of each buffer to the MAF (including: the display engine sends the description information of the haptic media buffer, the description information of the buffer view of the haptic media buffer, the description information of the texture coordinate buffer, and the description information of the buffer view of the texture coordinate buffer to the MAF).

Correspondingly, the MAF receives the description information of each buffer and the description information of the buffer view of each buffer that are sent by the display engine (including: the MAF receives the description information of the haptic media buffer, the description information of the buffer view of the haptic media buffer, the description information of the texture coordinate buffer, and the description information of the buffer view of the texture coordinate buffer that are sent by the display engine).

In some embodiments, an implementation of the above-mentioned step S2211 (in which the display engine sends the description information of each buffer and the description information of the buffer view of each buffer to the MAF) may be: the display engine sends the description information of each buffer and the description information of the buffer view of each buffer to the MAF through the MAF API. Correspondingly, an implementation in which the MAF receives the description information of each buffer and the description informatin of buffer view of each buffer that are sent by the display engine may be: the MAF receives, through the MAF API, the description information of each buffer and the description information of the buffer view of each buffer that are sent by the display engine.

S2212: The MAF sends the description information of each buffer and the description information of the buffer view of each buffer to the buffer management module (including: the MAF sends the description information of the haptic media buffer, the description information of the buffer view of the haptic media buffer, the description information of the texture coordinate buffer, and the description information of the buffer view of the texture coordinate buffer to the buffer management module).

Correspondingly, the buffer management module receives the description information of each buffer and the description information of the buffer view of each buffer that are sent by the MAF (including: the MAF receives the description information of the haptic media buffer, the description information of the buffer view of the haptic media buffer, the description information of the texture coordinate buffer, and the description information of the buffer view of the texture coordinate buffer that are sent by the display engine).

In some embodiments, an implementation of the above-mentioned step S2211 (in which the MAF sends the description information of each buffer and the description information of the buffer view of each buffer to the buffer management module) may be: the MAF sends the description of each buffer and the description information of the buffer view of each buffer to the buffer management module through a buffer API. Correspondingly, an implementation in which the MAF receives the description information of each buffer and the description informatin of buffer view of each buffer that are sent by the display engine may be: the buffer management module receives, through the buffer API, the description information of each buffer and the description information of the buffer view of each buffer that are sent by the MAF.

The scheme 2 includes following steps S2213 and S2214:
S2213: The display engine sends the description information of each buffer and the description information of the buffer view of each buffer to the MAF.

Correspondingly, the MAF receives the description information of each buffer and the description information of the buffer view of each buffer that are sent by the display engine.

S2214: The display engine sends the description information of each buffer and the description information of the buffer view of each buffer to the buffer management module.

In some embodiments, an implementation of the above-mentioned step S2214 (in which the display engine sends the description information of each buffer, the description information of the buffer view of each buffer, and the description information of the buffer view of the haptic media buffer to the buffer management module) may be: the display engine sends the description information of each buffer and the description information of the buffer view of each buffer to the buffer management module through the buffer API. an implementation in which the MAF receives the description information of each buffer and the description informatin of buffer view of each buffer that are sent by the display engine: the buffer management module receives, through the buffer API, the description information of each buffer and the description information of the buffer view of each buffer that are sent by the display engine.

After either the scheme 1 or the scheme 2 is executed, following steps are continuously performed:
S2215: The buffer management module constructs each buffer based on the description information of each buffer (including: constructing the haptic media buffer based on the description information of the haptic media buffer, and constructing the texture coordinate buffer based on the description information of the texture coordinate buffer).

S2216: The buffer management module divides each buffer into buffer views based on the description information of the buffer view of each buffer (including: dividing the haptic media buffer into buffer views based on the description information of the buffer view of the haptic media buffer, and dividing the texture coordinate buffer into buffer views based on the description information of the buffer view of the texture coordinate buffer).

S2217: The MAF writes, based on the description information of each buffer and the description information of the buffer view of each buffer, the decoded data corresponding to each media file into a buffer view of a buffer corresponding to each media file (including: writing the decoded data of the target haptic media file into the buffer view of the haptic media buffer).

S2218: The MAF obtains the texture coordinate of the target 3D mesh based on an access address of the texture coordinate of the target 3D mesh.

S2219: The MAF writes the texture coordinate of the target 3D mesh into the buffer view of the texture coordinate buffer based on the description information of the texture coordinate buffer and the description information of the buffer view of the texture coordinate buffer.

S2220: The display engine obtains an accessor description module corresponding to each accessor from an accessor list (accessors) of the scene description document (including: the display engine obtains an accessor description module corresponding to the haptic media accessor for accessing the target haptic media file, and an accessor description module corresponding to the texture coordinate accessor for accessing the texture coordinate from the accessor list of the scene description document).

S2221: The display engine obtains description information of each accessor based on the accessor description module corresponding to each accessor (including: the display engine obtains description information of the haptic media accessor based on the accessor description module corresponding to the haptic media accessor, and obtains description information of the texture coordinate accessor based on the accessor description module corresponding to the texture coordinate accessor).

In some embodiments, the description information of the accessor includes at least one of following information:
a buffer view accessed by the accessor, a data type of data accessed by the accessor, a type of the accessor, a quantity of accessors, whether the accessor is an MPEG time-varying accessor, a buffer view accessed by the time-varying accessor, and whether a parameter of the accessor changes over time.

S2222: The display engine creates each accessor based on the description information of each accessor (including: the display engine creates the haptic media accessor based on the description information of the haptic media accessor, and creates the texture coordinate accessor based on the description information of the texture coordinate accessor).

S2223: The display engine determines, based on the scene description document, a type of each haptic material attribute carried by each 3D mesh in a 3D-scene-to-be-rendered.

In the above-mentioned step S2223, if the display engine determines that the type of the first haptic material attribute carried by the target 3D mesh in the 3D-scene-to-be-rendered is the Reference, following steps are performed:
S2224: The display engine determines the haptic media accessor based on an index value declared by an accessor index syntax element in a target media reference array in a media reference list of MPEG haptic of a target node description module.

The target node description module is a node description module corresponding to a node including the target 3D mesh, and the target media reference array is a media reference array corresponding to the target haptic media file to which the first haptic material attribute belongs.

S2225: The display engine accesses data in the buffer view of the haptic media buffer through the haptic media accessor to obtain a haptic value of the first haptic material attribute.

S2226: The display engine obtains a description module of a sampler of each haptic material attribute from a sampler list (samplers) of the scene description document (including: the display engine obtains a description module of a sampler of the first haptic material attribute from the sampler list of the scene description document).

S2227: The display engine obtains description information of the sampler of each haptic material attribute based on the description module of the sampler of each haptic material attribute (including: the display engine obtains description information of the sampler of the first haptic material attribute based on the description module of the sampler of the first haptic material attribute).

S2228: The display engine constructs the sampler of each haptic material attribute based on the description information of the sampler of each haptic material attribute (including: the display engine constructs the sampler of the first haptic material attribute based on the description information of the sampler of the first haptic material attribute).

S2229: Render the 3D-scene-to-be-rendered based on a haptic value of each haptic material attribute, a texture coordinate corresponding to the first haptic material attribute, and the sampler of the first haptic material attribute.

Some other embodiments of the present disclosure provide a scene description framework supporting a haptic value of a haptic material attribute whose type is Reference. Specific content includes: support by a scene description document for obtaining the haptic value of the haptic material attribute whose type is the Reference, support by a MAF API for obtaining the haptic value of the haptic material attribute whose type is the Reference, support by a MAF for obtaining the haptic value of the haptic material attribute whose type is the Reference, support by a buffer API for obtaining the haptic value of the haptic material attribute whose type is the Reference, support by buffer management for obtaining the haptic value of the haptic material attribute whose type is the Reference, and the like.

A process of indexing, rendering, and displaying a haptic media file in a 3D scene based on the scene description framework is as follows: Firstly, a display engine downloads, through a network protocol, the scene description document from a 3D scene provider, or reads the scene description document from a local memory. The scene description document obtained by the display engine includes description information of the 3D scene and description information of the haptic media file in the 3D scene. The description information of the haptic media file includes an access address of the haptic media file, attribute information (a media type, a codec parameter used, and the like) about access to the haptic media file, and the like. In addition, a format requirement of data obtained by decoding the haptic media file is also included. The format requirement of the data obtained by decoding the haptic media file includes a format requirement (a data type, a data length, a data access method, and the like) of information data such as a description part and an encoding part (namely, the description part 41 and the encoding part 42 in FIG. 4, which are collectively referred to as the haptic media file in the following description) of haptic data obtained by processing the haptic media file, and a format requirement and an address of other media data, including description information of a texture map and a haptic material attribute that need to be subsequently used, and other data. After parsing the scene description document, the display engine calls the MAF API to transfer the access address of the haptic media file, the attribute information (the media type, a codec used, and the like) of the haptic media file, and other information to the MAF. In addition, the display engine transfers format requirements of specific decoded haptic media data and other media data in the parsed scene description document to the MAF by calling the MAF API. Then, based on the access address that is of the haptic media file and transferred by the display engine, the MAF requests to download the haptic media file from a server or locally obtains the haptic media file. Afterwards, the MAF establishes a corresponding pipeline for the media file based on the media type, the codec parameter, and other information, and converts obtained media data from an encapsulation format to a format required in the scene description document, that is, converts the haptic media file into the format (the data type, the data length, the data access method, and the like) specified in the scene description document in the corresponding pipeline. The haptic media file may be decapsulated, decrypted, decoded, and post-processed in the pipeline. Subsequently, the pipeline stores information data of decoded haptic media that is in the format specified in the scene description document and other media data in a buffer. The buffer may be created by the display engine by calling a buffer management module through the buffer API. If the display engine has not created the buffer, the MAF may invoke the buffer management module through the buffer API to create the buffer. In this way, the buffer may be created, updated, and released. Finally, in the buffer, the display engine reads the haptic media file in the format specified in the scene description document to render a haptic part in the 3D scene.

The following separately describes the scene description document, the MAF API, the MAF, the buffer API, and the buffer management that support obtaining the haptic value of the haptic material attribute whose type is the Reference.

### 1. Scene description document that supports obtaining the haptic value of the haptic material attribute whose type is the Reference

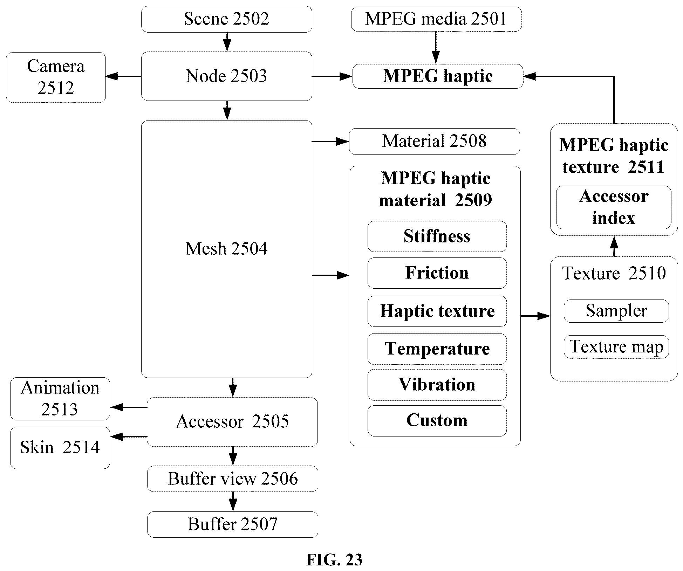

FIG. 23 is a schematic structural diagram 23 of the scene description document that supports obtaining the haptic value of the haptic material attribute whose type is the Reference according to an embodiment of the present disclosure. As shown in FIG. 23, the scene description document that supports obtaining the haptic value of the haptic material attribute whose type is the Reference includes but is not limited to following modules: MPEG media (MPEG_media) 2501, a scene description module (scene) 2502, a node description module (node) 2503, a mesh description module (mesh) 2504, an accessor description module (accessor) 2505, a buffer view description module (bufferView) 2506, a buffer description module (buffer) 2507, a material description module (material) 2508, an MPEG haptic material (MPEG_material_haptic) 2509, a texture description module (texture) 2510, an MPEG haptic texture (MPEG_texture_haptic) 2511, a camera description module (camera) 2512, a skin description module (skin) 2513, and an animation description module (animation) 2514. The following separately describes in detail each description module in the scene description document shown in FIG. 23.

In order to enable the scene description document to correctly describe the haptic media file, some embodiments of the present disclosure extend a value of a syntax element in the MPEG media (MPEG_media) 2501 in the scene description document, and at least one of following extensions is included:
Extension 1: A value of a media type syntax element (MPEG_media.media.alternatives.mimeType) used to describe a media resource type of media in an alternative item (MPEG_media.media.alternatives) of a media list of the MPEG media in the scene description document is extended. The extension of the media type syntax element (mimeType) includes adding a value associated with the haptic media file to the media type syntax element (mimeType). For example, when a media resource includes an audio resource, a video resource, and a haptic resource, the value of the "mimeType" is "video/mp4"; when a media resource includes only the audio resource and the haptic resource, the value of the "mimeType" is the "video/mp4"; when a media resource includes only the haptic resource, the value of the "mimeType" is "haptics/mp4".

Extension 2: A value of a track syntax element (MPEG_media.media.alternatives.tracks.track) used to declare track information of the media file in a track array (MPEG_media.media.alternatives.tracks) in the alternative item of the media list of the MPEG media in the scene description document is extended. The extension of the track syntax element (track) includes: When an encoded haptic media file is referenced by the scene description document as an item in the track array (MPEG_media.media.alternatives.tracks) in the alternative item of the media list of the MPEG media, a selection method of a reference track in an ISO/IEC 23090-32 standard should be followed. For example, when haptic media is encapsulated into one MIHS track by using an ISOBMFF, the one MIHS track should be referenced in the MPEG media. When the haptic media is encapsulated into a plurality of MIHS tracks by using the ISOBMFF, reference should be made to subsequent supplementary content of the ISO/IEC 23090-32 standard.

Extension 3: A value of a codec parameter syntax element (MPEG_media.media.alternatives.tracks.codecs) used to describe a codec type of media data included in a bitstream track in the track array (MPEG_media.media.alternatives.tracks) in the alternative item of the media list of the MPEG media in the scene description document is extended. A codec parameter of a media file included in the bitstream track is defined in IETFRFC 6381. When the bitstream track includes different types of codecs (for example, AdaptationSet includes representations for different codecs), the codec parameter syntax element (codecs) may be represented by a list of codec values separated by a comma. Therefore, the extension of the value of the codec parameter syntax element (codecs) includes: When the media data is haptic data and its encapsulation rule follows the 23090-32 standard, the value of the codec parameter syntax element (codecs) should be set according to a provision in a standard for carriage of haptics data in the ISO/IEC 23090-32 standard. For example, when the haptic data is encapsulated by using an ISMBOFF, a first group of elements in the codec parameter syntax element (codecs) represents a code of a codec in an ISO/IEC 23090-31 standard. A parameter form of the codec parameter syntax element (codecs) is "codecs":"mihl.oo", where "mihl" represents a type of data format description for encapsulating the haptic data in the ISOBMFF. This value is not unique and may be replaced by another sample format name that complies with ISOBMFF encapsulation. "oo" represents an object type indication value defined on an "Object Type" page at a website of the MP4 registration authority.

That is, in order to enable the scene description document to correctly describe the haptic media file, some embodiments of the present disclosure extend the value of the syntax element in the MPEG media in the scene description document, and at least one of syntax elements shown in following Table 31 is specifically extended:

**Table 31**

| Syntax element name | Data type | Defa ult value | Usage | Description |
|---|---|---|---|---|
| mimeType | String | N/A | Compulsory | When the media resource includes the audio resource, the video resource, and the haptic resource, the value of the "mimeType" is the "video/mp4". |
| | | | | When the media resource includes only the audio |
| | | | | resource and the haptic resource, the value of the "mimeType" is the "video/mp4". |
| | | | | When the media resource includes only the haptic resource, the value of the "mimeType" is the "haptic s/mp4". |
| track | String | N/A | Compulsory | When the haptic data is referenced by the scene description document as an item in the MPEG_media.alternative .tracks, and the referenced item complies with a provision of the track in the ISOBMFF: |
| | | | | For haptic media data encapsulated into a single track, a single track of a haptic media encapsulation file is referenced in the MPEG_media. |
| | | | | For haptic data encapsulated into a plurality of tracks, a reference track referenced in the MPEG_media should be selected according to a relevant provision in the ISO/IEC 23090-32 standard. |
| codecs | String | N/A | Compulsory | When the media data is the haptic data, the value of the 'codecs' should be set according to the provision in the standard for carriage of haptics data in the ISO/IEC 23090-32 standard. |

At least one of the extensions 1 to 3 is performed on the value of the syntax element in the MPEG_media in the scene description document, such that the MPEG media in the scene description document may describe the haptic media file.

It should be noted that the haptic media file is encapsulated based on a data structure shown in FIG. 4. The haptic media file not only includes an information part, but also includes a metadata configuration part. An encapsulation method of the haptic media file is not limited in the embodiments of the present disclosure, and an encoded and encapsulated haptic media file may be obtained based on the access address of the haptic media file in the MPEG media.

In some embodiments, description methods of the scene description module (scene) 2502 and the node description module (node) 2503 in the scene description document that supports obtaining the haptic value of the haptic material attribute whose type is the Reference include: when the haptic media file is included in the 3D scene, using scene and node description methods to describe an overall structure of the 3D scene, as well as a structural hierarchy and a position of the haptic media file in the 3D scene. When the 3D scene includes a node description module (node) that needs to index the haptic media file, MPEG haptic (MPEG_haptic) is enabled, and the haptic media file is indexed in the MPEG haptic description module.

In addition, each 3D scene is described using one independent scene description module. In the 3D scene, there may be many specific objects, such as a virtual digital human, a nearby 3D object, a distant background image, and a virtual camera representing a user's viewpoint and viewing angle. The scene description document uses these specific objects as nodes in the 3D scene, and each node may represent one object or an object set composed of a plurality of objects. A relationship between nodes reflects a relationship between various components in the 3D scene. Each scene description document may describe at least one 3D scene, and there is only a parallel relationship instead of a hierarchical relationship between 3D scenes, that is, there is no inclusion relationship between the 3D scenes. There may be a parallel or hierarchical relationship between the nodes, that is, there is an inclusion relationship between the nodes. In this way, a plurality of specific objects may be integrated together for representation. If one node is included in another node, the included node is referred to as a child node, and the child node is represented by "children" instead of "node". A hierarchical node structure may be formed by flexibly combining the node and the child node.

In some embodiments, a description method of the mesh description module (mesh) 2504 in the scene description document that supports obtaining the haptic value of the haptic material attribute whose type is the Reference includes: describing, by the scene description document by using a data format of a 3D mesh, in other words, by using the mesh description module (mesh) 2504, a node representing a 3D object. The mesh description module includes various types of specific information, such as a 3D coordinate and a color. The above information belongs to a syntax element in an attribute (mesh.primitives.attribute) of a primitive of the mesh description module. A most basic mesh description module includes a 3D coordinate of a vertex, a connection relationship between vertices, color information of the vertex, and a 3D coordinate of a required texture value. In the mesh description module, it is necessary to enable a texture coordinate (Texcoord) of a 3D coordinate set of the required texture value, such that a haptic value obtained from a texture may be subsequently attached to a corresponding 3D coordinate of the 3D object. The texture coordinate (Texcoord), color data, and other information belong to the attribute (mesh. primitives. attribute) of the primitive of the mesh description module. However, the haptic media does not need to be defined temporarily in the mesh description module by referencing the attribute (attribute) such as a color count. It is only required to enable the MPEG haptic material (MPEG_material_haptic) 2509 as a content supplement parallel to the material description module (material) 2504 to support further definition of a haptic material.

In some embodiments, description methods of the material description module (material) 2508 and the texture description module (texture) 2510 in the scene description document that supports obtaining the haptic value of the haptic material attribute whose type is Reference includes: describing additional information of a surface of the 3D object through the material description module (material) 2508 and the texture description module (texture) 2510. When a conventional 3D object is described, if only geometric information of the 3D object is described with the help of the mesh description module, or a color of a vertex of the 3D mesh is defined monotonously, it is far from enough to enhance authenticity of a virtual object. Therefore, more information needs to be added to a surface of the 3D object. For a conventional 3D modeling technique, this process may also be referred to as texture mapping, texture addition, or the like. That is, the scene description document that supports obtaining the haptic value of the haptic material attribute whose type is Reference is based on glTF2.0, and the material description module (material) 2508 and the texture description module (texture) 2510 are continuously used. In addition, a cooperative relationship between the material description module (material) 2508 and the texture description module (texture) 2510 includes: The material description module (material) 2508 and the texture description module (texture) 2510 jointly define color and physical information of an object surface. Under the texture description module (texture) 2510, a sampler description module (sampler) and a texture map description module (image) are specified. The sampler description module (sampler) defines how to map a texture map onto the object surface, achieving specific adjustment and packaging of the texture. The texture map description module (image) uses a ULR to identify and index the texture map.

In some embodiments, a description method of the MPEG haptic material (MPEG_material_haptic) 2509 in the scene description document that supports obtaining the haptic value of the haptic material attribute whose type is Reference includes: further describing the haptic material attribute through the MPEG haptic material (MPEG_material_haptic) 2509. When the haptic media file is included in the 3D scene, it is necessary to consider the haptic material attribute in a material characteristic. The MPEG haptic material (MPEG_material_haptic) 2509 includes haptic material attribute description modules corresponding to various haptic material attributes (stiffness, friction, haptic texture, temperature, vibration, and custom). The haptic material attribute description module includes an attribute type syntax element, and a value of the attribute type syntax element may be High_resolution, Low_resolution, or the Reference. An object including a haptic feedback in the 3D scene may include different types of haptic material attributes. For different haptic material attributes on a same object, haptic values or haptic media perceived by the user for the haptic values may be obtained in different ways, in order to associate the haptic media in the scene description document to obtain the haptic feedback.

In some embodiments, a description method of the MPEG haptic texture (MPEG_texture_haptic) 2511 in the scene description document that supports obtaining the haptic value of the haptic material attribute whose type is Reference includes: indexing a texture coordinate point to a group of haptic signals in the haptic media file through the MPEG haptic texture (MPEG _texture_haptic) 2511.

It may be seen from Table 16 that the MPEG haptic material (MPEG_material_haptic) 2509 includes the haptic material attribute description modules corresponding to the haptic material attributes (the stiffness, the friction, the haptic texture, the temperature, the vibration, and the custom). A haptic material attribute description module corresponding to each haptic material attribute includes a type of the haptic material attribute, specifically including the High_resolution, the Low_resolution, the Reference, or Other. If a type of a haptic material texture of a haptic material attribute is the Low_resolution or the High_resolution, it means that a haptic value on a texture coordinate point may be obtained from a texture map or another haptic texture material data packet. A value included in each pixel of the texture map or the haptic texture material data packet represents the haptic value. In addition, as shown in Table 14 and Table 15, haptic values of different types of haptic material textures have different bit depths. For example, a bit depth of a haptic value of a haptic material attribute whose type is the High_resolution is 16 bits, while a bit depth of an attribute value of a haptic material attribute whose type is the Low_resolution is 8 bits.

If the type of the haptic material attribute is the Reference, it is required that the haptic value of the texture coordinate point or haptic values of a group of texture coordinate points may be indexed to a group of temporal or spatial haptic values. At this time, the MPEG haptic texture (MPEG _texture_haptic) 2511 needs to be enabled to provide a relevant supplementary description. The MPEG haptic material (MPEG_material_haptic) 2509 internally includes a type of each haptic material attribute. When a type of a haptic material attribute is the Reference, without changing an original grammatical meaning of the texture description module (texture) 2510, it is necessary to add the MPEG haptic texture (MPEG_texture_haptic) 2511 to the texture description module (texture) 2510, in order to index a texture coordinate point to a group of haptic values. The MPEG haptic texture (MPEG_haptic_texture) 2511 internally has an accessor index syntax element (accessor), which clarifies an accessor description module corresponding to an accessor that may actually access the haptic media file to which the texture coordinate point needs to be indexed. This function corresponds to the description of the buffer description module (buffer) and the buffer view description module (bufferview) in the scene description document, jointly achieving direct indexing of the texture coordinate point data to the haptic media file. A syntax element in the MPEG haptic texture (MPEG_haptic_texture) 2511 is defined in following Table 32:

**Table 32**

| Element name | Data type | Default value | Usage | Description |
|---|---|---|---|---|
| accessor | Integer | N/A | Compulsory | Defines an index of an accessor for accessing haptic media related to the material. |

In some embodiments, description methods of the accessor description module (accessor) 2505, the buffer view description module (bufferView) 2506, and the buffer description module (buffer) 2507 in the scene description document that supports obtaining the haptic value of the haptic material attribute whose type is the Reference include: pointing to, based on a value of a media index syntax element (buffer.MPEG_buffer_circular.media) of an MPEG circular buffer of the buffer description module, an index of a media description module corresponding to the haptic media file in the MPEG media (MPEG_media). That is, the haptic media file needs to be specified in the buffer description module (buffer), but a URL of the haptic media file is not directly added to the buffer description module (buffer). Instead, an index value of the media description module corresponding to the corresponding haptic media file in the MPEG media (MPEG_media) is declared by the media index syntax element (MPEG_buffer_circular. media) in the MPEG circular buffer of the buffer description module (buffer).

For example, if the media description module corresponding to the haptic media file in the MPEG media (MPEG_media) is a third media description module in the media list of the MPEG media (MPEG_media), the value of the media index syntax element (buffer.MPEG_buffer_circular.media) in the MPEG circular buffer of the buffer description module may be set to "2", such that an access address of the third media description module in the MPEG media is indexed in the MPEG circular buffer of the buffer description module, so as to index the haptic media file based on the media index syntax element in the MPEG circular buffer (MPEG_buffer_circular) of the buffer description module.

In some embodiments, description methods of the accessor description module (accessor) 2505, the buffer view description module (bufferView) 2506, and the buffer description module (buffer) 2507 in the scene description document that supports obtaining the haptic value of the haptic material attribute whose type is the Reference include: indicating, through a track (buffer.MPEG_buffer_circular.tracks.track) in a track array of the MPEG circular buffer of the buffer description module, track information when an encapsulated file of the haptic media file is accessed. Specifically, when the track array (buffer.MPEG_buffer_circular.tracks) of the MPEG circular buffer of the buffer description module includes a plurality of tracks, the pipeline should perform necessary processing on all referenced tracks to generate a data format requested by the buffer description module. If a media file referenced in the track (buffer.MPEG_buffer_circular.tracks) in the track array of the MPEG circular buffer of the buffer description module has a plurality of alternative items (alternatives), each alternative item (alternatives) should record a selection status of the track. When the track array (buffer.MPEG_buffer_circular.tracks) of the MPEG circular buffer of the buffer description module is not defined, the pipeline should perform the necessary processing on all tracks in the MPEG media (MPEG_media) to generate the data format requested by the buffer description module (buffer), that is, to guide the buffer description module (buffer) on how to correctly store data in the MPEG media (MPEG_media).

Syntax elements included in the MPEG circular buffer (MPEG_buffer_circular) are shown in following Table 33.

**Table 33**

| Element name | Data type | Default value | Usage | Description |
|---|---|---|---|---|
| count | Integer | 2 | Non-compulsory | Indicates a quantity of circular buffer sections included in the MPEG circular buffer. The MAF may use this information and establish a corresponding circular buffer structure for the display engine. |
| media | Integer | N/A | Compulsory | Indicates an index of a media file in the MPEG_media, where the media file may be used as an input media source in the buffer. |
| tracks | Array | N/A | Non-compulsory | Indicates an index of a track (track) of a media file from an extension of the MPEG_media, where the index may be used as an input media source in the buffer. |
| | | | | When the syntax element "tracks" is not defined, the pipeline should perform the necessary processing on all the tracks in the MPEG_media to generate the data format requested by the buffer, that is, to guide the buffer on how to correctly store the data in the MPEG_media. |
| | | | | When the syntax element "tracks" includes a plurality of tracks, the pipeline should perform the necessary processing on all the referenced tracks to generate the data format requested by the buffer. |
| | | | | If a media source referenced in the track has a plurality of alternative items (alternatives), each alternative item should record the selection status of the track. |

That is, based on a value setting rule of the media index syntax element (media) in Table 33, a value of the media index syntax element (media) in Table 33 is set to the index value of the media description module corresponding to the corresponding haptic media file in the MPEG media (MPEG_media), so as to index the haptic media file in the buffer description module. Based on a value setting rule of the syntax element "tracks" in Table 33, the value of the syntax element "tracks" in Table 33 is set to an index of a track including the haptic media file in the MPEG media, so as to index the track of the haptic media file in the buffer description module.

In some embodiments, a description method of the camera description module (camera) 2512 in the scene description document that supports obtaining the haptic value of the haptic material attribute whose type is the Reference includes: defining a viewpoint, a viewing angle, and other viewing related visual information of the node description module (node) through the camera description module (camera) 2512.

In some embodiments, a description method of the animation description module (animation) 2513 in the scene description document that supports obtaining the haptic value of the haptic material attribute whose type is the Reference includes: defining, through the animation description module (animation) 2513, an animation added to the node description module (node).

In some embodiments, the animation description module (animation) may describe, through at least one of position movement, angle rotation, and size scaling, the animation added to the node description module (node).

In some embodiments, the animation description module (animation) may also indicate at least one of start time, end time, and an implementation of the animation added to the node description module (node).

That is, in the scene description document that supports obtaining the haptic value of the haptic material attribute whose type is the Reference, an animation may also be added to a node description module (node) representing an object in the 3D object. The animation description module (animation) describes, through the position movement, the angle rotation, and the size scaling, the animation added to the node, and may also specify the start time, the end time, and the implementation of the animation.

In some embodiments, a description method of the skin description module (skin) 2514 in the scene description document that supports obtaining the haptic value of the haptic material attribute whose type the Reference includes: defining a motion and deformation relationship between a mesh (mesh) in the node description module (node) and a corresponding skeleton through the skin description module (skin) 2514.

Based on improvements and extensions made to the MPEG media (MPEG_media), the scene (scene), the node (node), the mesh (mesh), the accessor (accessor), the buffer view (bufferView), the buffer (buffer), the skin (skin), the animation (animation), the camera (camera), the material (material), the texture (texture), the sampler (sampler), and the texture map (image) in the scene description document in the above embodiments, the scene description document is now able to correctly describe the haptic media file.

For example, the scene description document shown in FIG. 23 is described below by taking a scene description document of haptic media that includes haptic texture like the stiffness, the temperature, and the vibration and is encapsulated into a single track as an example.

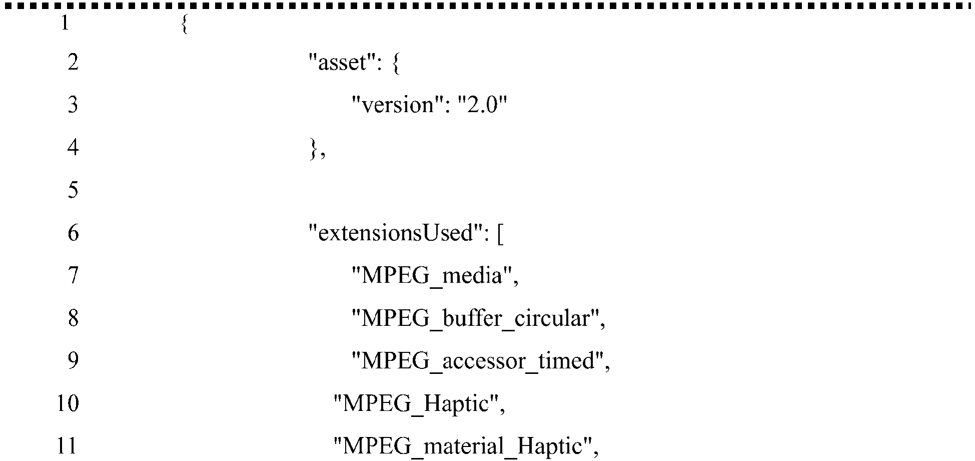

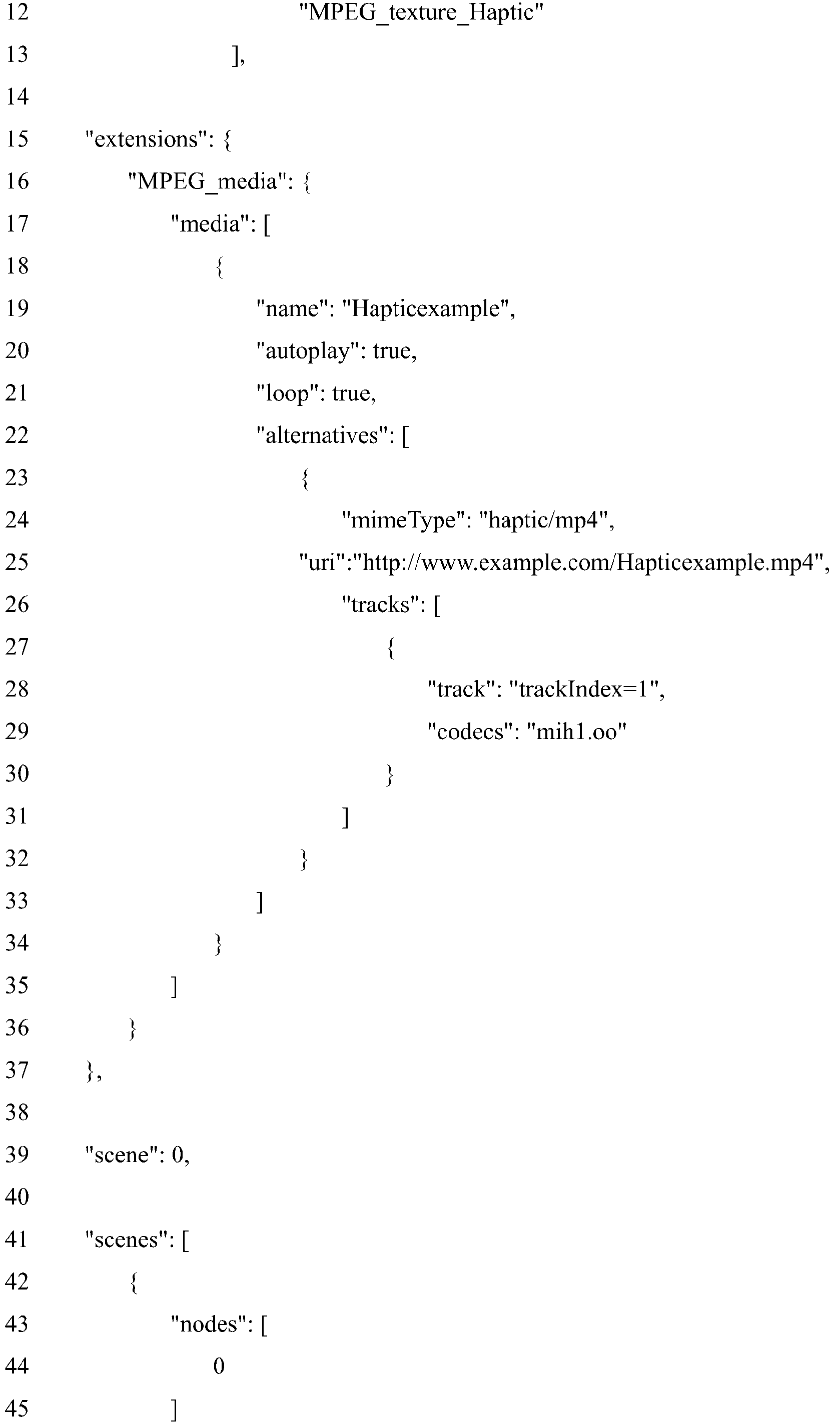

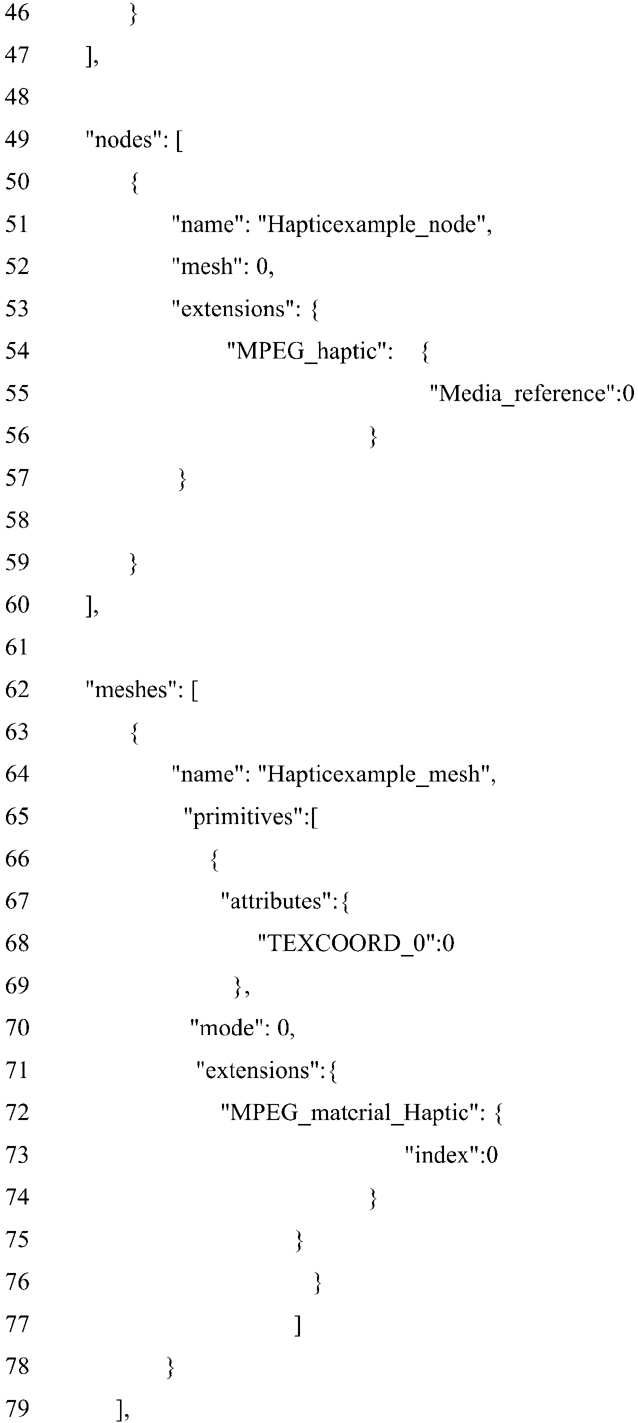

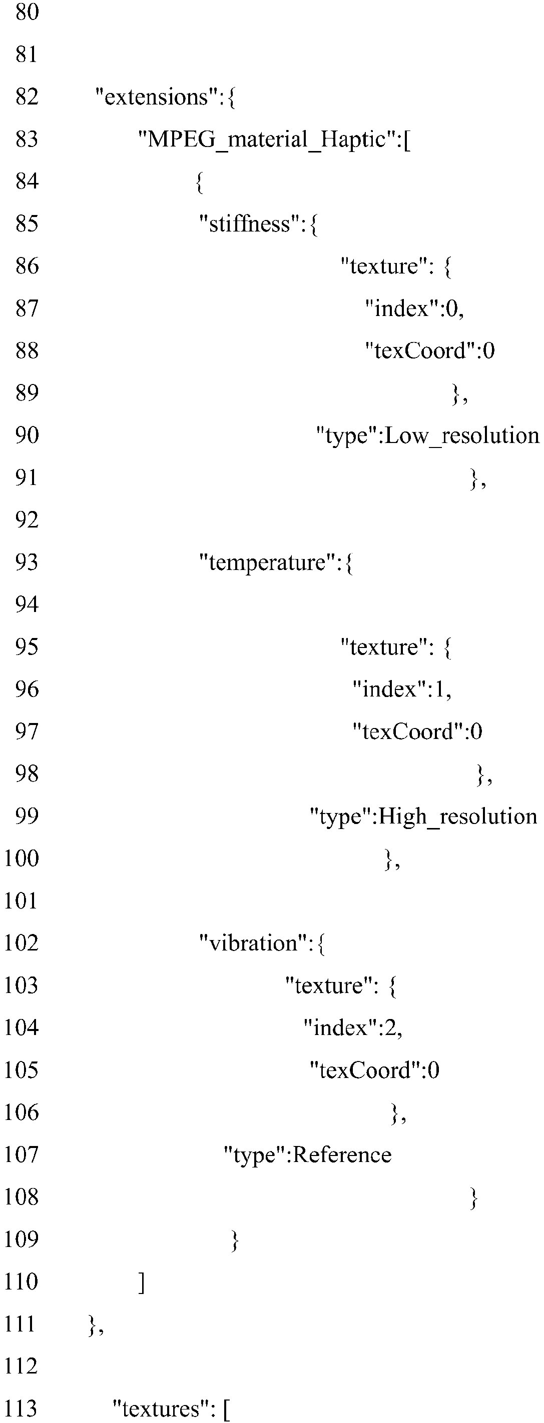

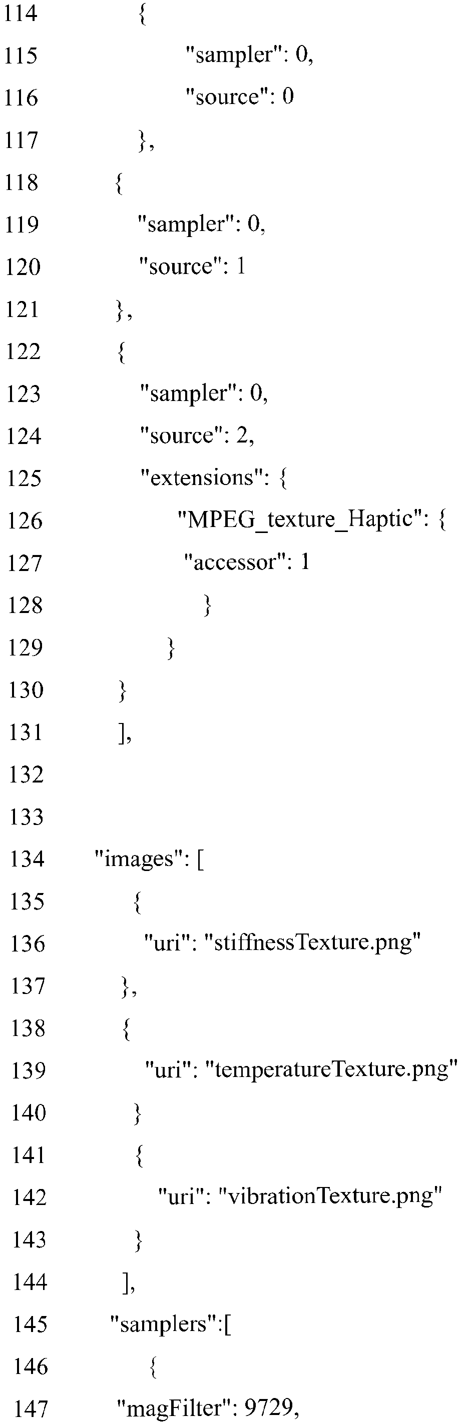

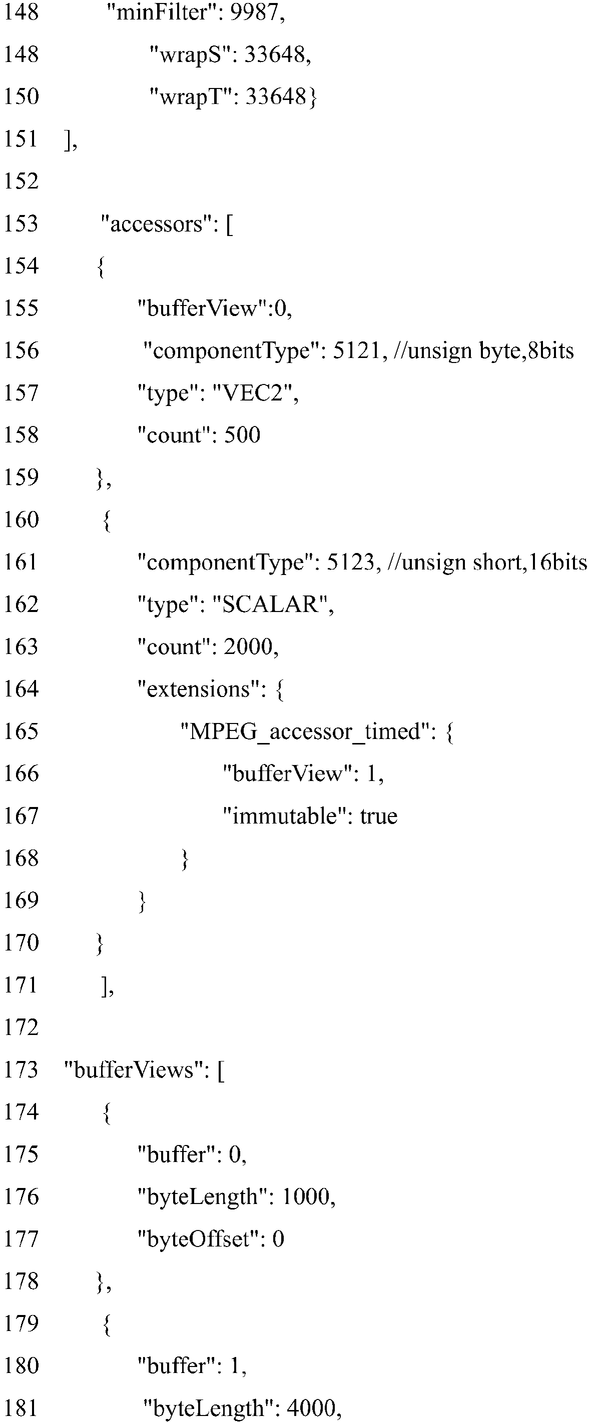

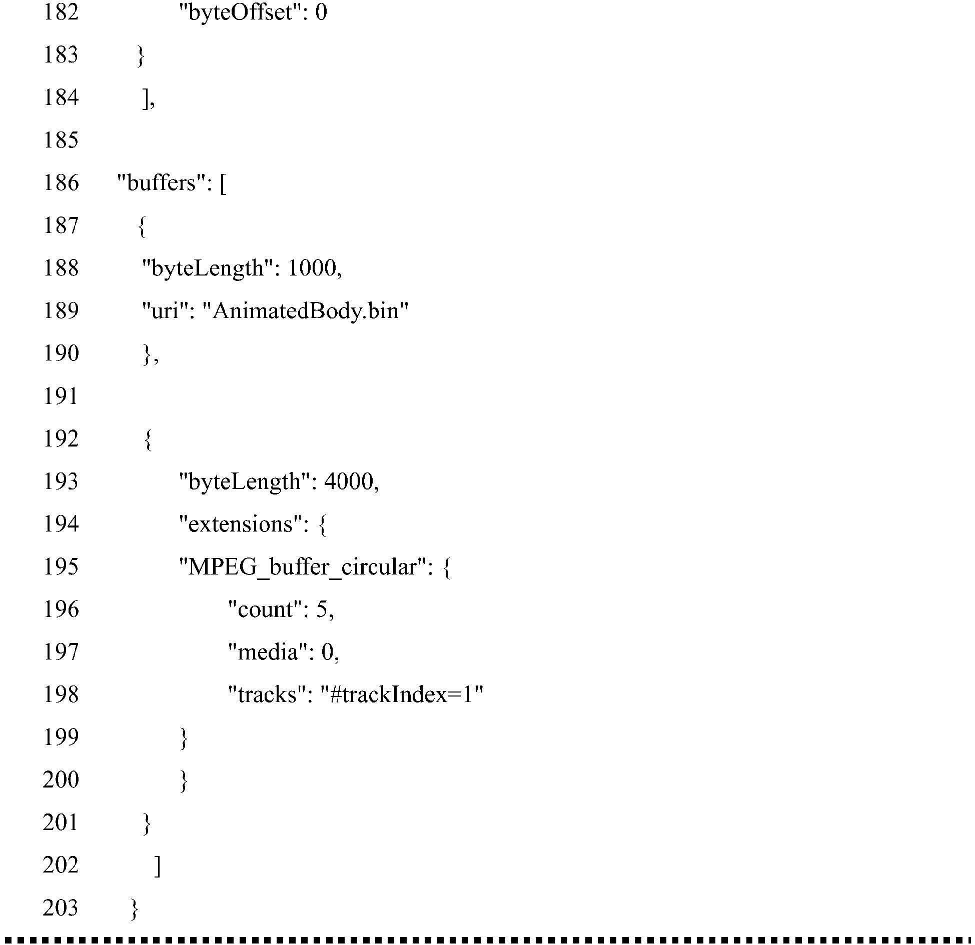

Main content of the scene description document shown in FIG. 23 is included in a pair of braces from lines 1 to 203 in the above example. The scene description document that supports obtaining the haptic value of the haptic material attribute whose type is the Reference includes: a digital asset description module (asset), an extension usage description module (extensionUsed), the MPEG media (MPEG_media), a scene declaration (scene), a scene list (scenes), a node list (nodes), a mesh list (meshes), a haptic material array list (MPEG_material_Haptic), a texture list (textures), a texture map list (images), an accessor list (accessors), a buffer view list (bufferView), and a buffer list (buffers). The following separately describes content of each description module and information included in each description module from a parsing perspective.
1. Digital asset description module (asset): The digital asset description module is located at lines 2 to 4. Based on "version":"2.0" at line 3 in the digital asset description module, it may be determined that the scene description document is compiled based on the glTF2.0, which is also a reference version of a scene description standard. From the parsing perspective, the display engine may determine a parser based on the digital asset description module to parse the scene description document.
2. Extension usage description module (extensionUsed): The extension usage description module is located at lines 6 to 13. Because the extension usage description module includes six extensions that respectively involve the MPEG media (MPEG_media), the MPEG circular buffer (MPEG_buffer_circular), an MPEG time-varying accessor (MPEG_accessor_timed), the MPEG haptic (MPEG_Haptic), the MPEG haptic material (MPEG_material_Haptic), and the MPEG haptic texture (MPEG_texture_Haptic), it may be determined that the scene description document uses six MPEG extensions that respectively involve the MPEG media, the MPEG circular buffer, the MPEG time-varying accessor, the MPEG haptic, the MPEG haptic material, and the MPEG haptic texture. From the parsing perspective, the display engine may learn in advance based on content of the extension usage description module (extensionUsed) that extension items involved in subsequent parsing includes: the MPEG media, the MPEG circular buffer, the MPEG time-varying accessor, the MPEG haptic, the MPEG haptic material, and the MPEG haptic texture.
3. MPEG media (MPEG_media): The MPEG media is located at lines 15 to 37. The MPEG media declares the media file included in the 3D scene, indicates a file type of a corresponding encapsulated file of the media file through "mimeType":"haptic/mp4" at line 24, indicates an access address of the media file through "uri":"http://www.example.com/Hapticexample.mp4" at line 25, indicates track information of the haptic media file through "track":"trackIndex=1" at line 28, indicates decoding information of the haptic media file through "codecs":""mih1.oo'' at line 29, indicates a name of the haptic media file through "name":"Hapticexample" at line 19, indicates, through "autoplay":true at line 20, that the haptic media file should be automatically played, and indicates, through "loop":true at line 21, that the haptic media file should be cyclically played. From the parsing perspective, the display engine may determine existence of one haptic media file in a 3D-scene-to-be-rendered by parsing the MPEG media, and learns a method for accessing and parsing the one haptic media file.
4. Scene declaration (scene): The scene declaration is located at line 39. Because one scene description document theoretically may include a plurality of 3D scenes, the above scene description document first indicates, through "scene":0 at line 39, that a scene described in the scene description document is a 3D scene corresponding to a first scene description module in the scene list, that is, a scene that is described in the scene description document and enclosed in a brace at lines 41 to 46.
5. Scene list (scenes): The scene list is located at lines 41 to 47. The scene list includes only one brace, indicating that the scene description document includes only one scene description module. The scene description document includes only one 3D scene. In the one brace (scene description module), "nodes"[0] at lines 43 to 45 indicates that the one 3D scene includes only one node with an index of 0. From the parsing perspective, the scene list clarifies that the scene description framework should select a first 3D scene in the scene list for subsequent processing and rendering, clarifies an overall structure of the 3D scene, and points to a more detailed lower-level node description module (node).
6. Node list (nodes): The node list is located at lines 49 to 60. The node list includes only one brace, indicating that the scene description document includes only one node description module, the 3D scene has only one node, the one node is the same as a node with an index value of 0 in the scene description module, and the two nodes are associated through indexing. In the one brace (node description module) representing the one node, "name":"Hapticexample_node" at line 51 indicates that the one node is named "Hapticexample_node", and "mesh":0 at line 52 indicates that content mounted on the one node is a first 3D mesh in the mesh list, which corresponds to a lower-level mesh description module. In addition, the MPEG haptic (MPEG_Haptic) is also included at lines 53 to 56 of the one node description module, and the MPEG haptic stores an index number ("Media_reference":0 at line 55) of the haptic media file that may be indexed from the MPEG media (MPEG_media). From the parsing perspective, the one node description module in the node list indicates that the content mounted on the one node is the 3D mesh and an index of a mesh description module of the 3D mesh is 0, and also indicates that the haptic media file that may be indexed from the MPEG media is a first media file in the MPEG media.
7. Mesh List (meshes): The mesh list is located at lines 62 to 79. The mesh list includes only one brace, indicating that the scene description document includes only one mesh description module (mesh), the 3D scene includes only one 3D mesh, and the one 3D mesh is the same as a 3D mesh with an index value of 0 in the node description module. In the one brace representing the mesh (mesh description module), "name":"Hapticexample_mesh" at line 64 indicates that the one 3D mesh is named "Hapticexample_mesh", which is only used as an identification marker; and "primitives" at line 65 indicates that the one 3D mesh has primitives. "attributes" at line 67, "mode" at line 70, and "MPEG_material_Haptic " at line 71 respectively indicate existence of attribute information (attribute), mode information (mode), and information of the MPEG haptic material (MPEG_material_Haptic). "TEXCOORD_0":0 at line 68 indicates that an accessor description module corresponding to the texture coordinate is a first accessor description module in the accessor list. A syntax element "mode":0 indicates that a topology of the one 3D mesh is a scattered structure. "MPEG_material_Haptic": {"index":0} at lines 72 to 74 indicates that the one 3D mesh corresponding to the one mesh description module carries an MPEG haptic material attribute and points to a more detailed lower-level haptic material array list (MPEG_material_Haptic). From the parsing perspective, the mesh list clarifies an actual data type and a topological type of the one 3D mesh.
8. Haptic material array list (MPEG_material_Haptic): The haptic material array list is located at lines 82 to 111. The haptic material array list (MPEG_material_Haptic) includes only one brace, indicating that the scene description document includes only one haptic material array (content enclosed in the one brace at lines 84 to 109). The one haptic material array defines three haptic material attributes (namely the stiffness, the temperature, and the vibration) through lines 85 to 91, lines 93 to 100, and lines 102 to 108, respectively. Each haptic material attribute includes two types of information: a texture array (texture) and a haptic material type (type). A description module corresponding to the stiffness is located at lines 85 to 91, where "index":0 at line 87 defines that the stiffness points to a first texture description module (texture) in the texture list; "type":Low_resolution at line 90 defines that a type of the stiffness is the Low_resolution; and a length of a subsequently obtained haptic value of the stiffness is 8 bits. A description module corresponding to the temperature is located at lines 93 to 100, where "index":1 at line 96 defines that the temperature points to a second texture description module (texture) in the texture description list; "type":High_resolution at line 99 defines that a type of the temperature is the High_resolution; and a length of a subsequently obtained haptic value of the temperature is 16 bits. A description module corresponding to the vibration is located at lines 102 to 108, where "index":2 at line 104 defines that the vibration points to a third texture description module (texture) in the texture description list; and "type": Reference at line 107 defines that a type of the vibration is the Reference. From the parsing perspective, a texture type and source of a haptic material attribute included in an object may be determined based on the haptic material array list (MPEG_material_Haptic), and point to a more detailed lower-level texture description module.
9. Texture list (textures): The texture list is located at lines 113 to 131. The texture list includes three braces, indicating that the scene description document includes three texture description modules, which are respectively configured to describe texture information of the stiffness, the temperature, and the vibration. The texture description modules respectively corresponding to the stiffness, the temperature, and the vibration each include a sampler syntax element (sampler) and a texture map syntax element (source). Based on values of the sampler syntax element (sampler) and the texture map syntax element (source), a sampler description module and an access address of a texture map may be determined for the stiffness, the temperature, and the vibration. A source of the texture map corresponds to a lower-level texture map list (images) and sampler list (samplers). The texture description module corresponding to the vibration also includes the MPEG haptic texture (MPEG_texture_Haptic). Through the MPEG haptic texture (MPEG_texture_Haptic), it may be determined that an index value of an accessor description module of an accessor associated with a previously haptic material attribute whose type is the Reference is 1.
10. Texture map list (images): The texture map list is located at lines 134 to 144. The texture map list includes three braces, which respectively correspond to access addresses of texture maps referenced in the texture description modules respectively corresponding to the stiffness, the temperature, and the vibration. Based on "uri": "stiffnessTexture.png" at line 136, "uri": "stiffnessTexture.png" at line 139, and "uri": "vibrationTexture.png" at line 142, it may be determined that the access addresses of the texture maps of the stiffness, the temperature, and the vibration are "stiffnessTexture. png", "temperatureTexture. png", and "vibrationTexture. png", respectively. It should be noted that since the types of the stiffness and the temperature are the High_resolution and the Low_resolution respectively, the texture maps of the stiffness and the temperature store haptic values of the stiffness and the temperature. The type of the vibration is the Reference. Therefore, the texture map of the vibration stores an index value of a media description module corresponding to a haptic media file to which the vibration belongs.
11. Sampler list (samplers): The sampler list is located at lines 145 to 151. The sampler list includes one brace, indicating that the scene description document includes one sampler description module. Only one sampler is required to display the 3D scene, and description information of the one sampler may be determined based on "magFilter": 9729, "minFilter": 9987, "wrapS": 33648, and "wrapT": 33648 at lines 147 to 150.
12. Buffer list (buffers): The buffer list is located at lines 186 to 203. The buffer list includes two braces, indicating that the scene description document includes two buffer description modules, and two buffers are required to display the 3D scene. Only two media files need to be accessed to display the 3D scene. Based on content in a first brace (a first buffer description module) at lines 187 to 190, it may be determined that a size of a first buffer is 1000, an address of a media file that needs to be stored is "AnimatedBody.bin", and the media file includes coordinate content of texture information that needs to be added to a specific 3D coordinate. Based on an MPEG circular buffer (MPEG_buffer_circular) in a second brace (a second buffer description module) at lines 192 to 201, it may be determined that a second buffer is a circular buffer reconstructed using an MPEG extension. "media: 0" indicates that a data source in the circular buffer is the first media file declared in the MPEG media (MPEG_media). "tracks":"#trackIndex=1" indicates that a track whose index is 1 should be referenced when the haptic media encapsulation file is accessed. Herein, the track whose index is 1 is not limited, and may be a unique track of a haptic file encapsulated into a single track or a reference track of a haptic file encapsulated into a plurality of tracks. In addition, based on a syntax element "count": 5 in the MPEG circular buffer (MPEG_buffer_circular), it may also be determined that the MPEG circular buffer has five storage stages, and based on a syntax element "byteLength":4000, it may also be determined that a byte length (capacity) of the MPEG circular buffer is 4000 bytes. From the parsing perspective, the buffer list enables the haptic media file declared in the MPEG media (MPEG_media) to correspond to a buffer, in other words, enables the buffer to reference a haptic media file that is previously declared but not used. It should be noted that the haptic media file referenced herein is an encapsulated file of an unprocessed haptic media file. The encapsulated file of the haptic media file needs to be processed by the MAF in order to extract information that may be directly used for rendering.
13. Buffer view list (bufferViews): The buffer view list is located at lines 173 to 184. The buffer view list includes two parallel braces, indicating that the scene description document includes two buffer view description modules (bufferView). Through indexing of a buffer description module (burrer) in a first brace (a first buffer view description module) at lines 174 to 178 and indexing of a buffer description module in a second brace (a second buffer view description module) at lines 179 to 183, it may be determined that the first brace (the first buffer view description module) belongs to the buffer described by the content in the brace at lines 187 to 190, and the second brace (the second buffer view description module) belongs to the buffer described by the content in the brace at lines 192 to 201. The first buffer view description module limits a data view range of a corresponding buffer view to the first 1000 bytes of the first buffer based on two parameters, namely byteLength and byteOffset. The second buffer view description module limits a data view range of a corresponding buffer view to the first 4000 bytes of the second buffer based on the byteLength and the byteOffset. From the parsing perspective, the buffer view list groups data in the haptic media file, which is beneficial to refine definition of a subsequent accessor description module.
14. Accessor List (accessors): The accessor list is located at lines 153 to 171. Structurally similar to the buffer view list, the accessor list also includes two parallel braces, indicating that the 3D scene description document includes two accessor description modules (accessor), and two accessors are required to access the media data to display the 3D scene. In addition, a second brace (a second accessor description module) includes the MPEG time-varying accessor, indicating that a corresponding accessor points to time-varying media defined by the MPEG. "bufferView":0 at line 155 in a first brace (a first accessor description module) at lines 154 to 159 may indicate that a corresponding accessor points to a buffer view with an index value of 0 in the buffer view list. Additionally, based on "componentType": 5121 and "type": "VEC2", it may be determined that a data format stored in the corresponding accessor is a 2D vector composed of an 8-bit unsigned number. "count": 500 indicates that there are 500 pieces of data that need to be accessed through the corresponding accessor, with each 8-bit unsigned number occupying 1 byte. Therefore, the corresponding accessor includes 1000-byte data, which complies with a rule in a bufferView with an index value of 0. Based on "bufferView":1 in the second brace (the second accessor description module) at lines 161 to 170, it may be determined that content in "MPEG_accessor_timed" points to a buffer view description module with an index value of 1, and it is also indicated that a value of a syntax element in the corresponding accessor changes over time. In the second brace, "componentType": 5123 and "type": "SCALAR" indicate a data format stored in the corresponding accessor is a string composed of a 16-bit unsigned number."count":2000 indicates that there are 2000 pieces of data that need to be accessed through the corresponding accessor, with each 16-bit unsigned number occupying two bytes. Therefore, the corresponding accessor includes 4000-byte data, which complies with a rule in the bufferView with an index value of 1. The first accessor represents a 3D coordinate set that needs to be assigned a texture value, and the second accessor represents an accessor for obtaining relevant haptic media for the haptic texture. From the parsing perspective, the accessor list provides a complete definition of data required for the rendering, for example, missing data types in the buffer view description module and the buffer description module are defined in the corresponding accessor description modules.

### 2. Display engine that supports obtaining the haptic value of the haptic material attribute whose type is the Reference.

In a working process of a scene description framework for immersive media, main functions of the display engine include: parsing the scene description document to obtain a 3D scene rendering method; sending a media access instruction or a media data processing instruction to the MAF through the MAF API; sending a buffer management instruction to the buffer management module through the buffer API; and reading processed data from the buffer, and rendering and displaying a 3D scene and an object in the 3D scene based on the read data. Therefore, functions of a display engine supporting the haptic media file include: 1. parsing a scene description document including the haptic media and obtaining a corresponding 3D scene rendering method; 2. transferring a media access instruction or a media data processing instruction to the MAF through the MAF API, where the media access instruction or the media data processing instruction comes from a result of parsing the scene description document including the haptic media; 3. sending a buffer management instruction to the buffer management module through the buffer management API; and 4. reading decoded data of a processed haptic media file from the buffer, and rendering and displaying a 3D scene and a haptic media file in the 3D scene based on the read decoded data.

### 3. MAF API that supports obtaining the haptic value of the haptic material attribute whose type is the Reference.

In the working process of the scene description framework for the immersive media, the display engine may obtain the 3D scene rendering method by parsing the scene description document, and needs to transfer the 3D scene rendering method to the MAF or send an instruction to the MAF based on the 3D scene rendering method. A process for transferring the 3D scene rendering method to the MAF or sending the instruction to the MAF based on the 3D scene rendering method is implemented through the MAF API.

In some embodiments, the display engine may send the media access instruction or the media data processing instruction to the MAF through the MAF API. The instruction issued by the display engine comes from the result of parsing the scene description document including the attribute information of the haptic media. The instruction may include an address of the media file, attribute information (a media type, a codec used, and the like) of the media file, a format requirement for processed haptic media data and other media data, and the like.

In some embodiments, the MAF may also request the media access instruction or the media data processing instruction from the display engine through the MAF API.

### 4. MAF that supports obtaining the haptic value of the haptic material attribute whose type is the Reference.

In the working process of the scene description framework for the immersive media, after receiving the media access instruction or the media data processing instruction that is issued by the display engine through the MAF API, the MAF executes the media access instruction or the media data processing instruction that is issued by the display engine through the MAF API. For example, the MAF obtains the haptic media file, establishes an appropriate pipeline for the haptic media file to convert data in the haptic media file into a format specified in the instruction, and allocates an appropriate buffer configured for haptic media data and other media data that are processed into the format specified in the scene description document.

In some embodiments, that the MAF obtains the haptic media file includes: downloading the haptic media file from the server using a network transmission service.

In some embodiments, that the MAF obtains the haptic media file includes: reading the haptic media file from local storage space.

After obtaining the haptic media file, the MAF needs to process the haptic media file. Processing procedures of different types of media files are significantly different. In order to support a wide variety of media types and consider efficiency of the MAF, a plurality types of pipelines are designed in the MAF, and only a pipeline that matches a media type is enabled during the media file processing.

### 5. Buffer API that supports obtaining the haptic value of the haptic material attribute whose type is the Reference

After processing the data in the haptic media file, the MAF also needs to deliver processed data to the display engine in a standardized arrangement structure. Therefore, the processed data needs to be correctly stored in the buffer, which is completed by the buffer management module. However, the buffer management module needs to obtain the buffer management instruction from the MAF or the display engine through the buffer API.

In some embodiments, the MAF may send the buffer management instruction to the buffer management module through the buffer API. The buffer management instruction is sent by the display engine to the MAF through the MAF API.

In some embodiments, the display engine may send the buffer management instruction to the buffer management module through the buffer API.

That is, the buffer management module may communicate with the MAF through the buffer API and may also communicate with the display engine through the buffer API, so as to manage the buffer. When the buffer management module communicates with the MAF through the buffer API, the display engine needs to first send the buffer management instruction to the MAF through the MAF API, and the MAF then sends the buffer management instruction to the buffer management module through the buffer API. When the buffer management module communicates with the display engine through the buffer API, the display engine only needs to generate the buffer management instruction based on buffer management information parsed from the scene description document, and sends the buffer management instruction to the buffer management module through the buffer API.

In some embodiments, the buffer management instruction may include at least one of a buffer creation instruction, a buffer updating instruction, and a buffer releasing instruction.

### 6. Buffer management module that supports obtaining the haptic value of the haptic material attribute whose type is the Reference.

In the working process of the scene description framework for the immersive media, after the MAF processes the data in the haptic media file through the pipeline, the processed data needs to be delivered to the display engine in the standardized arrangement structure. Therefore, the processed data needs to be correctly stored in the buffer, which is completed by the buffer management module.

The buffer management module implements management operations such as buffer creation, updating, and releasing, and instructions for these operations are received through the buffer API. A buffer management rule is recorded in the scene description document, parsed by the display engine, and finally issued to the buffer management module by the display engine or the MAF. After being processed by the MAF, the media file needs to be stored in an appropriate buffer and then retrieved by the display engine. The buffer management is to manage the buffer well, such that the buffer matches a format of processed media data without disrupting the processed media data. A specific method for designing the media management module should be based on designs of the display engine and the MAF.

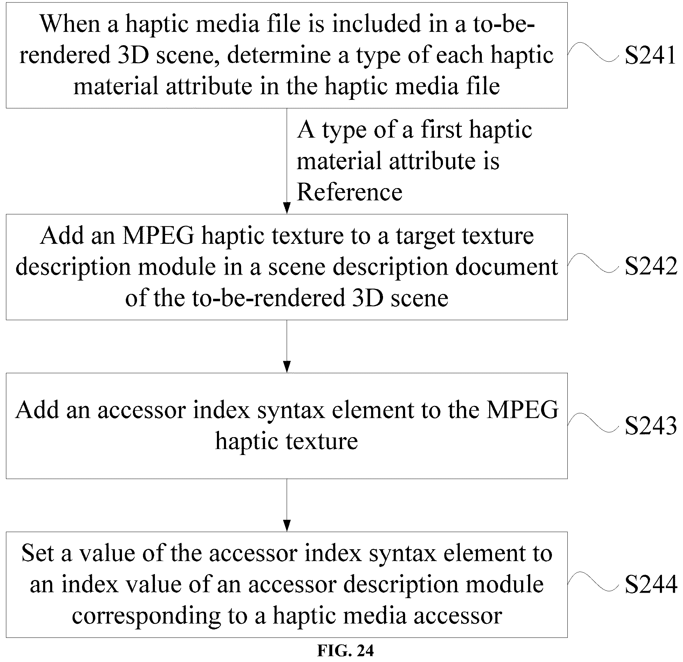

Based on the above content, some embodiments of the present disclosure provide a method for generating a scene description document. Referring to FIG. 24, the method for generating a scene description document includes following steps S101 to S104:
S241: When a haptic media file is included in a 3D-scene-to-be-rendered, determine a type of each haptic material attribute in the haptic media file.

The haptic material attribute in the embodiments of the present disclosure may include at least one of stiffness, friction, haptic texture (Vibrotactile texture), temperature, vibration, and custom. The type of the haptic material attribute includes High_resolution, Low_resolution, and Reference.

It should be noted that types of different haptic material attributes in the haptic media file may be different, so the haptic media file may include a plurality of types of haptic material attributes. The types of the haptic material attributes in the haptic media file needs to be determined one by one.

In the above-mentioned step S241, if a type of a first haptic material attribute in the haptic media file is the Reference, following steps S242 to S244 are performed:
S242: Add an MPEG haptic texture (MPEG_texture_Haptic) to a target texture description module in the scene description document of the 3D-scene-to-be-rendered.

The target texture description module is a texture description module corresponding to the first haptic material attribute in a texture list (textures) of the scene description document.

For example, when a value of a sampler syntax element in the target texture description module is 0 and a value of a texture map syntax element in the target texture description module is 2, the target texture description module to which the MPEG haptic texture is added may be as follows:

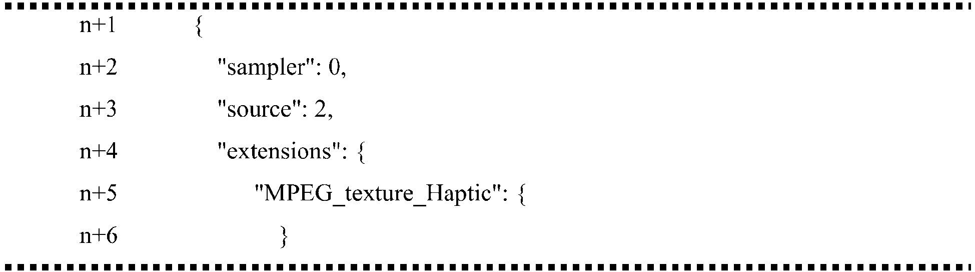

Content at lines n+4 to n+6 represents the MPEG haptic texture (MPEG_texture_Haptic) added to the target node description module.

S243: Add an accessor index syntax element (accessor) to the MPEG haptic texture.

As described in the above embodiments, after the accessor index syntax element is added to the MPEG haptic texture, the target texture description module may be as follows:

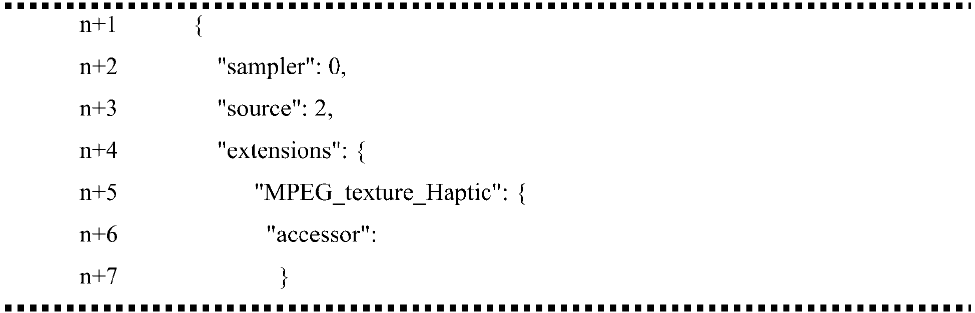

Content at line n+6 represents the accessor index syntax element added to the MPEG haptic texture.

S244: Set a value of the accessor index syntax element to an index value of an accessor description module corresponding to a haptic media accessor.

The haptic media accessor is an accessor for accessing decoded data of the haptic media file.

As described in the above embodiments, if the index value of the accessor description module corresponding to the haptic media accessor for accessing the decoded data of the haptic media file is 2, after the accessor index syntax element (accessor) is added to the MPEG haptic texture, and the value of the accessor index syntax element is set to the index value of the accessor description module corresponding to the haptic media accessor, the target texture description module may be as follows: 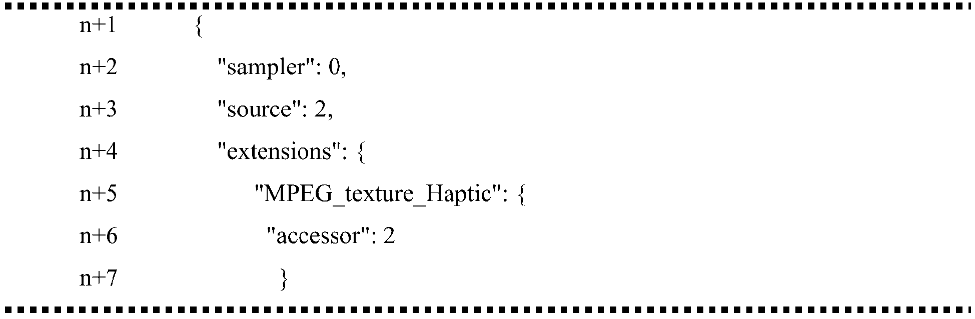 "accessor":2 at line n+ 6 represents the accessor index syntax element added to the MPEG haptic texture and the value of the accessor index syntax element. "2" also represents the index value of the accessor description module corresponding to the haptic media accessor for accessing the decoded data of the haptic media file.

According to the method for generating a scene description document provided in the embodiments of the present disclosure, when the haptic media file is included in the 3D-scene-to-be-rendered and the type of the first haptic material attribute in the haptic media file is the Reference, the MPEG haptic texture is first added to the target texture description module corresponding to the first haptic material attribute, the accessor index syntax element is added to the MPEG haptic texture, and the value of the accessor index syntax element is set to the index value of the accessor description module corresponding to the accessor for accessing the decoded data of the haptic media file. According to the method for generating a scene description document provided in the embodiments of the present disclosure, when the haptic media file is included in the 3D-scene-to-be-rendered and the type of the first haptic material attribute in the haptic media file is the Reference, the accessor index syntax element is added to the MPEG haptic texture, and the value of the accessor index syntax element is set to the index value of the accessor description module corresponding to the accessor for accessing the decoded data of the haptic media file. Therefore, when the 3D-scene-to-be-rendered is rendered based on the scene description document, the accessor for accessing the decoded data of the haptic media file may be determined based on the accessor index syntax element and its value. Furthermore, a haptic value of the first haptic material attribute is read from the media file based on the accessor for accessing the decoded data of the media haptic file. Therefore, the embodiments of the present disclosure may support obtaining a haptic value of a haptic material attribute whose type is the Reference, solving a problem of being unable to obtain the haptic value of the haptic material attribute whose type is the Reference in related technologies.

In some embodiments, before setting the value of the accessor index syntax element to the index value of the accessor description module corresponding to the haptic media accessor in the above-mentioned step S244, the method for generating a scene description document provided in the embodiments of the present disclosure further includes following steps a to c:
Step a: Add a buffer description module corresponding to a haptic media buffer to a buffer list (buffers) of the scene description document.

The haptic media buffer is a buffer configured for caching the decoded data of the haptic media file.

In some embodiments, the adding a buffer description module corresponding to a haptic media buffer to a buffer list of the scene description document in the above a includes at least one of following steps a1 to a5:
Step a1: Add a byte length syntax element (byteLength) to the buffer description module corresponding to the haptic media buffer, and set a value of the byte length syntax element to a byte file of the decoded data of the haptic media file.

Step a2: Add an MPEG circular buffer to the buffer description module corresponding to the haptic media buffer.

Step a3: Add a count syntax element (count) to the MPEG circular buffer, and set a value of the count syntax element based on a pre-configured quantity of storage stages of the MPEG circular buffer.

Step a4: Add a media index syntax element (media) to the MPEG circular buffer, and set a value of the media index syntax element based on an index value of a media description module corresponding to the haptic media file.

Step a5: Add a track index syntax element (tracks) to the MPEG circular buffer, and set a value of the track index syntax element based on a track index value of data stored in the MPEG circular buffer.

For example, if the adding a buffer description module corresponding to a haptic media buffer to a buffer list of the scene description document includes all the above-mentioned steps a1 to a5, the byte length of the decoded data of the haptic media file is 5000, the pre-configured quantity of storage stages of the MPEG circular buffer is 6, the index value of the media description module corresponding to the haptic media file is 1, and the track index value of the data stored in the MPEG circular buffer is 0, the buffer description module that corresponds to the haptic media buffer and is added to the buffer list of the scene description document may be as follows:

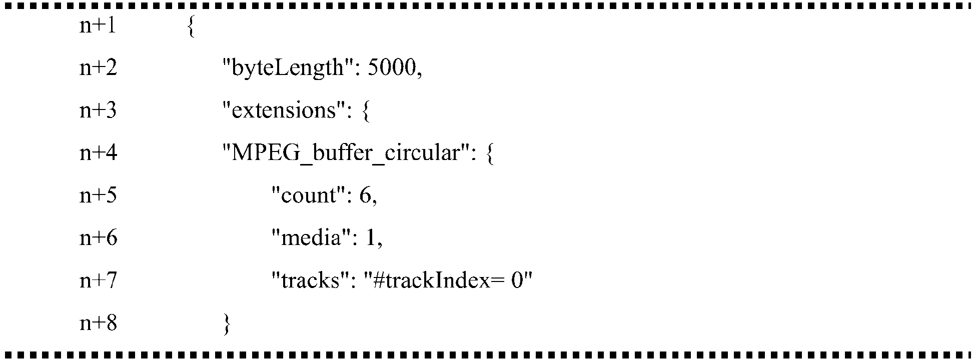

Step b: Add a buffer view description module corresponding to a buffer view of the haptic media buffer to a buffer view list (bufferViews) of the scene description document.

In some embodiments, the adding a buffer view description module corresponding to a buffer view of the haptic media buffer to a buffer view list of the scene description document in the above b includes at least one of following steps b1 to b3:
Step b1: Add a buffer index syntax element (buffer) to the buffer view description module corresponding to the buffer view of the haptic media buffer, and set a value of the buffer index syntax element based on an index value of the buffer description module corresponding to the haptic media buffer.

Step b2: Add a byte length syntax element (byteLength) to the buffer view description module corresponding to the buffer view of the haptic media buffer, and set a value of the byte length syntax element based on a capacity of the buffer view.

Step b3: Add an offset syntax element to the buffer view description module corresponding to the buffer view of the haptic media buffer, and set a value of the offset syntax element based on an offset of data stored in the buffer view.

For example, if the adding a buffer view description module corresponding to a buffer view of the haptic media buffer to a buffer view list (bufferViews) of the scene description document includes all the above-mentioned steps b1 to b3, the index value of the buffer description module corresponding to the haptic media buffer is 1, a capacity of the haptic media buffer is 8000, and the haptic media buffer includes only one buffer view, the buffer view description module that corresponds to the buffer view of the haptic media buffer and is added to the buffer view list of the scene description document may be as follows:

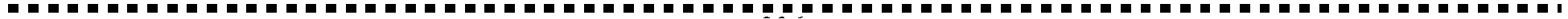

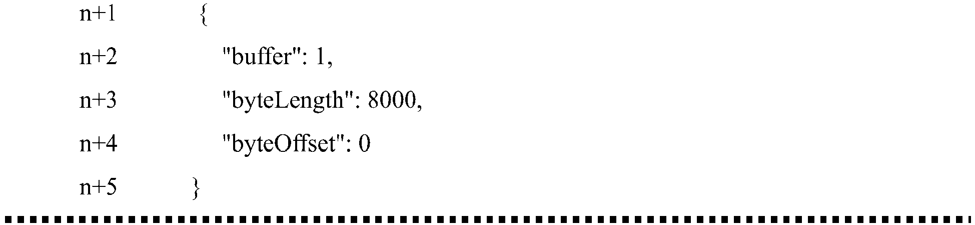

Step c: Add an accessor description module corresponding to the haptic media accessor for accessing the data in the buffer view of the haptic media buffer to an accessor list (accessors) of the scene description document.

Since the data in the buffer view of the haptic media buffer is the decoded data of the haptic media file, an accessor for accessing the data in the buffer view of the haptic media buffer is an accessor for accessing the decoded data of the haptic media file.

In some embodiments, the adding an accessor description module corresponding to the haptic media accessor for accessing the data in the buffer view of the haptic media buffer to an accessor list (accessors) of the scene description document in the above-mentioned step c includes at least one of following steps c1 to c6:
Step c1: Add a data type syntax element (componentType) to the accessor description module, and set a value of the data type syntax element based on a data type of the haptic value of the first haptic material attribute.

Step c2: Add an accessor type syntax element (type) to the accessor description module, and set a value of the accessor type syntax element based on a pre-configured accessor type.

Step c3: Add a count syntax element (count) to the accessor description module, and set a value of the count syntax element based on a quantity of haptic values of the first haptic material attribute.

Step c4: Add an MPEG time-varying accessor (MPEG_accessor_timed) to the accessor description module.

Step c5: Add a buffer view index syntax element (bufferView) to the MPEG time-varying accessor, and set a value of the buffer view index syntax element based on an index value of the buffer view description module corresponding to the buffer view of the haptic media buffer.

Step c6: Add a time-varying syntax element (immutable) to the MPEG time-varying accessor, and set a value of the time-varying syntax element based on whether a value of a syntax element in the corresponding accessor changes over time.

For example, if the adding an accessor description module corresponding to the accessor for accessing the haptic value of the first haptic material attribute from the buffer view of the haptic media buffer to an accessor list of the scene description document includes all above-mentioned steps c1 to c6, the data type of the haptic value of the first haptic material attribute is 5123, the pre-configured accessor type is SCALAR, the quantity of haptic values of the first haptic material attribute is 3000, the index value of the buffer view description module corresponding to the buffer view of the haptic media buffer is 1, and the value of the syntax element in the corresponding accessor changes over time, the accessor description module that corresponds to the accessor for accessing the haptic value of the first haptic material attribute from the buffer view of the haptic media buffer and is added to the accessor list of the scene description document may be as follows:

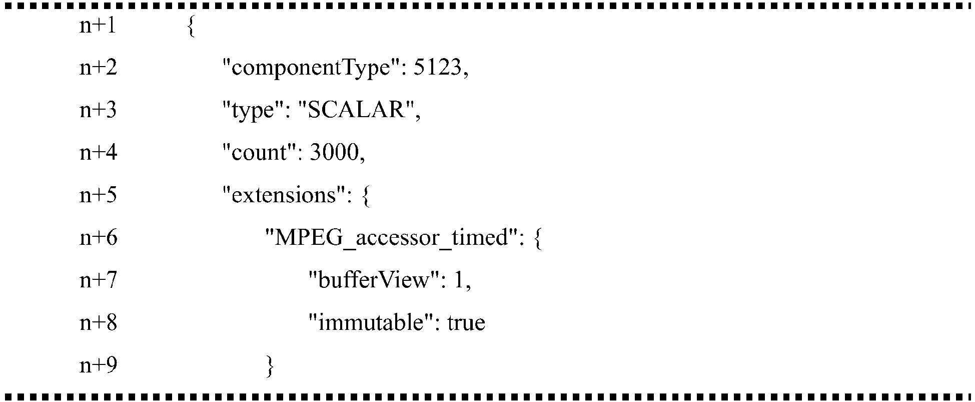

In some embodiments, the method for generating a scene description document further includes following steps 1 and 2:
Step 1: Add a media reference list (Media_reference) to MPEG haptic (MPEG_haptic) of a target node description module.

The target node description module is a node description module corresponding to a node including a target 3D mesh, and the target 3D mesh is a 3D mesh carrying the first haptic material attribute.

For example, when an index value of a mesh description module corresponding to the target 3D mesh is 0, and the node corresponding to the target node description module is named Hapticexample_node, after the media reference list (Media_reference) is added to the MPEG haptic (MPEG_haptic) of the target node description module, the target node description module may be as follows:

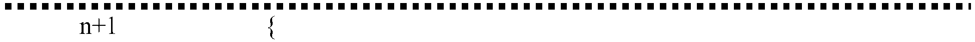

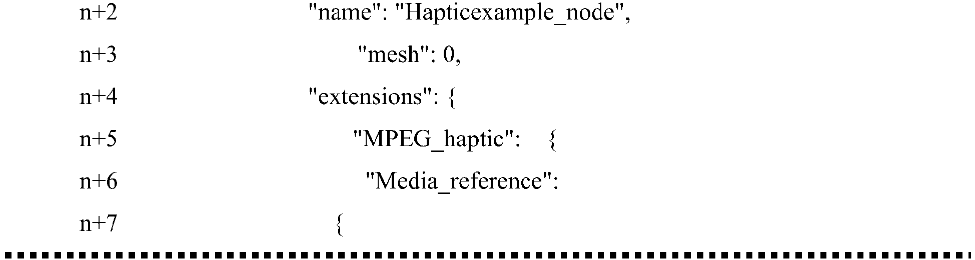

Content at lines n+4 to n+7 represents the MPEG haptic of the target node description module, and content at line n+6 represents the media reference list (Media_reference) added to the MPEG haptic.

Step 2: Add an index value of a target media description module to the media reference list.

The target media description module is a media description module corresponding to the haptic media file.

It should be noted that the 3D-scene-to-be-rendered may include a plurality of haptic media files, and the node corresponding to the target node description module may include a 3D mesh carrying a haptic material attribute whose type is the Reference for a plurality of haptic media files. When the node corresponding to the target node description module includes the 3D mesh carrying the haptic material attribute whose type is the Reference for the plurality of haptic media files, an index value of a media description module corresponding to each haptic media file needs to be added to the media reference list of the MPEG haptic.

As described in the above embodiments, the node corresponding to the target node description module includes a 3D mesh carrying a haptic material attribute whose type is the Reference for a haptic media file A, and a 3D mesh carrying a haptic material attribute whose type is the Reference for a haptic media file B, an index value of a media description module corresponding to the haptic media file A is 0, and an index value of a media description module corresponding to the haptic media file B is 1. Therefore, the target node description module may be as follows: 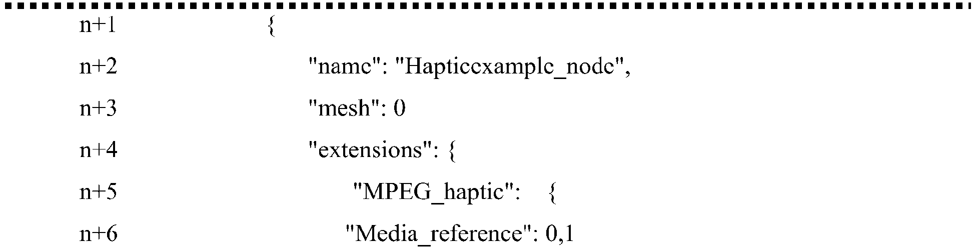 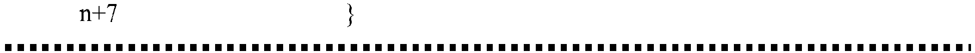 0 and 1 in "Media_reference": 0,1 at line n+6 respectively represent the index value of the media description module corresponding to the haptic media file A and the index value of the media description module corresponding to the haptic media file B.

In some embodiments, before adding the index value of the target media description module to the media reference list in the above-mentioned step 2, the method for generating a scene description document provided in the embodiments of the present disclosure further includes a following step 3:
Step 3: Add the target media description module corresponding to the haptic media file to a media list (media) of MPEG media (MPEG_media) in the scene description document.

In some embodiments, the adding a buffer view description module corresponding to a buffer view of the haptic media buffer to a buffer view list of the scene description document in the above-mentioned step 3 includes at least one of following steps 11 to 19:
Step 11: Add a media name syntax element (name) to the target media description module, and set a value of the media name syntax element based on a name of the haptic media file.

Step 12: Add an autoplay syntax element (autoplay) to the target media description module, and set a value of the autoplay syntax element in accordance with a determination regarding whether the haptic media file needs to be automatically played.

Step 13: Add a loop syntax element (loop) to the target media description module, and set a value of the loop syntax element based on whether the haptic media file needs to be cyclically played.

Step 14: Add an alternative item (alternatives) to the target media description module.

Step 15: Add a media type syntax element (mimeType) to the alternative item, and set a value of the media type syntax element based on data included in the haptic media file.

In some embodiments, the setting a value of the media type syntax element based on data included in the haptic media file includes:
when the haptic media file includes audio data and/or video data, setting the value of the media type syntax element in the alternative item of the target media description module to a first preset value; or
when the haptic media file does not include audio data and/or video data, setting the value of the media type syntax element in the alternative item of the target media description module to a second preset value.

For example, the first preset value may be video/mp4, and the first preset value may be haptics/mp4. That is, when the haptic media file includes only haptic data, the value of the media type syntax element is set to the haptics/mp4. When the haptic media file not only includes the haptic data, but also includes the audio data and/or the video data, the value of the media type syntax element is set to the video/mp4.

When the haptic media file not only includes the haptic data, but also includes the audio data and/or the video data, the value of the media type syntax element is set to the video/mp4, which may be backward compatible with an existing .mp4 media file.

Step 16: Add an access address syntax element (uri) to the alternative item, and set a value of the access address syntax element to an access address of the haptic media file.

Step 17: Add a track array (tracks) to the alternative item.

Step 18: Add a track index syntax element (track) to the track array, and set a value of the track index syntax element in the track array in the alternative item of the target media description module to an index value of each bitstream track of the haptic media file.

That is, when encoded haptic media is referenced by the scene description document as an item in the MPEG _media.alternative.tracks, and the referenced item complies with a provision on the track in an ISOBMFF in an ISO/IEC 23090-32 standard, for a haptic media file encapsulated into a single track, a track referenced in the MPEG_media is a single track into which the haptic media is encapsulated. For example, if the haptic media is encapsulated into one MIHS track by using the ISOBMFF, the one MIHS track is referenced in the MPEG_media. For a haptic media file encapsulated into a plurality of tracks, a reference track referenced in the MPEG_media should be selected according to a relevant provision in the ISO/IEC 23090-32 standard. For example, a non-zero value is defined in advance in TrackHeaderBox of configuration information alternate_group in an encapsulated file to indicate that the haptic media is encapsulated into a plurality of MIHS tracks, which are also indexed by the MPEG_media.

Step 19: Add a codec parameter syntax element (codec) to the track array, and set a value of the codec parameter syntax element based on an encoding parameter of data in each bitstream track of the haptic media file and a provision in a standard for carriage of haptics data in the ISO/IEC 23090-32 standard.

A codec parameter of media included in the track array (tracks) is defined in IETF RFC 6381. When the track array includes different types of codecs (for example, AdaptationSet includes representations for different codecs), the codec parameter syntax element may be represented by a list of codec values separated by a comma.

When media data is the haptic data, a relevant detailed provision in the standard for carriage of haptics data in the ISO/IEC 23090-32 standard should be followed. For example, when the haptic data is encapsulated by using an ISMBOFF, a first group of elements in the codec parameter syntax element represents a code of a codec in an ISO/IEC 23090-31 standard. A format of the value of the codec parameter syntax element is 'codec=mih1.oo', where "mih1" represents a type of data format description for encapsulating the haptic data in the ISOBMFF. This value is not unique and may be replaced by another sample format name that complies with ISOBMFF encapsulation. "oo" represents an object type indication value defined on an "Object Type" page at a website of the MP4 registration authority.

For example, if the adding the target media description module corresponding to the haptic media file to a media list of MPEG media in the scene description document includes all the above-mentioned steps 11 to 19, the name of the haptic media file is Hapticexample, the haptic media file needs to be automatically and cyclically played, the haptic media file does not include the audio data and/or the video data, the access address of the haptic media file is www.example.com/Hapticexample1.mp4, the haptic media file is a single-track encapsulated file, and the index value of the bitstream track is 1, the target media description module may be as follows:

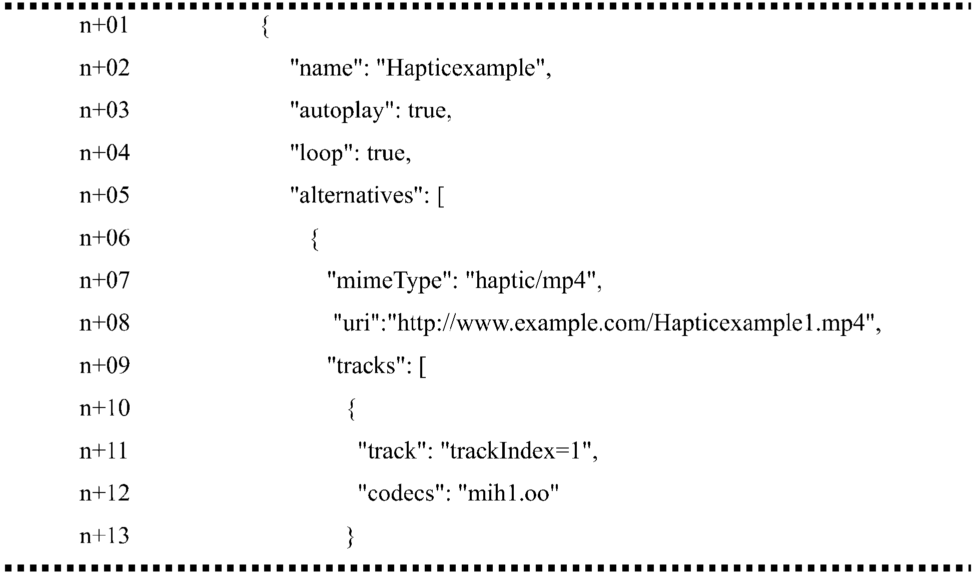

In some embodiments, the method for generating a scene description document further includes:
adding a target scene description module corresponding to the 3D-scene-to-be-rendered to a scene list (scenes) of the scene description document, and adding an index value of a node description module corresponding to each node in the scene-to-be-rendered to a node index list (nodes) of the target scene description module.

For example, if the scene-to-be-rendered includes two nodes, and index values of node description modules corresponding to the two nodes are 0 and 1 respectively, the target scene description module may be as follows:

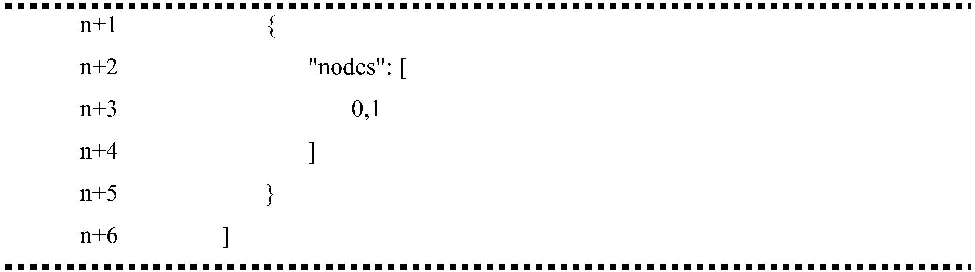

In some embodiments, the method for generating a scene description document further includes:
adding the node description module corresponding to each node in the scene-to-be-rendered to a node list (nodes) of the scene description document, and adding an index value of a mesh description module corresponding to each 3D mesh in each node to a mesh index list (mesh) of each node description module.

It should be noted that when the node description module corresponding to each node in the scene-to-be-rendered is added to the node list of the scene description document, it is necessary to divide nodes in the scene-to-be-rendered into three categories based on whether a 3D mesh carrying a haptic material attribute is included and a type of the carried haptic material attribute. For a node that does not include the 3D mesh carrying the haptic material attribute, a node description module corresponding to the node only needs to add an index value of a mesh description module corresponding to a 3D mesh in each node to the mesh index list of each node description module. For a node that includes a 3D mesh carrying a haptic material attribute whose type is not the Reference (the High_resolution or the Low_resolution), it is necessary to further add the MPEG haptic (MPEG_haptic) to a corresponding node description module. For a node that includes a 3D mesh carrying a haptic material attribute whose type is the Reference, a method for generating a corresponding node description module is similar to a method for generating the target node description module in the above embodiments, and details are not described herein again.

For example, if a node does not include the 3D mesh carrying the haptic material attribute in the haptic media file, the node is named Hapticexample_node1, and the node includes only one 3D mesh corresponding to a mesh description module whose index value is 2, a node description module corresponding to the node may be as follows:

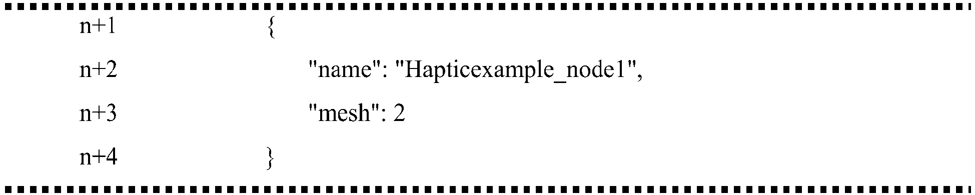

In some embodiments, the method for generating a scene description document further includes: adding the mesh description module corresponding to the target 3D mesh to a mesh list of the scene description document.

When the mesh description module corresponding to the 3D mesh mounted on each node in the scene-to-be-rendered is added to the scene list of the scene description document, it is necessary to divide 3D meshes in the scene-to-be-rendered into two categories based on whether the haptic material attribute is carried: a 3D mesh without carrying the haptic material attribute and a 3D mesh carrying the haptic material attribute.

For the 3D mesh without carrying the haptic material attribute, a corresponding mesh description module is added to the mesh list of the scene description document, which includes at least one of following steps d1 to d5:
Step d1: Add a mesh name syntax element (name) to the mesh description module corresponding to the 3D mesh, and set a value of the mesh name syntax element based on a name of the 3D mesh.

Step d2: Add an attribute (primitives) to the mesh description module corresponding to the 3D mesh.

Step d3: Add a primitive (attributes) to the attribute.

Step d4: Add a texture coordinate syntax element (TEXCOORD_n) to the primitive, and set a value of the texture coordinate syntax element to an index value of an accessor description module corresponding to a texture coordinate accessor.

The texture coordinate accessor is an accessor for accessing a texture coordinate of the 3D mesh.

Step d5: Add a mode syntax element (mode) to the mesh description module corresponding to the 3D mesh, and set a value of the mode syntax element based on a topology type of the 3D mesh.

For example, if the adding the mesh description module corresponding to the target 3D mesh to a mesh list of the scene description document includes all the above-mentioned steps d1 to d5, a 3D mesh does not carry the haptic material attribute, the 3D mesh is named Example_mesh, and a topology of the 3D mesh is scattered, a mesh description module that corresponds to the 3D mesh and is added to the mesh list of the scene description document may be as follows:

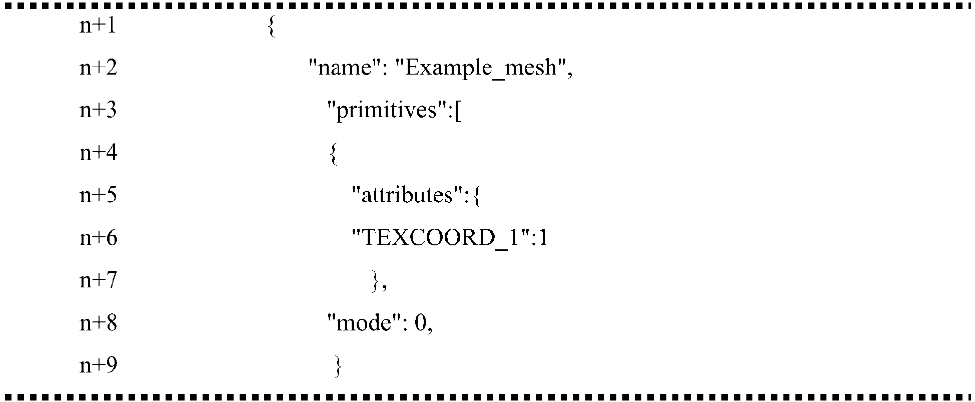

For the 3D mesh carrying the haptic material attribute (including the target 3D mesh carrying the first haptic material attribute), a corresponding mesh description module is added to the mesh list of the scene description document, which includes at least one of the above-mentioned steps d1 to d5 and following steps d6 and d7:
Step d6: Add an MPEG haptic material (MPEG_material_Haptic) to the mesh description module corresponding to the 3D mesh.

Step d7: Add an array index syntax element (index) to the MPEG haptic material, and set a value of the array index syntax element to an index value of a haptic material attribute array of the 3D mesh.

For example, if the adding the mesh description module corresponding to the target 3D mesh to a mesh list of the scene description document includes all the above-mentioned steps d1 and d7, a 3D mesh carries the haptic material attribute, the 3D mesh is named Hapticexample_mesh, a topology of the 3D mesh is scattered, an index value of a haptic material attribute array of the 3D mesh is 2, a mesh description module that corresponds to the 3D mesh and is added to the mesh list of the scene description document may be as follows:

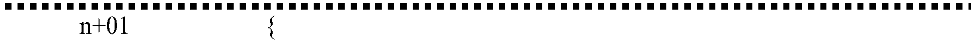

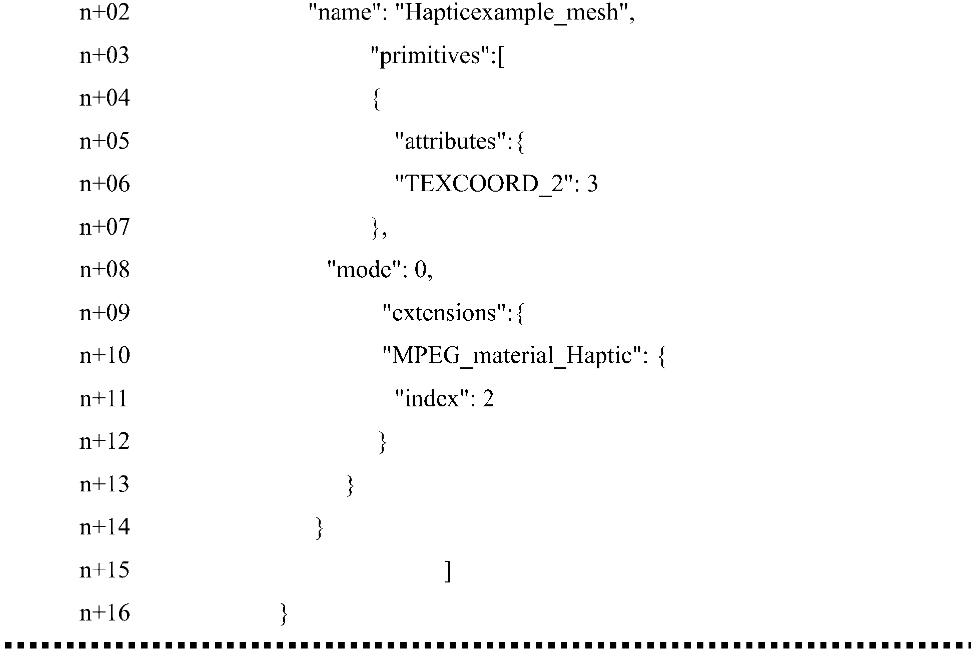

In some embodiments, before setting the value of the texture coordinate syntax element (TEXCOORD_n) to the index value of the accessor description module corresponding to the texture coordinate accessor, the method for generating a scene description document provided in the embodiments of the present disclosure further includes following steps e to g:
Step e: Add a buffer description module corresponding to a texture coordinate buffer to the buffer list (buffers) of the scene description document.

The texture coordinate buffer is a buffer configured for caching a texture coordinate of the target 3D mesh.

In some embodiments, the adding a buffer description module corresponding to a texture coordinate buffer to the buffer list of the scene description document in the above-mentioned step e includes at least one of following steps e1 and e2:
Step e1: Add a byte length syntax element (byteLength) to the buffer description module corresponding to the texture coordinate buffer, and set a value of the byte length syntax element to a byte length of the texture coordinate of the target 3D mesh.

Step e2: Add a texture coordinate access address syntax element (uri) to the buffer description module corresponding to the texture coordinate buffer, and set a value of the texture coordinate access address syntax element to an access address of the texture coordinate of the target 3D mesh.

For example, if the adding a buffer description module corresponding to a texture coordinate buffer to the buffer list (buffers) of the scene description document includes all the above-mentioned steps e1 and e2, the byte length of the texture coordinate of the target 3D mesh is 1000, and the access address of the texture coordinate of the target 3D mesh is AnimatedBody.bin, the buffer description module that corresponds to the texture coordinate buffer and is added to the buffer list of the scene description document may be as follows:

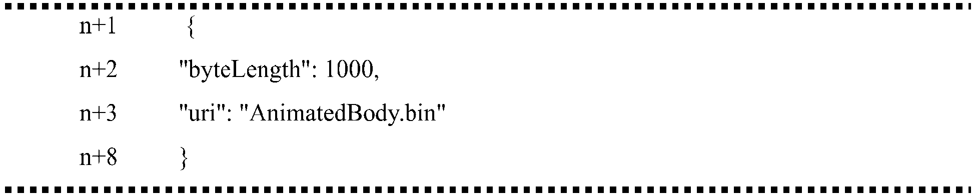

As shown above, a greatest difference between the buffer description module corresponding to the texture coordinate buffer and the buffer description module corresponding to the haptic media buffer is that in the buffer description module corresponding to the texture coordinate buffer, a media file declared in the MPEG media is no longer indexed, but the access address of the texture coordinate is directly added, such that the texture coordinate is accessed based on the access address of the texture coordinate.

Step f: Add a buffer view description module corresponding to a buffer view of the texture coordinate buffer to the buffer view list (bufferViews) of the scene description document.

In some embodiments, the adding a buffer view description module corresponding to a buffer view of the texture coordinate buffer to the buffer view list of the scene description document in the above-mentioned step f includes at least one of following steps f1 to f3:
Step f1: Add a buffer index syntax element (buffer) to the buffer view description module corresponding to the buffer view of the texture coordinate buffer, and set a value of the buffer index syntax element based on an index value of the buffer description module corresponding to the texture coordinate buffer.

Step f2: Add a byte length syntax element (byteLength) to the buffer view description module corresponding to the buffer view of the texture coordinate buffer, and set a value of the byte length syntax element based on a capacity of the buffer view.

Step f3: Add an offset syntax element to the buffer view description module corresponding to the buffer view of the texture coordinate buffer, and set a value of the offset syntax element based on an offset of data stored in the buffer view.

For example, if the adding a buffer view description module corresponding to a buffer view of the texture coordinate buffer to the buffer view list (bufferViews) of the scene description document includes all the above-mentioned steps f1 to f3, the index value of the buffer description module corresponding to the texture coordinate buffer is 0, a capacity of the texture coordinate buffer is 4000, and the texture coordinate buffer includes only one buffer view, the buffer view description module that corresponds to the buffer view of the texture coordinate buffer and is added to the buffer view list of the scene description document may be as follows:

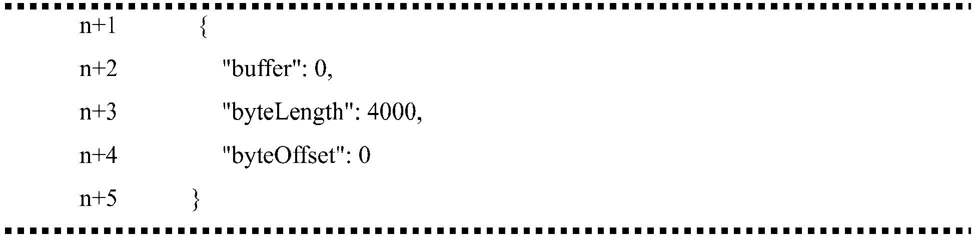

Step g: Add an accessor description module corresponding to an accessor for accessing the haptic value of the first haptic material attribute from the buffer view of the texture coordinate buffer to the accessor list (accessors) of the scene description document.

In some embodiments, the adding the accessor description module corresponding to the accessor for accessing data in the buffer view of the texture coordinate buffer to the accessor list (accessors) of the scene description document in the above-mentioned step g includes at least one of following steps g1 to g4:
Step g1: Add a buffer view index syntax element (bufferView) to the accessor description module, and set a value of the buffer view index syntax element based on an index value of the buffer view description module corresponding to the buffer view of the texture coordinate buffer.

Step g2: Add a data type syntax element (componentType) to the accessor description module, and set a value of the data type syntax element based on the data type of the haptic value of the first haptic material attribute.

Step g3: Add an accessor type syntax element (type) to the accessor description module, and set a value of the accessor type syntax element based on a pre-configured accessor type.

Step g4: Add a count syntax element (count) to the accessor description module, and set a value of the count syntax element based on the quantity of haptic values of the first haptic material attribute.

For example, if the adding an accessor description module corresponding to an accessor for accessing the haptic value of the first haptic material attribute from the buffer view of the texture coordinate buffer to the accessor list of the scene description document includes all the above-mentioned steps g1 to g4, a data type of the texture coordinate of the target 3D mesh is 5121, the pre-configured accessor type is VEC2, a quantity of texture coordinates of the target 3D mesh is 800, and the index value of the buffer view description module corresponding to the buffer view of the texture coordinate buffer is 0, the accessor description module that corresponds to the accessor for accessing the haptic value of the first haptic material attribute from the buffer view of the texture coordinate buffer and is added to the accessor list of the scene description document may be as follows:

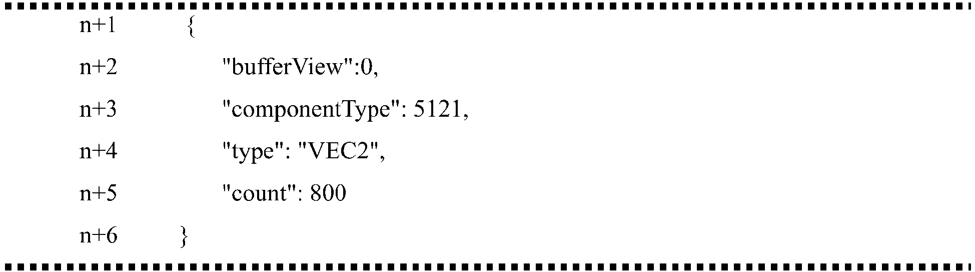

In some embodiments, before setting the value of the array index syntax element to an index value of a haptic material attribute array of the target 3D mesh, the method for generating a scene description document provided in the embodiments of the present disclosure further includes following steps h to k:
Step h: Add a haptic material array list (MPEG_material_Haptic) to the scene description document.

Step j: Add a haptic material attribute array of each 3D mesh carrying the haptic material attribute (including the target 3D mesh carrying the first haptic material attribute) to the haptic material array list.

The haptic material attribute array of each 3D mesh includes a haptic material attribute description module corresponding to each haptic material attribute carried by each 3D mesh. A haptic material attribute description module corresponding to any haptic material attribute includes: a texture array (texture) and an attribute type syntax element (type). The texture array includes a texture index syntax element (index) and a texture coordinate index syntax element (texCoord).

The haptic material attribute array of each 3D mesh includes the haptic material attribute description module corresponding to each haptic material attribute carried by each 3D mesh. The haptic material attribute description module corresponding to the any haptic material attribute includes: the texture array and the attribute type syntax element. The texture array includes the texture index syntax element and the texture coordinate index syntax element. Therefore, the adding a haptic material attribute array of each 3D mesh carrying the haptic material attribute to the haptic material array list in the above-mentioned step j includes following steps j1 to j3 to generate the haptic material attribute array list (MPEG_material_Haptic) of the scene description document:
Step j1: Add the haptic material attribute description module corresponding to each haptic material attribute carried by each 3D mesh to the haptic material attribute array of each 3D mesh.

Step j2: Add the texture array (texture) and the attribute type syntax element (type) to each haptic material attribute description module.

Step j3: Add the texture index syntax element and the texture coordinate index syntax element (texCoord) to each texture array.

Step i: Set a value of the texture index syntax element (index) in the texture array of the haptic material attribute description module corresponding to each haptic material attribute to an index value of a texture description module corresponding to each haptic material attribute

Step j: Set a value of the texture coordinate index syntax element (texCoord) in the texture array of the haptic material attribute description module corresponding to each haptic material attribute to an index value of a texture coordinate syntax element of a corresponding 3D mesh.

Step k: Set a value of the attribute type syntax element in the haptic material attribute description module corresponding to each haptic material attribute to the type of each haptic material attribute.

For example, if a haptic material attribute carried by a 3D mesh includes the stiffness and the temperature, a type of the stiffness is the Low_resolution, and a type of the temperature is the High_resolution, a haptic material attribute array of the 3D mesh may be as follows:

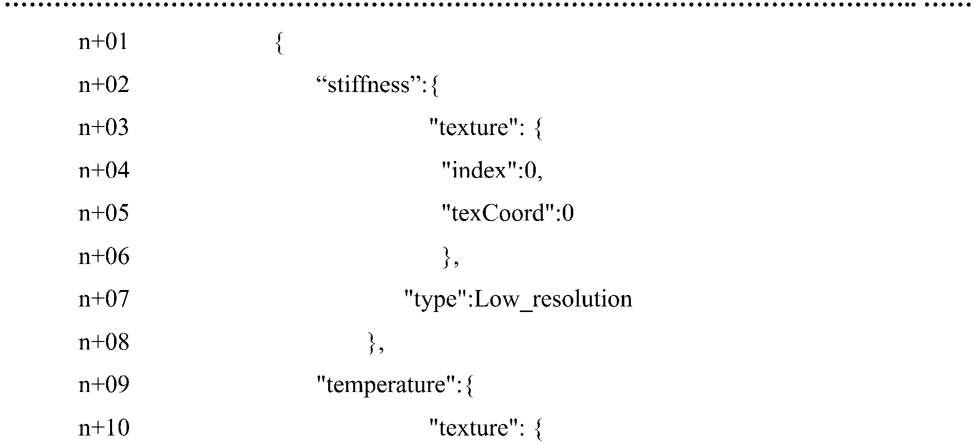

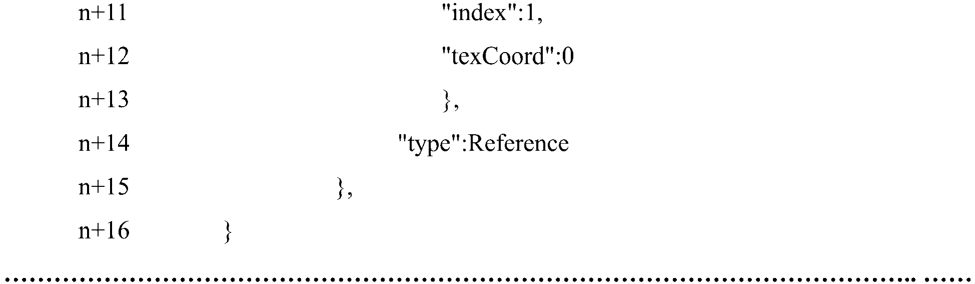

For example, if two 3D meshes in the scene-to-be-rendered each carry a haptic material attribute, the haptic material attribute carried by one 3D mesh is the stiffness whose type is the Low_resolution, and the haptic material attribute carried by the other mesh description module is the temperature whose type is the Reference, the haptic material array list added to the scene description document may be as follows:

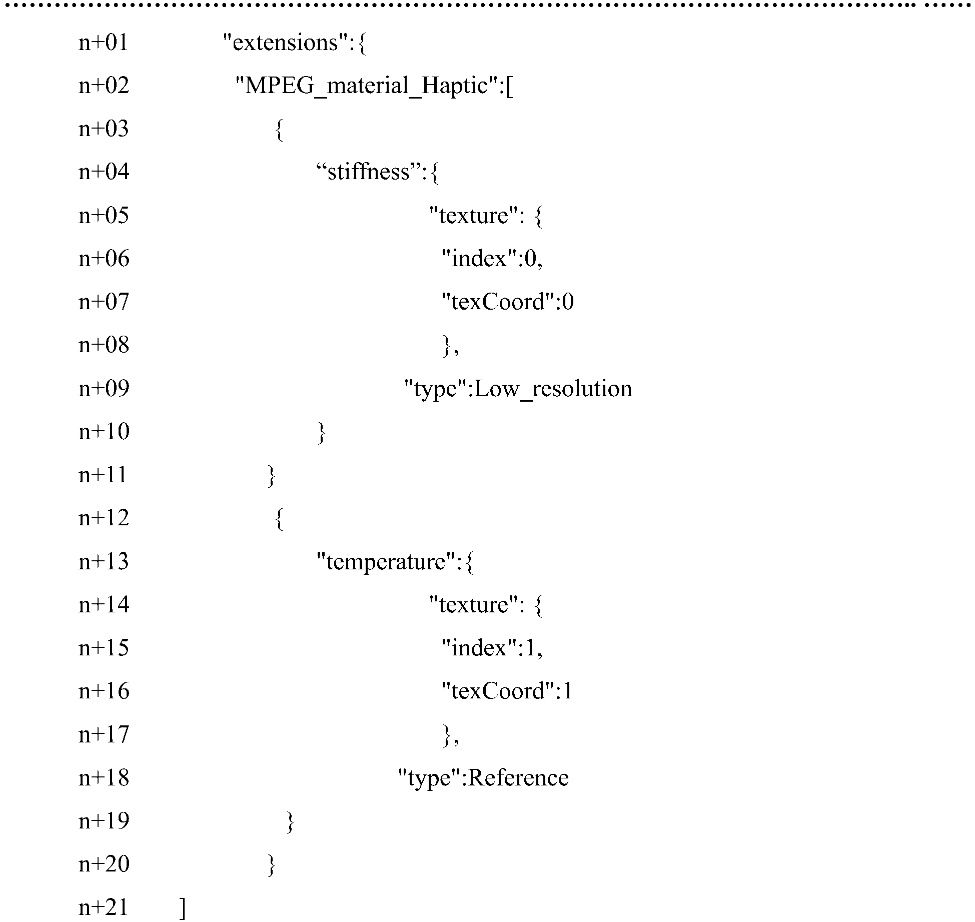

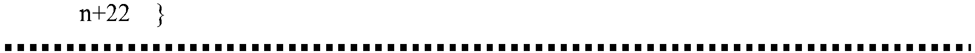

In some embodiments, the method for generating a scene description document further includes: before setting the value of the texture index syntax element in the texture array of the haptic material attribute description module corresponding to each haptic material attribute to the index value of the texture description module corresponding to each haptic material attribute, performing following steps l to n to generate the texture list (textures) of the scene description document:
Step 1: Add the texture description module corresponding to each haptic material attribute to the texture list of the scene description document.

A texture description module corresponding to any haptic material attribute includes a texture map syntax element (source) and a sampler syntax element (sampler).

Step m: Set a value of the texture map syntax element in the texture description module corresponding to each haptic material attribute to an index value of an access address of a texture map of each haptic material attribute.

Step n: Set a value of the sampler syntax element in the texture description module corresponding to each haptic material attribute to an index value of a sampler description module corresponding to a sampler of each haptic material attribute.

It should be noted that for a haptic material attribute whose type is the High_resolution or the Low_resolution, a corresponding texture description module may be generated by performing the above-mentioned steps l to n. For the haptic material attribute whose type is the Reference, steps shown in FIG. 24 further need to be performed to generate a corresponding texture description module in the texture list.

For example, if an index value of an access address of a texture map corresponding to a haptic material attribute whose type is the Low_resolution is 2, and an index value of a sampler description module corresponding to a sampler of the haptic material attribute is 3, a texture description module that corresponds to the haptic material attribute and is added to the texture list of the scene description document may be as follows:

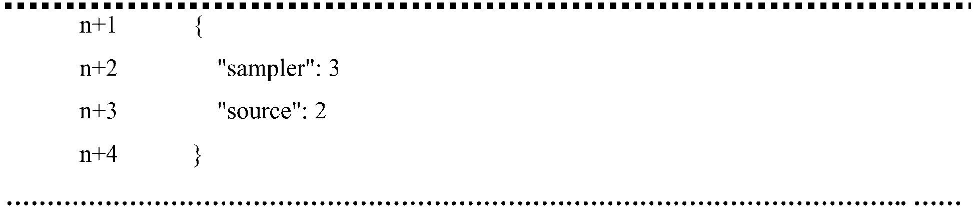

For example, if the scene description document includes texture description modules corresponding to three haptic material attributes, and types of the three haptic material attributes are the High_resolution, the Low-resolution, and the Reference respectively, the texture list of the scene description document may be as follows:

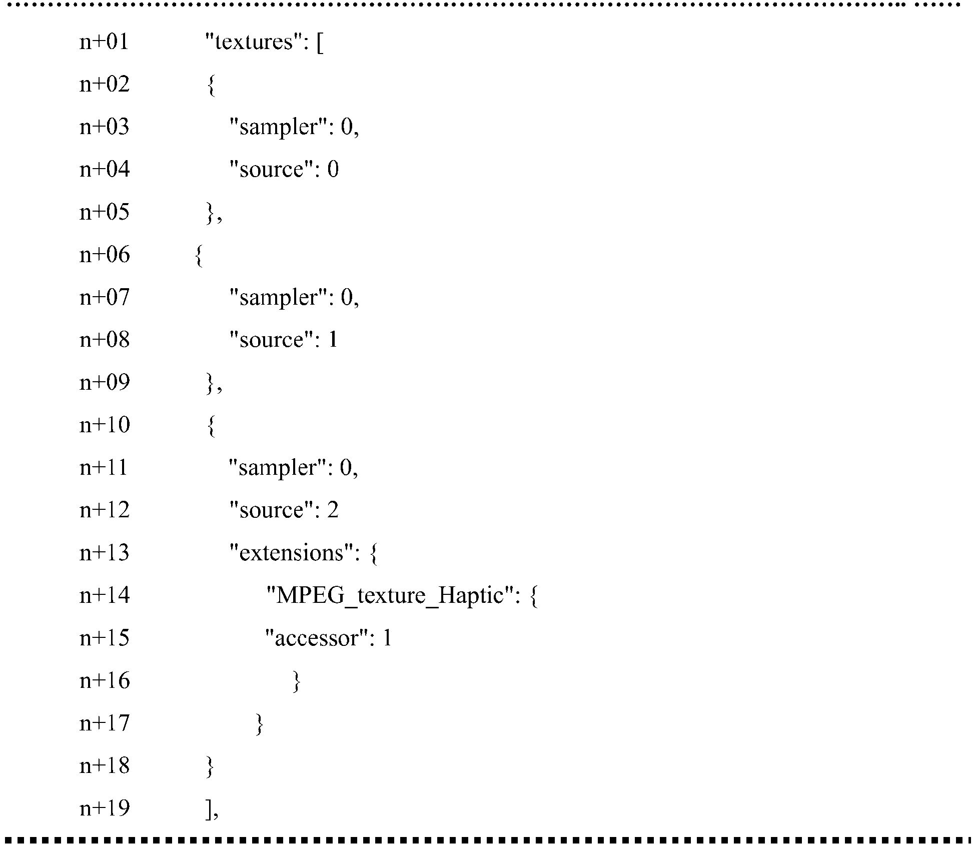

In some embodiments, the method for generating a scene description document further includes: before setting the value of the texture map syntax element in the texture description module corresponding to each haptic material attribute to the index value of the access address of the text map of each haptic material attribute, adding the access addresses of the texture map of each haptic material attribute in the haptic media file to a texture map list (images) of the scene description document.

It should be noted that if a type of a haptic material attribute is the High_resolution or the Low_resolution, a texture map of the haptic material attribute stores a haptic value of the haptic material attribute. If a type of a haptic material attribute is the Reference, a texture map of the haptic material attribute stores an index value of a haptic media file corresponding to the haptic material attribute.

For example, if an access address of a texture map of a haptic material attribute is temperatureTexture.png, the access address that is of the texture map of the haptic material attribute and added to the texture list of the scene description document may be as follows:

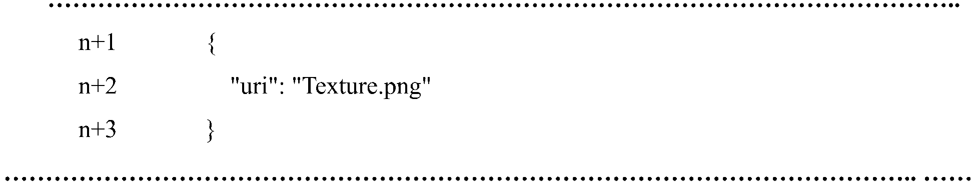

For example, if the scene description document includes access addresses of texture maps of three haptic material attributes, the texture map list of the scene description document may be as follows:

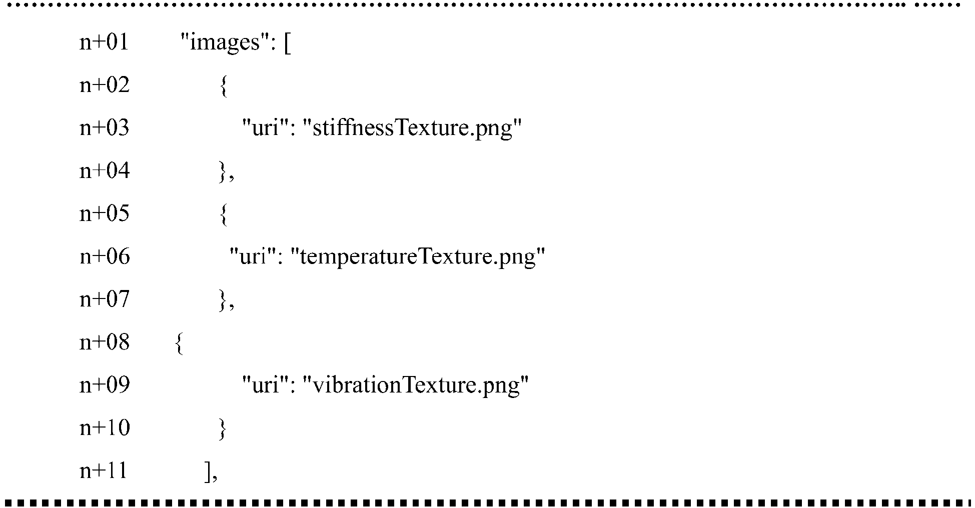

In some embodiments, the method for generating a scene description document further includes: before setting the value of the sampler syntax element in the texture description module corresponding to each haptic material attribute to the index value of the sampler description module corresponding to the sampler of each haptic material attribute, adding the sampler description module corresponding to the sampler of each haptic material attribute in the haptic media file to a sampler list (samplers) of the scene description document.

For example, for a sampler of a haptic material attribute, if a Mag filter parameter is 9729, a Min filter parameter is 9987, a horizontal wrapping parameter is 33648, and a value wrapping parameter is: 33648, a description module of a sampler of the haptic material attribute may be as follows:

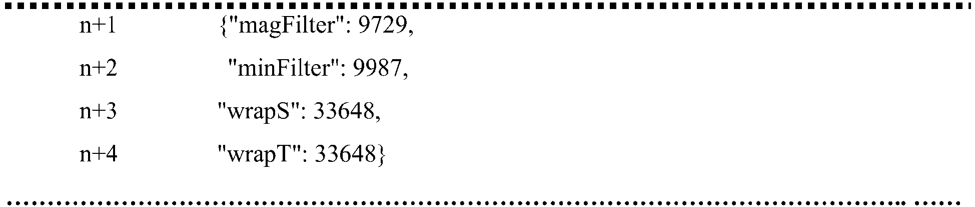

For example, if the scene description document includes only one sampler description module, the sampler list of the scene description document may be as follows:

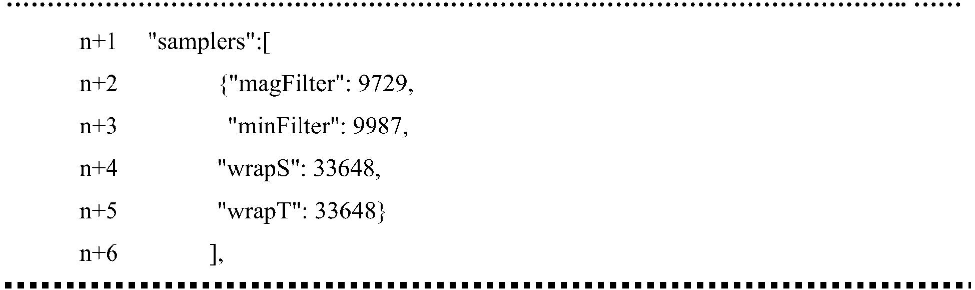

In some embodiments, the method for generating a scene description document further includes:
adding a digital asset description module (asset) to the scene description document, adding a version syntax element (version) to the digital asset description module, and setting a value of the version syntax element to 2.0 when the scene description document is compiled based on glTF2.0.

For example, the digital asset description module added to the scene description document may be as follows:

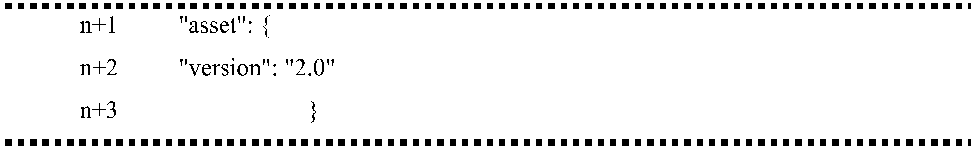

In some embodiments, the method for generating a scene description document further includes:
adding an extension usage description module (extendesUsed) to the scene description document, and adding each MPEG extension that is made to the scene description document of the glTF2.0 and used in the scene description document to the extension usage description module.

For example, if MPEG extensions used in the scene description document involve: the MPEG media (MPEG_media), the MPEG circular buffer (MPEG_buffer_circular), the MPEG time-varying accessor (MPEG_accessor_timed), the MPEG haptic (MPEG_Haptic), the MPEG haptic material (MPEG_material_Haptic), and the MPEG haptic texture (MPEG_texture_Haptic), the extension usage description module added to the scene description document may be as follows:

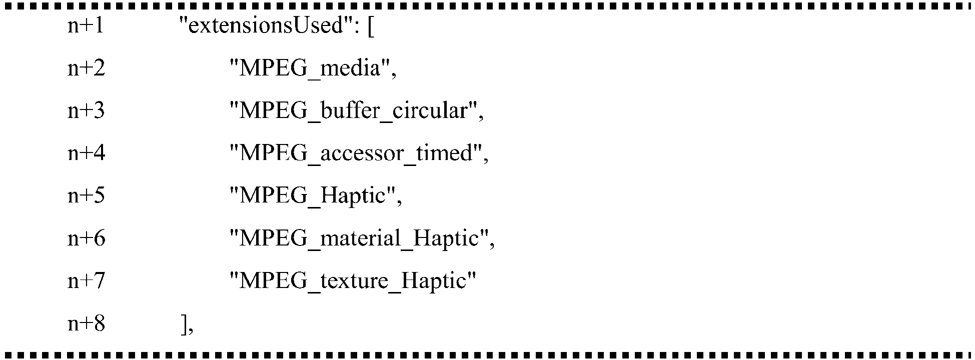

In some embodiments, the method for generating a scene description document further includes:
Adding a scene declaration (scene) to the scene description document, and setting a value of the scene declaration to an index value of a scene description module corresponding to the scene-to-be-rendered.

For example, if the index value of the scene description module corresponding to the scene-to-be-rendered is 0, the scene declaration added to the scene description document may be as follows:

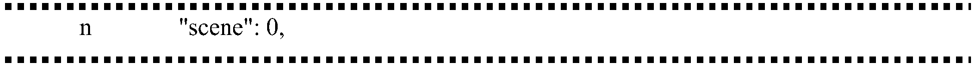

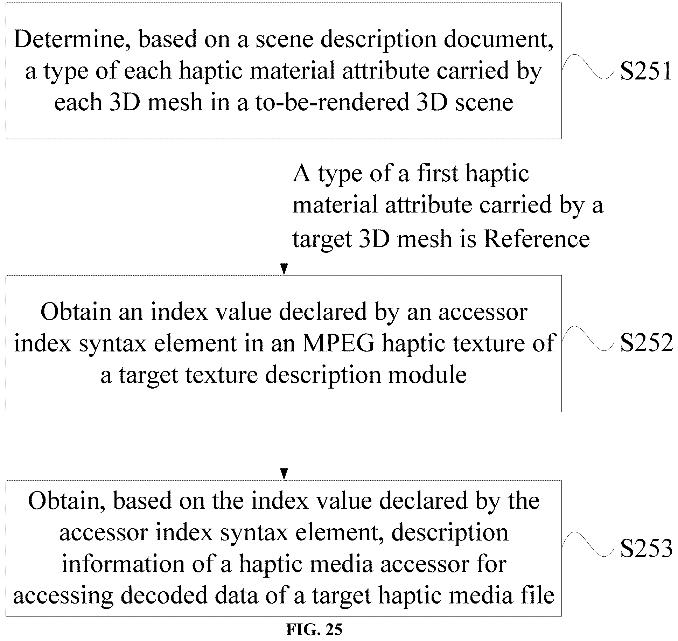

Some embodiments of the present disclosure further provide a method for parsing a scene description document. Referring to FIG. 25, the method for generating a scene description document includes following steps S251 to S253:
S251: Determine, based on a scene description document, a type of each haptic material attribute carried by each 3D mesh in a 3D-scene-to-be-rendered.

The haptic material attribute in the embodiments of the present disclosure may include at least one of stiffness, friction, haptic texture (Vibrotactile texture), temperature, vibration, and custom. The type of the haptic material attribute includes High_resolution, Low_resolution, and Reference.

It should be noted that one 3D mesh may carry a plurality of different types of haptic material attributes. Therefore, the type of each haptic material attribute carried by each 3D mesh in the 3D-scene-to-be-rendered needs to be determined one by one based on the scene description document.

In the above-mentioned step S251, if a type of a first haptic material attribute carried by a target 3D mesh in the 3D-scene-to-be-rendered is the Reference, following steps S252 and S253 are performed:
S252: Obtain an index value declared by an accessor index syntax element (accessor) in an MPEG haptic texture (MPEG_texture_Haptic) of a target texture description module.

The target texture description module is a texture description module corresponding to the first haptic material attribute.

For example, it is assumed that the target texture description module corresponding to the first haptic material attribute is as follows:

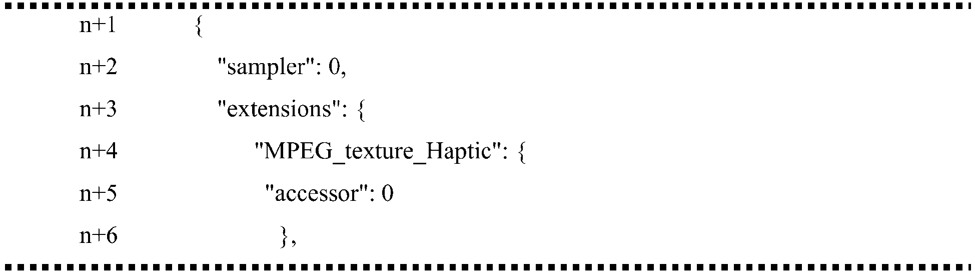

Therefore, it may be obtained that an index value of an accessor index syntax element (accessor) in an MPEG haptic texture (MPEG_texture_Haptic) of the target texture description module corresponding to the first haptic material attribute is 0.

S253: Obtain, based on the index value declared by the accessor index syntax element, description information of a haptic media accessor for accessing decoded data of a target haptic media file.

The target haptic media file is a haptic media file to which the first haptic material attribute belongs.

As described in the above embodiments, the index value declared by the accessor index syntax element (accessor) in the MPEG haptic texture (MPEG_texture_Haptic) of the target texture description module is 0. Therefore, the description information of the haptic media accessor is obtained based on a first accessor description module in an accessor list.

After obtaining the scene description document, the method for parsing a scene description document provided in the embodiments of the present disclosure first determines, based on the scene description document, the type of each haptic material attribute carried by each 3D mesh in the 3D-scene-to-be-rendered; obtains the index value declared by the accessor index syntax element in the MPEG haptic texture of the target texture description module corresponding to the first haptic material attribute when the type of the first haptic material attribute carried by the target 3D mesh in the 3D-scene-to-be-rendered is the Reference; and obtains, based on the index value declared by the accessor index syntax element, the description information of the haptic media accessor for accessing the decoded data of the target haptic media file to which the first haptic material attribute belongs. In the embodiments of the present disclosure, when the type of the first haptic material attribute carried by the target 3D mesh is the Reference, the index value declared by the accessor index syntax element in the MPEG haptic texture of the target texture description module corresponding to the first haptic material attribute may be obtained, and the description information of the haptic media accessor for accessing the decoded data of the target haptic media file is obtained based on the index value declared by the accessor index syntax element. Therefore, in the embodiments of the present disclosure, the haptic media accessor may be constructed based on the description information of the haptic media accessor, and then the decoded data of the target haptic media file is accessed through the haptic media accessor to obtain a haptic value of the first haptic material attribute. Therefore, the embodiments of the present disclosure may support obtaining a haptic value of a haptic material attribute whose type is the Reference, solving a problem of being unable to obtain the haptic value of the haptic material attribute whose type is the Reference in related technologies.

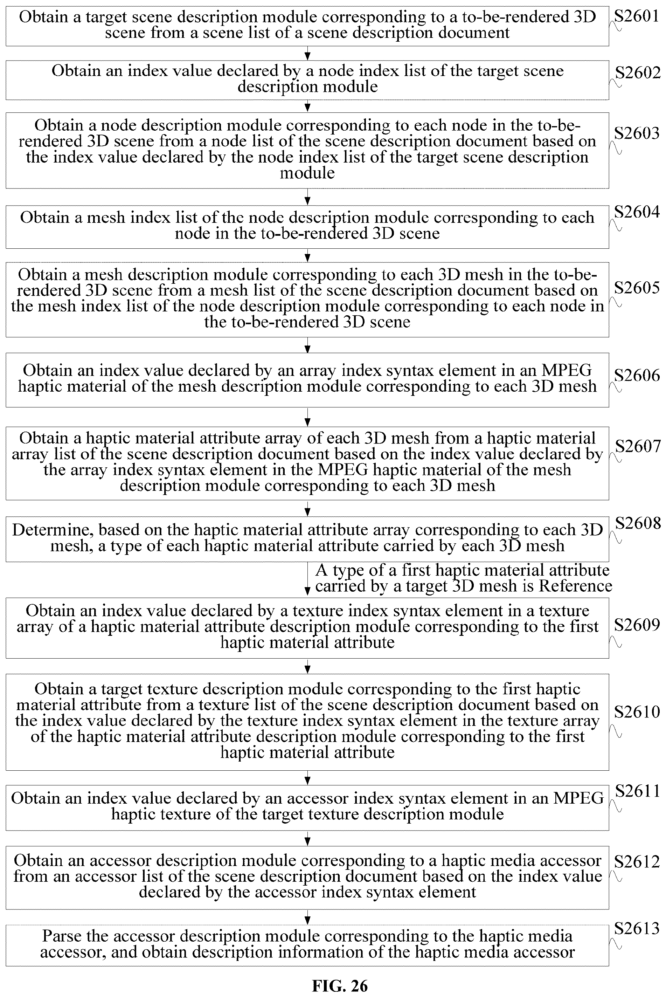

As an extension and refinement of the above method for parsing a scene description document, the present disclosure further provides another method for parsing a scene description document. Referring to FIG. 26, another method for parsing a scene description document includes:
S2601: Obtain a target scene description module corresponding to a 3D-scene-to-be-rendered from a scene list (scenes) of the scene description document.

In some embodiments, a scene declaration (senc) and an index value declared by the scene declaration may be obtained from the scene description document, and the target scene description module corresponding to the 3D-scene-to-be-rendered may be obtained from the scene list of the scene description document based on the scene declaration and the index value declared by the scene declaration.

For example, if the scene declaration and the index value declared by the scene declaration are "scene": 1, based on the scene declaration and the index value declared by the scene declaration, a second scene description module may be obtained from the scene list of the scene description document as the target scene description module corresponding to the 3D-scene-to-be-rendered.

S2602: Obtain an index value declared by a node index list (nodes) of the target scene description module.

For example, it is assumed that the node index list of the target scene description module is as follows:

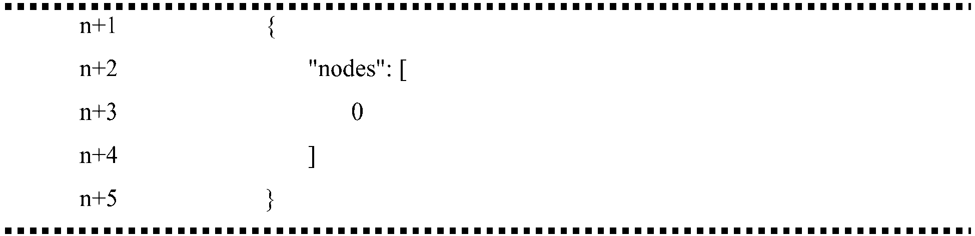

Therefore, the obtained index value declared by the node index list of the target scene description module is 0.

S2603: Obtain a node description module corresponding to each node in the 3D-scene-to-be-rendered from a node list of the scene description document based on the index value declared by the node index list of the target scene description module.

For example, when the index value declared by the node index list of the target scene description module is 0, a first node description module is obtained from the node list of the scene description document as the node description module corresponding to each node in the 3D-scene-to-be-rendered.

For another example, when the index value declared by the node index list of the target scene description module is 0 and 1, the first node description module and a second node description module are obtained from the node list of the scene description document as node description modules corresponding to each node in the 3D-scene-to-be-rendered.

S2604: Obtain a mesh index list (mesh) of the node description module corresponding to each node in the 3D-scene-to-be-rendered.

For example, it is assumed that a node description module corresponding to a node is as follows:

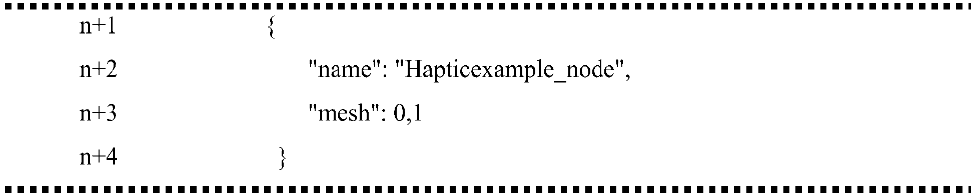

Therefore, an obtained mesh index list (mesh) of the node description module corresponding to the node is "mesh": 0,1.

S2605: Obtain a mesh description module corresponding to each 3D mesh in the 3D-scene-to-be-rendered from a mesh list (meshes) of the scene description document based on the mesh index list of the node description module corresponding to each node in the 3D-scene-to-be-rendered.

For example, when the 3D-scene-to-be-rendered includes a node 1 and a node 2, indexes value declared by a mesh index list of a node description module corresponding to the node 1 include 0 and 1, and indexes value declared by a mesh index list of a node description module corresponding to the node 2 include 1, 2, and 3, a first mesh description module, a second mesh description module, a third mesh description module, and a fourth mesh description module may be obtained from the mesh list of the scene description document.

For example, the mesh description module in the 3D-scene-to-be-rendered may be as follows:

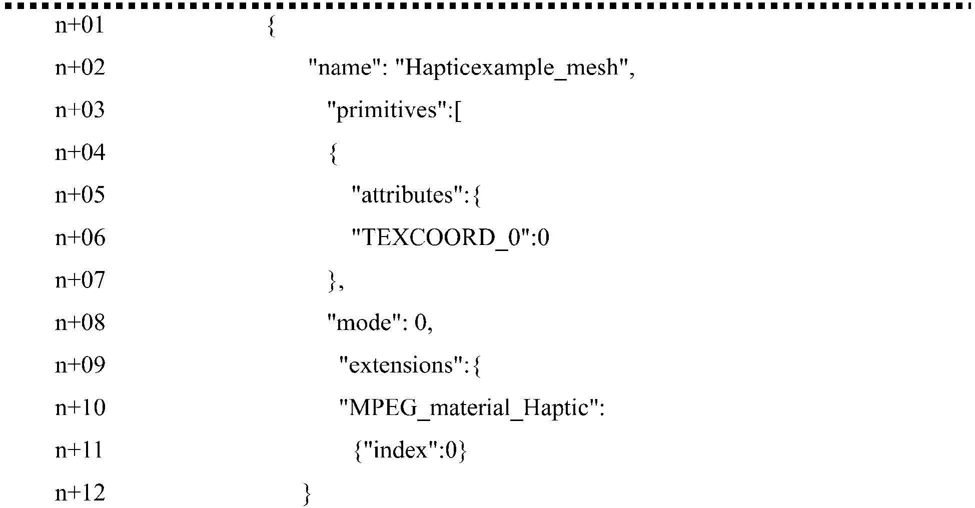

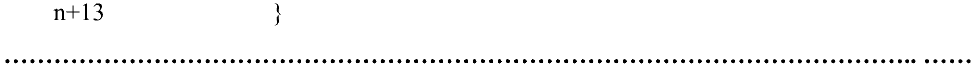

For example, the mesh description module in the 3D-scene-to-be-rendered may also be as follows:

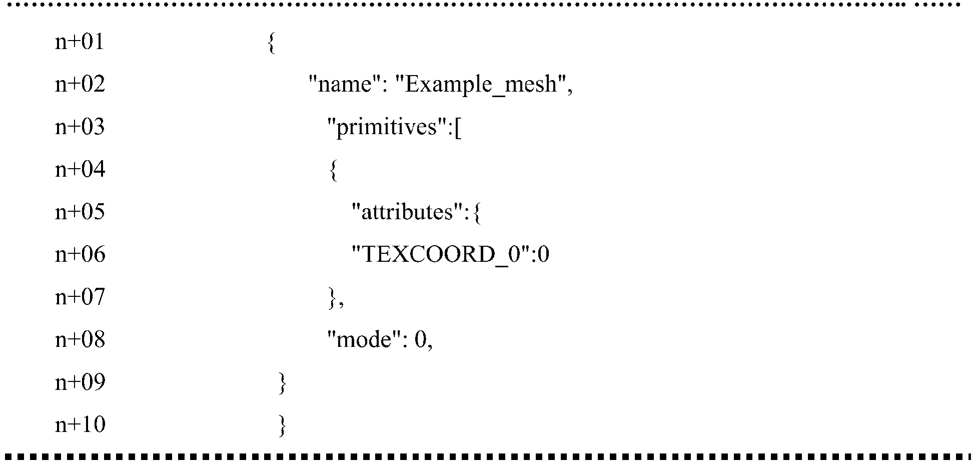

S2606: Obtain an index value declared by an array index syntax element (index) in an MPEG haptic material (MPEG_material_Haptic) of the mesh description module corresponding to each 3D mesh.

It should be noted that in the mesh list of the scene description document, some mesh description modules include the MPEG haptic material, while some mesh description modules do not include the MPEG haptic material. Therefore, the above-mentioned step S2606 needs to be performed only for a mesh description module that includes the MPEG haptic material.

S2607: Obtain a haptic material attribute array of each 3D mesh from a haptic material array list of the scene description document based on the index value declared by the array index syntax element in the MPEG haptic material of the mesh description module corresponding to each 3D mesh.

For example, when an index value declared by an array index syntax element in an MPEG haptic material of a mesh description module corresponding to a 3D mesh is 1, the haptic material array list of the scene description document is as follows:

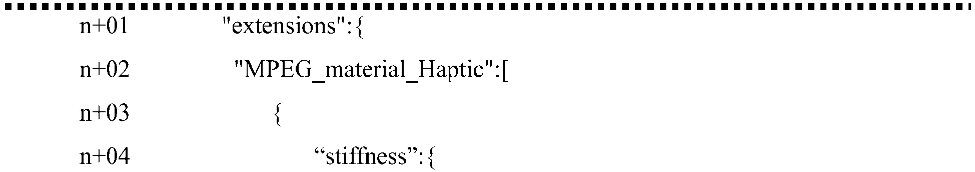

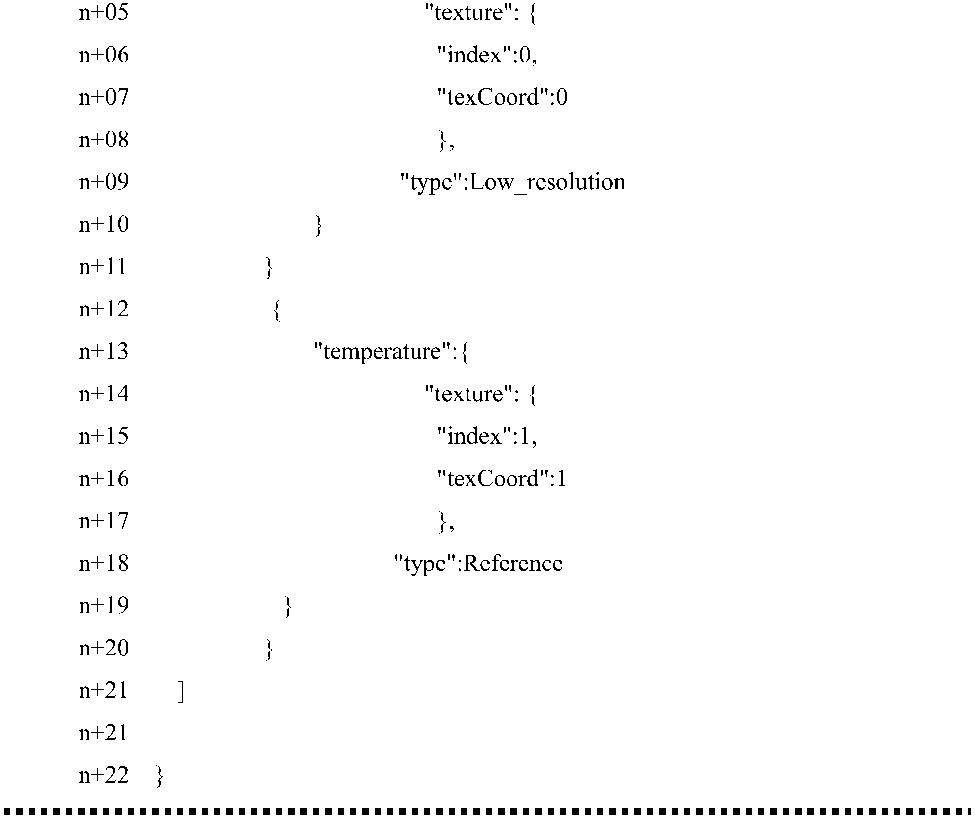

Because the index value declared by the array index syntax element in the MPEG haptic material of the mesh description module corresponding to the 3D mesh is 1, a second haptic material array may be obtained from the haptic material array list of the scene description document based on the index value declared by the array index syntax element in the MPEG haptic material of the mesh description module corresponding to the 3D mesh. Therefore, a haptic material attribute array that is of the 3D mesh and obtained from the haptic material array list of the scene description document is as follows:

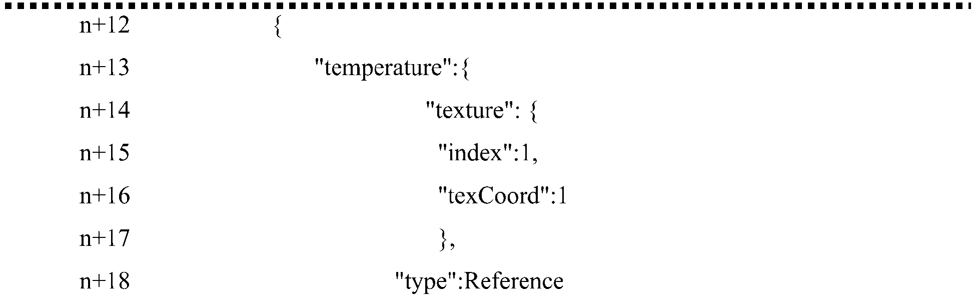

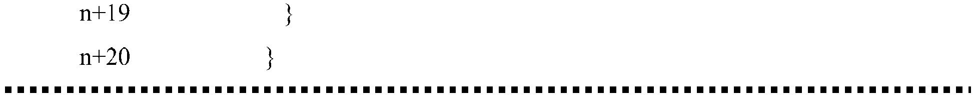

S2608: Determine, based on the haptic material attribute array corresponding to each 3D mesh, a type of each haptic material attribute carried by each 3D mesh.

In some embodiments, an implementation of determining, based on the haptic material attribute array corresponding to each 3D mesh, the type of each haptic material attribute carried by each 3D mesh in the above-mentioned step S2608 may include following steps 26081 to 26083:
Step 26081: Obtain a haptic material attribute description module corresponding to each haptic material attribute carried by each 3D mesh from the haptic material attribute array corresponding to each 3D mesh.

As shown in the above embodiments, a haptic material attribute array of a 3D mesh is as follows:

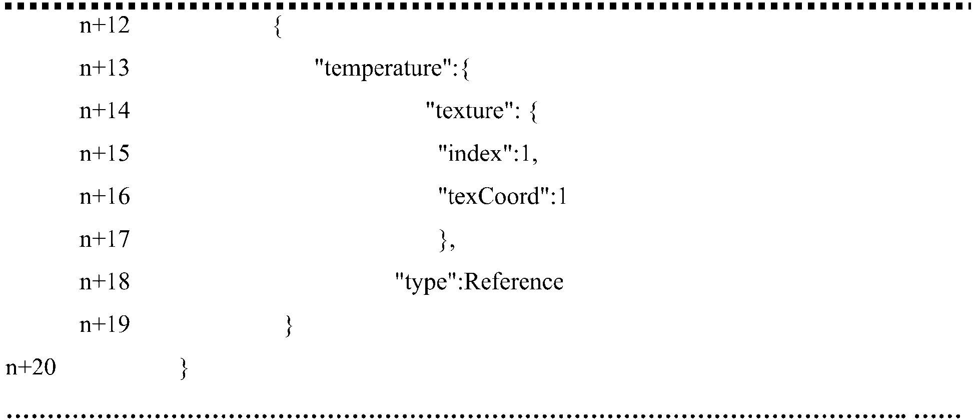

Therefore, it may be determined that the 3D mesh carries only temperature, and a haptic material attribute description module corresponding to the temperature is as follows:

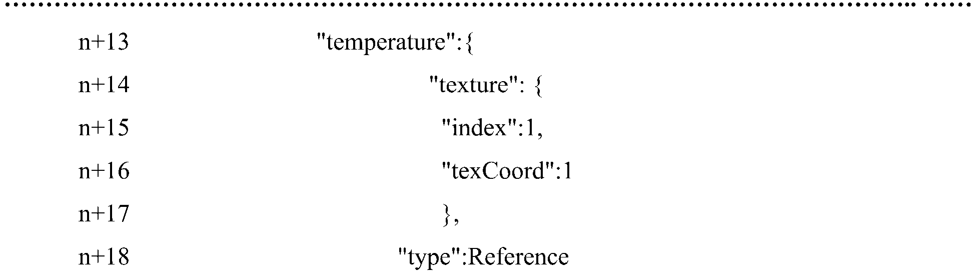

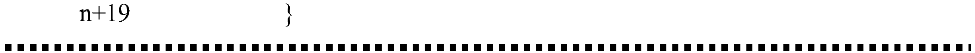

Step 26082: Obtain a value of an attribute type syntax element (type) in the haptic material attribute description module corresponding to each haptic material attribute.

As described in the above embodiments, based on "type":Reference at line n+18, it may be determined that a value of an attribute type syntax element in the haptic material attribute description module corresponding to the temperature is Reference.

Step 26083: Determine, based on the value of the attribute type syntax element in the haptic material attribute description module corresponding to each haptic material attribute, the type of each haptic material attribute carried by each 3D mesh.

As described in the above embodiments, because the value of the attribute type syntax element in the haptic material attribute description module corresponding to the temperature is the Reference, based on the value of the attribute type syntax element in the haptic material attribute description module corresponding to each haptic material attribute, it may be determined that a type of the temperature carried by the 3D mesh is the Reference.

In the above-mentioned step S2608, if a type of a first haptic material attribute carried by a target 3D mesh in the 3D-scene-to-be-rendered is the Reference, following steps are performed:
S2609: Obtain an index value declared by a texture index syntax element (index) in a texture array (texture) of a haptic material attribute description module corresponding to the first haptic material attribute.

For example, it is assumed that the haptic material attribute description module corresponding to the first haptic material attribute is as follows:

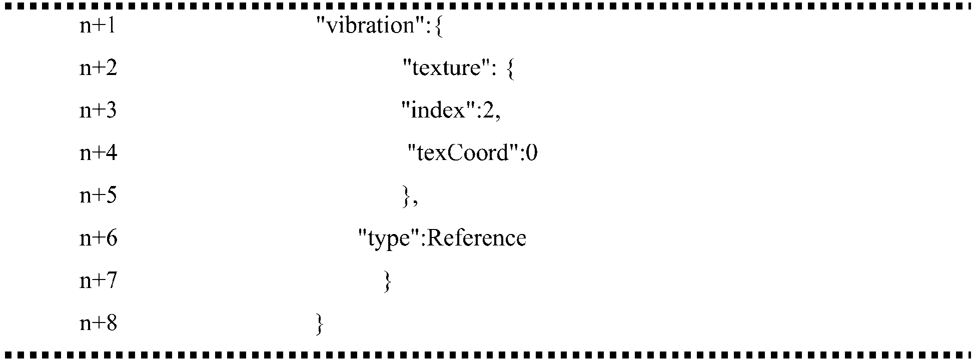

Therefore, it may be determined the index value declared by the texture index syntax element (index) in the texture array (texture) of the haptic material attribute description module corresponding to the first haptic material attribute is 2.

S2610: Obtain a target texture description module corresponding to the first haptic material attribute from a texture list (textures) of the scene description document based on the index value declared by the texture index syntax element in the texture array of the haptic material attribute description module corresponding to the first haptic material attribute.

As described in the above embodiments, if an index value declared by a texture index syntax element (index) in a texture array (texture) of a first haptic material attribute description module is 2, a third texture description module is obtained from the texture list (textures) of the scene description document as a texture description module corresponding to a corresponding haptic material attribute.

S2611: Obtain an index value declared by an accessor index syntax element in an MPEG haptic texture of the target texture description module.

The target texture description module is a texture description module corresponding to the first haptic material attribute.

S2612: Obtain an accessor description module corresponding to a haptic media accessor from an accessor list (accessors) of the scene description document based on the index value declared by the accessor index syntax element.

For example, if the index value declared by the accessor index syntax element is 1, a second accessor description module in the accessor list of the scene description document is used as the accessor description module corresponding to the haptic media accessor.

For example, if the index value declared by the accessor index syntax element is 3, a fourth accessor description module in the accessor list of the scene description document is used as the accessor description module corresponding to the haptic media accessor.

S2613: Parse the accessor description module corresponding to the haptic media accessor, and obtain description information of the haptic media accessor.

For example, the accessor description module corresponding to the haptic media accessor is as follows:

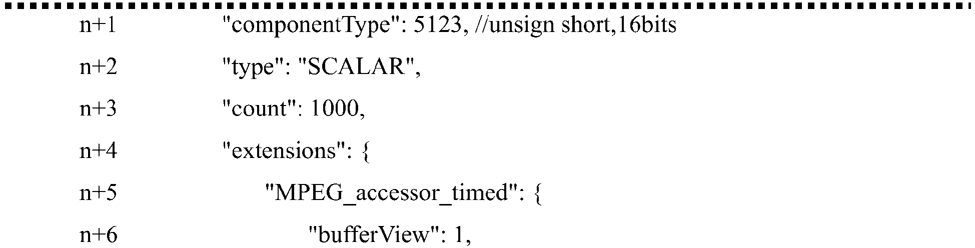

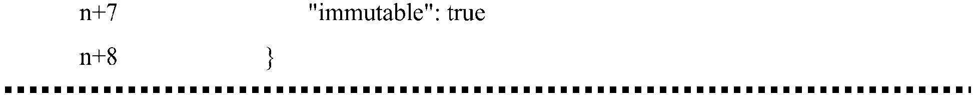

Therefore, information that may be obtained by parsing the accessor description module corresponding to the haptic media accessor includes: A data type is 5123, an accessor type is scalar, a data count is 1000, the accessor is a time-varying accessor reconstructed based on an MPEG extension, an access object of the accessor is a buffer view corresponding to a second buffer view description module in a buffer view list, and a parameter of the accessor changes over time.

So far, description information of a haptic media accessor that may access the haptic value of the first haptic material attribute may be obtained by parsing the scene description document, and then the haptic media accessor is constructed based on the description information of the haptic media accessor to read the haptic value of the first haptic material attribute.

In some embodiments, the another method for parsing a scene description document provided in the embodiments of the present disclosure further includes:
obtaining a sampler description module corresponding to a sampler of each haptic material attribute from a sampler list (samplers) of the scene description document based on an index value declared by a sampler syntax element (sampler) in the texture description module corresponding to the first haptic material attribute, and obtaining description information of a sampler of the first haptic material attribute based on a sampler description module corresponding to the sampler of the first haptic material attribute.

For example, if the index value declared by the sampler syntax element (sampler) in the texture description module corresponding to the first haptic material attribute is 0, a first sampler description module is obtained from the sampler list of the scene description document, and the description information of the sampler of the first haptic material attribute is obtained based on the first sampler description module.

In some embodiments, the another method for parsing a scene description document provided in the embodiments of the present disclosure further includes following steps I to III:
Step I: Obtain, based on an index value declared by a texture coordinate index syntax element (texCoord) in the texture array (texture) of the haptic material attribute description module corresponding to the first haptic material attribute, a texture coordinate syntax element (TEXCORD_n) corresponding to the first haptic material attribute from an attribute (attributes) of a primitive (primitives) in a mesh description module corresponding to the target 3D mesh.

For example, if the texture coordinate index syntax element (texCoord) in the texture array (texture) of the haptic material attribute description module corresponding to the first haptic material attribute and its value are "texCoord": 0, a first texture coordinate syntax element (TEXCORD_0) is obtained from the attribute (attributes) of the primitive (primitives) in the mesh description module corresponding to the target 3D mesh as the texture coordinate syntax element corresponding to the first haptic material attribute.

Step II: Obtain, based on an index value declared by the texture coordinate syntax element corresponding to the first haptic material attribute, an accessor description module corresponding to a texture coordinate accessor of the first haptic material attribute.

For example, if the texture coordinate syntax element corresponding to the first haptic material attribute and its value are "TEXCOORD_0":0, a first accessor description module is obtained from the accessor list (accessors) of the scene description document as the accessor description module corresponding to the texture coordinate accessor of the first haptic material attribute.

Step III: Obtain description information of the texture coordinate accessor of the first haptic material attribute based on the accessor description module corresponding to the texture coordinate accessor of the first haptic material attribute.

For example, the accessor description module corresponding to the texture coordinate accessor of the first haptic material attribute is as follows:

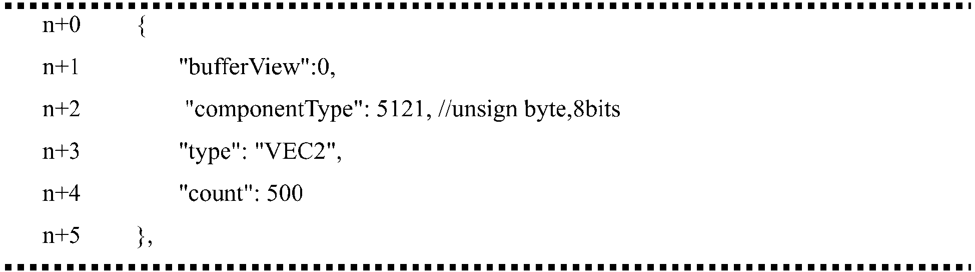

Therefore, information that may be obtained by parsing the accessor description module corresponding to the texture coordinate accessor of the first haptic material attribute includes: An access object of the accessor is a buffer view corresponding to a first buffer view description module in the buffer view list, a data type is 5121, an accessor type is a 2D vector, and a data count is 500.

So far, description information of the texture coordinate accessor that may access a texture coordinate corresponding to the first haptic material attribute may be obtained by parsing the scene description document, and then the texture coordinate accessor is constructed based on the description information of the texture coordinate accessor to read the texture coordinate corresponding to the first haptic material attribute.

In some embodiments, the another method for parsing a scene description document further includes:
when a type of a second haptic material attribute is High_resolution or Low_resolution, obtaining an index value declared by a texture index syntax element (index) in a texture array (texture) of a haptic material attribute description module corresponding to the second haptic material attribute; obtaining a texture description module corresponding to the second haptic material attribute from the texture list (textures) of the scene description document based on the index value declared by the texture index syntax element in the texture array of the haptic material attribute description module corresponding to the second haptic material attribute; obtaining an index value declared by a texture map syntax element (source) and an index value declared by a sampler syntax element (sampler) in the texture description module corresponding to the second haptic material attribute; and obtaining an access address of a texture map of the second haptic material attribute from a texture map list (images) of the scene description document based on the index value declared by the texture map syntax element (source) in the texture description module corresponding to the second haptic material attribute, and obtaining description information of a sampler of the second haptic material attribute from the sampler list (samplers) of the scene description document based on the index value declared by the sampler syntax element (sampler) in the texture description module corresponding to the second haptic material attribute.

In some embodiments, after obtaining the access address of the texture map of the second haptic material attribute from the texture map list of the scene description document, the another method for parsing a scene description document further includes:
obtaining the texture map of the second haptic material attribute based on the access address of the texture map of second first haptic material attribute; and
obtaining a haptic value of the second haptic material attribute based on the texture map of the second haptic material attribute.

When a type of a haptic material attribute is the High_resolution or the Low_resolution, data stored in a texture map of the haptic material attribute is a haptic value of the haptic material attribute. Therefore, when the type of the haptic material attribute is the High_resolution or the Low_resolution, an access address of the texture map of the haptic material attribute may be directly obtained from the texture map of the haptic material attribute through the above embodiments, and then the texture map of the haptic material attribute is obtained, thereby obtaining the haptic value of the haptic material attribute.

It should be noted that in some embodiments, the another method for parsing a scene description document may further include: obtaining an index value declared by a texture map syntax element (source) in the target texture description module; and obtaining an access address of a texture map of the first haptic material attribute from the texture map list (images) of the scene description document based on the index value declared by the texture map syntax element (source) in the target texture description module.

In some embodiments, after obtaining an access address of a texture map of each haptic material attribute from the texture map list (images) of the scene description document, the another method for parsing a scene description document further includes: obtaining the texture map of the first haptic material attribute based on the access address of the texture map of the first haptic material attribute; and obtaining, based on the texture map of the first haptic material attribute, an index value of a haptic media file to which the first haptic material attribute belongs.

In some embodiments, the another method for parsing a scene description document further includes:
obtaining a buffer description module corresponding to each buffer in the 3D-scene-to-be-rendered from a buffer list of the scene description document, and obtaining description information of each buffer in the 3D-scene-to-be-rendered based on the buffer description module corresponding to each buffer.

The description information of the buffer includes at least one of following information:
a capacity of the buffer, an access address of data cached in the buffer, whether the buffer is an MPEG circular buffer, a quantity of storage stages of the circular buffer, an index value of a media description module corresponding to a media file cached in the circular buffer, and a track index value of data of the media file cached in the circular buffer.

For example, a buffer description module corresponding to a buffer is as follows:

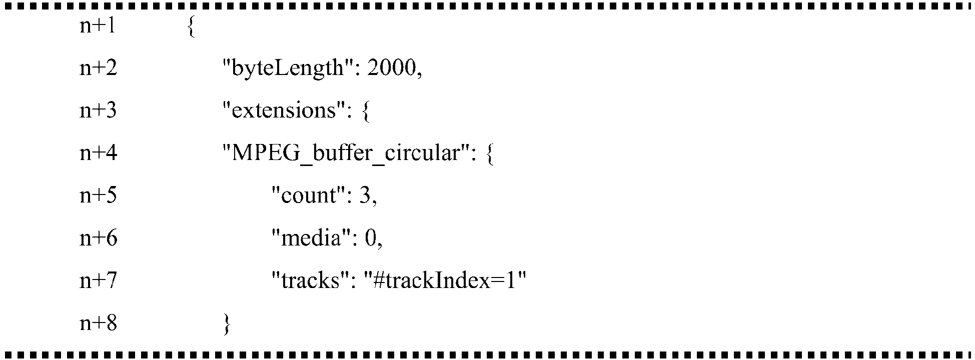

Therefore, description information that is of the buffer and may be obtained based on the buffer description module corresponding to the buffer includes: A capacity of the buffer is 2000 bytes, the buffer is a circular buffer reconstructed based on an MPEG extension, a quantity of storage stages of the circular buffer is 3, a media file stored in the circular buffer is a first media file declared in MPEG media, and a track index value of data of the media file cached in the circular buffer is 1.

For example, a buffer description module corresponding to a buffer is as follows:

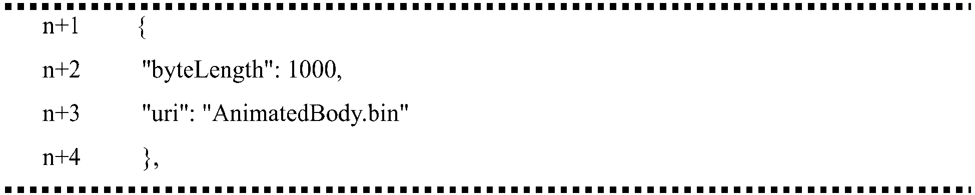

Therefore, description information that is of the buffer and may be obtained based on the buffer description module corresponding to the buffer includes: A capacity of the buffer is 1000 bytes, and an access address of data cached in the buffer is AnimatedBody.bin.

In some embodiments, the another method for parsing a scene description document further includes:
obtaining a buffer view description module corresponding to each buffer view of each buffer in the 3D-scene-to-be-rendered from the buffer view list of the scene description document, and obtaining description information of each buffer view based on the buffer view description module corresponding to each buffer view.

The description information of the buffer view includes at least one of following information:
a buffer to which the buffer view belongs, a capacity of the buffer view, and an offset of the buffer view.

For example, a buffer view description module corresponding to a buffer view is as follows:

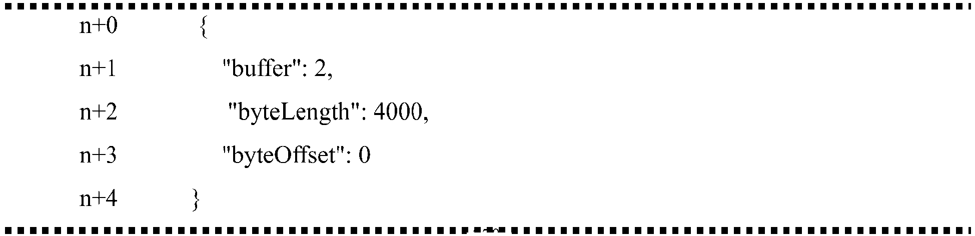

Therefore, description information that is of the buffer view and may be obtained based on the buffer view description module corresponding to the buffer view includes: The buffer view is a buffer view of a buffer corresponding to a third buffer description module in the buffer list, a capacity of the buffer view is 4000 bytes, and an offset of the buffer view is 0.

In some embodiments, the another method for parsing a scene description document further includes: obtaining an accessor description module corresponding to each accessor in the 3D-scene-to-be-rendered from the accessor list of the scene description document, and obtaining description information of each accessor based on the accessor description module corresponding to each accessor.

The description information of the accessor includes at least one of following information:
a buffer view accessed by the accessor, a data type of data accessed by the accessor, a type of the accessor, a quantity of accessors, whether the accessor is an MPEG time-varying accessor, a buffer view accessed by the time-varying accessor, and whether a parameter of the accessor changes over time.

For example, a buffer view description module corresponding to a buffer view is as follows:

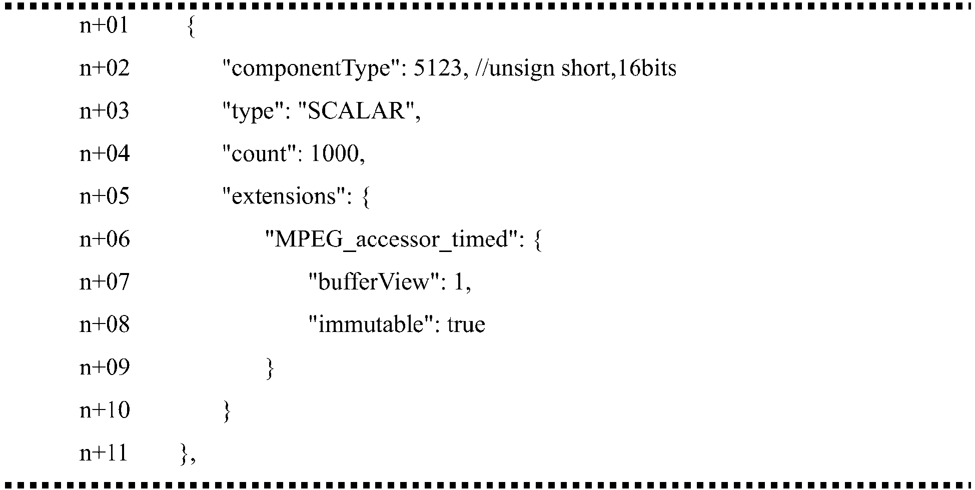

Therefore, description information that is of the accessor and obtained by parsing the accessor description module corresponding to the accessor includes: A data type of data accessed by the accessor is 5123, a type of the accessor is scalar, a quantity of accessors is 1000, the accessor is a time-varying accessor reconstructed based on the MPEG extension, a buffer view accessed by the accessor is a buffer view corresponding to a buffer view description module whose index value is 1, and a parameter of the accessor changes over time.

For another example, a buffer view description module corresponding to a buffer view is as follows:

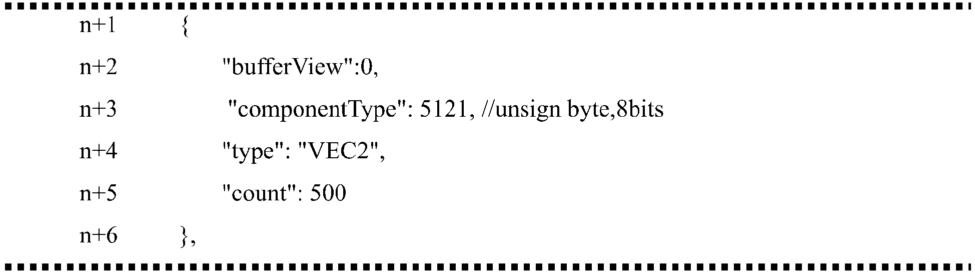

Therefore, description information that is of the accessor and obtained by parsing the accessor description module corresponding to the accessor includes: A buffer view accessed by the accessor is a buffer view corresponding to a buffer view description module whose index value is 0, a data type of data accessed by the accessor is 5121, a type of the accessor is a 2D vector, and a quantity of accessors is 500.

In some embodiments, the another method for parsing a scene description document further includes: obtaining a media description module corresponding to each media file in the 3D-scene-to-be-rendered from an extended media list of the MPEG media in the scene description document, and obtaining description information of each media file based on the media description module corresponding to each media file.

The description information of the media file includes at least one of following information:
a name of the media file, whether the media file is automatically played, whether the media file is cyclically played, a type of the media file, an access address of the media file, track information of an encapsulated file of the media file, and a codec parameter of the media file.

For example, a media description module corresponding to a media file is as follows:

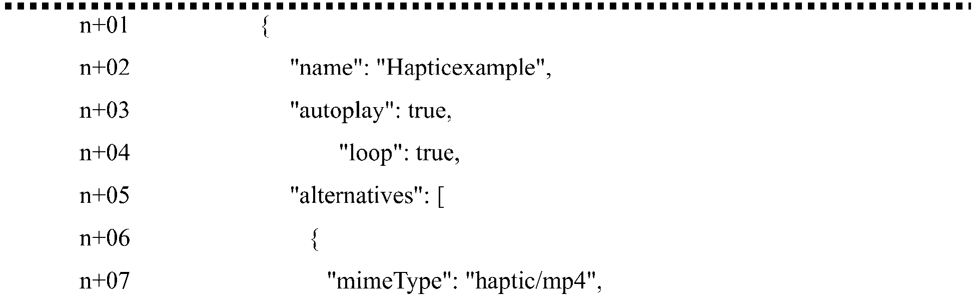

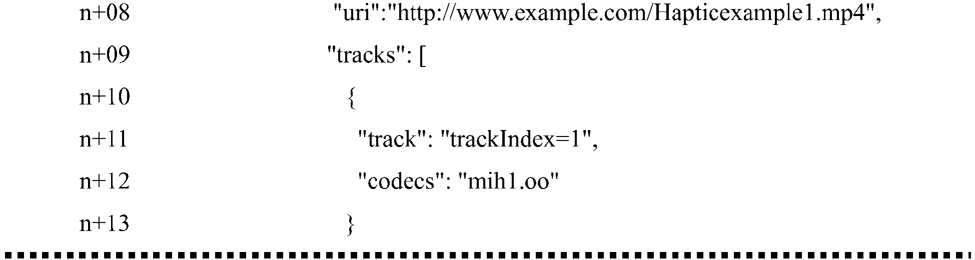

Therefore, description information that is of the media file and obtained based on the media description module corresponding to the media file includes: A name of the media file is Hapticexample, the media file is automatically played, the media file is cyclically played, a type of the media file is a haptic media file that includes only haptic data, an access address of the media file is http://www.example.com/Hapticexample1.mp4, an index value of a bitstream track of an encapsulated file of the media file is 1, and a codec parameter of the media file is mih1.oo.

In some embodiments, the another method for parsing a scene description document further includes: obtaining the scene declaration (scene) from the scene description document, and obtaining the target scene description module corresponding to the 3D-scene-to-be-rendered from the scene list (scenes) of the scene description document based on the index value declared by the scene declaration.

For example, if the scene declaration and the index value declared by the scene declaration are "scene": 0, a first scene description module is obtained from the scene list (scenes) of the scene description document as the target scene description module corresponding to the 3D-scene-to-be-rendered.

In some embodiments, the another method for parsing a scene description document further includes: obtaining an extension usage description module (extensionUsed) in the scene description document, and obtaining, based on the extension usage description module, an MPEG extension used in the scene description document.

For example, the extension usage description module is as follows:

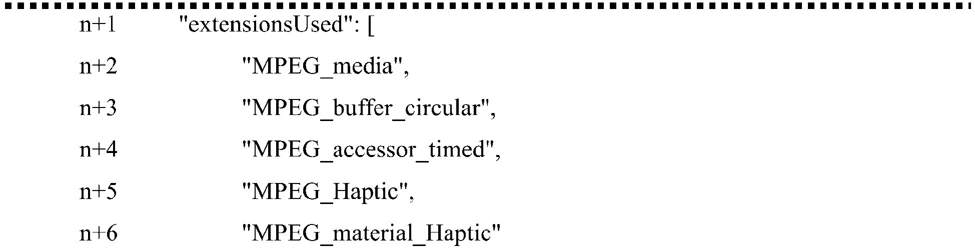

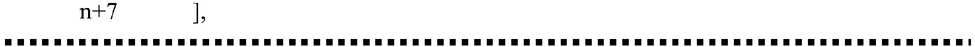

Therefore, MPEG extensions that are used in the scene description document and may be obtained based on the extension usage description module involve: the MPEG media (MPEG_media), an MPEG circular buffer (MPEG_buffer_circular), an MPEG time-varying accessor (MPEG_accessor_timed), MPEG haptic (MPEG_Haptic), and the MPEG haptic material (MPEG_material_Haptic).

In some embodiments, the another method for parsing a scene description document further includes: obtaining a digital asset description module (version) in the scene description document, and determining version information of the scene description document based on the digital asset description module.

After the version information of the scene description document is determined based on the digital asset description module, a corresponding scene description document parser is selected based on the version information of the scene description document to parse the scene description document, thereby ensuring that the scene description document is correctly parsed.

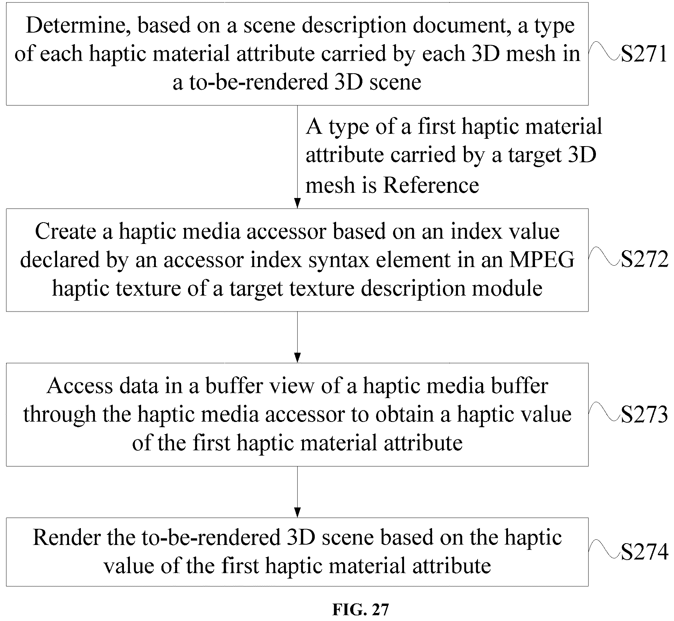

Some embodiments of the present disclosure also provide a 3D scene rendering method. The 3D scene rendering method is executed by a display engine in an immersive media description framework. Referring to FIG. 27, the 3D scene rendering method includes following steps:
S271: Determine, based on a scene description document, a type of each haptic material attribute carried by each 3D mesh in a 3D-scene-to-be-rendered.

The haptic material attribute in the embodiments of the present disclosure may include at least one of stiffness, friction, haptic texture (Vibrotactile texture), temperature, vibration, and custom. The type of the haptic material attribute includes High_resolution, Low_resolution, and Reference.

It should be noted that one 3D mesh may carry a plurality of different types of haptic material attributes. Therefore, the type of each haptic material attribute carried by each 3D mesh in the 3D-scene-to-be-rendered needs to be determined one by one based on the scene description document.

In the above-mentioned step S271 of determining the type of each haptic material attribute carried by each 3D mesh in the 3D-scene-to-be-rendered based on the scene description document, if it is determined that a type of a first haptic material attribute carried by a target 3D mesh in the 3D-scene-to-be-rendered is the Reference, following steps S272 to S274 are performed:
S272: Create a haptic media accessor based on an index value declared by an accessor index syntax element (accessor) in an MPEG haptic texture (MPEG_texture_Haptic) of a target texture description module.

The target texture description module is a texture description module corresponding to the first haptic material attribute.

For an implementation of obtaining the index value that is declared by the accessor index syntax element (accessor) in the MPEG haptic texture (MPEG_texture_Haptic) in the target texture description module and determined by the display engine in the above-mentioned step S272, reference may be mad to the embodiment shown in FIG. 26, and details are not described herein again.

S273: Access data in a buffer view of a haptic media buffer through the haptic media accessor to obtain a haptic value of the first haptic material attribute.

The haptic media buffer is a buffer configured for caching a target haptic media file.

Data stored in the haptic media buffer is decoded data obtained by a MAF by processing the target haptic media file. Therefore, the haptic value of the first haptic material attribute may be directly obtained by accessing the data in the buffer view of the haptic media buffer through the haptic media accessor.

S274: Render the 3D-scene-to-be-rendered based on the haptic value of the first haptic material attribute.

After obtaining the scene description document, the 3D scene rendering method provided in the embodiments of the present disclosure first determines, based on the scene description document, the type of each haptic material attribute carried by each 3D mesh in the 3D-scene-to-be-rendered; creates the haptic media accessor based on the index value declared by the accessor index syntax element in the MPEG haptic texture of the target texture description module when the type of the first haptic material attribute carried by the target 3D mesh in the 3D-scene-to-be-rendered is the Reference; accesses, through the haptic media accessor, the data in the buffer view of the haptic media buffer configured for caching the decoded data of the target haptic media file, to obtain the haptic value of the first haptic material attribute; and finally, renders the 3D-scene-to-be-rendered based on the haptic value of the first haptic material attribute. In the embodiments of the present disclosure, when the type of the first haptic material attribute carried by the target 3D mesh is the Reference, the index value declared by the accessor index syntax element in the MPEG haptic texture of the target texture description module corresponding to the first haptic material attribute is obtained, the haptic media accessor is created based on the index value declared by the accessor index syntax element, the haptic value of the first haptic material attribute is obtained through the haptic media accessor, and the 3D-scene-to-be-rendered is rendered based on the haptic value of the first haptic material attribute. Therefore, the embodiments of the present disclosure may support obtaining a haptic value of a haptic material attribute whose type is the Reference, solving a problem of being unable to obtain the haptic value of the haptic material attribute whose type is the Reference in related technologies.

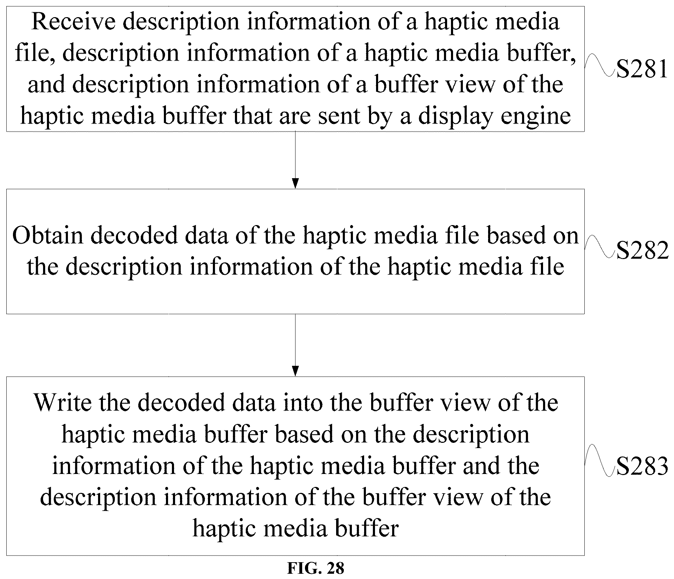

Some embodiments of the present disclosure also provide a method for processing a haptic media file. The method for processing a haptic media file is executed by a MAF in an immersive media description framework. Referring to FIG. 28, the method for processing a haptic media file includes following steps:
S281: Receive description information of a haptic media file, description information of a haptic media buffer, and description information of a buffer view of the haptic media buffer that are sent by a display engine.

The haptic media file includes a haptic value of a first haptic material attribute whose type is Reference.

In some embodiments, the description information of the haptic media file may include at least one of following information:
a name of the media file, whether the media file is automatically played, whether the media file is cyclically played, a type of the media file, an access address of the media file, track information of an encapsulated file of the media file, and a codec parameter of the media file.

In some embodiments, the description information of the haptic media buffer may include at least one of following information:
a capacity of the buffer, whether the buffer is an MPEG circular buffer, a quantity of storage stages of the circular buffer, an index value of a media description module corresponding to a media file cached in the circular buffer, and a track index value of data of the media file cached in the circular buffer.

In some embodiments, the description information of the buffer view of the haptic media buffer may include at least one of following information:
a buffer to which the buffer view belongs, a capacity of the buffer view, and an offset of the buffer view.

S282: Obtain decoded data of the haptic media file based on the description information of the haptic media file.

In some embodiments, the obtaining, by the MAF, decoded data of the haptic media file based on the description information of the haptic media file includes:
creating, based on the description information of the haptic media file, a haptic media pipeline for processing the haptic media file, obtaining the haptic media file through the haptic media pipeline, and decapsulating and decoding the haptic media file to obtain the decoded data of the haptic media file.

S283: Write the decoded data into the buffer view of the haptic media buffer based on the description information of the haptic media buffer and the description information of the buffer view of the haptic media buffer.

After writing the decoded data into the buffer view of the haptic media buffer, the display engine may create a haptic media accessor based on an index value declared by an accessor index syntax element in an MPEG haptic texture of a target texture description module, and obtain the haptic value of the first haptic material attribute by accessing data in the buffer view of the haptic media buffer through the haptic media accessor.

The target texture description module is a texture description module corresponding to the first haptic material attribute.

After receiving the description information of the haptic media file, the description information of the haptic media buffer, and the description information of the buffer view of the haptic media buffer that are sent by the display engine, the method for processing a haptic media file provided in the embodiments of the present disclosure obtains the decoded data of the haptic media file based on the description information of the haptic media file, and writes the decoded data into the buffer view of the haptic media buffer based on the description information of the haptic media buffer and the description information of the buffer view of the haptic media buffer. Therefore, the display engine may create the haptic media accessor based on the index value declared by the accessor index syntax element in the MPEG haptic texture of the target texture description module, and obtain the haptic value of the first haptic material attribute by accessing the data in the buffer view of the haptic media buffer through the haptic media accessor. Therefore, the embodiments of the present disclosure may support obtaining a haptic value of a haptic material attribute whose type is the Reference, solving a problem of being unable to obtain the haptic value of the haptic material attribute whose type is the Reference in related technologies.

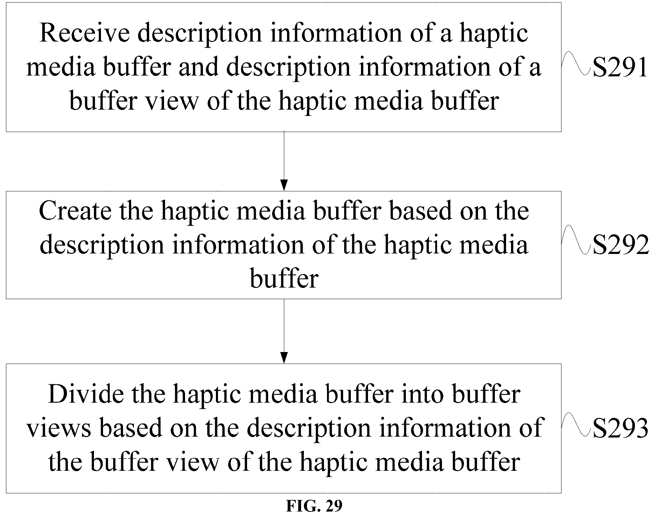

Some embodiments of the present disclosure also provide a buffer management method. The buffer management method is executed by a buffer management module in an immersive media description framework. Referring to FIG. 29, the buffer management method includes following steps:
S291: Receive description information of a haptic media buffer and description information of a buffer view of the haptic media buffer.

The haptic media buffer is a buffer configured for caching a target haptic media file, and the target haptic media file includes a first haptic material attribute whose type is Reference.

In some embodiments, the description information of the haptic media buffer may include at least one of following information:
a capacity of the buffer, whether the buffer is an MPEG circular buffer, a quantity of storage stages of the circular buffer, an index value of a media description module corresponding to a media file cached in the circular buffer, and a track index value of data of the media file cached in the circular buffer.

In some embodiments, the description information of the buffer view of the haptic media buffer may include at least one of following information:
a buffer to which the buffer view belongs, a capacity of the buffer view, and an offset of the buffer view.

S292: Create the haptic media buffer based on the description information of the haptic media buffer.

For example, the description information of the haptic media buffer includes: The capacity of the haptic media buffer is 2000 bytes, the haptic media buffer is a circular buffer reconstructed based on an MPEG extension, the quantity of storage stages of the circular buffer is 3, the media file stored in the circular buffer is a first media file declared in MPEG media, and the track index value of the data of the media file cached in the circular buffer is 1. Therefore, the buffer management module creates a circular buffer with a capacity of 2000 bytes and three storage stages as the haptic media buffer.

S293: Divide the haptic media buffer into buffer views based on the description information of the buffer view of the haptic media buffer.

As described in the above embodiments, the track index value of the data of the media file cached in the circular buffer is 1. Therefore, after the buffer management module creates the circular buffer with a capacity of 2000 bytes and three storage stages as the haptic media buffer, if the description information of the buffer view of the haptic media buffer includes: the capacity is 2000 bytes and the offset is 0, the haptic media buffer is divided into one buffer view.

After the buffer management module divides the haptic media buffer into the buffer views based on the description information of the buffer view of the haptic media buffer, a MAF may write decoded data of the target haptic media file into the buffer view of the haptic media buffer. A display engine may create a haptic media accessor based on an index value declared by an accessor index syntax element in an MPEG haptic texture of target texture description module corresponding to the first haptic material attribute, and obtain a haptic value of the first haptic material attribute by accessing data in the buffer view of the haptic media buffer through the haptic media accessor. The target node description module is a node description module corresponding to a node including a target 3D mesh that carries the first haptic material attribute, and the target media reference list is a media reference list corresponding to the target haptic media file.

After receiving the description information of the haptic media buffer and the description information of the buffer view of the haptic media buffer, the buffer management method provided in the embodiments of the present disclosure may create the haptic media buffer based on the description information of the haptic media buffer, and divide the haptic media buffer into the buffer views based on the description information of the buffer view of the haptic media buffer. Therefore, the MAF may write the decoded data of the haptic media file including the haptic value of the first haptic material attribute whose type is the Reference into the buffer view of the haptic media buffer. The display engine may create the haptic media accessor based on the index value declared by the accessor index syntax element in the MPEG haptic texture of the target texture description module corresponding to the first haptic material attribute, and obtain the haptic value of the first haptic material attribute by accessing the data in the buffer view of the haptic media buffer through the haptic media accessor. Therefore, the embodiments of the present disclosure may support obtaining a haptic value of a haptic material attribute whose type is the Reference, solving a problem of being unable to obtain the haptic value of the haptic material attribute whose type is the Reference in related technologies.

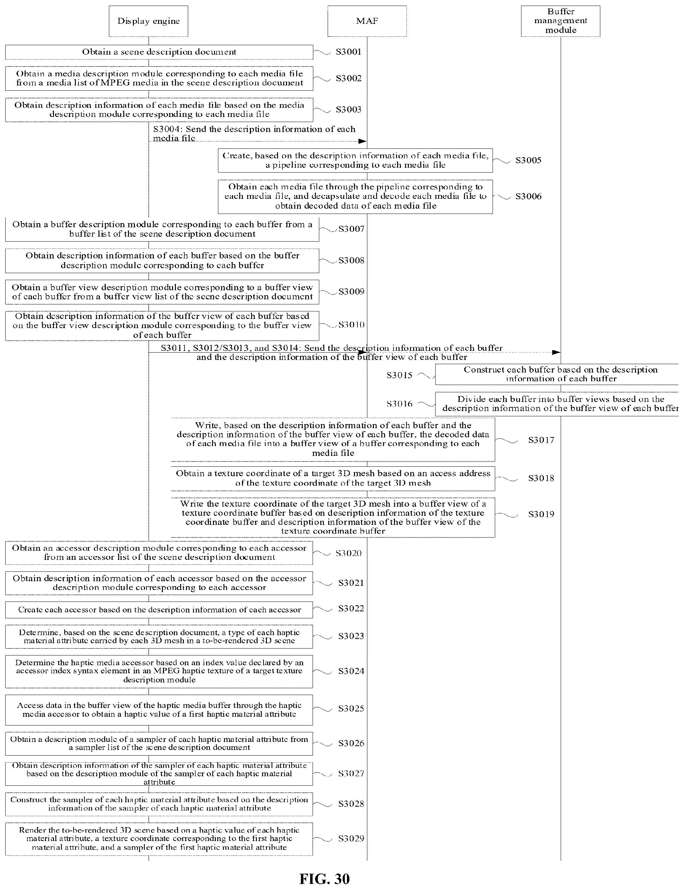

Some embodiments of the present disclosure also provide a 3D scene rendering method. The 3D scene rendering method includes: a method for parsing a scene description document and a 3D scene rendering method that are executed by a display engine, a method for processing a haptic media file and executed by a MAF, and a buffer management method executed by a buffer management module. The following describes the solutions provided in the embodiments of the present disclosure by using an example in which a scene-to-be-rendered includes a target haptic media file, a type of a first haptic material attribute in the target haptic media file is Reference, a buffer configured for caching the target haptic media file is a haptic media buffer, a buffer configured for accessing the target haptic media file is a haptic media accessor, a mesh carrying the first haptic material attribute is a target 3D mesh, a buffer configured for caching a texture coordinate of the target 3D mesh is a texture coordinate buffer, and an accessor for accessing the texture coordinate of the target 3D mesh is a texture coordinate accessor. As shown in FIG. 30, the 3D scene rendering method includes following steps:
S3001: The display engine obtains the scene description document.

In some embodiments, that the display engine obtains the scene description document of the scene-to-be-rendered includes: the display engine downloads the scene description document from a server using a network transmission service.

In some embodiments, that the display engine obtains the scene description document of the scene-to-be-rendered includes: reading the scene description document from local storage space.

S3002: The display engine obtains a media description module corresponding to each media file from a media list (media) of MPEG media (MPEG_ media) in the scene description document (including: obtaining a media description module corresponding to the target haptic media file from the media list of the MPEG media in the scene description document).

S3003: The display engine obtains description information of each media file based on the media description module corresponding to each media file (including: obtaining description information of the target haptic media file based on the media description module corresponding to the target haptic media file).

In some embodiments, the description information of the media file includes at least one of following information:
a name of the media file, whether the media file is automatically played, whether the media file is cyclically played, a type of the media file, an access address of the media file, track information of an encapsulated file of the media file, and a codec parameter of the media file.

S3004: The display engine sends the description information of each media file to the MAF (sends the description information of the target haptic media file to the MAF).

Correspondingly, the MAF receives the description information that is of each media file and sent by the display engine.

In some embodiments, that the display engine sends the description information of each media file to the MAF includes: the display engine sends the description information of each media file to the MAF through a MAF API.

In some embodiments, that the MAF receives the description information that is of each media file and sent by the display engine includes: the MAF receives, through the MAF API, the description information that is of each media file and sent by the display engine.

S3005: The MAF creates, based on the description information of each media file, a pipeline corresponding to each media file (including: creating a haptic media pipeline of the target haptic media file based on the description information of the target haptic media file).

In some embodiments, the haptic media pipeline includes an input module, a decapsulation module, a decoding module, and a post-processing module. The input module is configured to obtain the target haptic media file (encapsulated file). The decapsulation module is configured to decapsulate the target haptic media file. The decoding module is configured to decode a bitstream obtained through the decapsulation. The post-processing module is configured to perform format conversion and other post-processing on data obtained through the decoding to obtain decoded data of the target haptic media file.

S3006: The MAF obtains each media file through the pipeline corresponding to each media file, and decapsulates and decodes each media file to obtain decoded data of each media file (including: obtaining the target haptic media file through the haptic media pipeline, and decapsulating and decoding the target haptic media file to obtain the decoded data of the target haptic media file).

In some embodiments, the description information of the target haptic media file includes an access address of the target haptic media file, and the above-mentioned step S3006 (in which the MAF obtains each media file through the pipeline corresponding to each media file) includes:
the MAF obtains the target haptic media file based on the access address of the target haptic media file.

In some embodiments, that the MAF obtains the target haptic media file based on the access address of the target haptic media file includes: the MAF sends a media resource request to a media resource server based on the access address of the target haptic media file, and receives a media resource response that carries the target haptic media file and is sent by the media server.

In some embodiments, that the MAF obtains the target haptic media file based on the access address of the target haptic media file includes: the MAF reads the target haptic media file from preset storage space based on the access address of the target haptic media file.

In some embodiments, the description information of the target haptic media file further includes an index value of each bitstream track of the target haptic media file, and the above-mentioned step S3006 (in which the MAF decapsulates and decodes each media file through the pipeline corresponding to each media file to obtain the decoded data of each media file) includes:
the MAF decapsulates the target haptic media file based on the index value of each bitstream track of the target haptic media file to obtain a bitstream of each bitstream track of the target haptic media file.

In some embodiments, the description information of the target haptic media file further includes a codec parameter of each bitstream track of the target haptic media file, and the above-mentioned step S3006 (in which the MAF obtains each media file through the pipeline corresponding to each media file, and decapsulates and decodes each media file to obtain the decoded data of each media file) includes:
the MAF decodes the bitstream of each bitstream track of the target haptic media file based on the codec parameter of each bitstream track of the target haptic media file, and obtains decoded data of each bitstream track of the target haptic media file to obtain the decoded data of the target haptic media file.

S3007: The display engine obtains a buffer description module corresponding to each buffer from a buffer list (buffers) of the scene description document (including: obtaining a buffer description module corresponding to the haptic media buffer configured for caching the target haptic media file, and a buffer description module corresponding to the texture coordinate buffer configured for caching the texture coordinate of the 3D mesh that carries the first haptic material attribute from the buffer list of the scene description document).

S3008: The display engine obtains description information of each buffer based on the buffer description module corresponding to each buffer (including: obtaining description information of the haptic media buffer based on the buffer description module corresponding to the haptic media buffer, and obtaining description information of the texture coordinate buffer based on the buffer description module corresponding to the texture coordinate buffer).

In some embodiments, the description information of the buffer may include at least one of following information:
a capacity of the buffer, an access address of data cached in the buffer, whether the buffer is an MPEG circular buffer, a quantity of storage stages of the circular buffer, an index value of a media description module corresponding to a media file cached in the circular buffer, and a track index value of data of the media file cached in the circular buffer.

S3009: The display engine obtains a buffer view description module corresponding to a buffer view of each buffer from a buffer view list (bufferViews) of the scene description document (including: obtaining a buffer view description module corresponding to a buffer view of the haptic media buffer, and a buffer view description module corresponding to a buffer view of the texture coordinate buffer from the buffer list of the scene description document).

S3010: The display engine obtains description information of the buffer view of each buffer based on the buffer view description module corresponding to the buffer view of each buffer (including: obtaining description information of the buffer view of the haptic media buffer based on the buffer view description module corresponding to the buffer view of the haptic media buffer, and obtaining description information of the buffer view of the texture coordinate buffer based on the buffer view description module corresponding to the buffer view of the texture coordinate buffer).

In some embodiments, the description information of the buffer may include at least one of following information:
a buffer to which the buffer view belongs, a capacity of the buffer view, and an offset of the buffer view.

After the above-mentioned steps S3008 and S3010, the embodiments of the present disclosure may choose to execute either a scheme 1 or a scheme 2 to send the description information of each buffer and the description information of the buffer view of each buffer to the MAF and the buffer management module.

The scheme 1 includes following steps S3011 and S3012:
S3011: The display engine sends the description information of each buffer and the description information of the buffer view of each buffer to the MAF (including: the display engine sends the description information of the haptic media buffer, the description information of the buffer view of the haptic media buffer, the description information of the texture coordinate buffer, and the description information of the buffer view of the texture coordinate buffer to the MAF).

Correspondingly, the MAF receives the description information of each buffer and the description information of the buffer view of each buffer that are sent by the display engine (including: the MAF receives the description information of the haptic media buffer, the description information of the buffer view of the haptic media buffer, the description information of the texture coordinate buffer, and the description information of the buffer view of the texture coordinate buffer that are sent by the display engine).

In some embodiments, an implementation of the above-mentioned step S3011 (in which the display engine sends the description information of each buffer and the description information of the buffer view of each buffer to the MAF) may be: the display engine sends the description information of each buffer and the description information of the buffer view of each buffer to the MAF through the MAF API. Correspondingly, an implementation in which the MAF receives the description information of each buffer and the description informatin of buffer view of each buffer that are sent by the display engine may be: the MAF receives, through the MAF API, the description information of each buffer and the description information of the buffer view of each buffer that are sent by the display engine.

S3012: The MAF sends the description information of each buffer and the description information of the buffer view of each buffer to the buffer management module (including: the MAF sends the description information of the haptic media buffer, the description information of the buffer view of the haptic media buffer, the description information of the texture coordinate buffer, and the description information of the buffer view of the texture coordinate buffer to the buffer management module).

Correspondingly, the buffer management module receives the description information of each buffer and the description information of the buffer view of each buffer that are sent by the MAF (including: the buffer management module receives the description information of the haptic media buffer, the description information of the buffer view of the haptic media buffer, the description information of the texture coordinate buffer, and the description information of the buffer view of the texture coordinate buffer management module that are sent by the MAF).

In some embodiments, an implementation of the above-mentioned step S3011 (in which the MAF sends the description information of each buffer and the description information of the buffer view of each buffer to the buffer management module) may be: the MAF sends the description of each buffer and the description information of the buffer view of each buffer to the buffer management module through a buffer API. Correspondingly, an implementation in which the buffer management module receives the description information of each buffer and the description information of the buffer view of each buffer that are sent by the MAF may be: the buffer management module receives, through the buffer API, the description information of each buffer and the description information of the buffer view of each buffer that are sent by the MAF.

The scheme 2 includes following steps S3013 and S3014:
S3013: The display engine sends the description information of each buffer and the description information of the buffer view of each buffer to the MAF.

Correspondingly, the MAF receives the description information of each buffer and the description information of the buffer view of each buffer that are sent by the display engine.

S3014: The display engine sends the description information of each buffer and the description information of the buffer view of each buffer to the buffer management module.

In some embodiments, an implementation of the above-mentioned step S3014 (in which the display engine sends the description information of each buffer, the description information of the buffer view of each buffer, and the description information of the buffer view of the haptic media buffer to the buffer management module) may be: the display engine sends the description information of each buffer and the description information of the buffer view of each buffer to the buffer management module through the buffer API. Correspondingly, an implementation in which the MAF receives the description information of each buffer and the description informatin of buffer view of each buffer that are sent by the display engine may be: the buffer management module receives, through the buffer API, the description information of each buffer and the description information of the buffer view of each buffer that are sent by the display engine.

After either the scheme 1 or the scheme 2 is executed, following steps are continuously performed:
S3015: The buffer management module constructs each buffer based on the description information of each buffer (including: constructing the haptic media buffer based on the description information of the haptic media buffer, and constructing the texture coordinate buffer based on the description information of the texture coordinate buffer).

S3016: The buffer management module divides each buffer into buffer views based on the description information of the buffer view of each buffer (including: dividing the haptic media buffer into buffer views based on the description information of the buffer view of the haptic media buffer, and dividing the texture coordinate buffer into buffer views based on the description information of the buffer view of the texture coordinate buffer).

S3017: The MAF writes, based on the description information of each buffer and the description information of the buffer view of each buffer, the decoded data of each media file into a buffer view of a buffer corresponding to each media file (including: writing the decoded data of the target haptic media file into the buffer view of the haptic media buffer).

S3018: The MAF obtains the texture coordinate of the target 3D mesh based on an access address of the texture coordinate of the target 3D mesh.

S3019: The MAF writes the texture coordinate of the target 3D mesh into the buffer view of the texture coordinate buffer based on the description information of the texture coordinate buffer and the description information of the buffer view of the texture coordinate buffer.

S3020: The display engine obtains an accessor description module corresponding to each accessor from an accessor list (accessors) of the scene description document (including: obtaining an accessor description module corresponding to the haptic media accessor for accessing the target haptic media file, and an accessor description module corresponding to the texture coordinate accessor for accessing the texture coordinate from the accessor list of the scene description document).

S3021: The display engine obtains description information of each accessor based on the accessor description module corresponding to each accessor (including: the display engine obtains description information of the haptic media accessor based on the accessor description module corresponding to the haptic media accessor, and obtains description information of the texture coordinate accessor based on the accessor description module corresponding to the texture coordinate accessor).

In some embodiments, the description information of the accessor includes at least one of following information:
a buffer view accessed by the accessor, a data type of data accessed by the accessor, a type of the accessor, a quantity of accessors, whether the accessor is an MPEG time-varying accessor, a buffer view accessed by the time-varying accessor, and whether a parameter of the accessor changes over time.

S3022: The display engine creates each accessor based on the description information of each accessor (including: the display engine creates the haptic media accessor based on the description information of the haptic media accessor, and creates the texture coordinate accessor based on the description information of the texture coordinate accessor).

S3023: The display engine determines, based on the scene description document, a type of each haptic material attribute carried by each 3D mesh in a 3D-scene-to-be-rendered.

In the above-mentioned step S3023, if the display engine determines that the type of the first haptic material attribute carried by the target 3D mesh in the 3D-scene-to-be-rendered is the Reference, following steps are performed:
S3024: The display engine determines the haptic media accessor based on an index value declared by an accessor index syntax element in an MPEG haptic texture of a target texture description module.

The haptic media accessor is created based on the index value declared by the accessor index syntax element in the MPEG haptic texture of the target texture description module.

S3025: The display engine accesses data in the buffer view of the haptic media buffer through the haptic media accessor to obtain a haptic value of the first haptic material attribute.

S3026: The display engine obtains a description module of a sampler of each haptic material attribute from a sampler list (samplers) of the scene description document (including: the display engine obtains a description module of a sampler of the first haptic material attribute from the sampler list of the scene description document).

S3027: The display engine obtains description information of the sampler of each haptic material attribute based on the description module of the sampler of each haptic material attribute (including: the display engine obtains description information of the sampler of the first haptic material attribute based on the description module of the sampler of the first haptic material attribute).

S3028: The display engine constructs the sampler of each haptic material attribute based on the description information of the sampler of each haptic material attribute (including: the display engine constructs the sampler of the first haptic material attribute based on the description information of the sampler of the first haptic material attribute).

S3029: Render the 3D-scene-to-be-rendered based on a haptic value of each haptic material attribute, a texture coordinate corresponding to the first haptic material attribute, and the sampler of the first haptic material attribute.

In some embodiments, some embodiments of the present disclosure provide an apparatus, including:
a memory configured to store a computer program; and
a processor configured to call the computer program to enable the apparatus to implement the method for parsing a scene description document in any one of the aforesaid embodiments.

In some embodiments, some embodiments of the present disclosure provide a computer-readable storage medium. The computer-readable storage medium stores a computer program, and the computer program is executed by a computing device to implement the method in any one of the aforesaid embodiments.

In some embodiments, some embodiments of the present disclosure provide a computer program product. When the computer program product runs on a computer, the computer is enabled to implement the method in any one of the aforesaid embodiments.

Finally, it should be noted that the foregoing embodiments are used only to describe the technical solutions of the present disclosure, but are not intended to limit the present disclosure. Although the present disclosure has been described in detail with reference to the foregoing embodiments, those of ordinary skill in the art should understand that they may still modify the technical solutions described in the foregoing embodiments, or make equivalent substitutions on some or all technical features therein. The modifications or substitutions do not make the essence of the corresponding technical solutions deviate from the scope of the technical solutions in the embodiments of the present disclosure.

For the convenience of explanation, the above descriptions have been provided in combination with specific implementations. However, the above exemplary discussion is not intended to be exhaustive or to limit the implementations to the specific forms disclosed above. According to the above teachings, various modifications and variations may be obtained. The above implementations are selected and described to better explain the principles and practical applications, such that those skilled in the art may better use the implementations and implementations of various different variations considered in specific usage.

## Claims

1. A method for parsing a scene description document, **characterized by** comprising following steps:
determining a type of each haptic material attribute carried by each 3D mesh in a 3D-scene-to-be-rendered based on the scene description document;
obtaining an index value declared by an accessor index syntax element in a target media reference array in a media reference list of MPEG haptic if a type of a first haptic material attribute carried by a target 3D mesh in the 3D-scene-to-be-rendered is reference, wherein the MPEG haptic corresponds to a target node description module, the target node description module is a node description module corresponding to a node comprising the target 3D mesh, and the target media reference array is a media reference array corresponding to a target haptic media file to which the first haptic material attribute belongs; and
obtaining description information of a haptic media accessor for accessing decoded data of the target haptic media file based on the index value declared by the accessor index syntax element.

2. The method according to claim 1, wherein the step of obtaining description information of the haptic media accessor for accessing decoded data of the target haptic media file based on the index value declared by the accessor index syntax element comprises following steps:
obtaining an accessor description module corresponding to the haptic media accessor from an accessor list of the scene description document based on the index value declared by the accessor index syntax element; and
parsing the accessor description module corresponding to the haptic media accessor to obtain the description information of the haptic media accessor.

3. The method according to claim 1, wherein the step of determining the type of each haptic material attribute carried by each 3D mesh in the 3D-scene-to-be-rendered based on the scene description document comprises following steps:
obtaining a mesh description module corresponding to each 3D mesh in the 3D-scene-to-be-rendered from a mesh list of the scene description document;
obtaining an index value declared by an array index syntax element in an MPEG haptic material of the mesh description module corresponding to each 3D mesh;
obtaining a haptic material attribute array of each 3D mesh from a haptic material array list of the scene description document based on the index value declared by the array index syntax element in the MPEG haptic material of the mesh description module corresponding to each 3D mesh; and
determining, based on the haptic material attribute array corresponding to each 3D mesh, a type of each haptic material attribute carried by each 3D mesh.

4. The method according to claim 3, wherein the step of determining, based on the haptic material attribute array corresponding to each 3D mesh, the type of each haptic material attribute carried by each 3D mesh comprises following steps:
obtaining a haptic material attribute description module corresponding to each haptic material attribute carried by each 3D mesh from the haptic material attribute array corresponding to each 3D mesh;
obtaining a value of an attribute type syntax element in the haptic material attribute description module corresponding to each haptic material attribute; and
determining, based on a value of the attribute type syntax element in the haptic material attribute description module corresponding to each haptic material attribute, the type of each haptic material attribute carried by each 3D mesh.

5. The method according to claim 1, wherein before the step of obtaining the index value declared by the accessor index syntax element in the target media reference array in the media reference list of the MPEG haptic, the method further comprises following steps:
obtaining a node description module corresponding to each node in the 3D-scene-to-be-rendered from a node list of the scene description document;
obtaining a mesh index list of the node description module corresponding to each node in the 3D-scene-to-be-rendered;
determining, when an index value declared in the mesh index list of each node description module comprises an index value of a mesh description module corresponding to the target 3D mesh, the node description module as the target node description module.

6. The method according to claim 5, wherein the step of obtaining the node description module corresponding to each node in the 3D-scene-to-be-rendered from the node list of the scene description document comprises following steps:
obtaining a target scene description module corresponding to the 3D-scene-to-be-rendered from a scene list of the scene description document;
obtaining an index value declared by a node index list of the target scene description module; and
obtaining the node description module corresponding to each node in the 3D-scene-to-be-rendered from the node list of the scene description document based on the index value declared by the node index list of the target scene description module.

7. The method according to claim 5, wherein before the step of obtaining the index value declared by the accessor index syntax element in the target media reference array in the media reference list of the MPEG haptic, the method further comprises following steps:
obtaining an index value declared by a texture index syntax element in a texture array of a haptic material attribute description module corresponding to the first haptic material attribute;
obtaining a texture description module corresponding to the first haptic material attribute from a texture list of the scene description document based on the index value declared by the texture index syntax element in the texture array of the haptic material attribute description module corresponding to the first haptic material attribute;
obtaining an index value declared by a texture map syntax element in the texture description module corresponding to the first haptic material attribute; and
obtaining an access address of a texture map of the first haptic material attribute from a texture map list of the scene description document based on the index value declared by the texture map syntax element in the texture description module corresponding to the first haptic material attribute.

8. The method according to claim 7, further comprising following steps:
obtaining the texture map of the first haptic material attribute based on the access address of the texture map of the first haptic material attribute;
obtaining, based on the texture map of the first haptic material attribute, an index value of a target media description module corresponding to the target haptic media file; and
determining a media reference array with a value of a haptic media identification syntax element being the index value of the target media description module in the target node description module as a target media reference array.

9. The method according to claim 7, further comprising following steps:
obtaining a sampler description module corresponding to a sampler of the first haptic material attribute from a sampler list of the scene description document based on an index value declared by a sampler syntax element in the texture description module corresponding to the first haptic material attribute, and obtaining description information of the sampler of the first haptic material attribute based on the sampler description module corresponding to the sampler of the first haptic material attribute.

10. The method according to claim 7, further comprising following steps:
obtaining, based on an index value declared by a texture coordinate index syntax element corresponding to the first haptic material attribute, a texture coordinate syntax element corresponding to the first haptic material attribute from an attribute of a primitive in the mesh description module corresponding to the target 3D mesh;
obtaining, based on an index value declared by the texture coordinate syntax element corresponding to the first haptic material attribute, an accessor description module corresponding to a texture coordinate accessor of the first haptic material attribute; and
obtaining description information of the texture coordinate accessor of the first haptic material attribute based on the accessor description module corresponding to the texture coordinate accessor of the first haptic material attribute.

11. The method according to claim 7, further comprising following steps:
obtaining an index value declared by a texture index syntax element in a texture array of a haptic material attribute description module corresponding to the second haptic material attribute, when a type of a second haptic material attribute is high_resolution or low_resolution;
obtaining a texture description module corresponding to the second haptic material attribute from the texture list of the scene description document based on the index value declared by the texture index syntax element in the texture array of the haptic material attribute description module corresponding to the second haptic material attribute;
obtaining an index value declared by a texture map syntax element and an index value declared by a sampler syntax element in the texture description module corresponding to the second haptic material attribute; and
obtaining an access address of a texture map of the second haptic material attribute from the texture map list of the scene description document based on the index value declared by the texture map syntax element in the texture description module corresponding to the second haptic material attribute, and obtaining description information of a sampler of the second haptic material attribute from a sampler list of the scene description document based on the index value declared by the sampler syntax element in the texture description module corresponding to the second haptic material attribute.

12. The method according to any one of claims 1-11, further comprising following steps:
obtaining a buffer description module corresponding to each buffer in the 3D-scene-to-be-rendered from a buffer list of the scene description document; and
obtaining description information of each buffer in the 3D-scene-to-be-rendered based on the buffer description module corresponding to each buffer;
wherein the description information of the buffer comprises at least one of following information:
a capacity of the buffer, an access address of data cached in the buffer, whether the buffer is an MPEG circular buffer, a quantity of storage stages of the circular buffer, an index value of a media description module corresponding to a media file cached in the circular buffer, and a track index value of data of the media file cached in the circular buffer.

13. The method according to any one of claims 1-11, further comprising following steps:
obtaining a buffer view description module corresponding to each buffer view of each buffer in the 3D-scene-to-be-rendered from a buffer view list of the scene description document;and
obtaining description information of each buffer view based on the buffer view description module corresponding to each buffer view;
wherein the description information of the buffer view comprises at least one of following information:
a buffer to which the buffer view belongs, a capacity of the buffer view, and an offset of the buffer view.

14. The method according to any one of claims 1-11, further comprising following steps:
obtaining an accessor description module corresponding to each accessor in the 3D-scene-to-be-rendered from the accessor list of the scene description document; and
obtaining description information of each accessor based on the accessor description module corresponding to each accessor;
wherein the description information of the accessor comprises at least one of following information:
a buffer view accessed by the accessor, a data type of data accessed by the accessor, a type of the accessor, a quantity of accessors, whether the accessor is an MPEG time-varying accessor, a buffer view accessed by the time-varying accessor, and whether a parameter of the accessor changes over time.

15. The method according to any one of claims 1-11, further comprising following steps:
obtaining a media description module corresponding to each media file in the 3D-scene-to-be-rendered from an extended media list of a MPEG media in the scene description document; and
obtaining description information of each media file based on the media description module corresponding to each media file;
wherein the description information of the media file comprises at least one of following information:
a name of the media file, whether the media file is automatically played, whether the media file is cyclically played, a type of the media file, an access address of the media file, track information of an encapsulated file of the media file, and a codec parameter of the media file.

16. An apparatus for parsing a scene description document, **characterized by** comprising:
a memory configured to store a computer program; and
a processor configured to call the computer program to enable the apparatus for parsing the scene description document to implement the method for parsing the scene description document according to any one of claims 1-15.
